# EUROPEAN PATENT APPLICATION

(11) **EP 4 717 577 A1**
(43) Date of publication of application: **01.04.2026**
(21) Application number: 25823307.1
(22) Date of filing: 03.07.2025
(51) Int. Cl.: B62K 11/02, B62K 7/04, B62J 9/22

(54) **TRANSPORT VEHICLE**

(30) Priority: 03.07.2024 CN 202410885010
(71) Applicant: Shenzhen Chitado Technology Co., Ltd, Shenzhen, Guangdong 518000 (CN)
(72) Inventor: ZHANG, Dianxuan, Shenzhen, Guangdong 518000 (CN); ZHANG, Yang, Shenzhen, Guangdong 518000 (CN); WANG, Yiqiang, Shenzhen, Guangdong 518000 (CN); ZHOU, Dengbing, Shenzhen, Guangdong 518000 (CN); ZHOU, Fuqi, Shenzhen, Guangdong 518000 (CN)
(74) Representative: Sun, Yiming
(86) International application number: PCT/CN2025/106945
(87) International publication number: WO 2026/008035

(57) **Abstract**

In some embodiments of the present application, a vehicle is provided. The vehicle comprises a frame, a front wheel steering mechanism, a seat, a front wheel, a rear wheel, a power mechanism, and at least one storage mechanism. The front wheel steering mechanism is connected to a front end of the frame, and the seat is connected to a rear end of the frame. The front wheel is disposed at the front end of the frame, and the rear wheel is disposed at the rear end of the frame. The power mechanism is disposed on the frame to provide power for movement of the vehicle. The storage mechanism is disposed on the frame and is used for carrying articles. By providing the storage mechanism on the frame, the vehicle according to the embodiment of the present application can be used to carry various articles that a user wishes to take along, such as cargo, children, pets, or groceries. Compared with vehicles in the prior art, the vehicle disclosed in the embodiment of the present application can accommodate articles, thereby facilitating travel for the user.

## Description

### CROSS-REFERENCES TO RELATED APPLICATIONS

This application claims priority to Chinese Patent Application No. 202410885010.1, titled "Vehicle," filed with the China National Intellectual Property Administration on July 3, 2024, the entire disclosure of which is incorporated herein by reference.

### FIELD OF THE INVENTION

The present disclosure relates to the technical field of transportation, and in particular, to a vehicle.

### BACKGROUND

As society advances, transportation technologies have become more and more mature and are now widely used in various fields, including public transit, cargo logistics, and personal commuting.

Currently, vehicles at least include bicycles, electric bicycles (e-bikes), and motorcycles. Such vehicles include a handlebar stem, a frame, a seat, two wheels, and a power mechanism. The handlebar is mounted to the front portion of the frame, and the seat is positioned at the rear. The two wheels is respectively attached to the front and rear of the frame. The power mechanism is disposed on the frame so as to drive the vehicle forward.

### BRIEF SUMMARY OF THE DISCLOSURE

Embodiments of the present invention provide a vehicle to address the technical problem that existing vehicles cannot accommodate items.

To achieve the above objective, the vehicle proposed in the embodiments of the present application comprises a frame, a front wheel steering mechanism, a seat, a front wheel, a rear wheel, a power mechanism, and at least one storage mechanism. The front wheel steering mechanism is connected to the front end of the frame, and the seat is connected to the rear end of the frame. The front wheel is disposed at the front end of the frame, and the rear wheel is disposed at the rear end of the frame. The power mechanism is disposed on the frame to supply power for the movement of the vehicle. The storage mechanism is disposed on the frame, and the storage mechanism is configured for carrying articles.

Optionally, in an embodiment, a direction from the seat to the front wheel steering mechanism is perpendicular to a direction opposite to gravity. In the direction from the seat to the front wheel steering mechanism, the length of the storage mechanism is 50 centimeters. In the direction opposite to gravity, the height of the storage mechanism is 21 centimeters. In a relative direction, the width of the storage mechanism is 23 centimeters, wherein the relative direction is perpendicular to both the direction from the seat to the front wheel steering mechanism and the direction opposite to gravity.

Optionally, in an embodiment, the volume of the storage mechanism is 24.15 liters.

Optionally, in an embodiment, the storage mechanism comprises a first limiting member, a second limiting member, a third limiting member, and a fourth limiting member. The first limiting member, second limiting member, third limiting member, and fourth limiting member are sequentially connected to enclose a storage cavity, wherein the storage cavity is configured for placing items.

Optionally, in an embodiment, the first limiting member and the third limiting member are spaced apart, and the second limiting member and the fourth limiting member are spaced apart. The storage mechanism further comprises at least one mounting member, wherein the mounting member is clamped between the second limiting member and the fourth limiting member, and the mounting member is configured for mounting the storage mechanism to the frame.

Optionally, in an embodiment, the first limiting member comprises a first horizontal bar and a plurality of spaced-apart first vertical bars, wherein each of the plurality of first vertical bars is connected to the first horizontal bar. The second limiting member comprises a second vertical bar and a plurality of spaced-apart second horizontal bars, wherein each of the plurality of second horizontal bars is connected to the second vertical bar, one end of each of the plurality of second horizontal bars is connected to the first limiting member, and the other end of each of the plurality of second horizontal bars is connected to the third limiting member. The third limiting member comprises a third horizontal bar and a plurality of spaced-apart third vertical bars, wherein each of the plurality of third vertical bars is connected to the third horizontal bar. The fourth limiting member comprises a fourth vertical bar and a plurality of spaced-apart fourth horizontal bars, wherein each of the plurality of fourth horizontal bars is connected to the fourth vertical bar, one end of each of the plurality of fourth horizontal bars is connected to the first limiting member, and the other end of each of the plurality of fourth horizontal bars is connected to the third limiting member.

Optionally, in an embodiment, the plurality of first vertical bars are connected to the plurality of third vertical bars via a plurality of fifth horizontal bars. The plurality of fifth horizontal bars are spaced apart, and the plurality of fifth horizontal bars are located at a lower end of the storage mechanism.

Optionally, in an embodiment, the first limiting member is plate-shaped, and/or the second limiting member is plate-shaped, and/or the third limiting member is plate-shaped, and/or the fourth limiting member is plate-shaped.

Optionally, in an embodiment, the frame comprises a head tube, a first bracket, a second bracket, a support plate, and a middle tube. A front end of the first bracket and a front end of the second bracket respectively extend forward and upward to connect with the head tube. A rear end of the first bracket and a rear end of the second bracket respectively extend forward and upward to clamp the middle tube. A middle portion of the first bracket and a middle portion of the second bracket are spaced apart. The support plate is mounted on the middle portion of the first bracket and the middle portion of the second bracket.

Optionally, in an embodiment, the frame further comprises a reinforcement plate, wherein the reinforcement plate is formed by extending upward and forward from the support plate, and the reinforcement plate is mounted on the front end of the first bracket and the front end of the second bracket.

The vehicle provided by the embodiments of the present application, by providing the storage mechanism on the frame, can be used to carry various items that a user wishes to transport, such as cargo, children, pets, or groceries. Compared with vehicles in the prior art, the vehicle disclosed in the embodiments of the present application is capable of accommodating items, thereby facilitating the user's travel.

### BRIEF DESCRIPTION OF THE DRAWINGS

FIG. 1 is a schematic view from one direction of an implementation of the vehicle according to an embodiment of the present application;
FIG. 2 is a schematic view from another direction of an implementation of the vehicle according to an embodiment of the present application;
FIG. 3 is a schematic view of another implementation of the vehicle according to an embodiment of the present application;
FIG. 4 is a schematic view from one direction of the frame according to an embodiment of the present application;
FIG. 5 is a schematic view from another direction of the frame according to an embodiment of the present application;
FIG. 6 is a schematic view from another direction of an implementation of the vehicle according to an embodiment of the present application;
FIGS. 7 is a schematic view illustrating a state of the stem in a folding process according to an embodiment of the present application;
FIG. 8 is a schematic view from one direction of the stem in a folded state according to an embodiment of the present application;
FIG. 9 is a schematic view from another direction of the stem in a folded state according to an embodiment of the present application;
FIG. 10 is an enlarged schematic view of portion A in FIG. 8;
FIG. 11 is an enlarged schematic view of portion B in FIG. 9;
FIG. 12 is a schematic view of the housing in the folding mechanism according to an embodiment of the present application;
FIG. 13 is a schematic view from one direction illustrating the storage mechanism connected with the pedal according to an embodiment of the present application;
FIG. 14 is a schematic view from another direction illustrating the storage mechanism connected with the pedal according to an embodiment of the present application;
FIG. 15 is a schematic view from another direction illustrating the storage mechanism connected with the pedal according to an embodiment of the present application;
FIG. 19 is a schematic structural view of another implementation of the frame;
FIG. 24 is a schematic structural view of another implementation of the mounting frame;
FIG. 25 is a schematic structural view of the vehicle according to an embodiment of the present application;
FIG. 26 is a schematic structural view from another direction of the vehicle shown in FIG. 1;
FIG. 27 is a schematic structural view from another direction of the vehicle shown in FIG. 1;
FIG. 28 is a schematic structural view from another direction of the vehicle shown in FIG. 1;
FIG. 29 is a schematic structural view of the frame in FIG. 1;
FIG. 30 is a schematic structural view from another direction of the frame shown in FIG. 29;
FIG. 31 is a schematic structural view from another direction of the frame shown in FIG. 29;
FIG. 32 is a cross-sectional view of the frame shown in FIG. 30 taken along line A-A;
FIG. 33 is a schematic structural view from another direction of the frame shown in FIG. 29;
FIG. 34 is a schematic structural view of the mounting frame in the frame shown in FIG. 29;
FIG. 35 is a schematic structural view from another direction of the mounting frame shown in FIG. 34;
FIG. 36 is a schematic structural view from another direction of the mounting frame shown in FIG. 34;
FIG. 37 is a cross-sectional view of the mounting frame shown in FIG. 35 taken along line B-B;
FIG. 38 is a schematic structural view of the first support beam in FIG. 34;
FIG. 39 is a schematic structural view from another direction of the first support beam shown in FIG. 38;
FIG. 40 is a cross-sectional view of the first support beam shown in FIG. 39 taken along line C-C;
FIG. 41 is a cross-sectional view of the first support beam shown in FIG. 39 taken along line D-D;
FIG. 42 is a schematic structural view from another direction of the first support beam shown in FIG. 38;
FIG. 43 is a cross-sectional view of the first support beam shown in FIG. 42 taken along line E-E;
FIG. 44 is a schematic structural view of the second support beam in FIG. 34;
FIG. 45 is a schematic structural view from another direction of the second support beam shown in FIG. 44;
FIG. 46 is a cross-sectional view of the second support beam shown in FIG. 45 taken along line F-F;
FIG. 47 is a schematic structural view from another direction of the second support beam shown in FIG. 44;
FIG. 48 is a cross-sectional view of the second support beam shown in FIG. 47 taken along line G-G;
FIG. 49 is a cross-sectional view of the mounting frame shown in FIG. 35 taken along line H-H;
FIG. 50 is an enlarged schematic view of portion A in FIG. 49;
FIG. 51 is a cross-sectional view of the mounting frame shown in FIG. 35 taken along line I-I;
FIG. 52 is an enlarged schematic view of portion B in FIG. 51;
FIG. 53 is a schematic structural view from another direction of the structure shown in FIG. 37;
FIG. 54 is a schematic structural view from another direction of the vehicle shown in FIG. 1;
FIG. 55 is a schematic structural view of the plug in FIG. 54 exploded from the extension section along its axial direction;
FIG. 56 is an enlarged schematic view of portion C in FIG. 54;
FIG. 57 is a cross-sectional view of the plug in FIG. 55;
FIG. 58 is an enlarged schematic view of portion D in FIG. 32;
FIG. 59 is a schematic structural view illustrating the fixed connection between the seat and the frame in the vehicle shown in FIG. 1;
FIG. 60 is a cross-sectional view of the structure shown in FIG. 59 taken along line B-B shown in FIG. 35;
FIG. 61 is a schematic structural view of the first securing assembly in FIG. 59;
FIG. 62 is a schematic structural view from another direction of the first securing assembly shown in FIG. 61;
FIG. 63 is a cross-sectional view of the first securing assembly shown in FIG. 62 taken along line J-J;
FIG. 64 is a cross-sectional view of the first securing assembly shown in FIG. 62 taken along line K-K;
FIG. 65 is a schematic structural view of the structure shown in FIG. 59 after the seat height is adjusted;
FIG. 66 is a schematic structural view of the first basket in FIG. 25;
FIG. 67 is a schematic structural view of the vehicle according to an embodiment of the present application;
FIG. 70 is a schematic structural view of the support plate;
FIG. 71 is a schematic structural view from another direction of the support plate;
FIG. 72 is a schematic structural view of the support rod;
FIG. 73 is a sectional view of the rear wheel;
FIG. 74 is an exploded view of the rear wheel;
FIG. 75 is a schematic structural view from another direction of the rear wheel;
FIG. 76 is a schematic view illustrating the disassembly of the rear wheel;
FIG. 77 is a schematic structural view of the mounting frame;
FIG. 78 is a schematic sectional view of the battery assembly;
FIG. 79 is another schematic sectional view of the battery assembly;
FIG. 80 is a schematic structural view of the battery box;
FIG. 81 is another schematic structural view of the battery box;
FIG. 82 is yet another schematic structural view of the battery box;
FIG. 85 is a schematic view illustrating the use of the second basket;

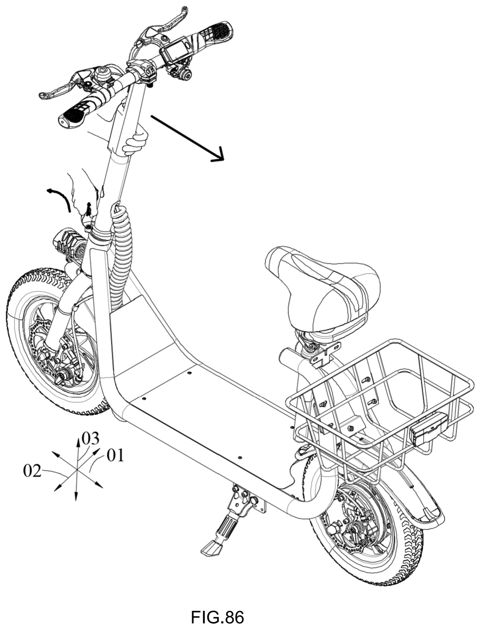

FIG. 86 is a schematic view illustrating the use of the stem;

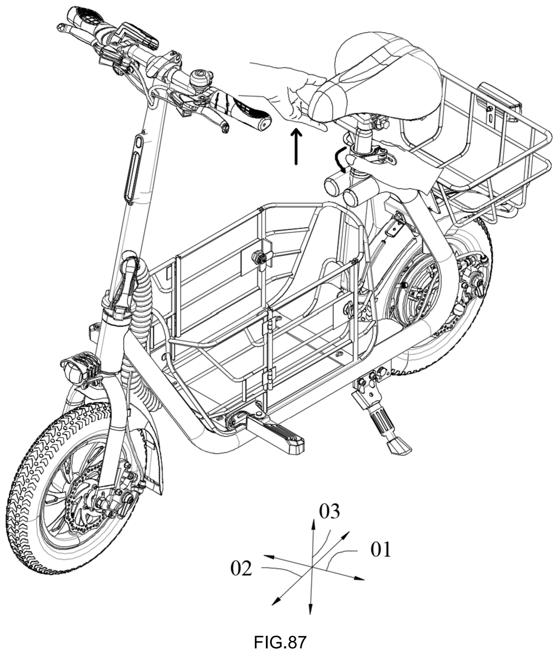

FIG. 87 is a schematic view illustrating the use of the seat;

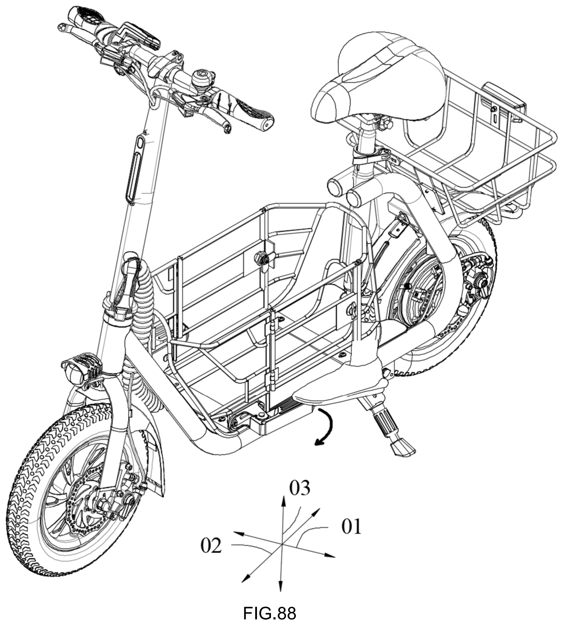

FIG. 88 is a schematic view of the pedal assembly in an open state;

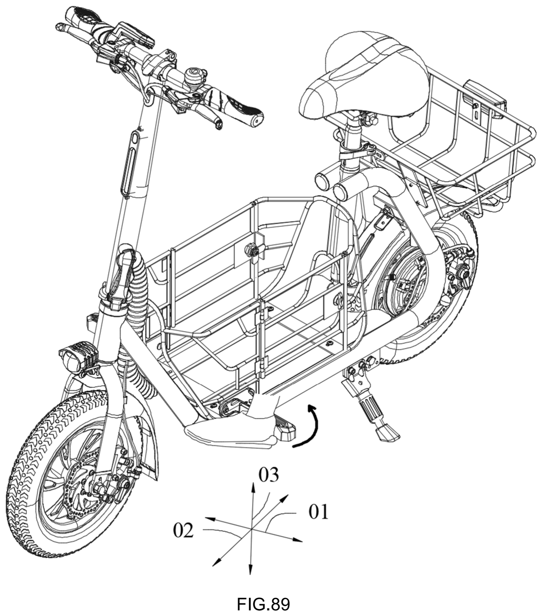

FIG. 89 is a schematic view of the pedal assembly in a stored state;
FIG. 90 is an exploded view of the battery assembly;
FIG. 91 is a schematic structural view of the vehicle;
FIG. 92 is a schematic structural view of the battery box;
FIG. 93 is a schematic structural view of the vehicle;
FIG. 94 is a schematic structural view of the spring shock absorber;
FIG. 95 is a schematic structural view of the mounting frame;
FIG. 96 is a schematic view illustrating the distribution of the connection locations;
FIG. 97 is another schematic view illustrating the distribution of the connection locations;
FIG. 98 is a schematic structural view of the vehicle;
FIG. 99 is another schematic structural view of the vehicle;
FIG. 100 is a schematic structural view of the spring shock absorber;
FIG. 101 is a schematic structural view of the vehicle according to another embodiment of the present application;
FIG. 102 is a schematic structural view from another direction of the vehicle shown in FIG. 101;
FIG. 103 is a schematic structural view from another direction of the vehicle shown in FIG. 101;
FIG. 104 is a schematic structural view of the frame, the second basket, and the pedal in FIG. 101;
FIG. 105 is a schematic structural view from another direction of the structure shown in FIG. 104;
FIG. 106 is a schematic structural view from another direction of the structure shown in FIG. 104;
FIG. 107 is a cross-sectional view of the structure shown in FIG. 105 taken along line AA-AA;
FIG. 108 is an enlarged schematic view of portion AA in FIG. 107;
FIG. 109 is a cross-sectional view of the structure shown in FIG. 105 taken along line AB-AB;
FIG. 110 is an enlarged schematic view of portion AB in FIG. 109;
FIG. 111 is a cross-sectional view of the structure shown in FIG. 105 taken along line AC-AC;
FIG. 112 is an enlarged schematic view of portion AC in FIG. 111;
FIG. 113 is a schematic structural view of the second basket and the pedal in FIG. 101;
FIG. 114 is a schematic structural view of the second basket in FIG. 101;
FIG. 115 is a schematic structural view from another direction of the second basket shown in FIG. 114;
FIG. 116 is a schematic structural view from another direction of the second basket shown in FIG. 114;
FIG. 117 is a schematic structural view from another direction of the second basket shown in FIG. 114;
FIG. 118 is a schematic structural view from another direction of the second basket shown in FIG. 114;
FIG. 119 is a schematic structural view from another direction of the second basket shown in FIG. 114;
FIG. 120 is a schematic structural view from another direction of the vehicle shown in FIG. 101;
FIG. 121 is a schematic structural view of the side door in FIG. 114;
FIG. 122 is a schematic structural view from another direction of the side door shown in FIG. 121;
FIG. 123 is a schematic structural view from another direction of the side door shown in FIG. 121;
FIG. 124 is a schematic structural view of the structure shown in FIG. 113 with the side door in an open state;
FIG. 125 is a schematic structural view of the second basket shown in FIG. 114 with the side door removed;
FIG. 126 is a schematic structural view of the pedal assembly in FIG. 113;
FIG. 127 is a schematic structural view from another direction of the pedal assembly shown in FIG. 126;
FIG. 128 is an exploded view of the pedal assembly shown in FIG. 126;
FIG. 129 is a schematic structural view from another direction of the pedal assembly shown in FIG. 126;
FIG. 130 is a cross-sectional view of the structure shown in FIG. 129 taken along line AD-AD;
FIG. 131 is a schematic structural view from another direction of the pedal assembly shown in FIG. 126;
FIG. 132 is a cross-sectional view of the structure shown in FIG. 131 taken along line AE-AE;
FIG. 133 is a cross-sectional view of the structure shown in FIG. 131 taken along line AF-AF;
FIG. 134 is a schematic structural view of the first fixing member in FIG. 126;
FIG. 135 is a schematic structural view from another direction of the first fixing member shown in FIG. 134;
FIG. 136 is a schematic structural view from another direction of the first fixing member shown in FIG. 134;
FIG. 137 is a schematic structural view from another direction of the first fixing member shown in FIG. 134;
FIG. 138 is a schematic structural view from another direction of the first fixing member shown in FIG. 134;
FIG. 139 is a schematic structural view of the footpeg in FIG. 126;
FIG. 140 is a schematic structural view from another direction of the footpeg shown in FIG. 139;
FIG. 141 is a schematic structural view from another direction of the footpeg shown in FIG. 139;
FIG. 142 is a schematic structural view from another direction of the footpeg shown in FIG. 139;
FIG. 143 is a schematic structural view from another direction of the footpeg shown in FIG. 139;
FIG. 144 is a schematic structural view of the second pivot shaft, the first stopper, and the second stopper in FIG. 128;
FIG. 145 is an exploded view of the structure shown in FIG. 144;
FIG. 146 is a schematic structural view of the first fixing plate and the second fixing member in FIG. 114;
FIG. 147 is a schematic structural view from another direction of the structure shown in FIG. 146;
FIG. 148 is a schematic structural view of a rider during riding;
FIG. 149 is an enlarged schematic view of portion AD in FIG. 148;
FIG. 151 is a schematic structural view of the second basket according to another embodiment of the present application;
FIG. 152 is a schematic structural view of the second basket shown in FIG. 151 with the basket lid closed;
FIG. 153 is a schematic structural view of the second basket according to another embodiment of the present application;
FIG. 154 is a schematic structural view from another direction of the second basket shown in FIG. 153;
FIG. 155 is a schematic structural view of the frame and the pedal assembly according to another embodiment of the present application;
FIG. 156 is a schematic structural view of the vehicle according to another embodiment of the present application;
FIG. 157 is a schematic structural view of the second basket in FIG. 156;
FIG. 158 is a schematic structural view from another direction of the second basket in FIG. 157;
FIG. 159 is a schematic structural view of the vehicle according to another embodiment of the present application;
FIG. 160 is a schematic structural view from another direction of the vehicle shown in FIG. 159;
FIG. 161 is a schematic structural view of the frame and the second fixing member in FIG. 160;
FIG. 162 is a schematic structural view from another direction of the structure shown in FIG. 161;
FIG. 163 is a schematic structural view of the frame and the second basket in FIG. 159;
FIG. 164 is a schematic structural view from another direction of the structure shown in FIG. 163;
FIG. 165 is a schematic structural view of the second basket in FIG. 159;
FIG. 166 is a cross-sectional view of the second basket shown in FIG. 165 taken along line BA-BA;
FIG. 167 is a schematic structural view from another direction of the second basket shown in FIG. 165;
FIG. 168 is a schematic structural view from another direction of the second basket shown in FIG. 165;
FIG. 169 is a cross-sectional view of the basket shown in FIG. 165 taken along line BB-BB;
FIG. 170 is a schematic structural view of the first middle diagonal side rod, the edge bottom rod, the second side rod, and the second upper side rod in FIG. 168;
FIG. 171 is a schematic structural view from another direction of the structure shown in FIG. 170;
FIG. 172 is a schematic structural view from another direction of the structure shown in FIG. 170;
FIG. 173 is a cross-sectional view of the structure shown in FIG. 171 taken along line BC-BC;
FIG. 174 is a cross-sectional view of the structure shown in FIG. 171 taken along line BD-BD;
FIG. 175 is a cross-sectional view of the second basket shown in FIG. 165 taken along line BE-BE;
FIG. 176 is an enlarged schematic view of portion BA in FIG. 175;
FIG. 177 is a cross-sectional view of the second basket shown in FIG. 167 taken along line BF-BF;
FIG. 178 is an enlarged schematic view of portion BC in FIG. 177;
FIG. 179 is a cross-sectional view of the side door shown in FIG. 167 taken along line BG-BG;
FIG. 180 is an enlarged schematic view of portion BD in FIG. 179;
FIG. 181 is a schematic structural view of a portion of the second basket in FIG. 159;
FIG. 182 is a schematic structural view of the frame in FIG. 159;
FIG. 183 is a schematic structural view of the vehicle according to another embodiment of the present application;
FIG. 184 is a schematic structural view of the mounting frame;
FIG. 186 is a sectional view of the battery assembly;
FIG. 187 is a schematic structural view of the vehicle;
FIG. 188 is another schematic structural view of the vehicle;
FIG. 189 is another schematic structural view of the vehicle;
FIG. 190 is a schematic view illustrating the use of the cushion;
FIG. 191 is another schematic view illustrating the use of the cushion;
FIG. 192 is a schematic view illustrating the connection between the second basket and the animal safety rope;

### Reference Numerals:

Vehicle 100;
Direction opposite to gravity D1', Normal traveling direction D2', Relative direction D3';
Frame 10, Front wheel steering mechanism 20, Seat 30, Front wheel 40, Rear wheel 40', Power mechanism 50, Storage mechanism 60, Pedal 70, Seat tube 80;
Kickstand 1, Rear basket 2, Tail-light 3, Headlight 3', Rear fender 4, Front fender 4', Rear brake 5, Front brake 5', Motor shaft 6, Brake cable 7, Adapter 8, Brake lever 9;
Head tube 11, First bracket 12, Second bracket 13, Support plate 14, Reinforcement plate 15, Middle tube 16, Reinforcing rib 17;
First threaded hole 1411, Second threaded hole 1412;
First weld tab 101, Second weld tab 102, Third weld tab 103, Reinforcement rod 104, Rear fork web 105, Cable retaining structure 106;
First mounting protrusion 1051, Second mounting protrusion 1052, First recess 1053, Second recess 1054, Mounting hole 1055; Retaining hole 1061;
Handlebar 21, Stem 22, Front fork 23;
First rod 221, Second rod 222, Folding mechanism 223;
Collar 2211, Opening 2212, Connecting region 2221;
Housing 2231, Release member 2232, Snap fit member 2233, Connecting rod 2234;
First sidewall 201, Second sidewall 202, Accommodating groove 203; Slide hole 2011;
Sliding latch 22321, Retaining member 22322, First hook 2232a, First rolling surface 2232b;
Second hook 2233a, Second rolling surface 2233b;
Battery 51;
First limiting member 61, Second limiting member 62, Third limiting member 63, Fourth limiting member 64, Mounting member 65, Storage cavity 6a;
First horizontal bar 611, First vertical bar 612; Second horizontal bar 621, Second vertical bar 622; Third horizontal bar 631, Third vertical bar 632; Fourth horizontal bar 641, Fourth vertical bar 642; Fifth horizontal bar 661;
Mounting plate 651; Detent member 71, Anti-slip strip 72; Connecting plate 81, Connecting post 82;
500/600/700/800/900: Vehicle;
501: Handlebar;
502: Stem;
503: Front fork;
504: Frame;
504a: First section; 504b: Second section; 504c: Third section; 504d: First connecting portion; 504e: Second connecting portion;
504f: Third connecting portion; 504fa: First fixing hole; 504h: Fifth connecting portion; 504i: First transition section; 504j: Second transition section;
504k: Extension section; 504m: Third transition section; 504n: Plug; 504na: Plug body; 504nb: Sealing ring; 504nc: First weight-reducing groove; 504nd: Rim; 504p: First bolt connection assembly;
5041: Mounting frame; 5042: Support plate; 5042a: First anti-slip mechanism; 5042b: Fourth fixing hole; 5042c: Seventh fixing hole; 5042d: Second flat portion; 5042e: Third upwardly extending portion; 5042f: Fourth upwardly extending portion; 5043: Avoidance groove;
5044: Support rod; 5044a: First upwardly extending portion; 5044b: First flat portion; 5044c: Second upwardly extending portion; 5044d: First inclined portion; 5044e: First arc-shaped portion; 5044f: Second arc-shaped portion; 5044g: Second inclined portion; 5044h: Third arc-shaped portion; 5044i: Horizontal section; 5044j: First mounting groove; 5044k: First receiving groove; 5044m: First groove; 5044n: First mounting hole; 5044o: Second mounting hole;
5045: First support beam; 5045a: First through hole; 5045b: First drainage hole; 5045c: Fifth fixing hole; 5045d: First avoidance recess;
5046: Second support beam; 5046a: Second through hole; 5046b: Second drainage hole; 5046c: Second avoidance recess;
5047: Third support beam; 5048: Sixth connecting portion; 5049: Seventh connecting portion; 5050: Intermediate section;
505: Front wheel; 505a: Wheel rim; 505b: Front tire;
506: Rear wheel; 506a: Rear tire; 506b: Rear wheel axle;
507: First basket; 5071: Second fixing hole;
508: Seat; 5081: Seat support rod;
509: Battery assembly; 509a: Inserted section; 509b: Exposed section; 509c: Battery box; 509d: Battery pack; 509e: Controller; 509f: Battery cover; 509g: First cable hole; 509h: Second cable hole; 509i: Screw boss;
510: Driving mechanism;
511: Side stand;
512: First securing assembly; 5121: Clamping member; 5122: First locking member; 5123: First mounting portion; 5124: Second mounting portion; 5125: Pressing portion; 5126: First guide hole; 5127: First guide member; 5128: pivot shaft;
513: Spring shock absorber;
514: Connection assembly;
515: Rear fork;
516: Winding tube;
517a: First nut; 517b: First washer; 517c: Second washer;
518a: Brake caliper; 518b: Disk brake rotor; 518c: Brake caliper bracket;
601: Second basket; 602: Bottom rod; 602a: Edge bottom rod; 602b: Intermediate bottom rod; 603: First fixing plate; 603a: Second bolt connection assembly; 603b: Third fixing hole; 603c: First connection location; 603d: Second connection location; 603e: Third connection location; 603f: Fourth connection location; 603g: Fifth connection location; 603h: Sixth connection location; 603i: Seventh connection location; 603j: Eighth connection location; 604: Second fixing plate; 604a: Third bolt connection assembly; 604b: Sixth fixing hole;
605: First side; 605a: First side rod; 605b: Second side rod; 605c: First upper side rod; 605d: First middle side rod; 605e: First horizontal side rod; 605f: First diagonal side rod; 606: Second side; 606a: Third side rod; 606b: Fourth side rod; 606c: Second upper side rod; 606d: Second middle side rod; 606e: Second outer side rod; 607: Third side; 607a: Fifth side rod; 607b: Sixth side rod; 607c: Third upper side rod; 607d: Third middle side rod; 607e: Mounting rail;
Fourth side; 608a: Seventh side rod; 608b: Eighth side rod; 608c: Fourth upper side rod; 608d: Fourth middle side rod; 609: Fourth transition section; 610: Fifth transition section; 611: Side door; 611a: Outer frame; 611b: Fourth middle side rod; 611c: First frame edge; 611d: Second frame edge; 611e: Third frame edge; 611f: Fourth frame edge; 612: Door lock; 613: Operation portion; 614: Latch portion; 615: First limiting portion;
616: Pedal assembly; 617: Footpeg; 617a: Tread surface; 617b: Second anti-slip mechanism; 617c: Protrusion; 617d: Second weight-reducing groove; 617e: First reinforcing rib; 617f: First pivot hole; 618: Fourth bolt connection assembly;
619: First fixing member; 619a: Eighth fixing hole; 619b: Second pivot hole; 619c: Cantilever;
620: Second fixing member; 620a: Ninth fixing hole; 621: Second pivot shaft; 621a: First through hole; 622: Pedal retaining mechanism; 622a: First limiting member; 622b: First return member; 622c: First limiting groove; 622d: Second limiting groove; 622e: Retaining groove; 623: First stopper; 624: Second stopper; 625: Second limiting member; 6251: First limiting surface; 6252: Second limiting surface; 626: Basket lid; 627: Third limiting portion; 6271: Abutment surface; 628: Baffle; 629: Cushion;
901: Phone holder;
01: First direction; 02: Second direction; 03: Third direction; 04: Forward traveling direction; 05: Axis of the plug; 06: Rotation axis of the footpeg;
β1: Angle between the first section 504a and the second section 504b; β2: Angle between the third section 504c and the second section 504b; β3: Angle between the third section 504c and the first plane; β5: Angle between the stem 502 and the first direction 01;
β6: Angle between the front fork 503 and the first direction 01; β7: Angle between the seat support rod 5081 and the first direction 01; β8: Angle between the side edge of the first section 504a along the second direction 02 and the second direction 02; β9: Angle between the side edge of the third section 504c along the second direction 02 and the second direction 02; β10: Angle between the first side 605 and the bottom wall of the second basket 601;
β11: Angle between the second side 606 and the bottom wall of the second basket 601; β12: Angle between the tread surface 617a and the first plane; β13: Angle between the first side 605 and the first section 504a; β14: Angle between the third side 607 and the bottom wall of the second basket 601;
β17: Angle between the first connecting portion 504d and the first section 504a;
β22: Angle between the extension section 504k and the third section 504c; β23: Angle between the second connecting portion 504e and the first plane;
β24: Angle between the second connecting portion 504e and the third section 504c;
β26: Bending angle of the rear fork web 105; β27: Angle between the first receiving groove 5044k and the first plane; β28: Angle between the left side of the battery box 509c and the second plane; β29: Angle between the front side of the battery box 509c and the third plane;
D1': Direction opposite to gravity; D2': Normal traveling direction; D3': Relative direction; D1: Outer diameter of the front wheel 505 and the rear wheel 506; D3: Outer diameter of the second support beam 5045;
H: Height of the storage mechanism 60; H1: Height of the seat 508; H1max: Maximum height of the seat 508; H1min: Minimum height of the seat 508; H2: Height of the handlebar 501 from the ground; H3: Height of the first section 504a of the frame 504 from the ground;
H4: Height from the rim 505a to the tread of the front tire 505b; H5: Height of the third upwardly extending portion 5042e from the ground along the third direction 03;
H6: Thickness of the sealing ring 504nb along the axial direction of the plug 504n; H7: Adjustment stroke of the seat 508; H8: Height of the third upwardly extending portion along the third direction 03; H9: Height of the second basket 601; H10: Height of the inserted section 509a along the third direction 03;
H11: Height of the exposed section 509b along the third direction 03; H12: Height of the support plate 5042 from the ground; H13: Height of the battery assembly 509; H14: Height of the third side 607 along the third direction 03; H15: Height of the first support beam 5045 along the third direction 03;
H16: Height of the third side 607 from the ground; H17: Height of the first receiving groove 5044k; H18: Height of the connection position between the seat 508 and the frame 504; H19: Height of the fifth connecting portion 504h along the third direction 03;
K1: Ratio of H3 to H2; K2: Ratio of L13 to L12; K3: Ratio of L17 to L16; K4: Ratio of L18 to L19; K5: Ratio of L18 to L20;
K6: Ratio of H10 to H11; K7: Ratio of H12 to H13; K8: Ratio of L8 to L26; K9: Ratio of L27 to W9; K10: Ratio of L28 to L29;
K11: Ratio of H14 to H8; K12: Ratio of H16 to H12; K13: Ratio of L32 to L15; K14: Ratio of L33 to R4; K15: H4/W1×100%;
K16: Ratio of L2 to L1; K17: Ratio of L9 to L5;
L: Length of the storage mechanism 60; L1: Distance between the front end of the front wheel 505 and the rear end of the rear wheel 506 along the first direction 01; L2: Length of the frame 504 along the first direction 01 (distance between the front end of the first connecting portion 504d and the rear end of the second transition section 504j); L3: Length of the first basket 507 along the first direction 01; L4: Distance between the seat 508 and the stem 502 along the first direction 01; L5: Distance between the seat 508 and the front wheel 505 along the first direction 01;
L8: Distance between the first support beam 5045 and the second support beam 5046; L9: Distance between the pedal assembly 616 and the seat 508 along the first direction 01; L10: Length of the tread surface 617a;
L11: Distance between the second fixing member 620 and the front end of the second section 504b of the frame 504; L12: Projected length of the first upwardly extending portion 5044a on the first plane; L13: Projected length of the first flat portion 5044b on the first plane; L14: Projected length of the first inclined portion 5044d on the first plane; L15: Length of the second flat portion 5042 along the first direction 01;
L16: Distance between the side stand support position provided by the fifth connecting portion 504h and the rear end of the first flat portion 5044b; L17: Distance between the kickstand support position provided by the fifth connecting portion 504h and the front end of the first flat portion 5044b; L18: Length of the support rod 5044 along the first direction 01; L19: Distance between the first support beam 5045 and the front end of the support rod 5044; L20: Distance between the second support beam 5046 and the rear end of the support rod 5044;
L21: Distance between the rear side of the first support beam 5045 and the front side of the inserted section 509a along the first direction 01; L22: Distance between the rear side of the inserted section 509a and the front side of the second support beam 5046 along the first direction 01; L23: Distance between the right side of the support rod 5044 and the left side of the inserted section 509a along the second direction 02; L24: Distance between the second side 606 and the third section 504c; L25: Length of the inner cavity of the battery box 509c along the first direction 01;
L26: Length of the battery assembly 509 along the first direction 01; L27: Distance between two first flat portions 5044b; L28: Distance between the first row of screw bosses 509i and the last row of screw bosses 509i along the first direction 01; L29: Length of the top side of the battery box 509c; L30: Groove depth of the avoidance groove 5043;
L31: Distance between the front side of the third side 607 and the rear side of the first section along the first direction 01; L32: Length of the bottom side of the third side 607 along the first direction 01; L33: Distance between the side edge of the support plate 5042 and the top end of the support rod 5044 along the second direction 02;
R1: Curvature radius of the first arc-shaped portion 5044e; R2: Curvature radius of the second arc-shaped portion 5044f; R3: Curvature radius of the third arc-shaped portion 5044h; R4: Radius of the support rod 5044;
W: Width of the storage mechanism 60; W1: Width of the front wheel 505 and the rear wheel 506 along the second direction 02; W2: Width of the handlebar 501 along the second direction 02; W3: Width of the frame 504 along the second direction 02; W4: Width of the first basket 507 along the second direction 02; W5: Groove width of the avoidance groove 5043;
W6: Width of the second flat portion 5042 along the second direction 02; W7: Width of the first support beam 5045 along the first direction 01; W8: Width of the inner cavity of the battery box 509c along the second direction 02; W9: Width of the battery assembly 509 along the second direction 02; W10: Width of the first receiving groove 5044k;
W11: Width of the tread surface 617a; W12: Thickness of the first reinforcing rib 617e along the first direction 01; W13: Width of the front end of the second section 504b along the second direction 02; W14: Width of the rear end of the second section 504b along the second direction 02.

It is to be understood that: the frame is labeled 10 in some embodiments, and may be labeled 504 in other embodiments. The front wheel is labeled 40 in some embodiments, and may be labeled 505 in other embodiments. The rear wheel is labeled 40' in some embodiments, and may be labeled 506 in other embodiments. The power mechanism may be referred to as a battery assembly in other embodiments. The storage mechanism may be referred to as a second basket in other embodiments. The pedal may be referred to as a footpeg in other embodiments. The seat tube may be referred to as a seat support rod in other embodiments. The kickstand may be referred to as a side stand in other embodiments. The rear basket may be referred to as a first basket in other embodiments. The adapter may be referred to as a first fixing member in other embodiments. The head tube may be referred to as a first connecting portion in other embodiments. The first bracket may be referred to as a support rod in other embodiments. The second bracket may be referred to as a support rod in other embodiments. The support plate may be referred to as a second flat portion in other embodiments. The reinforcement plate may be referred to as a third upwardly extending portion in other embodiments. The middle tube may be referred to as a second connecting portion in other embodiments. The reinforcing rib may be referred to as a first support beam or a second support beam in other embodiments.

The first threaded hole may be referred to as a fourth fixing hole in other embodiments. The second threaded hole may be referred to as a first mounting hole in other embodiments. The first weld tab may be referred to as a fifth connecting portion in other embodiments. The second weld tab may be referred to as a third connecting portion in other embodiments. The second recess may be referred to as a first receiving groove in other embodiments. The mounting hole may be referred to as a first groove in other embodiments. The handlebar is labeled 21 in some embodiments, and may be labeled 501 in other embodiments. The stem is labeled 22 in some embodiments, and may be labeled 502 in other embodiments. The front fork is labeled 23 in some embodiments, and may be labeled 503 in other embodiments. The first limiting member may be referred to as a first side in other embodiments. The second limiting member may be referred to as a third side in other embodiments. The third limiting member 63 may be referred to as a second side in other embodiments. The fourth limiting member may be referred to as a fourth side in other embodiments. The mounting member may be referred to as a first fixing plate or a second fixing plate in other embodiments. The first horizontal bar may be referred to as a first side rod in other embodiments. The first vertical bar 612 may be referred to as a second side rod in other embodiments. The second horizontal bar may be referred to as a fifth side rod or a sixth side rod in other embodiments. The fourth horizontal bar may be referred to as a seventh side rod or an eighth side rod in other embodiments. The fifth horizontal bar may be referred to as an intermediate bottom rod in other embodiments. The mounting plate may be referred to as a second fixing member in other embodiments. The anti-slip strip may be referred to as a protrusion in other embodiments. The connecting plate may be referred to as a cantilever in other embodiments. The connecting post may be referred to as a second pivot shaft in other embodiments. The first section may be referred to as a intermediate section in other embodiments. The fifth connection location may be referred to as a fourth fixing hole in other embodiments.

### DETAILED DESCRIPTION OF EMBODIMENTS

Hereinafter, the technical solutions in the embodiments of the present application will be described clearly and completely with reference to the illustrative drawings in the embodiments of the present application. Apparently, the described embodiments are merely a part of the embodiments of the present application, rather than all of the embodiments.

In some embodiments, local features in the drawings may be enlarged or reduced to more clearly illustrate their details.

Unless otherwise specified, all technical and scientific terms used in the present application have the same meaning as commonly understood by one of ordinary skill in the art to which the present application pertains. The terminology used in the present application is for the purpose of describing specific embodiments only and is not intended to limit the scope of the present application. The term "and/or" as used in the present application includes any and all combinations of one or more of the associated listed items. As used in the present application and the appended claims, the singular forms "a," "an," "the," and "said" may also be construed to include the plural forms, unless the context clearly indicates otherwise.

In some embodiments, it can be understood that the terms "first" and "second" may be used for descriptive purposes only, may not be understood as indicating or implying relative importance, and may not be implicitly construed as limiting the number of the technical features indicated. Thus, a feature defined with "first" or "second" may explicitly or implicitly include one or more of said features. In some embodiments, "a plurality of" means two or more, unless otherwise explicitly and specifically defined. In some embodiments, "several" means one or more, unless otherwise explicitly and specifically defined. The articles "a" and "an" may also indicate the plural.

In some embodiments, it can be understood that the terms indicating orientation or positional relationships, such as "center," "longitudinal," "transverse," "lateral," "length," "width," "thickness," "height," "upper," "lower," "front," "rear," "left," "right," "vertical," "horizontal," "top," "bottom," "inner," "outer," "clockwise," "counterclockwise," etc., are based on the orientation or positional relationship shown in the drawings and are only for the purpose of facilitating a simplified description of the present application, and are not intended to indicate that the apparatus or element referred to must have a specific orientation or be constructed and operated in a specific orientation, and thus can't be construed as a limitation on the present application.

In some embodiments, unless otherwise explicitly defined, terms such as "installing," "connecting," "linking," "fixing," "setting," "attaching," "arranging," "supporting," and similar action/operational terms should be understood in a broad sense, and may be understood as being realized directly or indirectly. For example, a "connection" may be a fixed connection, a detachable connection, or integral; it may be a mechanical connection or an electrical connection; it may be a direct connection or an indirect connection through an intermediary, and it may also be the communication within two elements or the interaction between two elements. For a person of ordinary skill in the art, the specific meanings of the above terms in the present application may be understood according to the specific situation. For example, installing component A onto component B may mean installing A directly onto B, or it may mean installing component A indirectly onto component B via a third-party intermediate component, which may be referred to as a carrier component. In addition, the broad understanding of these action/operational terms is also reflected in that the action or operation itself may be fully or partially realized. For example, "component A supports component B" may mean that component B is fully supported by component A, or that component B is partially supported by component A (i.e., component A may support component B together with other components).

In some embodiments, unless otherwise explicitly defined, a first feature being "on," "above," "over," "on top of," "under," "below," "beneath," "underneath," or "inner" a second feature may mean that the first feature and the second feature are in direct contact, or that the first feature and the second feature are in indirect contact through an intermediate medium. Moreover, a first feature being "above," "over," and "on top of" a second feature may mean that the first feature is directly above or diagonally above the second feature, or may simply indicate that the horizontal level of the first feature is higher than the horizontal level of the second feature. A first feature being "under," "below," "beneath," and "underneath" a second feature may mean that the first feature is directly below or diagonally below the second feature, or may simply indicate that the horizontal level of the first feature is lower than the horizontal level of the second feature.

In the present application, to facilitate understanding of the relative positions of different structures in the vehicle, a three-dimensional coordinate system indicating directions is added to each drawing of the specification. The first direction 01, the second direction 02, and the third direction 03 in the coordinate system are mutually perpendicular. It can be understood that, due to different viewing angles, only two of these directions may be shown in some views.

The first direction 01 is the length direction of the vehicle. When the vehicle is a two-wheeled vehicle, i.e., having only one front wheel 505 and only one rear wheel 506, the first direction 01 may be the direction of arrangement of the front wheel 505 and the rear wheel 506. When the vehicle is a tricycle having one front wheel 505 and two rear wheels 506, the first direction 01 may be a direction perpendicular to the arrangement direction of the two rear wheels 506. When the vehicle is a tricycle having two front wheels 505 and one rear wheel 506, the first direction 01 may be a direction perpendicular to the arrangement direction of the two front wheels 505. When the vehicle is a four-wheeled vehicle, i.e., having two front wheels 505 and two rear wheels 506, the first direction 01 may be a direction perpendicular to the arrangement direction of the two rear wheels 506, or may be a direction perpendicular to the arrangement direction of the two front wheels 505.

The third direction 03 is the height direction when the vehicle is upright, i.e., the direction perpendicular to the road surface when the front wheel 505 and the rear wheel 506 of the vehicle are perpendicular to the road surface. The third direction 03 may be the height direction of the front wheel 505 or the rear wheel 506 when the vehicle is upright.

The second direction 02 is perpendicular to both the first direction 01 and the third direction 03. It can be understood that when the vehicle travels in a straight line, both the first direction 01 and the second direction 02 are parallel to the road surface, and the third direction 03 is perpendicular to the road surface.

It can be understood that when the vehicle travels in a straight line, the axis of rotation a of the front wheel 505 relative to the front fork 503 and the axis of rotation b of the rear wheel 506 relative to the frame 504 are parallel.

It should be noted that the first direction 01, the second direction 02, and the third direction 03 are provided merely to facilitate distinguishing the relative positions of the various structures in the vehicle and do not constitute an absolute limitation on the structure of the vehicle. For example, when the vehicle is placed at an inclined angle or is toppled, the corresponding third direction 03 is no longer the direction perpendicular to the road surface, but is instead the direction relative to the vertical direction of the road surface after being tilted at the same angle and in the same direction as the vehicle.

Further, for ease of description, a surface that is parallel to both the first direction 01 and the second direction 02 is referred to as a first plane; a surface that is parallel to both the first direction 01 and the third direction 03 is referred to as a second plane; and a surface that is parallel to both the second direction 02 and the third direction 03 is referred to as a third plane. It can be understood that the first plane is perpendicular to the third direction 03, the second plane is perpendicular to the second direction 02, and the third plane is perpendicular to the first direction 01.

In the present application, the direction from the rear wheel 506 pointing toward the front wheel 505 along the first direction 01 is defined as the forward traveling direction 04. The "front end" refers to the terminal end of the structure in the forward traveling direction 04; the "rear end" refers to the starting end of the structure in the forward traveling direction 04. For example, the front end of the front wheel 505 is the end of the front wheel 505 facing away from the rear wheel 506 along the first direction 01, and the rear end of the front wheel 505 is the end of the front wheel 505 closer to the rear wheel 506 along the first direction 01. Correspondingly, the "front side" refers to the front side of the structure along the forward traveling direction 04; the "rear side" refers to the rear side of the structure along the forward traveling direction 04. For example, the front side of the front wheel 505 is the side of the front wheel 505 facing away from the rear wheel 506 along the first direction 01, and the rear side of the front wheel 505 is the side of the front wheel 505 closer to the rear wheel 506 along the first direction 01.

In the present application, the "top end" refers to the end that is farther from the road surface along the third direction 03 when the vehicle is upright; the "bottom end" refers to the end that is closer to the road surface along the third direction 03 when the vehicle is upright. For example, the top end of the stem 502 is the end of the stem 502 closer to the handlebar 501 along the third direction 03, and the bottom end of the stem 502 is the end of the stem 502 facing away from the handlebar 501 along the third direction 03. Correspondingly, the "top side" refers to the side that is farther from the road surface along the third direction 03 when the vehicle is upright; the "bottom side" refers to the side that is closer to the road surface along the third direction 03 when the vehicle is upright. For example, the top side of the stem 502 is the side of the stem 502 closer to the handlebar 501 along the third direction 03, and the bottom side of the stem 502 is the side of the stem 502 facing away from the handlebar 501 along the third direction 03.

In the present application, the "left side" refers to the side where the rider's left hand is located along the second direction 02 when the rider is seated on the vehicle; the "right side" refers to the side where the rider's right hand is located along the second direction 02 when the rider is seated on the vehicle. For example, the left side of the stem 502 is the side of the stem 502 where the rider's left hand is located along the second direction 02, and the right side of the stem 502 is the side of the stem 502 where the rider's right hand is located along the second direction 02. Correspondingly, the "left end" refers to the end where the rider's left hand is located along the second direction 02 when the rider is seated on the vehicle; the "right end" refers to the end where the rider's right hand is located along the second direction 02 when the rider is seated on the vehicle. For example, the left end of the stem 502 is the end of the stem 502 where the rider's left hand is located along the second direction 02, and the right end of the stem 502 is the end of the stem 502 where the rider's right hand is located along the second direction 02.

In the description of the present application, regarding expressions involving ranges of values, such as angles or dimensions, unless explicitly stated otherwise, the ranges are defaulted to include their endpoints. For example, if an included angle is from 0° to 5°, then the technical features and effects corresponding to both 0° and 5° are covered by the present application.

Symmetry plane a refers to the plane that is perpendicular to the first plane and bisects the first connecting portion along the first direction.

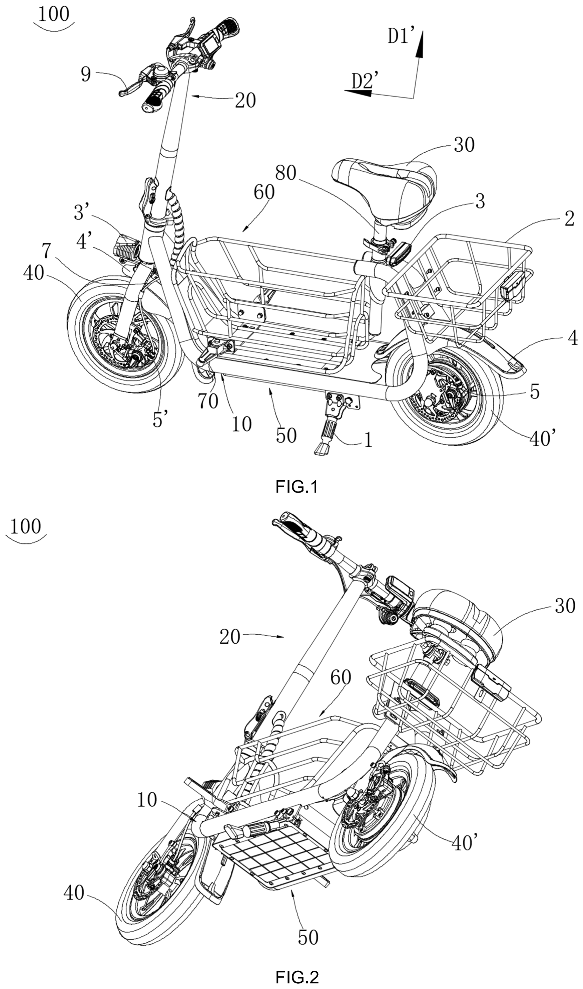

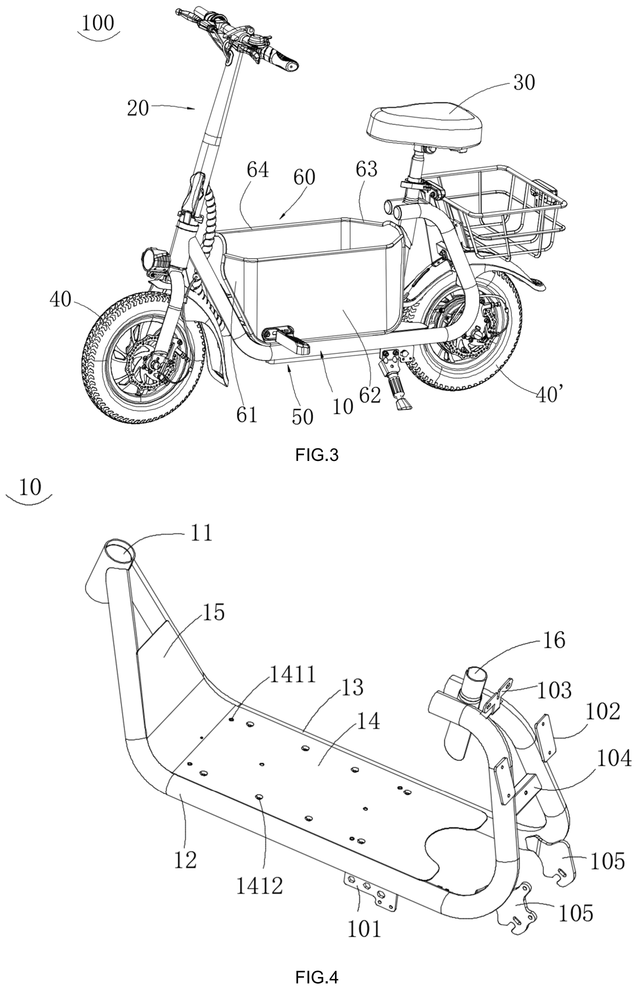

Embodiments of the present application provide a vehicle 100, as shown in FIG. 1 and FIG. 2, or as shown in FIG. 3. The vehicle 100 includes a frame 10, a front wheel steering mechanism 20, a seat 30, a front wheel 40, a rear wheel 40', a power mechanism 50 (which may be referred to as a battery assembly in other embodiments), and at least one storage mechanism 60 (which may be referred to as a second basket in other embodiments). The front wheel steering mechanism 20 is connected to the front end of the frame 10, and the seat 30 is connected to the rear end of the frame 10. The front wheel 40 is disposed at the front end of the frame 10, and the rear wheel 40' is disposed at the rear end of the frame 10. The power mechanism 50 is provided on the frame 10 to supply power for the movement of the vehicle 100.

The storage mechanism 60 is a multifunctional accessory capable of carrying various items that a user wishes to transport, such as cargo, children, pets, or groceries. Compared with vehicles in the prior art, the vehicle 100 disclosed in the embodiments of the present application is capable of accommodating items, thereby facilitating the user's travel.

In some embodiments, the storage mechanism 60 may be a basket (as shown in FIG. 1), a basket frame (as shown in FIG. 3), a box, or any mechanism configured to carry items and prevent items from falling. When only one storage mechanism 60 is provided, the storage mechanism 60 may be mounted on the frame 10 and located between the front wheel steering mechanism 20 and the seat 30. Since the storage mechanism 60 is installed on the frame 10 and positioned between the front wheel steering mechanism 20 and the seat 30, the user may monitor the items in the storage mechanism 60 even while riding. As such, through the special design of the structure of the vehicle 100 disclosed in the embodiments of the present application, the safety of the items within the storage mechanism 60 can be enhanced.

When there are two storage mechanisms 60, one of the storage mechanisms 60 may be mounted on the frame 10 and located between the front wheel steering mechanism 20 and the seat 30; the other storage mechanism 60 may be located at the front end or the rear end of the frame 10. By providing two storage mechanisms 60, the quantity of items that the vehicle 100 can carry may be increased. It is also possible to utilize the two storage mechanisms 60 to hold carried items in separate zones, which in turn may prevent the items carried within the two storage mechanisms 60 from contaminating each other. This may also make it easier for the user to find the items carried within the two storage mechanisms 60, enhancing the user's sense of experience when using the vehicle 100. As an example, dry items may be placed in one storage mechanism 60, and wet items may be placed in the other storage mechanism 60. It is understood that both storage mechanisms 60 may be mounted on the frame 10; for example, the two storage mechanisms 60 may be mounted side-by-side on the frame 10, thereby allowing for carried items to be held in separate zones and also enhancing the user's sense of experience when using the vehicle 100.

It is worth noting that the number of storage mechanisms 60 may also be multiple. For example, several of the storage mechanisms 60 may be mounted on the frame 10 and located between the front wheel steering mechanism 20 and the seat 30, and/or one of the storage mechanisms 60 may be located at the front end of the frame 10, and/or one of the storage mechanisms 60 may be located at the rear end of the frame 10. It is worth noting that regardless of the number of storage mechanisms 60, each storage mechanism 60 may be used to carry various items the user wishes to carry, such as cargo, children, pets, or groceries. The vehicle 100 disclosed in the embodiments of the present application is capable of accommodating items, thereby facilitating the user's travel.

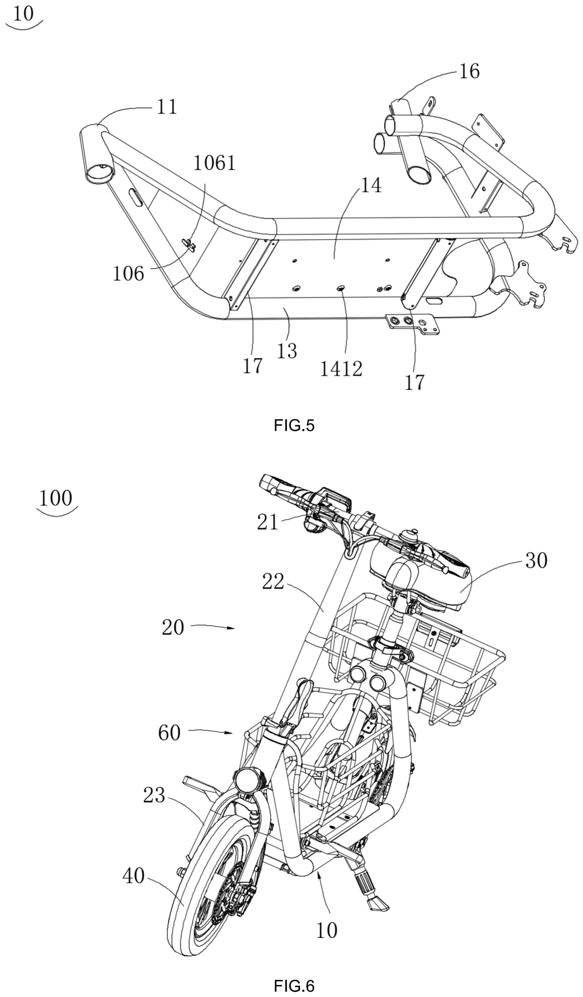

Regarding the aforementioned frame 10, the frame 10 may be used to connect the front wheel steering mechanism 20 and the seat 30, and the frame 10 may be used for the installation of the storage mechanism 60. Please refer to FIGS. 4 and 5. FIGS. 4 and 5 illustrate an implementation of the frame 10 from different perspectives. The overall shape of the frame 10 may approximately present a form with both ends extending upward and forward and a recessed middle section, such that the two ends of the frame 10 may respectively provide support for the front wheel steering mechanism 20 and the seat 30, and the recessed middle of the frame 10 may thereby accommodate the storage mechanism 60.

In some embodiments, please refer to FIGS. 4 and 5. An implementation of the frame 10 may be that the frame 10 comprises a head tube 11 (which may be referred to as a first connecting portion in other embodiments), a first bracket 12 (which may be referred to as a support rod in other embodiments), a second bracket 13 (which may be referred to as a support rod in other embodiments), a support plate 14 (which may be referred to as a second flat portion in other embodiments), a reinforcement plate 15 (which may be referred to as a third upwardly extending portion in other embodiments), and a middle tube 16 (which may be referred to as a second connecting portion in other embodiments). The head tube 11 is used to connect the front wheel steering mechanism 20 to the frame 10. The middle tube 16 is used to connect the seat 30 to the frame 10. The first bracket 12, the second bracket 13, and the support plate 14 are used to support the head tube 11 and the middle tube 16. Wherein, a front end of the first bracket 12 and a front end of the second bracket 13 respectively extend forward and upward to connect with the head tube 11; a rear end of the first bracket 12 and a rear end of the second bracket 13 respectively extend forward and upward to clamp the middle tube 16; a middle portion of the first bracket 12 and a middle portion of the second bracket 13 are spaced apart, the support plate 14 is mounted on the middle portion of the first bracket 12, and the support plate 14 is mounted on the middle portion of the second bracket 13; the support plate 14 is a flat plate located in the aforementioned recessed middle area of the frame 10, and the support plate 14 may be used for disposing the storage mechanism 60; the reinforcement plate 15 is formed by extending upward and forward from the support plate 14, the reinforcement plate 15 is mounted on the front end of the first bracket 12, and the reinforcement plate 15 is mounted on the front end of the second bracket 13. In some embodiments, the support plate 14 has a plurality of first threaded holes 1411 (which may be referred to as fourth fixing holes in other embodiments) and a plurality of second threaded holes 1412 (which may be referred to as first mounting holes in other embodiments). The first threaded holes 1411 are used for mounting the storage mechanism 60, and the second threaded holes 1412 are used for disposing the power mechanism 50.

In some embodiments, the frame 10 may include at least one reinforcing rib 17 (which may be referred to as a first support beam or a second support beam in other embodiments), and the reinforcing rib 17 is mounted on the side of the support plate 14 facing away from the seat 30. After installing the reinforcing rib 17, the load-bearing capacity of the frame 10 may be enhanced. In addition, the storage mechanism 60 may be mounted on the reinforcing rib 17 to increase the stability of the connection between the storage mechanism 60 and the frame 10. In some embodiments, the number of reinforcing ribs 17 may be two, the two reinforcing ribs 17 are disposed oppositely, and the two reinforcing ribs 17 are respectively connected to the front end and rear end of the support plate 14.

In some embodiments, continuing to refer to FIGS. 4 and 5, the frame 10 may include a first weld tab 101 (which may be referred to as a fifth connecting portion in other embodiments), a second weld tab 102 (which may be referred to as a third connecting portion in other embodiments), a third weld tab 103, a rear fork web 105, and a reinforcement rod 104. Wherein, the first weld tab 101 is connected to the middle portion of the first bracket 12 or the middle portion of the second bracket 13, and the first weld tab 101 is used to connect a kickstand 1 (as shown in FIG. 1). Wherein, the number of second weld tabs 102 may be two; one second weld tab 102 is connected to the rear end of the first bracket 12, and the other second weld tab 102 is connected to the rear end of the second bracket 13. The second weld tab 102 is used to mount a rear basket 2 (as shown in FIG. 1). Wherein, one end of the third weld tab 103 is connected to the rear end of the first bracket 12 and the rear end of the second bracket 13, and the other end of the third weld tab 103 extends upward, and the other end of the third weld tab 103 is used to connect a tail-light 3 (as shown in FIG. 1). Wherein, the reinforcement rod 104 is supported between the rear end of the first bracket 12 and the rear end of the second bracket 13, and the reinforcement rod 104 is used to connect a rear fender 4 (as shown in FIG. 1).

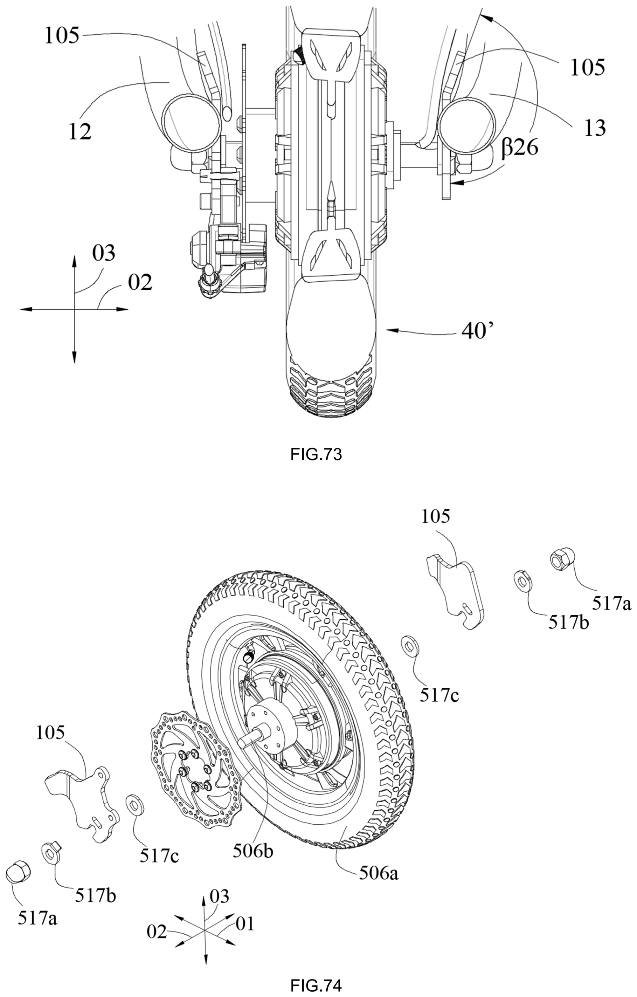

Referring to FIG. 73, in some embodiments, the rear fork web 105 is configured to enclose or form a space along the second direction 02 that is located at the bottom end and is for mounting the rear wheel 40'. Additionally, the rear fork web 105 is also used to connect the rear wheel 40' and other portions of the frame 10, such as the first bracket 12 or the second bracket 13.

In some embodiments, the rear fork web 105 is approximately sheet-like or platelike, and its thickness falls within the range of 4 mm to 7 mm. When the thickness is less than 4 mm, the structural strength is insufficient, and when the self-weight of the frame 10 is large or the load is heavy, the rear fork web 105 is prone to bending or deformation. When the thickness is greater than 7 mm, the self-weight will significantly increase, and at the same time, the material cost will be increased.

Specifically, the thickness of the rear fork web 105 may be any value within the range of 4 mm to 7 mm, for example, 4 mm, 4.5 mm, 5 mm, 5.5 mm, 6 mm, 6.5 mm, or 7 mm.

In some embodiments, the rear fork web 105 is configured such that, along the first direction 01, the front end extends outward, and the rear end is approximately flat. The outward extension of the front end facilitates fitting with the first bracket 12 or the second bracket 13, eliminating the need for additional connecting members, thereby facilitating installation, and ensuring a certain contact area after installation to guarantee the stability of the connection. The rear end is substantially flat, which facilitates hole formation for mounting the rear wheel 40'.

In some embodiments, the front end of the rear fork web 105 is arc-shaped, providing a better degree of fit with the first bracket 12 or the second bracket 13.

In some embodiments, the rear fork web 105 is a bent member, and the bending angle β26 falls within the range of 150° to 170°. When β26 is less than 150°, along the first direction 01, in order to meet the fitting requirement between the front end of the rear fork web 105 and the first bracket 12 or the second bracket 13, the front end of the rear fork web 105 needs to be moved forward to increase the fitting area with the first bracket 12 or the second bracket 13 and ensure connection strength; this leads to a need to lengthen the rear end to ensure sufficient length for mounting the rear wheel 40', thereby increasing material costs. When β26 is greater than 170°, the spring-back effect, i.e., elastic deformation recovery, is exacerbated, and even with subsequent manual correction, it is difficult to ensure dimensional stability, resulting in poor consistency during mass production.

Specifically, β26 may be any value within the range of 150° to 170°, for example, 150°, 154°, 158°, 162°, 166°, or 170°.

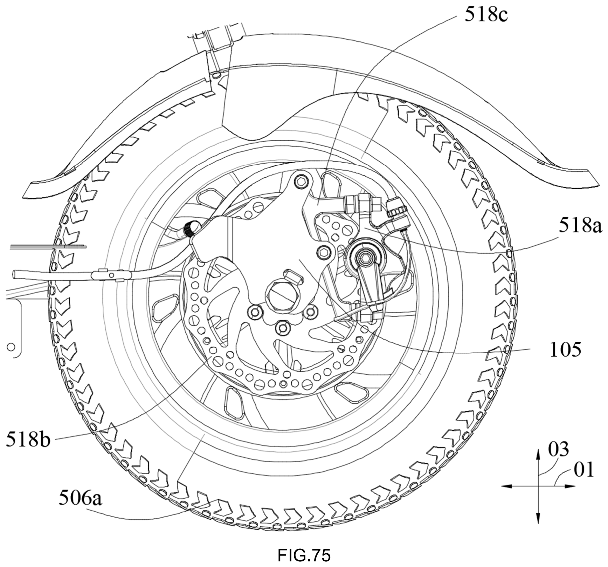

Referring to FIG. 74, FIG. 75, and FIG. 77, in some embodiments, the rear fork web 105 may be configured such that, along the first direction 01, its front end is narrow and its rear end is wide. The narrow front end of the rear fork web 105 , when being installed with the first bracket 12 or the second bracket 13, is expected to reduce the occupation of space around the first bracket 12 or the second bracket 13, so as to facilitate the installation of other parts or components, such as the rear wheel 40'. At the same time, it is also beneficial to reducing material cost. The wide rear end of the rear fork web 105 is expected to still have good material strength after hole formation, ensuring service life.

In some embodiments, the rear wheel 40' may include a rear tire 506a and a rear wheel axle 506b, and the bottom side of the rear fork web 105 may be provided with a first receiving groove 5044k for accommodating the rear wheel axle 506b. During installation, the rear wheel axle 506b may be pushed in from the side of the rear fork web 105, which facilitates installation. Additionally, along the second direction 02, the installation method for the left end and the right end of the rear wheel axle 506b may be the same; here, the left end is taken as an example for description. The vehicle 100 further may include a first nut 517a, a first washer 517b, and a second washer 517c, sequentially arranged along the second direction 02, wherein the first nut 517a may be used to connect the portion of the rear wheel axle 506b that extends out from the rear fork web 105. The first washer 517b may be clamped between the first nut 517a and the rear fork web 105, and the second washer 517c may be clamped between the rear fork web 105 and the rear wheel axle 506b.

In some embodiments, the first nut 517a may be a round-head nut with no sharp corners on its edges, which is less likely to scratch the surfaces of other parts or components during installation, and is also less likely to scratch or bump surrounding personnel or animals, thereby improving safety. Additionally, the rounded appearance also enhances the aesthetic appeal of the vehicle 100.

In other examples, the first nut 517a may also be other types of nuts, such as a hub nut, a hex nut, or a flange nut.

In some embodiments, the specification of the first nut 517a may be M12, which provides good load capacity while being relatively compact, facilitating the miniaturized design of the vehicle.

In other embodiments, the first nut 517a may also be of other specifications, such as M8, M10, or M14.

In some embodiments, the first washer 517b may be a hooked washer, and the rear fork web 105 may be provided with a first groove 5044m for the first washer 517b to be embedded in. During installation, the hook of the hooked washer may be embedded in the first groove 5044m, preventing the first nut 517a from loosening, especially under bumpy road conditions. Specifically, when the first nut 517a has a tendency to loosen, it will tend to drive the hooked washer to rotate together with it, but the hook of the hooked washer is constrained by the first groove 5044m and cannot rotate, so that the first nut 517a cannot rotate in the loosening direction.

In other embodiments, the first washer 517b may also be other types of washers, such as a flat washer with a round hole.

In some embodiments, the specification of the first washer 517b is M12, which is expected to provide good load capacity while being relatively compact, facilitating the miniaturized design of the vehicle.

In other embodiments, the first washer 517b may also be of other specifications, such as M8, M10, or M14.

In some embodiments, the second washer 517c may be a square-hole washer, which is expected to allow for the rapid completion of positioning and installation with the rear wheel axle 506b.

In some embodiments, the first washer 517b and the second washer 517c may both be metal washers, which are expected to provide better strength and better rigidity, making them suitable for complex road conditions such as rugged or vibrating environments.

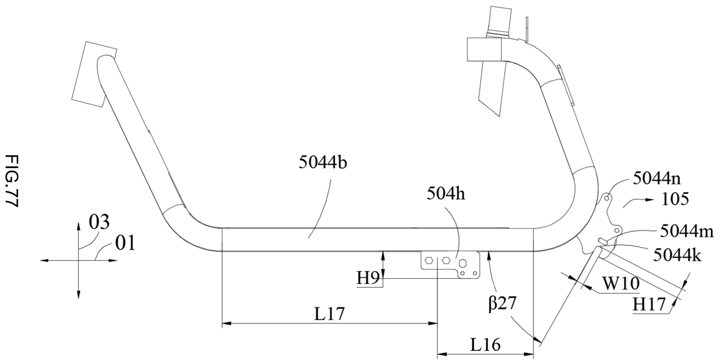

Referring to FIG. 77, in some embodiments, the width W10 of the first receiving groove 5044k may fall within the range of 8 mm to 15 mm, and the height H17 may fall within the range of 8 mm to 15 mm. When W10 is less than 8 mm, the accommodated rear wheel axle 506b is relatively thin, the load capacity is limited, and the applicability is poor. When W10 is greater than 15 mm, the adapted rear wheel axle 506b is relatively thick, the material cost is high, and the weight is large, which is not conducive to miniaturized design. In addition, an excessively large first receiving groove 5044k will reduce the strength of the rear fork web 105. When H17 is less than 8 mm, the rear wheel axle 506b is difficult to be completely or mostly accommodated by the first receiving groove 5044k, resulting in a portion of the rear wheel axle 506b being exposed from the first receiving groove 5044k, which is not aesthetically pleasing and is also easily bumped, which is not conducive to effective protection. When H17 is greater than 15 mm, an excessively deep first receiving groove 5044k will reduce the strength of the rear fork web 105, and deformation or bending is likely to occur.

Specifically, W10 may be any value within the range of 8 mm to 15 mm, such as 8 mm, 9 mm, 10 mm, 11 mm, 12 mm, 13 mm, 14 mm, or 15 mm. H17 may be any value within the range of 8 mm to 15 mm, such as 8 mm, 9 mm, 10 mm, 11 mm, 12 mm, 13 mm, 14 mm, or 15 mm.

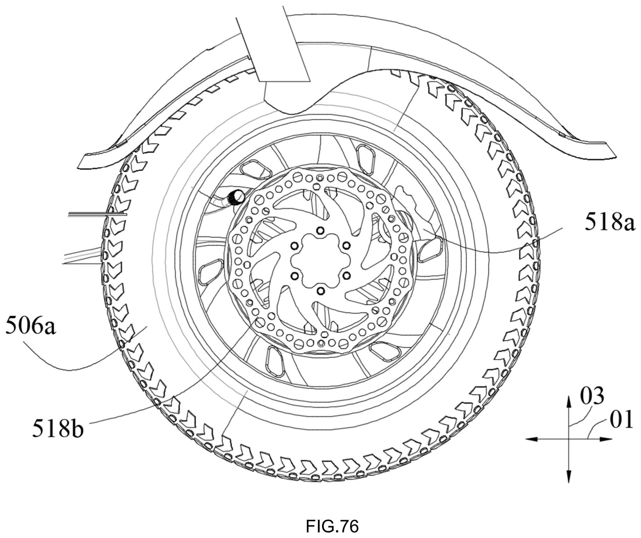

Referring to FIGS. 74 to 76, in some embodiments, the rear brake 5 may include a brake caliper 518a and a disk brake rotor 518b. Along the first direction 01, the brake caliper 518a may be located on the rear side of the rear fork web 105 and fixed thereto, and the disk brake rotor 518b may be fixed to the rear wheel 40'. The included angle β27 between the first receiving groove 5044k and the first plane may fall within the range of 55° to 70°. When β27 is less than 55°, when disassembling the rear wheel 40', due to the small inclination angle of the rear wheel axle 506b, the degree of downward diagonal offset during the process of moving out of the first receiving groove 5044k is small. The disk brake rotor 518b fixed to the rear wheel 40' easily collides with the brake caliper 518a, or even gets stuck by the brake caliper 518a, leading to increased installation difficulty; that is, the position of the brake caliper 518a needs to be precisely adjusted to prevent the brake caliper 518a from blocking the disk brake rotor 518b. If the brake caliper 518a blocks the disk brake rotor 518b, maintenance personnel need to first remove the brake caliper 518a to make way for the rear wheel 40' and the disk brake rotor 518b. Such a disassembly and assembly method is more complicated and time-consuming. If the brake caliper 518a is not disassembled, maintenance personnel need to move the rear wheel 40' and the disk brake rotor 518b in small increments to sense whether they will collide with the brake caliper 518a, which is time-consuming and laborious, and the brake caliper 518a is also easily damaged due to misoperation. When β27 is greater than 70°, when disassembling the rear wheel 40', due to the large inclination angle of the rear wheel axle 506b, a larger space is required in the downward diagonal direction during the process of moving out of the first receiving groove 5044k. This causes other parts or components located on the front side of the rear wheel 40' to need to be moved forward; otherwise, collisions are likely to occur, which is not conducive to ensuring reliability of use. At the same time, it will also cause the frame 10 to become longer, which is not conducive to the miniaturized design of the vehicle 100.

Specifically, β27 may be any value within the range of 55° to 70°, for example, 55°, 57°, 59°, 61°, 63°, 65°, 67°, 69°, or 70°.

In some embodiments, the included angle between the first groove 5044m and the first plane may be the same as β27, where β27 is the included angle between the first receiving groove 5044k and the first plane, making the rear fork web 105 more aesthetically pleasing and also forming more regular machining position features, simplifying the machining path and reducing machining difficulty.

In some embodiments, the rear brake 5 may include a brake caliper bracket 518c. Along the second direction 02, one of the two rear fork webs 105 may be provided with a first mounting hole 5044n corresponding to the brake caliper bracket 518c. This helps to fully utilize rear fork web 105, allowing it to have more functions-such as being fixed to the first bracket 12 or the second bracket 13, and mounting the rear wheel axle 506b, simplifying the structural design.

In some embodiments, the rear fork web 105 may be fixed to the first bracket 12 or the second bracket 13 by welding.

In some embodiments, the manufacturing material of the rear basket 2 and the storage mechanism 60 may be the same, and both may be made of a lighter (in terms of density) material, for example, both may be aluminum or iron. Alternatively, since the rear basket 2 may generally be suspended, that is, unsupported at the bottom end, in some embodiments, the manufacturing material of the storage mechanism 60 may be lighter than the manufacturing material of the rear basket 2; for example, the storage mechanism 60 may be made of a plastic material, and the rear basket 2 may be made of a metal material, such that the rear basket 2 may have better support strength.

It is worth noting that the second weld tab 102, the third weld tab 103, and the reinforcement rod 104 may all be mounted on the rear end of the first bracket 12 and the rear end of the second bracket 13. Along the direction of the forward and upward extension of the rear end of the first bracket 12, the reinforcement rod 104, the second weld tab 102, and the third weld tab 103 may be sequentially arranged. Wherein, the number of rear fork webs 105 may be two; one rear fork web 105 may be connected at a approximately bendable location, which specifically refers to a connection portion between the middle portion of the first bracket 12 and the rear end of the first bracket 12, and the other rear fork web 105 may be connected at a approximately bendable location, which specifically refers to a connection portion between the middle portion of the second bracket 13 and the rear end of the second bracket 13.

It is worth noting that the rear fork web 105 is used to connect the frame 10 and the rear wheel 40'. Specifically, the front end of the rear fork web 105 is connected with the first bracket 12 or the second bracket 13. A first mounting protrusion 1051 and a second mounting protrusion 1052 extend from the upper part of the rear end of the rear fork web 105; the first mounting protrusion 1051 and the second mounting protrusion 1052 are spaced apart, and the first mounting protrusion 1051 and the second mounting protrusion 1052 are used to mount the rear brake 5 (as shown in FIG. 1); the portion between the first mounting protrusion 1051 and the second mounting protrusion 1052 is recessed to form a first recess 1053, and the first recess 1053 is adapted to the shape of the rear brake 5. Additionally, the lower part of the rear end of the rear fork web 105 is recessed upward and backward to form a second recess 1054 (in other embodiments, it may be referred to as a first accommodating groove), and the second recess 1054 may be used to engage the motor shaft 6 (in other embodiments, it may be referred to as a rear wheel axle) (as shown in FIG. 1). The rear end of the rear fork web 105 may be provided with a mounting hole 1055 (in other embodiments, it may be referred to as a first groove); the mounting hole 1055 may be provided near the second recess 1054, and the mounting hole 1055 is used for the installation of parts for the motor shaft 6.

It is worth noting that, in some embodiments, the frame 10 further includes a cable retaining structure 106. The cable retaining structure 106 is provided on the side of the reinforcement plate 15 facing away from the seat 30, that is, the cable retaining structure 106 is provided on the front of the reinforcement plate 15; the cable retaining structure 106 is provided with a retaining hole 1061, and the retaining hole 1061 may be used to retain the brake cable 7 (as shown in FIG. 1), thereby allowing the brake cable 7 to be as close as possible to the frame 10, reducing the risk of the brake cable 7 being hooked by foreign objects or even being damaged. Regarding the aforementioned front wheel steering mechanism 20, please refer to FIG. 6. The front wheel steering mechanism 20 is connected to the front end of the frame 10 and is used to guide the direction of the front wheel 40.

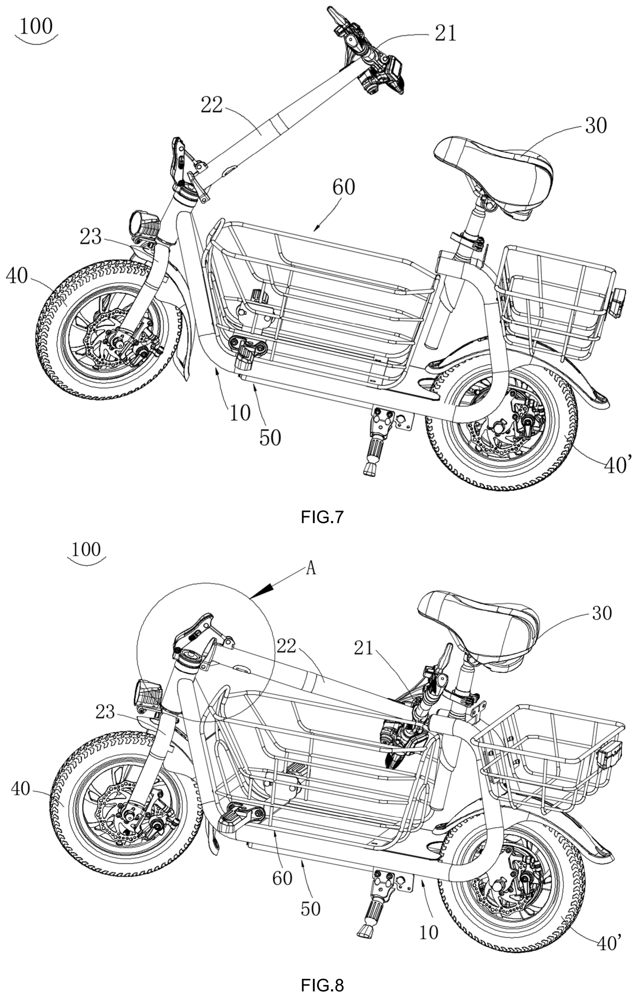

In some embodiments, the front wheel steering mechanism 20 includes a handlebar 21, a stem 22, and a front fork 23. The handlebar 21 is mounted on one end of the stem 22. The other end of the stem 22 passes through the head tube 11 of the frame 10 (as shown in FIG. 5) and is connected with the front fork 23. The stem 22 and the front fork 23 are both rotatably connected to the head tube 11 of the frame 10. The front wheel 40 is mounted on the front fork 23, and through the handlebar 21, the stem 22, and the front fork 23, the direction of the front wheel 40 can be guided. In some embodiments, please refer to FIG. 1 and FIG. 7, the stem 22 is foldable to reduce the size of the entire vehicle 100, making it more portable. In other embodiments, please refer to FIG. 8, the stem 22 can be folded toward the seat 30, and the handlebar 21 can be accommodated in the area between the seat 30 and the front end of the frame 10, allowing the vehicle 100 to be carried onto a subway, a city bus, or be placed in the trunk of a car.

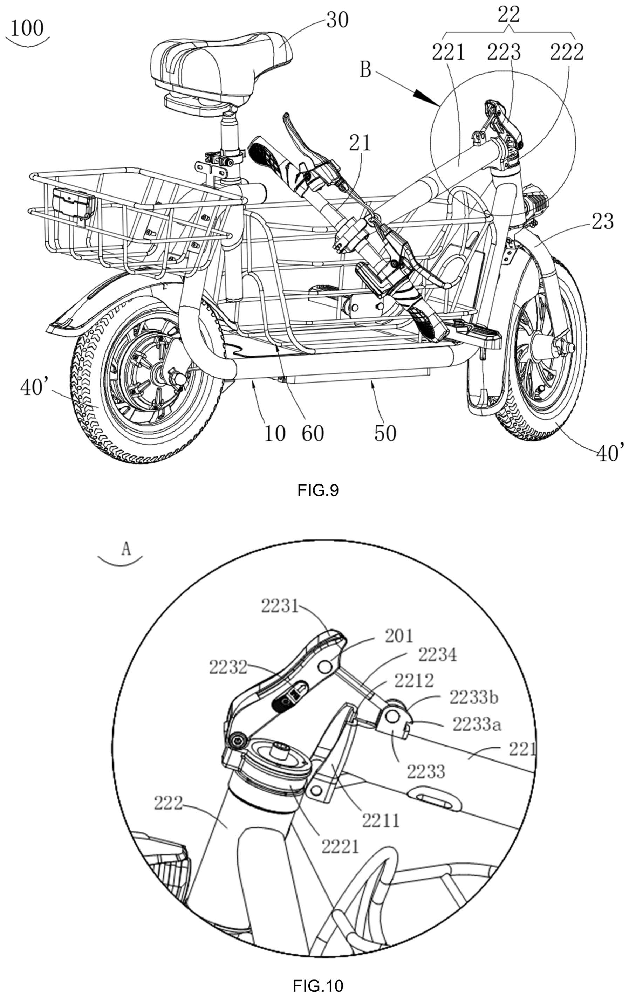

In some embodiments, please refer to FIG. 9, the stem 22 includes a first rod 221, a second rod 222, and a folding mechanism 223. One end of the first rod 221 is connected with the handlebar 21, one end of the second rod 222 is connected with the front fork 23, and the other end of the first rod 221 is rotatably connected with the other end of the second rod 222, so that when the first rod 221 rotates toward the seat 30 relative to the second rod 222, the folding of the stem 22 toward the seat 30 is achieved; one end of the folding mechanism 223 is connected with the other end of the first rod 221, and the other end of the folding mechanism 223 is connected with the other end of the second rod 222, such that when thefolding mechanism is in a released state, the first rod 221 can rotate toward the seat 30 relative to the second rod 222, and the stem 22 folds to form a folded state, and when the folding mechanism 223 is in a locked state, the other end of the first rod 221 and the other end of the second rod 222 are engaged, and the stem 22 extends to form a normal use state.

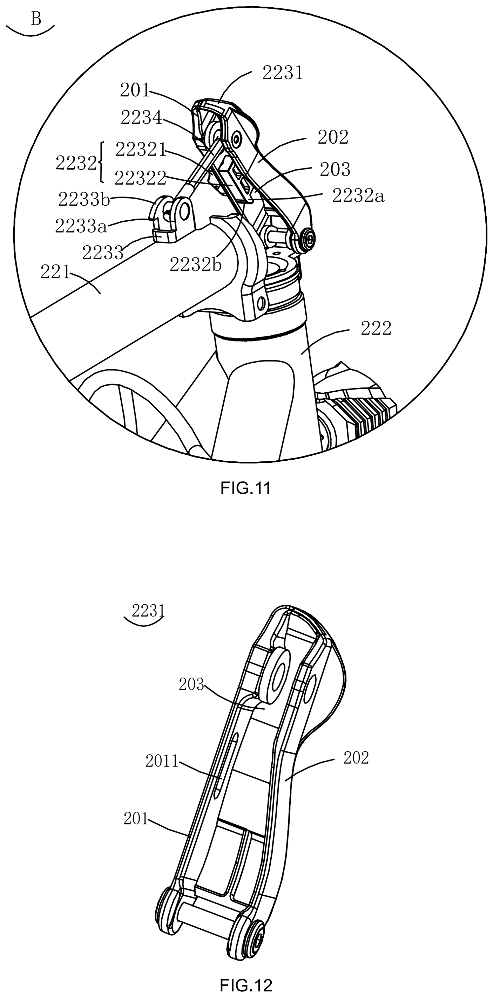

In some embodiments, the other end of the first rod 221 is provided with a collar 2211, the front end of the collar 2211 has an opening 2212, the other end of the second rod 222 is recessed along the radial direction of the second rod 222 to form a connecting region 2221, and the connecting region 2221 can be engaged with the collar 2211 to achieve the engagement of the other end of the first rod 221 and the other end of the second rod 222. When the other end of the first rod 221 and the other end of the second rod 222 are engaged, the opening 2212 at the front end of the collar 2211 adapts to the shape of the folding mechanism 223. Regarding the aforementioned folding mechanism 223, please refer to FIGS. 9 to 12 together. The folding mechanism 223 includes a housing 2231, a release member 2232, a snap fit member 2233, and a connecting rod 2234. The housing 2231 is recessed to form a first sidewall 201, a second sidewall 202, and an accommodating groove 203; the first sidewall 201 and the second sidewall 202 are disposed opposite to each other, and the accommodating groove 203 is located between the first sidewall 201 and the second sidewall 202. The first sidewall 201 (or the second sidewall 202) is provided with a slide hole 2011.

The release member 2232 is located in the slide hole 2011, and the release member 2232 is slideable relative to the slide hole 2011. The release member 2232 includes a sliding latch 22321 and a retaining member 22322; the sliding latch 22321 and the retaining member 22322 are connected, and the sliding latch 22321 and the retaining member 22322 are disposed oppositely on two sides of the first sidewall 201, wherein the retaining member 22322 is accommodated in the accommodating groove 203. The retaining member 22322 has a first hook 2232a extending toward the second rod 222, and the first hook 2232a is provided near the opening of the accommodating groove 203. A first rolling surface 2232b is provided on the surface of the first hook 2232a near the opening of the accommodating groove 203. The first hook 2232a can rotate relative to the first sidewall 201 toward the opening of the accommodating groove 203, and the first hook 2232a can rotate relative to the first sidewall 201 toward the bottom of the accommodating groove 203.

The snap fit member 2233 is mounted on the other end of the first rod 221, the snap fit member 2233 extends a second hook 2233a toward the handlebar 21, and the second hook 2233a is disposed away from the first rod 221. A second rolling surface 2233b is provided on the surface of the second hook 2233a facing away from the first rod 221; when locking the folding mechanism 223, the second rolling surface 2233b can roll along the first rolling surface 2232b and drive the first hook 2232a to rotate relative to the first sidewall 201 toward the bottom of the accommodating groove 203.

One end of the connecting rod 2234 is rotatably connected to one end of the first sidewall 201 and one end of the second sidewall 202; the other end of the first sidewall 201 and the other end of the second sidewall 202 are both rotatably connected to the other end of the second rod 222; the other end of the connecting rod 2234 is rotatably connected to the snap fit member 2233. When the folding mechanism 223 is in the released state, that is, the stem 22 is in the folded state, causing the first rod 221 to rotate relative to the second rod 222 in a direction away from the seat 30, one end of the connecting rod 2234 rotates relative to the housing 2231, and the other end of the connecting rod 2234 rotates relative to the snap fit member 2233; when the second rolling surface 2233b comes into contact with the first rolling surface 2232b, the second rolling surface 2233b rolls along the first rolling surface 2232b, driving the first hook 2232a to rotate relative to the first sidewall 201 toward the bottom of the accommodating groove 203; when the second rolling surface 2233b separates from the first rolling surface 2232b, the first hook 2232a rotates relative to the first sidewall 201 toward the opening of the accommodating groove 203 to return to position, whereby the second hook 2233a abuts against the first hook 2232a, the snap fit member 2233 is limited by the first hook 2232a, the folding mechanism 223 is locked, and the stem 22 extends to form the normal use state.

When the folding mechanism 223 is in the locked state, that is, the stem 22 is in the normal use state, sliding the sliding latch 22321 upward causes the retaining member to follow, the first hook 2232a extended from the retaining member moves away from the second hook 2233a, the second hook 2233a is released, and the folding mechanism 223 is released; at this time, the first rod 221 can be rotated in the direction of the seat 30, thereby causing the stem 22 to fold to form the folded state. It is worth noting that, in some embodiments, the folding mechanism 223 is connected to the left side of the first rod 221 and the left side of the second rod 222, thereby facilitating the user's left hand to push the sliding latch 22321 to release thefolding mechanism, and facilitating the user's right hand to rotate the first rod 221 toward the seat 30 to achieve the folding of the stem 22. Through this arrangement, it conforms to the user's usage habits of the vehicle 100, and the user experience is good.

Regarding the aforementioned seat 30, please refer to FIG. 1. The seat 30 is connected to the rear end of the frame 10 via the seat tube 80 (in other embodiments, it may be referred to as a seat support rod). Please refer to FIG. 1 and FIG. 4 together. One end of the seat tube 80 carries the seat 30, and the other end of the seat tube 80 passes through the middle tube 16 and extends out. In some embodiments, the storage mechanism 60 is provided between the front end of the frame 10 and the portion of the seat tube 80 that extends out of the middle tube 16, that is, the seat tube 80 does not extend into the storage mechanism 60, such that when adjusting the height of the seat tube 80, the seat tube 80 will not occupy the internal space of the storage mechanism 60.

Regarding the aforementioned power mechanism 50, please refer to FIG. 2. The power mechanism 50 includes a battery 51, and the battery 51 is provided on the side of the frame 10 facing away from the seat 30. Please refer to FIG. 2 and FIG. 5 together. The battery 51 is specifically provided on the side of the support plate 14 facing away from the seat 30. Regarding the aforementioned storage mechanism 60, the storage mechanism 60 may be a basket (as shown in FIG. 1), or may be a frame (as shown in FIG. 3) or other forms. Regardless of whether the storage mechanism 60 is a basket, a frame, or other forms, the storage mechanism 60 possesses a certain external shape structure and dimensions.

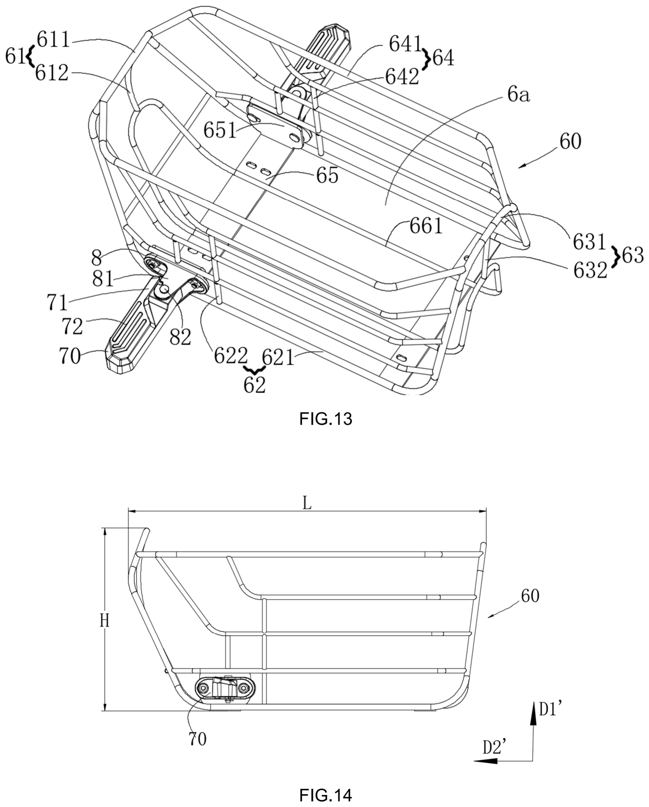

For the form where the storage mechanism 60 is a basket, please refer to FIG. 13. The storage mechanism 60 includes a first limiting member 61 (in other embodiments, it may be referred to as a first side), a second limiting member 62 (in other embodiments, it may be referred to as a third side), a third limiting member 63 (in other embodiments, it may be referred to as a second side), a fourth limiting member 64 (in other embodiments, it may be referred to as a fourth side), and at least one mounting member 65 (in other embodiments, it may be referred to as a first fixing plate or a second fixing plate); the first limiting member 61, the second limiting member 62, the third limiting member 63, and the fourth limiting member 64 are sequentially connected and enclose to form a storage cavity 6a, and the storage cavity 6a is used for item placement; wherein, the first limiting member 61 and the third limiting member 63 are spaced apart, and the second limiting member 62 and the fourth limiting member 64 are spaced apart; the mounting member 65 is interposed between the second limiting member 62 and the fourth limiting member 64, and the mounting member 65 is used to mount the storage mechanism 60 onto the frame 10.

The implementation forms of the aforementioned first limiting member 61, second limiting member 62, third limiting member 63, and fourth limiting member 64 may be various. For example, as shown in FIG. 13, the first limiting member 61 includes a first horizontal bar 611 (in other embodiments, it may be referred to as a first side rod) and a plurality of spaced-apart first vertical bars 612 (in other embodiments, it may be referred to as a second side rod), and the plurality of first vertical bars 612 are all connected to the first horizontal bar 611; the second limiting member 62 includes a second vertical bar 622 and a plurality of spaced-apart second horizontal bars 621 (in other embodiments, it may be referred to as a fifth side rod or a sixth side rod), the plurality of second horizontal bars 621 are all connected to the second vertical bar 622, the second vertical bar 622 supports the plurality of second horizontal bars 621, one end of the plurality of second horizontal bars 621 is connected to the first limiting member 61, and the other end of the plurality of second horizontal bars 621 is connected to the third limiting member 63; the third limiting member 63 includes a third horizontal bar 631 and a plurality of spaced-apart third vertical bars 632, and the plurality of third vertical bars 632 are all connected to the third horizontal bar 631; the fourth limiting member 64 includes a fourth vertical bar 642 and a plurality of spaced-apart fourth horizontal bars 641 (in other embodiments, it may be referred to as a seventh side rod or an eighth side rod), the plurality of fourth horizontal bars 641 are all connected to the fourth vertical bar 642, the fourth vertical bar 642 supports the plurality of fourth horizontal bars 641, one end of the plurality of fourth horizontal bars 641 is connected to the first limiting member 61, and the other end of the plurality of fourth horizontal bars 641 is connected to the third limiting member 63. The plurality of first vertical bars 612 may also be connected to the plurality of third vertical bars 632 via a plurality of fifth horizontal bars 661 (in other embodiments, it may be referred to as an intermediate bottom rod). The plurality of fifth horizontal bars 661 are spaced apart, and the plurality of fifth horizontal bars 661 are all located at the lower end of the storage mechanism 60.

Wherein the plurality of first vertical bars 612 and the plurality of fifth horizontal bars 661 are not necessarily in a one-to-one correspondence, and the plurality of third vertical bars 632 and the plurality of fifth horizontal bars 661 are also not necessarily in a one-to-one correspondence. A part of the first vertical bars 612 is connected to the plurality of fifth horizontal bars 661, and a part of the third vertical bars 632 is connected to the plurality of fifth horizontal bars 661, thereby forming a state where one first vertical bar 612 is connected to one fifth horizontal bar 661, which is then connected to one third vertical bar 632. Wherein a part of the first vertical bars 612 close to the second horizontal bar 621 can be bent and then connected to the second horizontal bar 621, and a part of the third vertical bars 632 close to the second horizontal bar 621 can be bent and then connected to the second horizontal bar 621. Wherein the first vertical bars 612 close to the fourth horizontal bar 641 can be bent and then connected to the fourth horizontal bar 641, and the third vertical bars 632 close to the fourth horizontal bar 641 can be bent and then connected to the fourth horizontal bar 641. For the case where the storage mechanism 60 is in the form of a frame, as shown in FIG. 3, the first limiting member 61, the second limiting member 62, the third limiting member 63, and the fourth limiting member 64 may all be substantially plate-shaped, that is, not hollowed out. It is to be understood that the connection points where the first limiting member 61, the second limiting member 62, the third limiting member 63, and the fourth limiting member 64 are connected in pairs may have a rounded external shape, thereby reducing damage to objects in the storage mechanism 60.

In addition, the specific shapes of the first limiting member 61, the second limiting member 62, the third limiting member 63, and the fourth limiting member 64 may also adapt to the shape of the frame 10, for example, having some bent shapes. Alternatively, from the perspective of fluid mechanics, the external shape of the connection points where the first limiting member 61, the second limiting member 62, the third limiting member 63, and the fourth limiting member 64 are connected in pairs can be designed to be streamlined, thereby reducing the resistance of the vehicle 100 during travel. For the mounting member 65 mentioned above, please also refer to FIG. 5 and FIG. 13. The mounting member 65 is specifically installed on the support plate 14 and locked onto the reinforcing rib 17. In some embodiments, the number of mounting members 65 is two, and both mounting members 65 are sandwiched between the second limiting member 62 and the fourth limiting member 64. The two mounting members 65 are spaced apart. It is worth noting that when the plurality of first vertical bars 612 are connected to the plurality of third vertical bars 632 via the plurality of fifth horizontal bars 661, the plurality of fifth horizontal bars 661 may also be connected to the mounting member 65. It is worth noting that the size of the storage mechanism 60 needs to be reasonable, not only to satisfy the function of holding articles, but also to adapt to the shape of the vehicle 100, and even from the perspective of ergonomics, the installation of the storage mechanism 60 should not affect the user's comfort when using the vehicle 100.

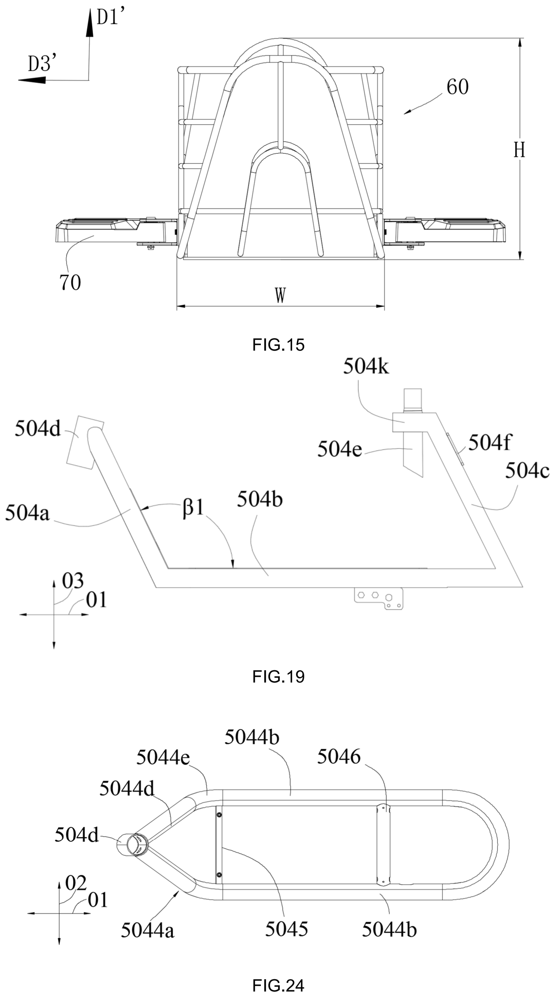

In some embodiments, please refer to FIG. 14 and FIG. 15 concurrently. Along the normal travel direction D2' of the vehicle 100, the length L of the storage mechanism 60 is 50 centimeters; along the direction D1' opposite to gravity, the height H of the storage mechanism 60 is 21 centimeters; along the relative direction D3' which is perpendicular to both the normal travel direction D2' of the vehicle 100 and the direction D1' opposite to gravity, the width W of the storage mechanism 60 is 23 centimeters. It can be understood that the normal travel direction D2' of the vehicle 100 is also the direction from the seat 30 to the front wheel steering mechanism 20, and the direction from the seat 30 to the front wheel steering mechanism 20 is opposite to the direction D1' opposite to gravity. In some embodiments, the volume of the storage mechanism 60 is 0.02415 cubic meters, which is 24.15 liters. Referring to FIG. 13, the volume of the storage mechanism 60 refers to the volume of the storage cavity 6a enclosed and defined by the first limiting member 61, the second limiting member 62, the third limiting member 63, and the fourth limiting member 64.

It is worth noting that, in some embodiments, referring to FIG. 1 and FIG. 13, there are two pedals 70 (which may be referred to as footpegs in other embodiments) respectively connected to two opposite side surfaces of the storage mechanism 60. The two pedals 70 can be connected to the storage mechanism 60 through an adapter 8 (which may be referred to as a first fixing member in other embodiments). When the number of pedals 70 is two, the number of adapters 8 is two.

Specifically, regarding the connection of one of the pedals 70 to the storage mechanism 60: one end of the mounting member 65 of the storage mechanism 60 extends to form a mounting plate 651 (which may be referred to as a second fixing member in other embodiments). One end of the adapter 8 is connected to the side of the mounting plate 651 facing away from the storage cavity 6a. The other end of the adapter 8 extends in the direction away from the storage cavity 6a to form two connecting plates 81 spaced vertically apart (which may be referred to as cantilevers in other embodiments). The other end of the adapter 8 also has a connecting post 82 (which may be referred to as a second pivot shaft in other embodiments). The connecting post 82 successively penetrates one of the connecting plates 81, one end of the pedal 70, and the other one of the connecting plates 81. The connecting post 82 is fixedly connected to the two connecting plates 81 respectively. One end of the pedal 70 is rotatably connected to the connecting post 82. The front end of one end of the pedal 70 extends a limiting member 71 upward and/or downward. When the other end of the pedal 70 is rotated away from the storage cavity 6a, the limiting member 71 abuts against the connecting plate 81, thereby limiting the other end of the pedal 70 from continuing to rotate forward. In this way, the pedal 70 can extend from the storage mechanism 60 to form an area for the user to place their foot. Furthermore, when the pedal 70 is not in use, the other end of the pedal 70 can be rotated towards the storage cavity 6a, allowing the pedal 70 to be retracted and positioned close to the storage mechanism 60, thereby enhancing the user experience. In some embodiments, the upward-facing surface of the pedal 70 is provided with a plurality of anti-slip strips 72 (which may be referred to as protrusions in other embodiments). The plurality of anti-slip strips 72 are spaced apart along the normal travel direction D2' of the vehicle 100, such that when the user's foot is placed on the pedal 70, it is less likely to slip, enhancing the user experience. In some embodiments, the pedal 70 is disposed on both sides of the front end of the storage mechanism 60, so that from an ergonomic perspective, the user's feet resting on the pedal 70 offer high comfort, which can further enhance the user experience. In some embodiments, please also refer to FIG. 1, FIG. 4, and FIG. 5 concurrently. The vehicle 100 further includes a series of accessories. The vehicle 100 also includes the aforementioned kickstand 1 (which may be referred to as a side stand in other embodiments) installed on the first welding tab 101 of the frame 10. The kickstand 1 is used to provide support when the vehicle 100 is in an idle state.

In some embodiments, the pedal 70 can have a plurality of use positions convenient for the user to place their foot. The angles of these use positions are not the same, and can thus correspond to the specific situations of different riders, such as different riders' leg lengths, usage habits, heights, etc. are not the same. Therefore, the pedal 70 for foot placement needs to be adjusted accordingly to determine a suitable use position, so that the pedal 70 is fully in the deployed position or any rotational position between the deployed position and the closed position.

In some embodiments, the rotation of the pedal 70 from the deployed position to the closed position can be achieved by rotating only forward or rotating only backward. When the pedal 70 is in the open position, the pedal 70 is perpendicular or substantially perpendicular to the vehicle 300. When the pedal 70 is in the closed position, the pedal 70 is parallel or substantially parallel to the vehicle 300.

In some embodiments, the pedal 70 can be rotated/transformed from the deployed position to the closed position by rotating it upward or downward.

The vehicle 100 further includes the aforementioned rear basket 2 (which may be referred to as a first basket in other embodiments) installed on the second welding tab 102 of the frame 10. The rear basket 2 is located behind the seat 30 and is used to carry items. The storage mechanism 60 is located in front of the seat 30. Through the arrangement of the storage mechanism 60 and the rear basket 2, the number of items that the vehicle 100 can carry is increased. Additionally, this configuration is particularly suitable for users to place more important items in front where they can be scanned by sight, rather than at the back or out of sight. For example, pets or wallets can be placed in the storage mechanism 60, while purchased vegetables and fruits can be placed in the rear basket 2. The vehicle 100 further includes the aforementioned tail-light 3 installed on the third welding tab 103 of the frame 10. The tail-light 3 is located behind the seat 30 and is used to illuminate the rear of the vehicle 100 when the vehicle 100 is traveling normally, reminding vehicles coming from behind to notice and yield, thereby improving the safety of the user using the vehicle 100. The vehicle 100 further includes the aforementioned rear fender 4 installed on the reinforcement rod 104 of the frame 10. The rear fender 4 covers above the rear wheel 40'. The rear fender 4 is spaced from the rear wheel 40' along the direction D1' opposite to gravity. Through the rear fender 4, when the vehicle 100 is traveling, mud, dust, etc., carried up by the rotation of the rear wheel 40' are blocked by the rear fender 4, reducing pollution of the user by mud, dust, and the like.

The vehicle 100 further includes the aforementioned rear brake 5 installed on the rear fork web 105 of the frame 10. The rear brake 5 is used to provide braking for the rear wheel 40'. The motor shaft 6 is used to drive the rotation of the rear wheel 40'. The vehicle 100 further includes the aforementioned brake cable 7 installed on the frame 10. In addition, the vehicle 100 also includes a brake lever 9 and a front brake 5'. The brake lever 9 is installed on the handlebar 21. One end of the brake cable 7 is connected to the handlebar 21, and the other end of the brake cable 7 is connected to the front brake 5'. The brake lever 9 is used to control the front brake 5' via the brake cable 7, thereby providing braking for the front wheel 40.

The vehicle 100 also includes a headlight 3' installed on the front wheel steering mechanism 20. The headlight 3' is located in front of the front wheel steering mechanism 20. The headlight 3' is used to illuminate the front of the vehicle 100 when the vehicle 100 is traveling normally, which is convenient for the user to observe the driving environment and improves the safety of the user using the vehicle 100. The vehicle 100 also includes a front fender 4' installed on the front wheel steering mechanism 20. The front fender 4' covers above the front wheel 40. The front fender 4' is spaced from the front wheel 40 along the direction D1' opposite to gravity. Through the front fender 4', when the vehicle 100 is traveling, mud, dust, etc., carried up by the rotation of the front wheel 40 are blocked by the front fender 4', reducing pollution of the user by mud, dust, and the like.

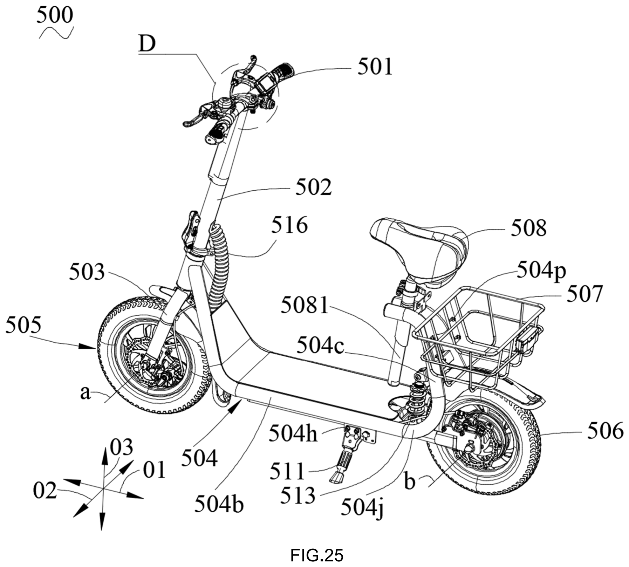

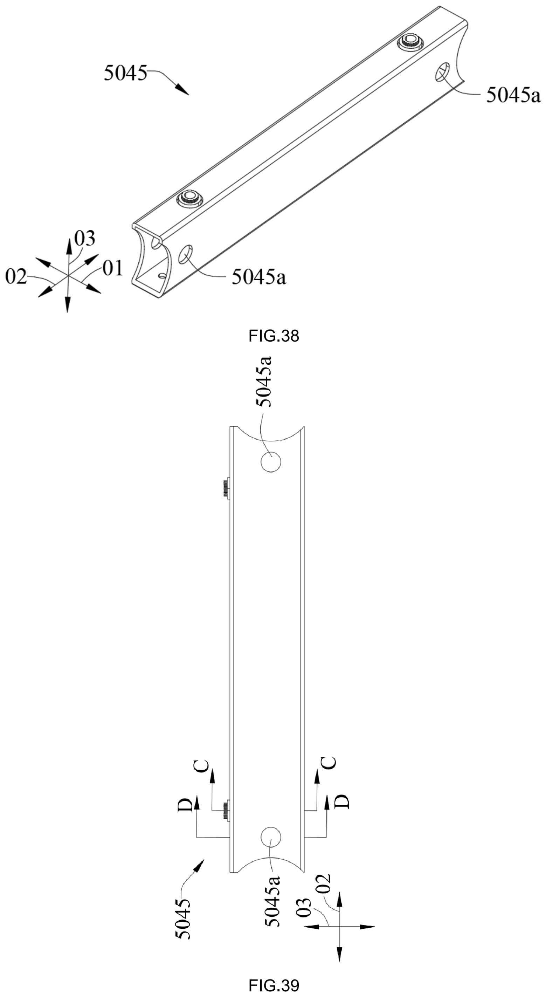

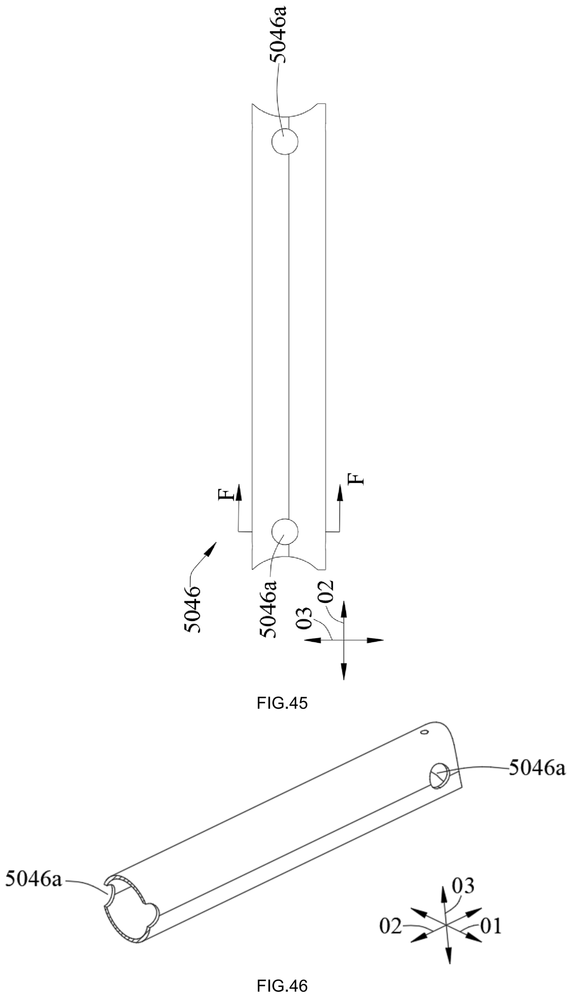

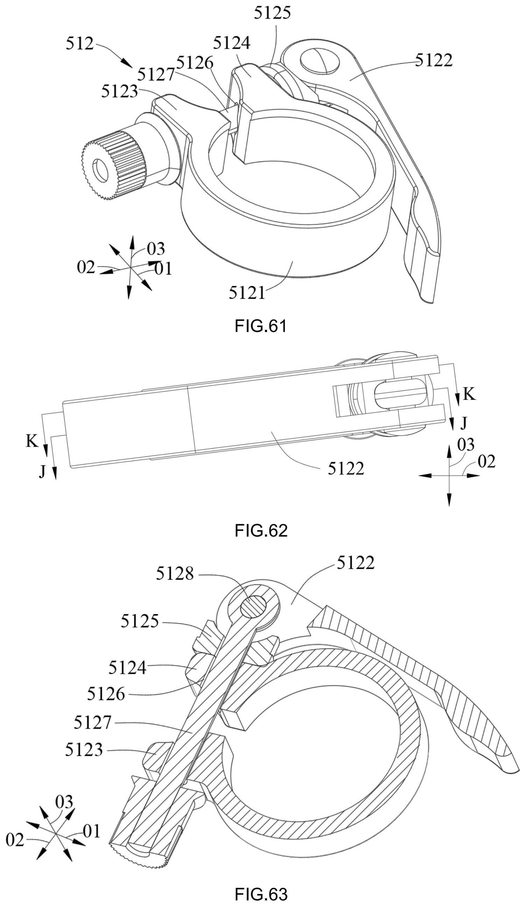

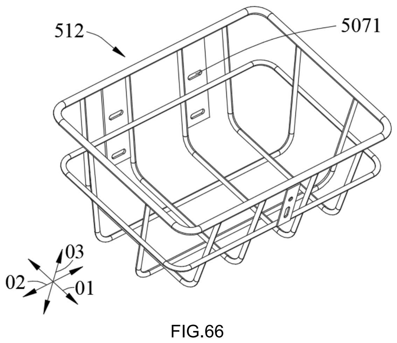

Referring to FIGS. 25 to 66, the vehicle 500 provided in the embodiments of the present application may be referred to as an electric scooter, an electric mobility vehicle, or similar.

In some embodiments, the vehicle 500 provides a passenger-carrying function, allowing the rider to drive the vehicle 500 for personal mobility or short-distance travel. In addition, the vehicle 500 provides a cargo-carrying function, allowing items or animals to travel with the rider by being placed on the vehicle 500.

In some embodiments, the vehicle 500 may include a handlebar 501, a stem 502, a front fork 503, a frame 504, a front wheel 505, a rear wheel 506, a first basket 507, a seat 508, a battery assembly 509, a driving mechanism 510, and a side stand 511.

Wherein the stem 502 and the front fork 503 are both rotatably provided at the front end of the frame 504, and the stem 502 is located at the top end of the front fork 503, with the stem 502 and the front fork 503 rotating together. The handlebar 501 is fixedly provided at the top end of the stem 502. The front wheel 505 is rotatably provided on the front fork 503. Thus, by operating the handlebar 501 to rotate, the stem 502 and the front fork 503 are driven to rotate, which in turn drives the front wheel 505 to rotate, so as to change the direction of travel of the vehicle 500. When the vehicle 500 is traveling straight forward, the direction of rotation of the front wheel 505 relative to the front fork 503 is perpendicular to the second direction 02. The rear wheel 506 is rotatably provided at the rear end of the frame 504. When the vehicle 500 is traveling straight forward, the direction of rotation of the rear wheel 506 relative to the frame 504 is perpendicular to the second direction 02. The first basket 507 is fixedly provided at the rear end of the frame 504 and is located on the top side of the rear wheel 506. The seat 508 is fixedly provided at the top end of the frame 504 and is located near the rear end. The battery assembly 509 is fixedly provided on the frame 504 and is located at the bottom end of the frame 504. The driving mechanism 510 is provided on the rear wheel.

In some embodiments, the frame 504 includes a first section 504a (which may be referred to as a intermediate section in other embodiments), a second section 504b, and a third section 504c, successively arranged along the first direction 01. The first section 504a and the third section 504c are both located at the top end of the second section 504b.

The first section 504a is configured, along the first direction 01, to define a front region located on the front side to avoid interference with the front wheel 505 and a rear region located on the rear side for user use. Separating the two regions is beneficial for improving operational safety, especially when the front wheel 505 is steering. It can also be understood that the first section 504a is configured such that, along the first direction 01, the top end is located on the front side of the bottom end, that is, the projections of the top end and the bottom end on the first plane do not overlap, so as to form an accommodating space with a certain length in the first direction 01 and a certain height in the third direction 03, for accommodating other parts or components of the vehicle 500, such as the front wheel 505.

In some embodiments, the first section 504a is configured to bend forward along the first direction 01. The first section 504a can provide more space for other parts or components of the vehicle 500. For example, it provides more operating space for the mounting, adjustment, or maintenance of the front wheel 505, reducing the difficulty of operation.

In some embodiments, the first section 504a is configured to be approximately stepped shape. The first section 504a can facilitate the rider in picking up or placing objects. When the rider needs to take out or put in items on the first section 504a, the step has a certain height along the third direction 03, which can reduce the degree to which the rider needs to bend over. In addition, the three-dimensional shape of the step forms a clear sense of boundary, which effectively prevents the rider's feet from kicking the items on the first section 504a during foot movement, leading to items falling off, thus ensuring safety during riding.

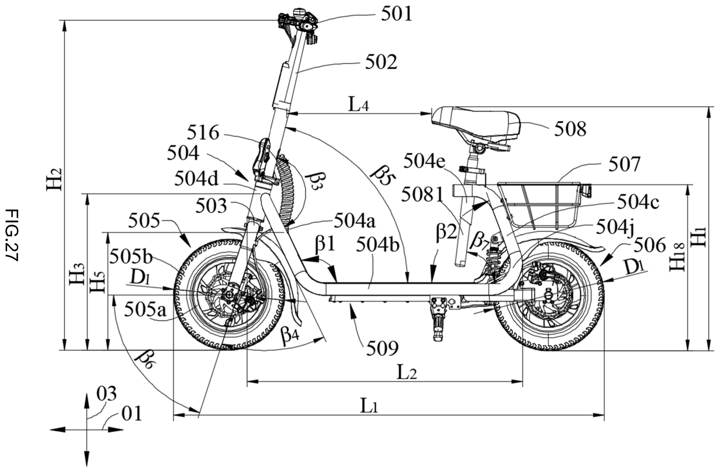

Referring to FIG. 27, in some embodiments, the first section 504a is inclined forward, which can provide a larger space. When the rider wants to extend their feet forward, they can step on or rest their feet on the first section 504a. That is, the forward inclination of the first section 504a is beneficial for providing space to extend the feet, improving the rider's comfort. In addition, when items need to be placed obliquely or have a corresponding leaning position, the first section 504a can provide supporting force for the items. When it is desired to place more or larger items, the space generated by the forward inclination of the first section 504a may be further utilized. The forward inclination of the first section 504a provides the rider with diverse and flexible storage options. Furthermore, the forward inclination of the first section 504a may also cause rainwater or dust splashed onto it to bounce away, protecting the cleanliness of the rider and/or the items or animals placed on the second section 504b.

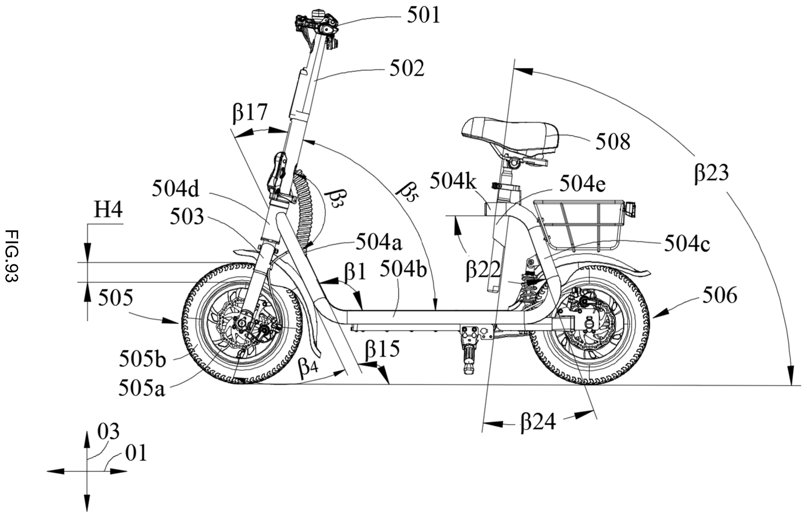

Referring to FIG. 93, in some embodiments, the angle β15 between the first section 504a and the first plane falls within the range of 110° - 121°. If β15 is less than 110°, the first section 504a is too steep, meaning the projected length of the first section 504a on the first plane is shorter, providing less space for the rider or their carried items, thus limiting space utilization. If β15 is greater than 121°, the first section 504a is too gentle, meaning the projected length of the first section 504a on the first plane is longer. As part of the frame 504, the increased length of the first section 504a would lead to an increase in the total length of the frame 504, which is unfavorable for transportation or storage.

Specifically, β15 can be any value within the range of 110° - 121°, such as 110°, 112°, 114°, 116°, 118°, 120°, or 121°.

Referring to FIG. 27, in some embodiments, both the stem 502 and the front fork 503 are inclined rearward, which facilitates the rider's operation of the handlebar 501. In addition, the rearward inclination of the stem 502 helps to lower the height of the connection position between the stem 502 and the frame 504. The rearward inclination of the front fork 503 also helps to lower the height of the connection position between the front fork 503 and the frame 504. This increases the stability of the vehicle 500.

Furthermore, with both the stem 502 and the front fork 503 inclined rearward, and the first section 504a inclined forward, the height of the connection position between the first section 504a and the stem 502 is lowered, which enhances the stability of the vehicle 500.

The second section 504b is configured to provide an accommodating space along the second direction 02. This accommodating space can at least accommodate the rider's feet for the rider to step or stretch their feet, or can at least accommodate items or animals, allowing the items or animals to travel with the rider. It can also be understood that the second section 504b is configured to divide a bottom-side region located at the bottom side and a top-side region located at the top side along the third direction 03. The bottom-side region is used to accommodate other parts or components, such as the battery assembly 509, and the top-side region is used to accommodate the rider or their carried items, such as articles or animals.

In some embodiments, the second section 504b may be configured to have an overall substantially rectangular shape, and its central region has a portion extending outward along the second direction 02. This can indicate the boarding position to the rider. The outwardly extending portion forms a shape contrast with surrounding areas, serving as a visual guiding mark, enabling the rider to quickly identify and standardize the boarding and stepping position, potentially providing a better riding experience and riding safety. In addition, it can provide a wider foot placement space, accommodating different foot sizes and allowing the user to flexibly adjust foot spacing and posture, potentially improving foot placement comfort.

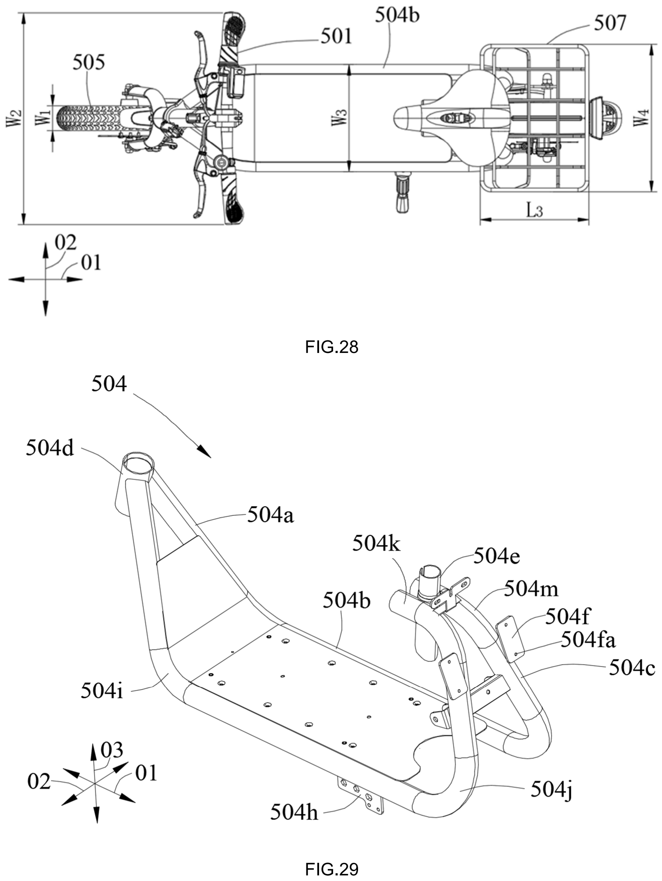

Referring to FIG. 28, in some embodiments, the second section 504b may be configured to have an overall substantially rectangular shape, and the central region has no portion extending outward in the second direction 02. This allows for a compact design, making it convenient to maneuver and park flexibly in narrow spaces, and also easier to carry and transport.

In some embodiments, the second section 504b is used for the rider to step on, place items, or animals, etc. The second section 504b is substantially parallel to the first plane. When the vehicle 500 is upright, the second section 504b is set substantially horizontally. When the second section 504b is used for the rider to step on, it provides better stability and comfort for the rider's stepping. When the second section 504b is used for placing items, it improves the stability of item placement. When the second section 504b is used for placing animals, it improves the stability and comfort of the animals placed on the second section 504b. Furthermore, the second section 504b being substantially parallel to the first plane ensures that the force exerted on the second section 504b along the second direction 02 is balanced, reducing the risk of the vehicle 500 tilting along the second direction 02 and improving riding safety.

Referring to FIG. 29, in some embodiments, the second section 504b being substantially parallel to the first plane, meaning that an angle formed between the second section 504b and the first plane may fall within the range of 0° to 5°. When the angle is greater than 5°, the rider placing both feet on the second section 504b will clearly perceive that their feet are tilted, which can easily cause discomfort. For example, if the left foot is higher and the right foot is lower, in bumpy road conditions or when turning, the rider's foot on the lower side is prone to slipping outward, which is unfavorable for ensuring riding safety. Furthermore, when items need to be placed on the second section 504b, if the angle is greater than 5°, the center of gravity of the items is prone to shift, and in the event of shaking or turning, they are easily caused to slide down or even fall outward due to the tilted condition, which is unfavorable for ensuring riding safety. In addition, when animals need to be placed on the second section 504b, if the angle is greater than 5°, the animals will clearly perceive that they are unstable sitting or standing, and are prone to adjusting their posture or struggling due to discomfort, thereby interfering with the rider's operation. At the same time, shaking or turning will exacerbate the shift in the animal's center of gravity, potentially causing them to fall outward.

Specifically, the angle of inclination between the second section 504b and the first plane can be any value in the range of 0° - 5°, such as 0°, 1°, 2°, 3°, 4°, or 5°.

Referring to FIG. 19, in some embodiments, the first section 504a is connected to the second section 504b. That is, along the first direction 01, the front end of the second section 504b contacts and is fixed to the bottom end of the first section 504a. Furthermore, the second section 504b is parallel to the first plane, and the angle β1 between the first section 504a and the second section 504b falls within the range of 110°~121°. During riding, the second section 504b bears a vertically downward force, such as the weight of the rider. The first section 504a forms a resultant force through the component force along its own axial direction and the component force perpendicular to its own axial direction to balance the vertically downward force of the second section 504b. If β1 is less than 110°, the component force of the first section 504a along its own axial direction is larger, and the shear or torsion effect it receives is stronger. During travel, especially when passing over bumpy roads, the connection between the first section 504a and the second section 504b is prone to premature fatigue damage, affecting the overall strength and service life of the frame 504. If β1 is greater than 121°, the first section 504a is too gentle, with a large length span along the first direction 01. When bearing the vertically downward force from the second section 504b, the connection between the first section 504a and the second section 504b is prone to subsidence and deformation, affecting the overall strength and service life of the frame 504.

Specifically, β1 can be any value within the range of 110°~121°, such as 110°, 112°, 114°, 116°, 118°, 120°, or 121°.

The third section 504c is configured, along the third direction 03, to divide a top region located at the top side and a bottom region located at the bottom side. The top region can at least accommodate the rider, and the bottom region can at least be used for mounting the rear wheel 506. Separating the two regions is beneficial for improving safety in use, especially when the rear wheel 506 is rotating. It can also be understood that the third section 504c is configured such that, along the first direction 01, the projections of the top end and the bottom end on the first plane do not overlap, so as to divide an front space located on the front side and a rear space located on the rear side along the first direction 01. The front space is used to accommodate at least a portion of the seat 508 or items carried by the rider, and the rear space is used for mounting the rear wheel 506. Separating the two regions is beneficial for improving safety in use, especially when the rear wheel 506 is rotating.

In some embodiments, the third section 504c is configured to be inclined rearward along the first direction 01, which can provide more space to accommodate more items, or provide more sufficient space for installation or taking/placing items, reducing the difficulty of operation.

Referring to FIG. 27, in some embodiments, the third section 504c is configured to be inclined forward along the first direction 01. Correspondingly, the top region that can at least accommodate the rider will also shift forward. That is, the projection of the top region falls onto the second section 504b, so that when the rider is seated on the vehicle 500, the center of gravity is more forward, resulting in better stability.

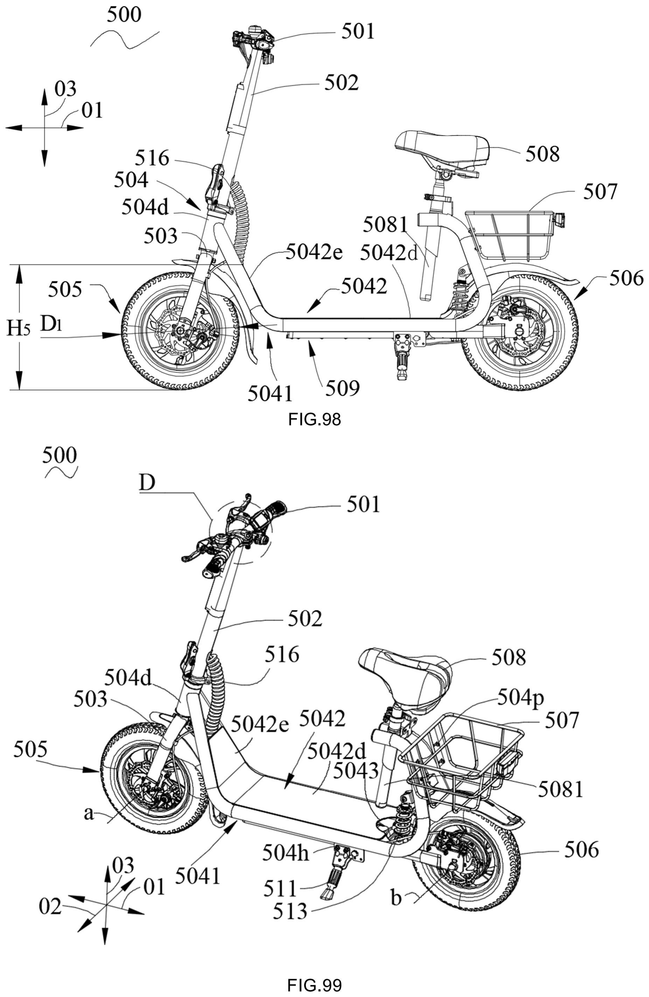

Referring to FIG. 98, in some embodiments, the third section 504c is configured to be inclined forward along the first direction 01. The angle β3 between the third section 504c and the first plane is in the range of 65° - 75°. If the angle is less than 65°, the third section 504c extends too far forward, meaning the projected length of the third section 504c on the first plane is relatively long, which creates a partition in the accommodating space corresponding to the second section 504b, interfering with the rider's use of space. Furthermore, if the angle is greater than 75°, the third section 504c extends too far rearward, and the corresponding top region that can at least accommodate the rider will also be biased rearward. When the rider is seated on the vehicle 500, the center of gravity is more rearward, which can easily cause a feeling of leaning back or flipping backward.

Specifically, β3 can be any value within the range of 65° - 75°, such as 65°, 67°, 69°, 70°, 72°, 74°, or 75°.

Referring to FIG. 27, in some embodiments, both the first section 504a and the third section 504c are configured to be inclined forward along the first direction 01, and the angle between the first section 504a and the third section 504c is in the range of 0° - 10°. The fact that their angles of inclination are the same or relatively close can provide a more consistent visual appearance, making the frame 504 more aesthetic overall. Furthermore, it facilitates the structural transition using a smaller space in the first direction 01 and the third direction 03. That is, the projection of the third section 504c on the first plane is shorter, and the projection of the third section 504c on the third plane is shorter, achieving a miniaturized design.

Specifically, the angle between the first section 504a and the third section 504c can be any value within the range of 0° - 10°, such as 0°, 2°, 4°, 5°, 6°, 8°, or 10°.

Referring to FIG. 27, in some embodiments, the angle β2 between the third section 504c and the second section 504b falls within the range of 65° - 75°. If β2 is less than 65°, the third section 504c extends too far forward, meaning the projected length of the third section 504c on the first plane is relatively long, which creates a partition in the accommodating space corresponding to the second section 504b, interfering with the rider's use of space. Furthermore, if β2 is greater than 75°, the third section 504c extends too far rearward, and the corresponding top-side region that can at least accommodate the rider will also be biased rearward. When the rider is seated on the vehicle 500, the center of gravity is more rearward, which can easily cause a feeling of leaning back or flipping backward.

Specifically, β2 can be any value within the range of 65° - 75°, such as 65°, 67°, 69°, 70°, 72°, 74°, or 75°.

Referring to FIG. 19, in some embodiments, the third section 504c is connected to the second section 504b. That is, along the first direction 01, the rear end of the second section 504b contacts and is fixed to the bottom end of the third section 504c.

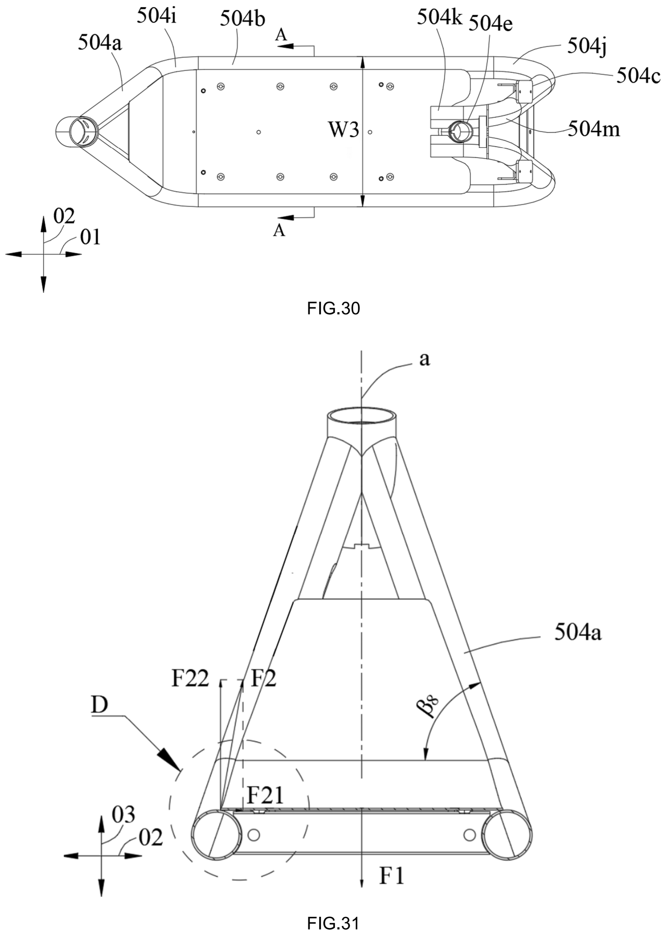

Referring to FIG. 29 and FIG. 30, in some embodiments, the frame 504 further includes a second transition section 504j disposed between the second section 504b and the third section 504c, so as to smoothly connect the third section 504c and the second section 504b.

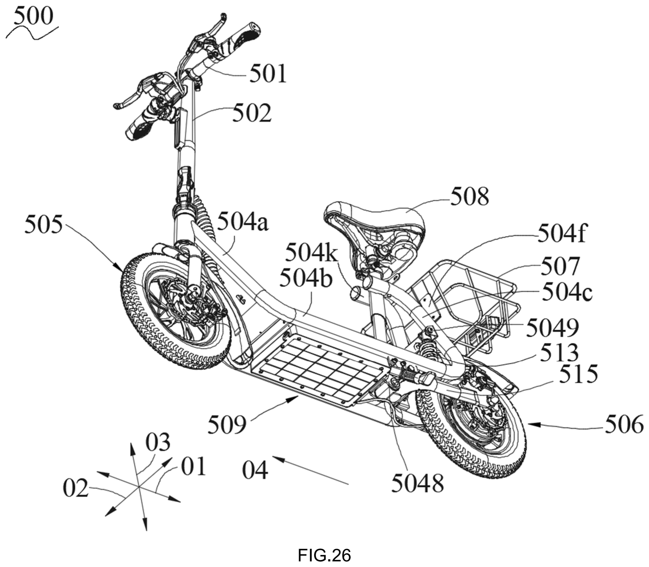

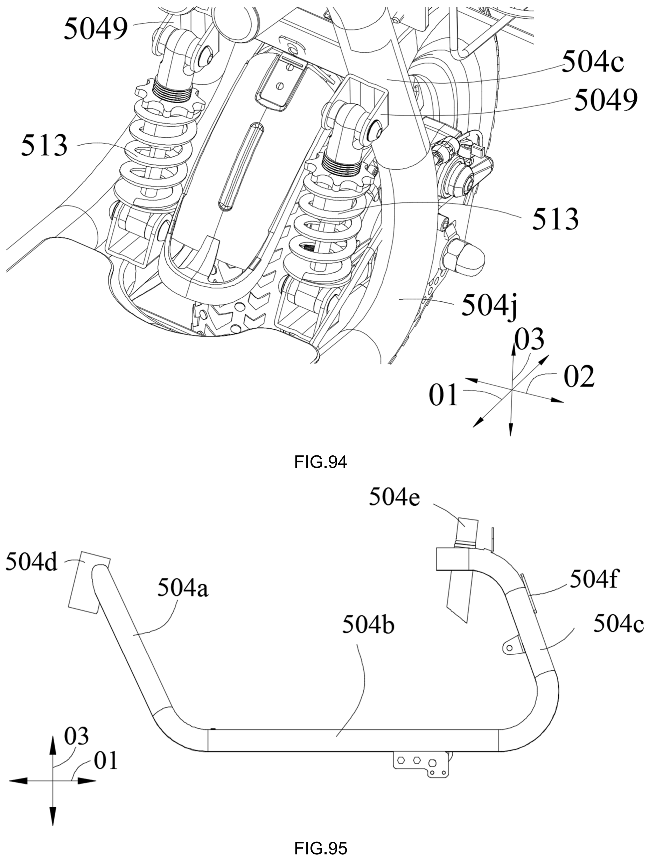

Referring to FIG. 26 and FIG. 94, in some embodiments, the vehicle 500 further includes a rear fork 515, and two spring shock absorbers 513 successively arranged along the second direction 02. The frame 504 further includes a sixth connecting portion 5048 and a seventh connecting portion 5049. The sixth connecting portion 5048 is fixed on the second section 504b, and the seventh connecting portion 5049 is fixed on the third section 504c. Along the first direction 01, the front end of the rear fork 515 is rotatably connected to the sixth connecting portion 5048, and the rear end of the rear fork 515 is used for mounting the rear wheel 506. The two ends of the spring shock absorber 513 are pivotally connected to the rear fork 515 and the seventh connecting portion 5049, respectively. When the vehicle 500 is traveling, both spring shock absorbers 513 are mainly used to absorb vibrations and shocks encountered during riding, thereby improving riding comfort and stability, and also being beneficial for enhancing the service life of the vehicle 500.

It can be understood that, along the first direction 01, the spring shock absorber 513 is located at the front side of the third section 504c. Along the third direction 03, the spring shock absorber 513 is located at the top side of the second transition section 504j and the bottom side of the third section 504c. The third section 504c is inclined forward and has a tendency to tilt forward under the action of external force. The spring shock absorber 513 can resist the tilting tendency of the third section 504c and play a cushioning role. Specifically, when the third section 504c is subjected to an external force, a torque amplification effect will occur between it and the second transition section 504j. At this time, the spring shock absorber 513 can relieve the impact at the connection between the second transition section 504j and the third section 504c. The spring shock absorber 513 converts the impact energy into elastic potential energy through its own deformation, effectively reducing the instantaneous peak stress generated by rigid connection, reducing damage to the second transition section 504j and the third section 504c, increasing the service life of the frame 504, and increasing the service life of the vehicle 500. In addition, the spring shock absorber 513 can relieve the impact at the connection between the second transition section 504j and the third section 504c, suppress the transmission path of vibration between the second transition section 504j and the third section 504c, reduce the vibration of the second transition section 504j, and thus reduce the vibration of the frame 504, reduce the vibration of the structure connected to the frame 504, thereby reducing the vibration of the vehicle 500, improving riding stability and comfort. Furthermore, reducing the vibration of the vehicle 500 can reduce the risk of damage to the various structures in the vehicle 500 caused by vibration, improving the service life of the vehicle 500.

Referring to FIG. 27, in some embodiments, the distance L1 along the first direction 01 between the front end of the front wheel 505 and the rear end of the rear wheel 506 falls within the range of 950mm - 1400mm. When L1 is less than 950mm, the length of the vehicle 500 along the first direction 01 is small, which will impose greater limitations on the rider's activity space or the cargo space, for example, the space is too narrow, leading to a poor experience. When L1 is greater than 1400mm, the length of the vehicle 500 along the first direction 01 is large, which is unfavorable for the compact design of the vehicle 500.

Specifically, L1 can be any value within the range of 950mm - 1400mm, such as 950mm, 1100mm, 1175mm, 1250mm, or 1400mm.

In some embodiments, the outer diameter D1 of both the front wheel 505 and the rear wheel 506 falls within the range of 280mm - 340mm. On one hand, this facilitates the compact design of the vehicle 500; on the other hand, it lowers the center of gravity of the frame 504, improving the stability and riding safety of the vehicle 500.

Specifically, D1 can be any value within the range of 280mm - 340mm, such as 280mm, 285mm, 290mm, 295mm, 300mm, 305mm, 310mm, 315mm, 320mm, 325mm, 330mm, 335mm, or 340mm.

Referring to FIG. 27 and FIG. 28, in some embodiments, the width W1 of the front wheel 505 and the rear wheel 506 along the second direction 02 falls within the range of 45mm - 70mm. W1 ≥ 45mm, to provide greater grip, meet the vehicle stability requirements, and improve riding safety. W1 ≤ 70mm, allows the friction between the front wheel 505 and the rear wheel 506 and the ground to be relatively small. At the same time, due to the small contact area, good passability can be ensured, especially on soft terrain (such as mud or sand).

Specifically, W1 can be any value within the range of 45mm - 70mm, such as 45mm, 47mm, 50mm, 52mm, 54mm, 56mm, 58mm, 60mm, 62mm, 64mm, or 70mm.

Referring to FIG. 93, in some embodiments, the front wheel 505 includes a wheel rim 505a and a front tire 505b. The distance between the wheel rim 505a and the tread of the front tire 505b along the third direction 03 is H4, and K15 = H4/W1 × 100%. K15 falls within the range of 30-60, so that the front wheel 505 has good maneuverability while also taking into account a certain degree of wear resistance. At the same time, the front tire 505b is relatively flat, which is beneficial for achieving a miniaturized design.

Specifically, K15 can be any value within the range of 30 - 60, such as 30, 35, 40, 45, 50, 55, or 60.

In some embodiments, the front wheel 505 and the rear wheel 506 have the same shape and size, which makes the appearance of the vehicle 500 more coordinated. It can be understood that in other embodiments, the outer diameters of the front wheel 505 and the rear wheel 506 may also be different.

Referring to FIG. 27, in some embodiments, the length of the frame 504 along the first direction 01 is L2. It can also be understood that L2 is the distance between the front end of the first connecting portion 504d and the rear end of the second transition section 504j. L2 falls within the range of 700mm - 880mm. L2 being greater than or equal to 700mm ensures that the frame 504 can provide sufficient space for the rider's activity or for carrying cargo. L2 being less than or equal to 880mm prevents the frame 504 from being too long, which would increase the total weight of the vehicle 500, facilitating the compact and lightweight design of the vehicle 500.

Specifically, L2 can be any value within the range of 700mm - 880mm, such as 700mm, 710mm, 780mm, 790mm, 800mm, or 880mm.

In some embodiments, the ratio K16 of L2 to L1 falls within the range of 0.5 - 0.8. This ensures that the frame 504 can provide relatively stable support while avoiding the frame 504 being too large and increasing the total weight of the vehicle 500, facilitating the compact and lightweight design of the vehicle 500.

Specifically, K16 can be any value within the range of 0.5 - 0.8, such as 0.5, 0.55, 0.6, 0.65, 0.7, 0.75, or 0.8.

Referring to FIG. 28, in some embodiments, the width W3 of the frame 504 along the second direction 02 falls within the range of 210mm - 230mm. If W3 is less than 210mm, the support surface provided by the frame 504 is too narrow, which is detrimental to improving the stability of the frame 504, especially when carrying heavy loads or in bumpy road conditions. If W3 is greater than 230mm, the frame 504 is too wide, increasing the total weight of the vehicle 500, which is unfavorable for the compact and lightweight design of the vehicle 500, and also requires more packaging space during packaging.

Specifically, W3 can be any value within the range of 210mm - 230mm, such as 210mm, 215mm, 220mm, 225mm, or 230mm.

In some embodiments, the width W3 of the frame 504 along the second direction 02 is equal to the width of the second section 504b. The width of the second section 504b falls within the range of 210mm - 230mm. When the second section 504b is used for the rider to step on, it can provide a larger space for the rider, facilitating the placement of both feet, and offering better stability and comfort. When the second section 504b is used for placing items, it can provide a larger storage space, increasing the contact area between the item and the second section 504b, and improving the stability of the item placed on the second section 504b. When the second section 504b is used for placing animals, it can provide a larger riding space, improving the stability and comfort of the animal while riding.

In some embodiments, the width W2 of the handlebar 501 along the second direction 02 falls within the range of 480mm - 600mm. It can also be understood that W2 is the distance between the left and right sides of the handlebar 501. On one hand, when the rider operates the handlebar 501, they can spread their arms, resulting in high operating comfort. On the other hand, it is suitable for the compact design of the vehicle 500, giving the vehicle 500 good passability, especially in narrow areas such as alleys and densely parked areas.

Specifically, W2 can be any value within the range of 480mm - 600mm, such as 475mm, 495mm, 515mm, 535mm, 555mm, 575mm, or 600mm.

Referring to FIG. 28, in some embodiments, the length L3 of the first basket 507 along the first direction 01 falls within the range of 230mm - 250mm, and the width W4 along the second direction 02 falls within the range of 320mm - 340mm. L3 ≥ 230mm and W4 ≥ 320mm ensure that the cross-section of the first basket 507 perpendicular to the third direction 03 is large, which facilitates the placement of items. L3 ≤ 250mm and W4 ≤ 340mm prevent excessive increase in the length of the vehicle 500 along the first direction 01 and the width along the second direction 02, so that the travel of the vehicle 500 is not affected by the length and width of the first basket 507.

Specifically, L3 can be any value within the range of 230mm - 250mm, such as 230mm, 235mm, 240mm, 245mm, or 250mm. W4 can be any value within the range of 320mm - 340mm, such as 320mm, 325mm, 330mm, 335mm, or 340mm.

Referring to FIG. 27, in some embodiments, along the third direction 03, when the highest point of the seat 508 is substantially flush with the midsection or central area of the stem 502, the distance L4 between the seat 508 and the stem 502 along the first direction 01 may fall within the range of 314mm - 515mm. When L4 ≥ 314mm, sufficient operating space may be provided for the rider, for example, during mounting or dismounting the vehicle. When L4 ≤ 515mm, the arrangement may be suitable for a compact design of the vehicle 500.

Specifically, L4 can be any value within the range of 314mm - 515mm, such as 314mm, 374mm, 394mm, 414mm, 434mm, 454mm, or 515mm.

In some embodiments, the height H1 of the seat 508 is adjustable to meet the height requirements of different riders for the seat 508. It should be noted that the height H1 of the seat 508 refers to the height of the plane parallel to the first plane and tangent to the highest point of the seat 508. In the present application, the adjustable height H1 of the seat 508 means that the rider can adjust the height of the seat 508 before riding according to their needs.

Additionally, the adjustable height H1 of the seat 508 allows for adjusting the space occupied by the vehicle 500 during storage and transportation by adjusting the height H1 of the seat 508, which facilitates transportation and storage. When the transportation space is consistent, adjusting the space occupied by the vehicle 500 can increase the number of vehicles 500 that can be transported, improving transportation efficiency. When the number of transported vehicles 500 is the same, adjusting the space occupied by the vehicle 500 can reduce the storage and transportation space, facilitating the movement of transportation equipment. When the storage space is fixed, adjusting the space occupied by the vehicle 500 can increase the number of vehicles 500 that can be stored. When the number of stored vehicles 500 is the same, adjusting the space occupied by the vehicle 500 can reduce the storage space, i.e., reduce space occupation.

In some embodiments, the adjustment travel H7 of the seat 508 falls within the range of 150mm - 350mm, which can meet the adjustment needs of most people and avoid wasting travel. Waste of travel refers to a situation where if the adjustment travel is very large, but most people only need to use a small segment of that travel, the remaining travel is idle.

Specifically, H7 can be any value within the range of 150mm - 300mm, such as 150mm, 160mm, 170mm, 180mm, 190mm, 200mm, 210mm, 220mm, 230mm, 240mm, 250mm, 260mm, 270mm, 280mm, 290mm, or 300mm.

Referring to FIG. 27, in some embodiments, along the third direction 03, the height from the ground H2 of the handlebar 501 may fall within the range of 850mm - 1050mm. H2 ≥ 850mm can be matched with the height of the seat 508, facilitating operation by the rider. In addition, H2 ≤ 1050mm is suitable for a compact design of the vehicle 500.

Specifically, H2 can be any value within the range of 850mm - 1050mm, such as 850mm, 890mm, 930mm, 970mm, 1010mm, or 1050mm.

In some embodiments, along the third direction 03, the height from the ground of the first section 504a is H3, and the height from the ground of the handlebar 501 is H2. The ratio K1 of H3 to H2 may fall within the range of 0.45 - 0.55. If K1 is less than 0.45, the height difference between the handlebar 501 and the first connecting portion 504d is large, which can easily cause shaking or swinging when operating the handlebar 501 for direction control, resulting in a poor operating experience. That is, an excessive height difference between the handlebar 501 and the first connecting portion 504d leads to low operating precision. If K1 is greater than 0.55, the height difference between the handlebar 501 and the first connecting portion 504d is small, and the first section 504a that adapts to the first connecting portion 504d also needs to be higher and longer, increasing the cost.

Specifically, K1 can be any value within the range of 0.45-0.55, such as 0.45, 0.46, 0.47, 0.48, 0.49, 0.5, 0.51, 0.52, 0.53, 0.54, or 0.55.

Referring to FIG. 27, in some embodiments, the seat 508 is fixedly provided on the frame 504. It can be understood that the smaller the height difference between the seat 508 and the frame 504, the higher the stability of the seat 508. In some embodiments, the difference between the maximum height H1max of the seat 508 and the height H18 of the connection position between the seat 508 and the frame 504 is less than or equal to 300mm, which gives the seat 508 high stability, thereby giving the vehicle 500 high stability.

In some embodiments, the minimum height H1min of the seat 508 and the height H18 of the connection position between the seat 508 and the frame 504 is greater than or equal to 100mm. It can be understood that, given a fixed seat height 508, the smaller the height difference between the seat 508 and the frame 504, the higher the center of gravity of the frame 504. It may also lead to an increase in the height of the frame 504 along the third direction 03. An increase in the height of the center of gravity of the frame 504 raises the center of gravity of the vehicle 500, reducing the stability of the vehicle 500. An increase in the height of the frame 504 along the third direction 03 increases the weight of the frame 504, which is not conducive to the compact design of the vehicle 500.

Referring to FIG. 27, in some embodiments, the frame 504 further includes a first connecting portion 504d fixedly provided at the front end. Along the first direction 01, the first connecting portion 504d is located at the front side of the first section 504a and at the top side of the first section 504a. The first connecting portion 504d is configured, along the first direction 01, to divide an inner region located on the inner side and an outer region located on the outer side, wherein the inner region is located on the front side of the outer region. The inner region is the internal space of the first connecting portion 504d itself, and the inner region is provided for the bottom end of the stem 502 and the top end of the front fork 503 to penetrate, or, the inner region can provide mounting space for the bottom end of the stem 502 and the top end of the front fork 503. The outer region can at least provide a connection position for the first section 504a.

In some embodiments, the first connecting portion 504d is configured to be inclined rearward along the first direction 01. The stem 502 that adapts to the first connecting portion 504d can be inclined rearward, lowering the height of the stem 502 along the third direction 03, i.e., lowering the height from the ground of the stem 502, which is beneficial for the compact design of the vehicle 500. Additionally, the top end of the front fork 503 that adapts to the first connecting portion 504d can be inclined rearward, and the position of the front wheel 505 that adapts to the front end of the front fork 503 is moved forward, providing a more stable support effect.

Referring to FIG. 93, in some embodiments, the first connecting portion 504d is configured to be inclined rearward along the first direction 01, and the first section 504a is configured to be inclined forward along the first direction 01. The angle β17 between the first connecting portion 504d and the first section 504a falls within the range of 35° - 45°. If β17 is less than 35°, the trail is smaller, which easily causes shaking during travel, and makes it more difficult for the rider to operate the handlebar 501. If β17 is greater than 45°, the front fork 503 that adapts to the first connecting portion 504d is excessively inclined rearward, making the projection of the front fork 503 on the first plane too long. As part of the vehicle 500, the increased length of the front fork 503 would also cause the vehicle 500 to lengthen, which is unfavorable for achieving a compact design.

Specifically, β17 can be any value within the range of 35°-45°, such as 35°, 37°, 39°, 41°, 43°, or 45°.

In some embodiments, the first connecting portion 504d is substantially cylindrical, and the thickness falls within the range of 1.5mm - 2.5mm. When the thickness is less than 1.5mm, the structural strength is insufficient, and it is prone to bending or deformation when the road surface is bumpy causing a large impact, or when the rider and/or carried items are heavy. When the thickness is greater than 2.5mm, its own weight will increase significantly, and the material cost will also be raised.

Specifically, the thickness of the first connecting portion 504d can be any value within the range of 1.5mm - 2.5mm, such as 1.5mm, 1.6mm, 1.7mm, 1.8mm, 1.9mm, 2.0mm, 2.1mm, 2.2mm, 2.3mm, 2.4mm, or 2.5mm.

Referring to FIG. 27, in some embodiments, the angle β5 between the stem 502 and the first direction 01 and the angle β6 between the front fork 503 and the first direction 01 can be the same or different. The absolute value of the difference between β5 and β6 falls within the range of 0° - 5°, in order to have high steering operation accuracy.

Specifically, the angle difference between β5 and β6 can be any value within the range of 0° - 5°, such as 0°, 0.5°, 1°, 1.5°, 2°, 2.5°, 3°, 3.5°, 4°, 4.5°, 5°.

Referring to FIG. 27 and FIG. 30, in some embodiments, the frame 504 further includes a second connecting portion 504e installed on the extension section 504k. The second connecting portion 504e is configured, along the second direction 02, to divide a first outer region located on the outer side, an inner region located on the inner side, and a second outer region located on the outer side. The inner region is the internal space of the second connecting portion 504e itself, provided for the bottom end of the seat 508 to penetrate, or, the inner region can provide mounting space for the bottom end of the seat 508. Both the first and second outer regions can at least provide connection positions for the extension section 504k.

Referring to FIG. 19, in some embodiments, the second connecting portion 504e is configured to be perpendicular to the first plane.

Referring to FIG. 27, in some embodiments, the second connecting portion 504e is configured to be inclined rearward along the first direction 01. The seat 508 that adapts to the second connecting portion 504e is also inclined rearward, increasing the distance between the rear side of the stem 502 and the front side of the seat 508 in the first direction 01, which provides more space for the rider to mount and dismount the vehicle.

Referring to FIG. 93, in some embodiments, the second connecting portion 504e is configured to be inclined rearward along the first direction 01. The angle β23 between the second connecting portion 504e and the first plane falls within the range of 78° - 88°. If β23 is less than 78°, the seat 508 that adapts to the second connecting portion 504e is excessively inclined rearward along the first direction 01. When the rider sits on the seat 508, they may easily feel like they are tilting backward or sliding out, resulting in a poor experience and potentially interfering with the rider's operation. If β23 is greater than 88°, the seat 508 that adapts to the second connecting portion 504e is excessively inclined forward along the first direction 01, which reduces the distance between the rear side of the stem 502 and the front side of the seat 508 in the first direction 01, compressing the rider's activity space.

Specifically, β23 can be any value within the range of 78° - 88°, such as 78°, 80°, 82°, 84°, 85°, 86°, or 88°.

In some embodiments, the second connecting portion 504e is configured to be inclined rearward along the first direction 01, and the third section 504c is configured to be inclined forward along the first direction 01. The angle β24 between the second connecting portion 504e and the third section 504c falls within the range of 22° - 32°. If β24 is less than 22°, the second connecting portion 504e is too close to the third section 504c, which tends to compress the space corresponding to the third section 504c used for mounting the rear wheel 506, increasing the difficulty of installing the rear wheel 506. If β24 is greater than 32°, the seat 508 that adapts to the second connecting portion 504e is excessively inclined rearward along the first direction 01. When the rider sits on the seat 508, they may easily feel like they are tilting backward or sliding out, resulting in a poor experience and potentially interfering with the rider's operation.

Specifically, β24 can be any value within the range of 22° - 32°, such as 22°, 24°, 26°, 27°, 28°, 30° or 32°.

Referring to FIG. 27 and FIG. 95, in some embodiments, along the third direction 03, the top side of the second connecting portion 504e is higher than the top side of the first connecting portion 504d. This can provide stable support when the seat 508 is adjusted to a high position, meeting the usage needs of taller people.

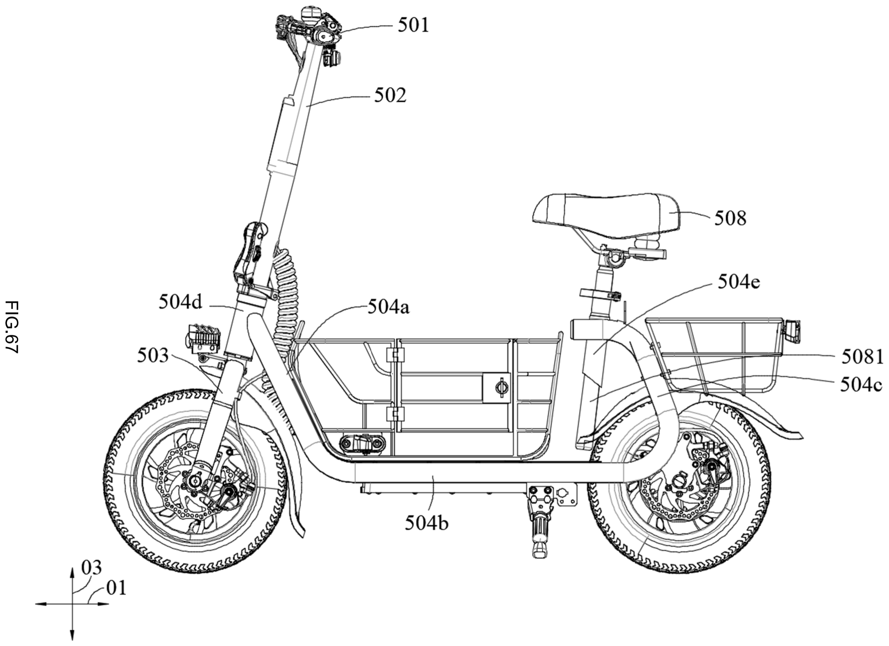

Referring to FIG. 67, in some embodiments, along the third direction 03, the top end of the second connecting portion 504e is level with the top end of the first connecting portion 504d. This can reduce the distance from the top side of the second connecting portion 504e to the bottom side of the second section 504b, which allows for more space saving during packaging and reduces transportation costs.

Referring to FIG. 29, in some embodiments, the second connecting portion 504e is substantially cylindrical, and the thickness falls within the range of 1.5mm - 2.5mm. When the thickness is less than 1.5mm, the structural strength is insufficient, and it is prone to bending or deformation when the road surface is bumpy causing a large impact, or when the rider and/or carried items are heavy. When the thickness is greater than 2.5mm, its own weight will increase significantly, and the material cost will also be raised.

Specifically, the thickness of the second connecting portion 504e can be any value within the range of 1.5mm - 2.5mm, such as 1.5mm, 1.6mm, 1.7mm, 1.8mm, 1.9mm, 2mm, 2.1mm, 2.2mm, 2.3mm, 2.4mm, or 2.5mm.

Referring to FIG. 26 and FIG. 29, in some embodiments, the frame 504 further includes a third connecting portion 504f fixedly provided at the rear end. The third connecting portion 504f is configured, along the first direction 01, to divide an front region located on the front side and a rear region located on the rear side. The front region is used for connecting the third section 504c, and the rear region is used for mounting the first basket 507.

Referring to FIG. 95, in some embodiments, the third connecting portion 504f is fixed on the third section 504c. The third section 504c is configured to be inclined forward along the first direction 01, and the third connecting portion 504f is configured to be inclined forward along the first direction 01. The angle between the third connecting portion 504f and the third section 504c falls within the range of 0° - 5°. If the angle is greater than 5°, the connection area between the third connecting portion 504f and the third section 504c is small, and the connection stability of the third connecting portion 504f is poor. Especially when the first basket 507 carries a heavy load or in bumpy road conditions, the connection between the third connecting portion 504f and the third section 504c is prone to fracture or loosening, which is unfavorable for increasing the service life and ensuring riding safety.

Specifically, the angle between the third connecting portion 504f and the third section 504c can be any value within the range of 0° - 5°, such as 0°, 1°, 2°, 3°, 4°, or 5°.

Referring to FIG. 26, FIG. 29, and FIG. 95, in some embodiments, the third connecting portion 504f is substantially sheet-shaped or plate-shaped, and the thickness falls within the range of 2mm - 5mm. When the thickness is less than 2mm, the structural strength is insufficient, and the third connecting portion 504f is prone to bending or deformation when the road surface is bumpy causing a large impact, or when the items carried by the first basket 507 are heavy. When the thickness is greater than 5mm, its own weight will increase significantly, and the material cost will also be raised.

Specifically, the thickness of the third connecting portion 504f can be any value within the range of 2mm - 5mm, such as 2mm, 2.2mm, 2.7mm, 2.9mm, 3.1mm, 3.3mm, 3.5mm, 3.7mm, 3.9mm, 4.1mm, 4.3mm, 4.5mm, or 5mm.

Referring to FIG. 25 and FIG. 29, in some embodiments, the frame 504 further includes a fifth connecting portion 504h fixedly provided near the rear end. The fifth connecting portion 504h is configured to be fixedly connected to the side stand 511.

In some embodiments, the fifth connecting portion 504h is perpendicular to the second section 504b. When the side stand 511 is deployed, i.e., when the vehicle 500 is in a parking state, the fifth connecting portion 504h can more effectively convert the thrust from the side stand 511 into an axial force transmitted to the second section 504b, resulting in better material strength.

Based on this, the front wheel 505, the stem 502, the front fork 503, the first basket 507, the rear wheel 506, and the side stand 511 are all directly or indirectly connected to the frame 504, so that the structures of the vehicle 500 maintain relatively fixed or fixed in relative position.

Referring to FIG. 29, in some embodiments, the width of the first section 504a along the second direction 02 gradually decreases from the bottom end to the top end of the first section 504a. The larger width of the bottom end of the first section 504a along the second direction 02 is convenient for providing more space for the rider to stretch their feet, improving the rider's comfort, and at the same time, it can better separate the rider's feet from other parts on the front side, such as the front wheel 505, resulting in better safety. The width of the first section 504a along the second direction 02 gradually decreases from the bottom end to the top end of the first section 504a, which can reduce the resistance encountered by the vehicle 500 during travel and improve the flexibility of the vehicle 500 during transport and travel. It can be understood that although the width of the top end of the first section 504a along the second direction 02 is reduced, its width may still meet the requirements for fixed connection with the first connecting portion 504d.

In some embodiments, the width of the first section 504a along the second direction 02 changes linearly from the bottom end to the top end of the first section 504a, making the change process smoother and facilitating processing.

In some embodiments, the first section 504a is substantially triangular in shape, which provides strong stability. In some embodiments, the first section 504a is in the shape of an isosceles triangle; and the two sides of the first section 504a along the second direction 02 are symmetrically arranged. On one hand, this improves aesthetics; on the other hand, it improves the weight balance of the two sides of the first section 504a, which helps to improve the balance of the vehicle 500 along the second direction 02 and enhances riding safety.

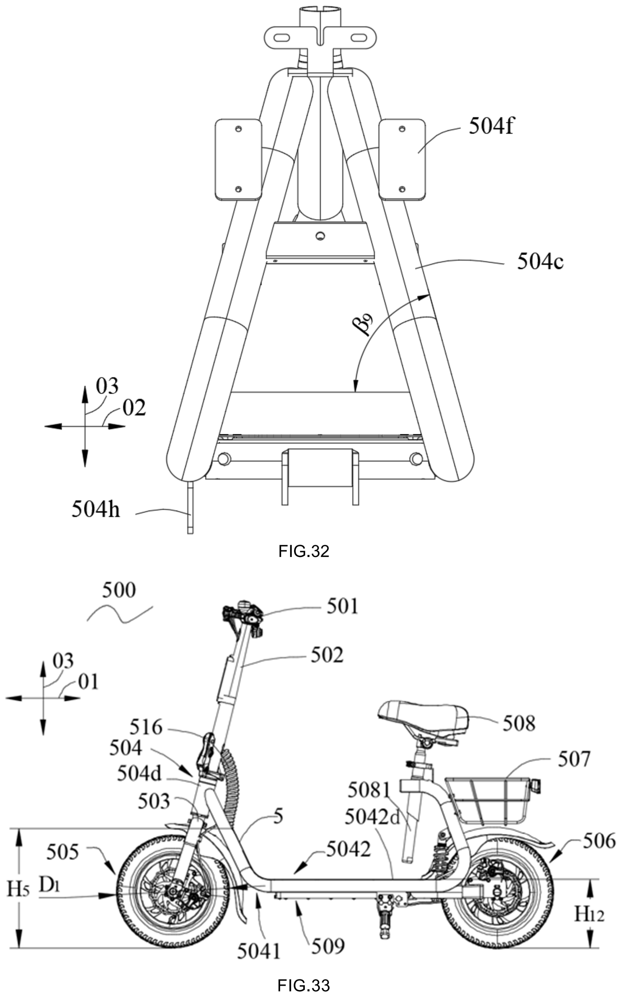

Referring to FIG. 27 and FIG. 32, in some embodiments, the angle β8 between the side edge of the first section 504a along the second direction 02 and the second direction 02 falls within the range of 67° - 77°. β8 ≥ 67° ensures high support strength and reduces the risk of deformation. In addition, it can effectively block rain, dust, etc. brought up by the front wheel 505 during rotation. β8 ≤ 77° can reduce the resistance generated by the vehicle 500 during travel, and can also reduce the average width of the first section 504a along the second direction 02, improving the flexibility of the vehicle 500 during travel and transport.

Specifically, β8 can be any value within the range of 67° - 77°, such as 67°, 69°, 71°, 73°, 75°, or 77°.

Referring to FIG. 29 to FIG. 32, in some embodiments, the side edge of the first section 504a along the second direction 02 and the side edge of the second section 504b along the second direction 02 may have a smooth transition, in order to reduce the risk of injury from bumps at the connection position between the first section 504a and the second section 504b to the rider or people/animals located near the vehicle 500.

In some embodiments, the second section 504b is rectangular, and symmetrically arranged with respect to the symmetry plane a. This ensures the weight balance of the two sides of the second section 504b relative to the symmetry plane a, which facilitates improving the balance performance of the vehicle 500 along the second direction 02 and enhances riding safety. The symmetrical arrangement of the second section 504b with respect to the symmetry plane a can also improve its aesthetic effect.

Referring to FIG. 27 and FIG. 32, in some embodiments, the width of the third section 504c along the second direction 02 gradually decreases from the bottom end to the top end of the third section 504c. The larger width of the bottom end of the third section 504c along the second direction 02 is convenient for providing space for the installation of the rear wheel 506, reducing the difficulty of installing the rear wheel 506. The width of the third section 504c along the second direction 02 gradually decreases from the bottom end to the top end of the third section 504c, improving the flexibility of the vehicle 500 during transport and travel. It can be understood that although the width of the top end of the third section 504c along the second direction 02 is reduced, its width can still meet the requirements for fixed connection with the second connecting portion 504e.

In some embodiments, the width of the third section 504c along the second direction 02 changes linearly from the bottom end to the top end of the third section 504c, making the change process smoother and facilitating processing.

In some embodiments, the third section 504c is trapezoidal in shape, which provides strong stability. In some embodiments, the third section 504c is in the shape of an isosceles trapezoid; and the side edges of the two sides of the third section 504c along the second direction 02 are symmetrically arranged with respect to the symmetry plane a. On one hand, this improves aesthetics; on the other hand, it improves the weight balance of the two sides of the third section 504c relative to the symmetry plane a, which facilitates improving the balance performance of the vehicle 500 along the second direction 02 and enhances riding safety.

In some embodiments, the angle β9 between the side edge of the third section 504c along the second direction 02 and the second direction 02 falls within the range of 70° - 80°. β9 ≥ 70° ensures high support strength and reduces the risk of deformation of the third section 504c. In addition, it can provide a large installation space for the rear wheel 506, allowing the rear wheel 506 to be installed further forward, thereby making the vehicle 500 shorter and achieving a compact design. β9 ≤ 80° can reduce the average width of the third section 504c along the second direction 02, making the third section 504c more compact and improving the flexibility of the vehicle 500 during travel and transport. Furthermore, β9 falling within the range of 70° - 80° can also ensure that the connection between the second section 504b and the third section 504c has high rigidity and strength, improving the support performance and service life of the frame 504.

Specifically, β9 can be any value within the range of 70°-80°, such as 70°, 72°, 74°, 76°, 78°, or 80°.

In some embodiments, the side edge of the third section 504c along the second direction 02 and the side edge of the second section 504b along the second direction 02 transition smoothly, in order to reduce the risk of injury from bumps at the connection position between the third section 504c and the second section 504b to the rider or people/animals located near the vehicle 500.

Referring to FIG. 29 to FIG. 30, in some embodiments, the frame 504 further includes a first transition section 504i disposed between the first section 504a and the second section 504b, so as to make the transition between the first section 504a and the second section 504b smoother. On one hand, the provision of the first transition section 504i reduces the risk of the rider or people around the vehicle 500 being injured by sharp corners. On the other hand, the provision of the first transition section 504i alleviates the stress concentration phenomenon between the first section 504a and the second section 504b, improving the support strength of the frame 504, and increasing the reliability and service life of the frame 504. Furthermore, as the vehicle 500 travels, the airflow at the connection between the first section 504a and the second section 504b can flow more smoothly, reducing the resistance encountered by the vehicle 500.

In some embodiments, the extension line of the first transition section 504i is curved, extending from the front end of the second section 504b to the bottom end of the first section 504a, so as to make the transition between the first section 504a and the second section 504b smoother, which can also make the appearance more aesthetically pleasing.

In some embodiments, the extension line of the first transition section 504i is arc-shaped, extending from the front end of the second section 504b to the bottom end of the first section 504a, which makes the shape of the first transition section 504i simpler and more standardized, facilitating manufacturing.

In some embodiments, the first transition section 504i is tangent to both the first section 504a and the second section 504b, which makes the transition between the first section 504a and the second section 504b smoother, and also facilitates realizing a fixed connection between the first transition section 504i and the first section 504a and the second section 504b, respectively, making the connection more stable.

Additionally, in some embodiments, the first section 504a is inclined forward. The extension direction of the first transition section 504i gradually and regularly changes forward, extending from the front end of the second section 504b to the bottom end of the first section 504a. This makes the airflow over the first transition section 504i smoother during the travel of the vehicle 500, and can also make the appearance more aesthetically pleasing.

In some embodiments, the width of the first transition section 504i along the second direction 02 gradually decreases, extending from the front end of the second section 504b to the bottom end of the first section 504a. On one hand, this allows the width of the bottom end of the first section 504a along the second direction 02 to be set smaller, avoiding excessive increase in the resistance during the travel of the vehicle 500 while meeting the need to block rain and dust. On the other hand, it can also make the front end of the second section 504b wider, which facilitates improving pedaling comfort or the stability of placing items.

Referring to FIG. 29 to FIG. 30, in some embodiments, the frame 504 further includes a second transition section 504j disposed between the second section 504b and the third section 504c, so as to make the transition between the second section 504b and the third section 504c smoother. On one hand, the provision of the second transition section 504j avoids the sharp corner formed by the direct connection between the second section 504b and the third section 504c, reducing the risk of the rider or people/animals around the vehicle 500 being injured by the sharp corner. On the other hand, the provision of the second transition section 504j alleviates the stress concentration phenomenon between the second section 504b and the third section 504c, improving the support strength of the frame 504, and increasing the reliability and service life of the frame 504. Furthermore, as the vehicle 500 travels, the airflow at the connection between the second section 504b and the third section 504c can flow more smoothly, reducing the resistance encountered by the vehicle 500.

In some embodiments, the extension line of the second transition section 504j is curved, extending from the rear end of the second section 504b to the bottom end of the third section 504c, so as to make the transition between the second section 504b and the third section 504c smoother, which can also make the appearance more aesthetically pleasing.

In some embodiments, the extension line of the second transition section 504j is arc-shaped, extending from the rear end of the second section 504b to the bottom end of the third section 504c, which makes the shape of the second transition section 504j simpler and more standardized, facilitating manufacturing.

In some embodiments, the second transition section 504j is tangent to both the second section 504b and the third section 504c, which makes the transition between the second section 504b and the third section 504c smoother, and also facilitates realizing a fixed connection between the two ends of the second transition section 504j and the second section 504b and the third section 504c, respectively, making the connection more stable.

Furthermore, along the first direction 01, the bottom end of the third section 504c is located at the rear side of the second section 504b, and the corresponding central angle of the second transition section 504j is less than 180°, reducing the risk of bending deformation of the second transition section 504j.

In some embodiments, the width of the second transition section 504j along the second direction 02 gradually decreases, extending from the rear end of the second section 504b to the bottom end of the third section 504c. On one hand, this allows the width of the bottom end of the third section 504c along the second direction 02 to be set smaller, which is beneficial for realizing a compact design. On the other hand, it also allows the rear end of the second section 504b to be set wider, which facilitates improving pedaling comfort or the stability of placing items.

Referring to FIG. 26 and FIG. 29, in some embodiments, the frame 504 further includes an extension section 504k disposed at the top end of the third section 504c. The extension section 504k is configured, along the first direction 01, to divide an front region located on the front side and a rear region located on the rear side. The front region provides space for the rider to mount or dismount the vehicle, and the rear region is used for connecting the seat 508, or it can be understood that the rear region is used to provide space for the installation of the seat 508. It can also be understood that the extension section 504k is configured, along the third direction 03, to divide a top-side region located on the top side, which is used for mounting the seat 508.

Referring to FIG. 22, in some embodiments, along the first direction 01, the bottom end of the extension section 504k is located on the front side, and the top end is located on the rear side. The extension line of the extension section 504k is curved, which avoids sharp corners, reducing the risk of the rider or items/animals carried by the rider being injured by sharp corners, especially during acceleration or in bumpy road conditions. Additionally, it can also make the appearance more aesthetically pleasing.

Referring to FIG. 29, in some embodiments, the extension section 504k is substantially parallel to the first plane. When the vehicle 500 is upright, the extension section 504k is set substantially horizontally, which can reduce the risk of the rider and/or the items carried by the rider being poked or hit by the front end of the extension section 504k.

Specifically, the extension section 504k being substantially parallel to the first plane means that the angle between the extension section 504k and the first plane is within the range of 0° - 5°. On one hand, when the downward angle of the front end of the extension section 504k is greater than 5°, the space provided by the second section 504b will be encroached upon by the extension section 504k. That is, to avoid the front end of the extension section 504k, the available height of the space provided by the second section 504b along the third direction 03 will be reduced. Additionally, it will increase the risk of the rider or the items carried by the rider being poked or hit by the front end of the extension section 504k. On the other hand, when the upward angle of the front end of the extension section 504k is greater than 5°, it will increase the risk of being poked or hit by the front end of the extension section 504k during the process of mounting or dismounting the vehicle.

Specifically, the angle between the extension section 504k and the first plane can be any value within the range of 0°-5°, such as 0°, 1°, 2°, 3°, 4°, or 5°.

In some embodiments, the extension section 504k is approximately parallel to the second section 504b. The fact that their angles of inclination are the same or relatively close can provide a more consistent visual appearance, making the frame 504 more aesthetic overall. Furthermore, it facilitates the structural transition using a smaller space in the third direction 03, meaning the projection on the third plane is shorter, achieving a compact design.

Specifically, the angle between the extension section 504k and the second section 504b can be any value within the range of 0° - 5°, such as 0°, 1°, 2°, 3°, 4°, or 5°.

Referring to FIG. 93, in some embodiments, the extension section 504k is approximately parallel to the first plane, and the angle β22 between the extension section 504k and the third section 504c falls within the range of 100° - 120°. If β22 is less than 100°, since the third section 504c is relatively steep, it easily leads to a more abrupt connection between the extension section 504k and the third section 504c, i.e., not smooth, or requires a higher transition space along the third direction 03, which is unfavorable for the compact design of the frame 504. If β22 is greater than 120°, the projection of the third section 504c on the first plane is relatively long, which can easily lead to a longer length of the frame 504, which is unfavorable for the compact design.

Specifically, β22 can be any value within the range of 100° - 120°, such as 100°, 102°, 104°, 106°, 108°, 110°, 112°, 114°, 116°, 118°, or 120°.

Referring to FIG. 27 and FIG. 29, the seat 508 is fixedly provided on the extension section 504k of the frame 504. In other words, the second connecting portion 504e is fixedly provided on the extension section 504k, and the seat 508 is indirectly provided at the top end of the third section 504c via the extension section 504k. On one hand, given a fixed distance between the seat 508 and the stem 502, increasing the length of the frame 504 along the first direction 01 enhances the support effect of the frame 504 and improves the stability of the vehicle 500. On the other hand, the extension section 504k extends forward, and the extension direction of the extension section 504k is parallel to the first plane. The seat 508 is fixedly provided on the extension section 504k, and the force exerted by the extension section 504k on the seat 508 is substantially along the third direction 03, which is substantially perpendicular to the extension direction of the extension section 504k, reducing the risk of the seat 508 moving along the first direction 01, making the fixation of the seat 508 more stable and improving riding safety.

Referring to FIG. 19, in some embodiments, the extension section 504k is connected to the third section 504c, i.e., along the first direction 01, the rear end of the extension section 504k contacts and is fixed to the top end of the third section 504c.

Referring to FIG. 29 to FIG. 30, in some embodiments, the frame 504 further includes a third transition section 504m disposed between the third section 504c and the extension section 504k. On one hand, this makes the transition between the third section 504c and the extension section 504k smoother. On the other hand, the provision of the third transition section 504m reduces the risk of the rider or people/animals around the vehicle 500 being injured by sharp corners. Furthermore, the provision of the third transition section 504m alleviates the stress concentration phenomenon between the third section 504c and the extension section 504k, improving the support strength of the frame 504, and increasing the reliability and service life of the frame 504. In addition, as the vehicle 500 travels, the airflow at the connection between the third section 504c and the extension section 504k can flow more smoothly, reducing the resistance encountered by the vehicle 500.

In some embodiments, the extension line of the third transition section 504m is curved, extending from the top end of the third section 504c to the rear end of the extension section 504k, so as to make the transition between the third section 504c and the extension section 504k smoother, which can also make the appearance more aesthetically pleasing.

In some embodiments, the extension line of the third transition section 504m is arc-shaped, extending from the top end of the third section 504c to the rear end of the extension section 504k, which makes the shape of the third transition section 504m simpler and more standardized, facilitating manufacturing.

In some embodiments, the third transition section 504m is tangent to both the third section 504c and the extension section 504k, which makes the transition between the third section 504c and the extension section 504k smoother, and also facilitates realizing a fixed connection between the two ends of the third transition section 504m and the second section 504b and the third section 504c, respectively, and makes the connection more stable.

In some embodiments, along the first direction 01, the third section 504c is inclined forward, and the top end of the third section 504c is located at the rear side of the extension section 504k. Therefore, the corresponding central angle of the third transition section 504m is less than 180°, reducing the risk of bending deformation of the third transition section 504m.

In some embodiments, the width of the third transition section 504m along the second direction 02 gradually decreases, extending from the top end of the third section 504c to the rear end of the extension section 504k. On one hand, this allows the width of the rear end of the extension section 504k along the second direction 02 to be set smaller, which is beneficial for realizing a compact design. On the other hand, it also allows the top end of the third section 504c to be set wider, giving the third section 504c high support strength.

Referring to FIG. 33 and FIG. 99, in some embodiments, the frame 504 includes a mounting frame 5041 and a support plate 5042 fixedly provided on the mounting frame 5041.

The mounting frame 5041 is configured, along the first direction 01, to connect components located at the front side of the vehicle 500 at its front end, such as the front fork 503 and the stem 502, and to connect components located at the rear side of the vehicle 500 at its rear end, such as the seat 508 and the rear wheel 506. It can also be understood that the mounting frame 5041 is the skeleton of the vehicle 500, so that the components on the front and rear sides of the vehicle 500 maintain stable relative positions.

The support plate 5042 is configured to provide a flat area along the first direction 01 for the rider to step on, place items, or place animals. Additionally, the support plate 5042 can transmit the applied force downward to the mounting frame 5041, improving the support strength of the frame 504. It can be understood that the flat area of the support plate 5042 is the top side of the second section 504b.

In some embodiments, the support plate 5042 is integrally formed.

In some embodiments, the material of the support plate 5042 is carbon structural steel, which has both good support strength and is easy to shape.

In some embodiments, the thickness of the support plate 5042 falls within the range of 1mm - 2.5mm, so as to have lower weight while meeting the support strength requirements, and to facilitate production.

Specifically, the thickness of the support plate 5042 can be any value within the range of 1mm - 2.5mm, such as 1mm, 1.2mm, 1.4mm, 1.6mm, 1.8mm, 2mm, 2.2mm, or 2.4mm.

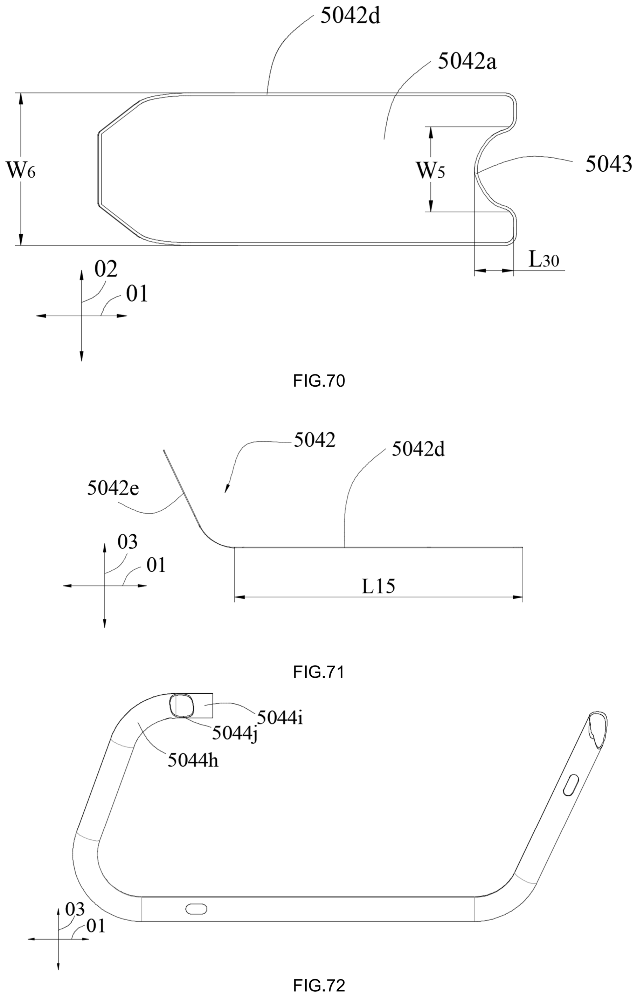

Referring to FIG. 70 and FIG. 71, in some embodiments, the support plate 5042 includes a second flat portion 5042d. The second flat portion 5042d is configured to provide a flat area along the first direction 01 for the rider to step on, place items, or place animals.

In some embodiments, the second flat portion 5042d, which serves as the top side of the second section 504c, is configured to be substantially rectangular overall, and the intermediate area has a portion extending outward in the second direction 02. This can indicate the mounting position to the rider. The outwardly extending portion forms a distinct shape difference from the surrounding area, which can serve as a visual guide and allow the rider to quickly identify and standardize the mounting/stepping position, resulting in a better riding experience and riding safety. Additionally, it can provide wider space for placing feet, adapting to different foot sizes, and also allowing the rider to flexibly adjust the distance and posture of their feet, enhancing foot placement comfort.

Referring to FIG. 70, in some embodiments, the second flat portion 5042d is configured to be substantially rectangular overall, and the intermediate area has no portion extending outward in the second direction 02. This can achieve a compact design, facilitating flexible movement and parking in narrow spaces, and making it easier to transport and carry.

Referring to FIG. 70 and FIG. 99, in some embodiments, an avoidance groove 5043 is provided at the rear end of the second flat portion 5042d along the first direction 01. The avoidance groove 5043 is configured to avoid at least one of the bottom end of the seat 508, the rear wheel 506, and the rear fender, reducing the weight of the second flat portion 5042d. It also allows other components to be installed relatively farther forward, which is beneficial for making the vehicle 500 shorter and achieving a compact design.

In some embodiments, the avoidance groove 5043 is used to avoid the bottom end of the seat 508.

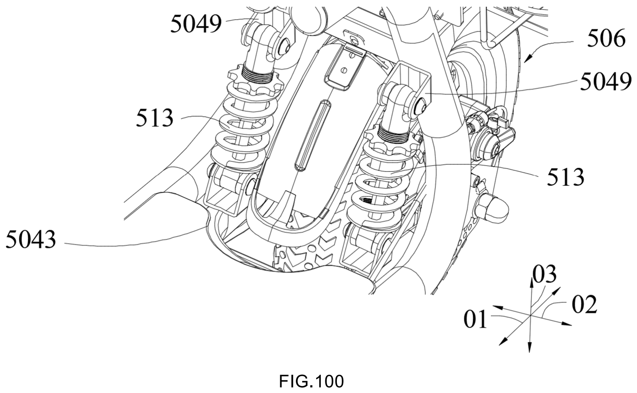

Referring to FIG. 100, in some embodiments, the avoidance groove 5043 is used to avoid the rear wheel 506.

In some embodiments, the avoidance groove 5043 is used to avoid the rear wheel 506 and the rear fender.

Referring to FIG. 70, in some embodiments, along the second direction 02, the extension line of the avoidance groove 5043 is curved, which reduces the risk of scratching or scraping other components (such as the rear fender, rear wheel 506) during the installation process, and can also make the appearance more aesthetically pleasing.

In some embodiments, the groove bottom of the avoidance groove 5043 is arc-shaped, meaning that along the first direction 01, the further forward, the narrower the opening of the avoidance groove 5043, which can make the appearance more aesthetically pleasing.

In some embodiments, the groove opening of the avoidance groove 5043 is arc-shaped, meaning that along the first direction 01, the further backward, the wider the opening of the avoidance groove 5043, which is convenient for other components (such as the rear fender, rear wheel 506) to enter during the installation process, reducing the difficulty of installation. Additionally, it reduces the risk of installation or maintenance personnel being injured by sharp corners.

In some embodiments, the groove width of the avoidance groove 5043 along the second direction is greater than the groove depth of the avoidance groove 5043 along the first direction, so that the avoidance groove 5043 is configured as a wide and shallow notch, which is convenient for other components (such as the rear fender, rear wheel 506) to enter during the installation process, reducing the difficulty of installation.

In some embodiments, the groove width W5 of the avoidance groove 5043 falls within the range of 125mm - 145mm, and the groove depth L30 falls within the range of 40mm - 50mm. This avoids insufficient structural strength when the avoidance groove 5043 is too wide or too deep, which is prone to cracking or deformation due to stress concentration under force. It also avoids the situation where the space is insufficient when the avoidance groove 5043 is too narrow, making it difficult for other components to enter.

Specifically, W5 can be any value within the range of 125mm - 145mm, such as 125mm, 127mm, 129mm, 131mm, 133mm, 135mm, 137mm, 139mm, 141mm, 143mm, or 145mm. L30 can be any value within the range of 40mm - 50mm, such as 40mm, 42mm, 44mm, 46mm, 48mm, or 50mm.

Referring to FIG. 71, in some embodiments, along the first direction 01, the length L15 of the second flat portion 5042d falls within the range of 385mm - 485mm. This prevents a poor experience due to insufficient space provided to the rider when the second flat portion 5042d is too short, making it difficult to meet stepping or cargo-carrying needs. It also prevents the frame 504 from being too long when the second flat portion 5042d is too long, which is unfavorable for the compact design of the vehicle 500.

Specifically, L15 can be any value within the range of 385mm - 485mm, such as 385mm, 390mm, 395mm, 400mm, 405mm, 410mm, 415mm, 420mm, 425mm, 430mm, 435mm, 440mm, 445mm, 450mm, 455mm, 460mm, 465mm, 470mm, 475mm, 480mm, or 485mm.

Referring to FIG. 70, in some embodiments, along the second direction 02, the width W6 of the second flat portion 5042 falls within the range of 150mm - 245mm. This prevents a poor experience due to insufficient space provided to the rider when the second flat portion 5042 is too narrow, making it difficult to meet stepping or cargo-carrying needs. It also prevents excessive weight and poor passability when the second flat portion 5042 is too wide.

Specifically, W6 can be any value within the range of 150mm - 245mm, such as 150mm, 155mm, 160mm, 165mm, 170mm, 175mm, 180mm, 185mm, 190mm, 195mm, 200mm, 205mm, 210mm, 215mm, 220mm, 225mm, 230mm, 235mm, 240mm, or 245mm.

Referring to FIG. 71 and FIG. 99, in some embodiments, along the first direction 01, a third upwardly extending portion 5042e is located on the front side of the second flat portion 5042d. The third upwardly extending portion 5042e is configured to extend upward from the bottom end along the first direction 01, and the bottom end is fixed to the second flat portion 5042d. The third upwardly extending portion 5042e is configured, along the first direction 01, to divide an front region located on the front side, which is used to avoid the front wheel 505, and a rear region located on the rear side, which is used by the rider. Separating the two regions is beneficial for improving safety in use, especially when the front wheel 505 turns, or when placing items or animals, and also prevents items or animals from moving forward due to inertia or other effects to a position where they contact the front wheel 505, thereby improving riding safety and reducing the risk of item damage or animal injury.

In some embodiments, the width of the third upwardly extending portion 5042e along the second direction 02 gradually decreases from the bottom end to the top end of the third upwardly extending portion 5042e. The bottom end of the third upwardly extending portion 5042e has a large width along the second direction 02, which facilitates providing more foot extension space for the rider and improving the riding comfort of the rider. Additionally, it can better separate the rider's feet from other parts or components on the front side, such as the front wheel 505 and the front fender, providing better safety. The gradual decrease in the width of the third upwardly extending portion 5042e along the second direction 02, from the bottom end to the top end, can reduce the resistance encountered by the vehicle 500 during travel.

Specifically, in some embodiments, the width of the third upwardly extending portion 5042e along the second direction 02 changes linearly from the bottom end to the top end of the third upwardly extending portion 5042e, making the change process smoother and facilitating manufacturing.

Specifically, in some embodiments, the third upwardly extending portion 5042e is substantially trapezoidal, possessing strong stability. Specifically, in some embodiments, the third upwardly extending portion 5042e is an isosceles trapezoid. On one hand, this improves aesthetics; on the other hand, it improves the weight balance on both sides of the third upwardly extending portion 5042e, which facilitates improving the balance of the vehicle 500 along the second direction 02 and enhancing safety during riding.

Referring to FIG. 98 and FIG. 99, in some embodiments, along the third direction 03, the height difference between the height H5 of the third upwardly extending portion 5042e from the ground and the outer diameter D1 of the front wheel 505 falls within the range of 0mm - 10mm. This prevents the third upwardly extending portion 5042e from being too low, resulting in a too small coverage area, which would cause dirt such as rain and dust carried up by the front wheel 505 during rolling to splash backward onto the rider or carried items. It also prevents the third upwardly extending portion 5042e from being too high, which would increase material cost and the weight of the support plate. Additionally, space can be reserved at the top end of the third upwardly extending portion 5042e for the winding tube 516 to pass through. The winding tube 516 can be guided to the underside of the third upwardly extending portion 5042e, which not only makes the vehicle 500 more aesthetically pleasing overall but also protects the winding tube 516, reducing the risk of the rider or carried items tangling with or pulling on the winding tube 516.

Specifically, the height difference between H5 and D1 can be any value within the range of 0mm - 10mm, such as 1mm, 2mm, 3mm, 4mm, 5mm, 6mm, 7mm, 8mm, 9mm, or 10mm.

In some embodiments, the support plate 5042 further includes a fourth upwardly extending portion, which is located on the rear side of the second flat portion 5042d. The fourth upwardly extending portion is configured to extend upward from the bottom end along the first direction 01. The fourth upwardly extending portion is configured, along the first direction 01, to divide an front region located on the front side, which is used by the rider, and a rear region, which is used for mounting the rear wheel 506. Separating the two regions is beneficial for improving safety in use, especially when the rear wheel 506 rotates.

In some embodiments, an avoidance groove 5043 is provided at the rear end of the fourth upwardly extending portion along the first direction 01. The avoidance groove 5043 is configured to avoid at least one of the bottom end of the seat 508, the rear wheel 506, and the rear fender. This can reduce the weight of the fourth upwardly extending portion, and is beneficial for making the vehicle shorter and achieving a compact design.

Referring to FIG. 23, in some embodiments, the avoidance groove is used to avoid the bottom end of the seat 508.

In some embodiments, the avoidance groove is used to avoid the second connecting portion 504e and the rear fender.

In some embodiments, the avoidance groove is used to avoid the second connecting portion 504e, the rear wheel 506, and the rear fender.

In some embodiments, the avoidance groove is used to avoid the second connecting portion 504e and the rear wheel 506.

In some embodiments, the avoidance groove is used to avoid the rear wheel 506.

Referring to FIG. 70, in some embodiments, the vehicle further includes a first anti-slip mechanism 5042a. Along the third direction 03, the first anti-slip mechanism 5042a is configured to at least partially cover the top side of the second flat portion 5042d. When the rider steps on the second flat portion 5042d, it can prevent the rider's feet from slipping, especially when mounting or dismounting the vehicle, thereby improving riding safety. Additionally, when placing items on the second flat portion 5042d, it can reduce the sliding of items due to inertia during acceleration or deceleration, improving the stability of item placement. Furthermore, when an animal travels with the rider, it can prevent the animal's feet from slipping, especially when mounting or dismounting the vehicle, ensuring the safety of the animal.

In some embodiments, the first anti-slip mechanism 5042a includes, but is not limited to, sandpaper, rubber, and anti-slip coating.

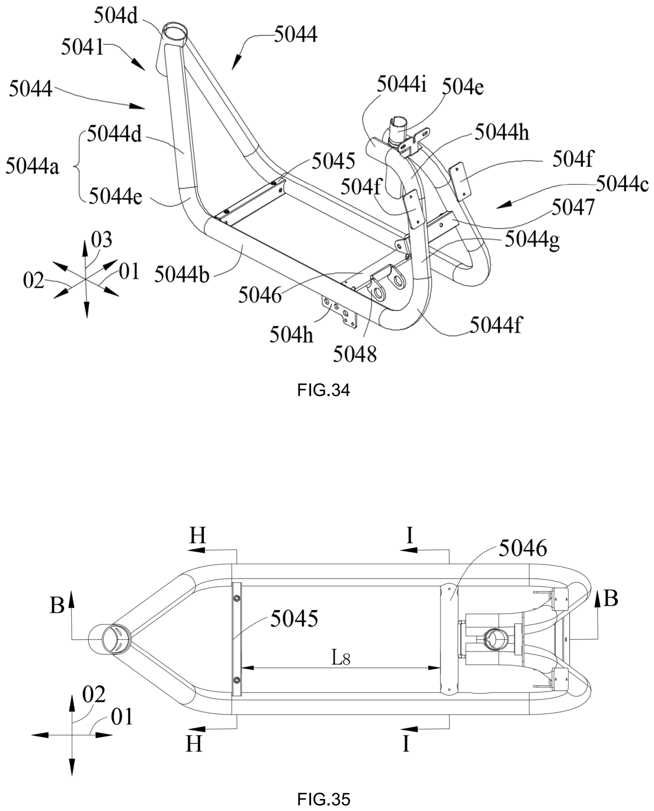

Referring to FIG. 34, in some embodiments, the mounting frame 5041 includes two support rods 5044 symmetrically disposed relative to a symmetry plane a, which enhances the gravitational balance of the frame 504, improves the balance performance of the vehicle 500, and enhances riding safety.

The support rod 5044 is configured to extend along the first direction 01 from the front side of the mounting frame 5041 to the rear side of the mounting frame 5041. It can also be understood that, along the second direction 02, the two support rods 5044 determine the left-side position and the right-side position of the mounting frame 5041, meaning the width of the two support rods 5044 is the width of the mounting frame 5041. The symmetrical arrangement of the two support rods 5044 is beneficial for the frame 504 to maintain gravitational balance, improve the balance performance of the vehicle 500, ensure riding safety, and also provide better aesthetics.

In some embodiments, the support rod 5044 is integrally formed.

In some embodiments, the support rod 5044 is assembled in sections, meaning the support rod 5044 comprises multiple segments and is in a separated state before assembly.

In some embodiments, the support rod 5044 is hollow, which can reduce the weight of the frame 504, making it lighter and more effort-saving when the rider needs to maneuver or lift the frame 504. Additionally, the hollow support rod 5044 can provide space for routing cables, such as accommodating wires and brake lines, which not only makes the vehicle 500 more aesthetically pleasing overall but also protects the cables, providing waterproof and anti-collision effects.

In some embodiments, the support rod 5044 is tubular, which reduces the weight of the support rod 5044, facilitating the lightweight design of the vehicle 500.

In some embodiments, the material of the support rod 5044 is carbon structural steel, which has high strength and is not easily deformed. Additionally, the support rod 5044 made of carbon structural steel is easy to shape and facilitates manufacturing, reducing production costs.

In some embodiments, the support rod 5044 is circular. A circular cross-section has the same moment of inertia in the 360° direction, and the stress distribution is uniform when subjected to lateral and longitudinal impacts, making it less prone to deformation or bending. Furthermore, the rounded shape of the support rod 5044, which has no sharp edges, allows for even flow of powder coating or electrophoretic paint, with no buildup or sagging of a thick film, resulting in a smoother coating appearance and more stable corrosion resistance. Additionally, the rounded shape of the support rod 5044, i.e., having no sharp edges or corners, makes it easier for the rider or animal to step onto or enter the vehicle, and less likely to be hooked or scratched. Furthermore, when the rider or animal adjusts their position or moves on the vehicle 500, if they contact or bump the support rod 5044, the foreign body sensation is weaker because of its curved surface and uniform pressure distribution, which can improve the comfort of movement or adjustment. Moreover, when the rider or animal dismounts the vehicle, their toes can slide outward naturally, allowing for convenient and stable landing.

In some embodiments, the outer diameter of the support rod 5044 falls within the range of 30mm - 40mm. When the outer diameter is less than 30mm, the area provided by the support rod 5044 for connection or assembly with other components will be too small. For example, when the support rod 5044 is welded to other components, a smaller welding area will lead to insufficient connection strength, making it prone to instantaneous tearing or shearing under impact or overload conditions. When the outer diameter is greater than 40mm, the stepping area provided by the support rod 5044 will also be significantly raised, requiring the rider or animal to make a larger stride to mount the vehicle.

Specifically, the outer diameter of the support rod 5044 can be any value within the range of 30mm - 40mm, such as 30mm, 33mm, 35mm, 37mm, or 40mm.

In some embodiments, the cross-section of the support rod 5044 is annular, and the outer surface is smooth, reducing the risk of the rider or people/animals around the vehicle 500 being injured by bumping into the support rod 5044. Additionally, the annular cross-section of the support rod 5044 is structurally simple, facilitating manufacturing. Furthermore, the annular cross-section of the support rod 5044 also provides a certain aesthetic effect.

It can be understood that the wall thickness of the support rod 5044 refers to the thickness of the tube wall of the support rod 5044, and is equal to half the difference between the outer diameter and the inner diameter. In this application, the wall thickness of a tubular structure uniformly refers to the thickness of the tube wall, and will not be repeated later.

Specifically, the wall thickness of the support rod 5044 falls within the range of 1mm - 2.5mm, so as to have lower weight while meeting the support strength requirements, and to facilitate manufacturing.

Specifically, the wall thickness of the support rod 5044 can be any value within the range of 1mm - 2.5mm, such as 1mm, 1.2mm, 1.4mm, 1.6mm, 1.8mm, 2.0mm, 2.2mm, or 2.4mm.

In some embodiments, the mounting frame 5041 further includes a first connecting portion 504d.

In some embodiments, the mounting frame 5041 further includes an intermediate section disposed along the first direction 01, between the first connecting portion 504d and the support rod 5044. The intermediate section is configured to connect to the first connecting portion 504d forwardly and connect to the two support rods 5044 backwardly. The two support rods 5044 are symmetrically disposed relative to the intermediate section. The top end of the intermediate section is fixed to the first connecting portion 504d, and the bottom end of the intermediate section is fixed to the front end of the support rod 5044. Since the intermediate section is generally located in the middle region of the mounting frame 5041, its smaller width along the second direction 02 is beneficial for reducing the resistance encountered by the vehicle 500 during travel, and is also beneficial for a compact design. In addition, the intermediate section and the support rod 5044 are relatively independent, allowing for separate external shape design and greater flexibility in shape selection.

In some embodiments, the intermediate section is configured to curve forward along the first direction 01, which can provide more space for other parts or components. For example, it provides more operating space for the installation, adjustment, or maintenance of the front wheel 505, reducing the difficulty of operation.

In some embodiments, the intermediate section is configured to incline forward along the first direction 01. The regular shape facilitates manufacturing. Additionally, when items need to be placed obliquely or have a corresponding leaning position, the intermediate section can provide support for the items. When wishing to place more or larger items, the space generated by the forward inclination of the intermediate section can be further utilized. The forward inclination of the intermediate section provides the rider with diverse and flexible storage options.

Referring to FIG. 34, in some embodiments, the support rod 5044 includes a first upwardly extending portion 5044a and a first flat portion 5044b sequentially arranged along the first direction 01.

The first upwardly extending portion 5044a is configured to extend upward from the bottom end along the first direction 01, and the top end of the first upwardly extending portion 5044a is fixed to the first connecting portion 504d. The first flat portion 5044b is configured, along the first direction 01, to have its front end fixed to the bottom end of the first upwardly extending portion 5044a, and along the third direction 03, to provide upward support force when the rider steps on or carries items, so as to ensure the stability of riding or carrying items.

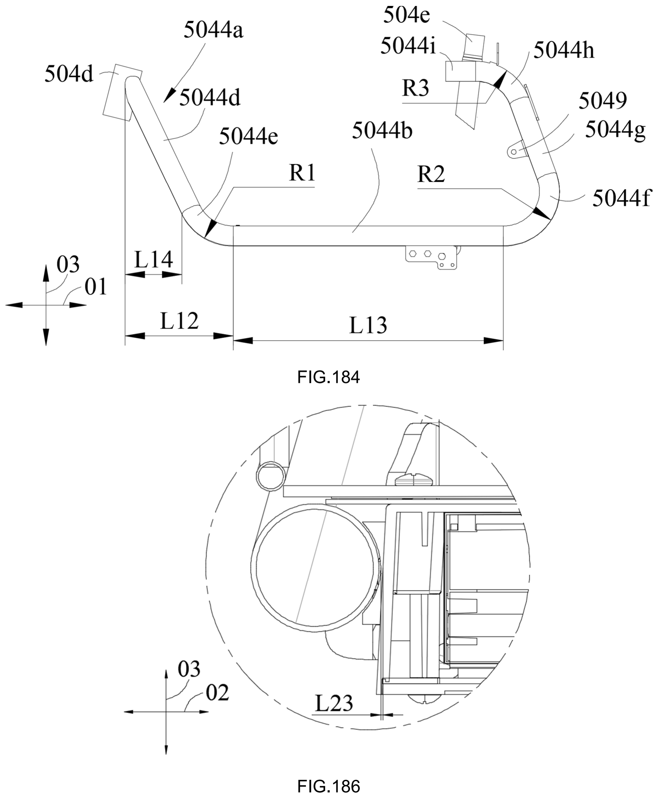

Referring to FIG. 184, in some embodiments, the projection length of the first upwardly extending portion 5044a on the first plane is L12, which can also be understood as the distance between the front and rear ends of the first upwardly extending portion 5044a. The projection length of the first flat portion 5044b on the first plane is L13, which can also be understood as the distance between the front and rear ends of the first flat portion 5044b. The ratio K2 of L13 to L12 falls within the range of 2 - 3. This prevents the first flat portion 5044b from being too short, leading to insufficient stepping or storage space, and also prevents the first flat portion 5044b from being too long, occupying too much space, which is unfavorable for the compact design of the vehicle.

Specifically, K2 can be any value in the range of 2 - 3, such as 2.0, 2.1, 2.2, 2.3, 2.4, 2.5, 2.6, 2.7, 2.8, 2.9, or 3.0.

In some embodiments, the first upwardly extending portion 5044a includes a first inclined portion 5044d and a first arc-shaped portion 5044e. The first inclined portion 5044d is configured, along the first direction 01, to have its top end fixed to the first connecting portion 504d and its bottom end fixed to the front end of the first arc-shaped portion 5044e. The first arc-shaped portion 5044e is configured to be fixed to the front end of the first flat portion 5044b.

The angle between the first inclined portion 5044d and the first connecting portion 504d is the same as the range of β17, and the effect is also the same, which will not be repeated here. β17 refers to the angle between the first connecting portion 504d and the first section 504a.

In some embodiments, the top end of the first inclined portion 5044d is fixed to the first connecting portion 504d, and the projection length L14 of the first inclined portion 5044d on the first plane is 30mm - 70mm. L14 being less than 30mm leads to the first inclined portion 5044d being too steep, providing less space for the rider or their carried items, thus limiting space utilization. Furthermore, L14 being greater than 70mm leads to the first inclined portion 5044d being too gentle. As part of the mounting frame 5041, an overly long first inclined portion 5044d is unfavorable for transport or storage.

Specifically, L14 can be any value within the range of 30mm - 70mm, such as 30mm, 35mm, 40mm, 45mm, 50mm, 55mm, 60mm, 65mm, or 70mm.

In some embodiments, the radius of curvature R1 of the first arc-shaped portion 5044e falls within the range of 88mm - 108mm. If R1 is less than 88mm, the first arc-shaped portion 5044e is prone to fatigue cracks at the stress concentration points and a shortened service life due to excessive stress concentration when subjected to long-term vibration. If R1 is greater than 108mm, it will occupy too much space, which is unfavorable for the compact design of the vehicle 500.

Specifically, R1 can be any value within the range of 88mm - 108mm, such as 88mm, 90mm, 92mm, 94mm, 96mm, 98mm, 100mm, 102mm, 104mm, 106mm, or 108mm.

Referring to FIG. 24, in some embodiments, along the first direction 01, the rear end of the first flat portion 5044b on the left side may be bent to the right, and the rear end of the first flat portion 5044b on the right side may be bent to the left, so that the rear ends of the two first flat portions 5044b may be joined and secured.

Referring to FIG. 33 and FIG. 34, in some embodiments, the support rod 5044 further includes a second upwardly extending portion 5044c. The first flat portion 5044b is located between the first upwardly extending portion 5044a and the second upwardly extending portion 5044c. The second upwardly extending portion 5044c is configured to extend upward from the bottom end along the first direction 01, and the bottom end of the second upwardly extending portion 5044c is fixed to the rear end of the first flat portion 5044b. The second upwardly extending portion 5044c is configured to extend upward along the first direction 01, which can provide support for the seat 508 and/or the first basket 507, so as to ensure the stability of the seat 508 and/or the first basket 507.

In some embodiments, the second upwardly extending portion 5044c has only one bend, which is located at the bottom, and only one folding, facilitating manufacturing.

In some embodiments, the second upwardly extending portion 5044c has two bends. Along the first direction 01, the first bend is located at the front end of the second upwardly extending portion 5044c, and the second bend is located at the middle part of the second upwardly extending portion 5044c. Furthermore, along the first direction 01, the rear end of the second upwardly extending portion 5044c is located at the rear side of the center of the rear wheel 506. The second upwardly extending portion 5044c is configured to extend along the periphery of the rear wheel 506 and provide avoidance. For example, the portion between the first bend and the second bend is located on the front side of the rear wheel 506, and the portion between the second bend and the rear end of the second upwardly extending portion 5044c is located on the top side of the rear wheel 506. Therefore, along the first direction 01, the second upwardly extending portion 5044c can provide support over a larger range, for example, providing support at the bottom of the first basket 507, thereby ensuring the stability of the first basket 507, especially when the load weight is large.

Along the second direction 02, the rear end of the left second upwardly extending portion 5044c is curved to the right, and the rear end of the right second upwardly extending portion 5044c is curved to the left, so that the rear ends of the two second upwardly extending portions 5044c join and are fixed.

In some embodiments, the second upwardly extending portion 5044c has two bends. Along the third direction 03, the first bend is located at the bottom end of the second upwardly extending portion 5044c, and the second bend is located at the top end of the second upwardly extending portion 5044c. Furthermore, along the first direction 01, the first bend is located between the second bend and the center of the rear wheel 506, and the second upwardly extending portion 5044c is substantially S-shaped. Therefore, the space occupied by the second upwardly extending portion 5044c along the first direction 01 is small, which is beneficial for making the length of the support rod 5044 shorter and achieving a compact design.

In some embodiments, the second upwardly extending portion 5044c has three bends. Along the third direction 03, the first bend is located at the bottom end of the second upwardly extending portion 5044c, the second bend is generally located at the middle part of the second upwardly extending portion 5044c, and the third bend is located at the top end of the second upwardly extending portion 5044c. Furthermore, along the first direction 01, the third bend is located between the first bend and the second bend, and the second bend is located on the front side of the center of the rear wheel 506. The second upwardly extending portion 5044c is aesthetically pleasing and can also provide more ample space for the rider to step on or carry items.

Referring to FIG. 33 and FIG. 34, in some embodiments, the second upwardly extending portion 5044c has two bends. Along the third direction 03, the first bend is located at the bottom end of the second upwardly extending portion 5044c, and the second bend is located at the top end of the second upwardly extending portion 5044c. Furthermore, along the first direction 01, the first bend is located between the second bend and the center of the rear wheel 506, and the second upwardly extending portion 5044c is substantially C-shaped. Therefore, the space occupied by the second upwardly extending portion 5044c along the first direction 01 is small, which is beneficial for making the length of the support rod 5044 shorter and achieving a compact design.

Specifically, in some embodiments, along the second direction 02, the second upwardly extending portion 5044c on the left side and the second upwardly extending portion 5044c on the right side do not contact, meaning space is reserved for mounting the second connecting portion 504e.

In some embodiments, the second upwardly extending portion 5044c includes a second arc-shaped portion 5044f, a second inclined portion 5044g, a third arc-shaped portion 5044h, and a horizontal section 5044i, sequentially arranged along the third direction 03. The second arc-shaped portion 5044f is configured, along the first direction 01, to have its front end fixed to the first flat portion 5044b and its rear end fixed to the bottom end of the second inclined portion 5044g. The third arc-shaped portion 5044h is configured, along the third direction 03, to have its bottom end fixed to the top end of the second inclined portion 5044g and its top end fixed to the rear end of the horizontal section 5044i.

Referring to FIG. 184, in some embodiments, the radius of curvature R2 of the second arc-shaped portion 5044f falls within the range of 88mm - 108mm. If R2 is less than 88mm, the second arc-shaped portion 5044f is prone to fatigue cracks at the stress concentration points and a shortened service life due to excessive stress concentration when subjected to long-term vibration. If R2 is greater than 108mm, it will occupy too much space, which is unfavorable for the compact design of the vehicle.

Specifically, R2 can be any value within the range of 88mm - 108mm, such as 88mm, 90mm, 92mm, 94mm, 96mm, 98mm, 100mm, 102mm, 104mm, 106mm, or 108mm.

In some embodiments, the radius of curvature R3 of the third arc-shaped portion 5044h falls within the range of 88mm - 108mm. If R3 is less than 88mm, the third arc-shaped portion 5044h is prone to fatigue cracks at the stress concentration points and a shortened service life due to excessive stress concentration when subjected to long-term vibration. If R3 is greater than 108mm, it will occupy too much space, which is unfavorable for the compact design of the vehicle.

Specifically, R3 can be any value within the range of 88mm - 108mm, such as 88mm, 90mm, 92mm, 94mm, 96mm, 98mm, 100mm, 102mm, 104mm, 106mm, or 108mm.

In some embodiments, some or all of R1, R2, and R3 are the same. Using the same radius of curvature can enhance mold versatility, reduce tool changeovers, and shorten the manufacturing cycle. It can also standardize the manufacturing process, simplify process parameters, and reduce operating difficulty.

In some embodiments, the angle between the first flat portion 5044b and the second inclined portion 5044g is the same as the range of β2, and the effect is also the same, which will not be repeated here. β2 refers to the angle between the third section 504c and the second section 504b.

Referring to FIG. 34 and FIG. 72, in some embodiments, the mounting frame 5041 further includes a second connecting portion 504e. Along the second direction 02, the third arc-shaped portion 5044h and the horizontal section 5044i on the left side are provided with a first mounting groove 5044j for mounting the second connecting portion 504e, and the third arc-shaped portion 5044h and the horizontal section 5044i on the right side are also provided with a first mounting groove 5044j for mounting the second connecting portion 504e. The two first mounting grooves 5044j allow for quick positioning and installation of the second connecting portion 504e, and by utilizing the internal space of the third arc-shaped portion 5044h and the horizontal section 5044i, the mounting frame 5041 is made smaller and more compact, which is beneficial for achieving a compact design.

In some embodiments, the second connecting portion 504e, the third arc-shaped portion 5044h, and the horizontal section 5044i are welded and fixed.

Referring to FIG. 34, in some embodiments, the mounting frame 5041 includes a third connecting portion 504f.

In some embodiments, the third connecting portion 504f divides an front region and a rear region on the two support rods 5044 in a transversely spanning manner along the second direction 02. It can also be understood that the third connecting portion 504f extends along the second direction 02 from the left support rod 5044 to the right support rod 5044, dividing the front region and the rear region in a linearly extending manner. This utilizes the space between the two support rods 5044 to achieve the installation of the first basket 507, making the mounting frame 5041 smaller and more compact overall. Additionally, it helps the two support rods 5044 maintain a stable distance, enhancing the stability of the mounting frame 5041.

Referring to FIG. 33 and FIG. 34, in some embodiments, the third connecting portion 504f divides an front region and a rear region on the two support rods 5044 in a two-sided distribution manner along the second direction 02. It can also be understood that the support rod 5044 on the left side is provided with a third connecting portion 504f, and the support rod 5044 on the right side is also provided with a third connecting portion 504f, dividing the front region and the rear region in a discrete form, which frees up the space between the two support rods 5044 to achieve the installation of the first basket 507.

In some embodiments, the angle between the second inclined portion 5044g and the third connecting portion 504f, and the angle between the third connecting portion 504f and the third section 504c, have the same angle range and the same effect, which will not be repeated here.

In some embodiments, the third connecting portion 504f and the second inclined portion 5044g are welded and fixed.

Referring to FIG. 77 and FIG. 99, in some embodiments, the mounting frame 5041 includes a fifth connecting portion 504h.

In some embodiments, along the first direction 01, the distance from the side stand support position provided by the fifth connecting portion 504h to the rear end of the first flat portion 5044b is L16, and the distance from the side stand support position provided by the fifth connecting portion 504h to the front end of the first flat portion 5044b is L17. The ratio K3 of L17 to L16 falls within the range of 2 - 2.6. If K3 is less than 2, the side stand 511 is too far forward along the first direction 01, which is likely to interfere with foot operations (such as pedaling or putting one's foot down) during riding startup or parking, disrupting normal riding movements. If K3 is greater than 2.6, the side stand 511 is too far back. When parked, the center of gravity of the vehicle 500 is relatively forward, which may easily cause the vehicle 500 to tip over, negatively affecting reliability in use.

Specifically, K3 can be any value within the range of 2 - 2.6, such as 2, 2.1, 2.2, 2.3, 2.4, 2.5, or 2.6.

In some embodiments, along the third direction 03, the height H19 of the fifth connecting portion 504h falls within the range of 20mm - 55mm. If H19 is less than 20mm, the mounting position provided for the side stand 511 is limited, making installation difficult. At the same time, it is difficult to ensure that the fifth connecting portion 504h has sufficient force-bearing area, which easily leads to bending or deformation of the fifth connecting portion 504h, especially when the vehicle 500 is heavy or heavily loaded. If H19 is greater than 55mm, it is too close to the ground, and during riding, it is prone to collision with the ground or objects on the ground, which is unfavorable for ensuring passability and riding safety.

Specifically, H19 can be any value within the range of 20mm - 55mm, such as 20mm, 25mm, 30mm, 35mm, 40mm, 45mm, 50mm, or 55mm.

In some embodiments, the fifth connecting portion 504h is welded and fixed to the first flat portion 5044b.

Referring to FIG. 34 to FIG. 37, in some embodiments, the mounting frame 5041 further includes a first support beam 5045 and a second support beam 5046. Both ends of the first support beam 5045 are fixedly connected to the two support rods 5044, respectively. Both ends of the second support beam 5046 are also fixedly connected to the two support rods 5044, respectively. The arrangement of the first support beam 5045 and the second support beam 5046 helps to keep the distance between the two support rods 5044 stable, i.e., it helps to improve the structural stability of the frame 504.

In some embodiments, the support rod 5044 is provided with a first support beam 5045 and a second support beam 5046, totaling two support beams. It can be understood that in other embodiments, the support rod 5044 can also be provided with only one support beam, or more than two support beams.

In some embodiments, the first support beam 5045 extends along the second direction 02 and is perpendicular to the support rod 5044, so as to have higher stability when supporting the two support rods 5044 and to improve the durability of the frame 504. In addition, the first support beam 5045 is also shorter, reducing weight and material cost.

In some embodiments, the first support beam 5045 is located at the rear end of the first arc-shaped portion 5044e. The overall geometric stability of the structure is good, and the first support beam 5045 is less prone to bending or deformation, which is beneficial for improving the overall stability of the mounting frame 5041. In addition, along the first direction 01, the space on the rear side can also be freed up to install other parts or components, such as the battery assembly 509.

Referring to FIG. 34, in some embodiments, the first support beam 5045 is located at the front end of the first flat portion 5044b. The overall geometric stability of the structure is good, and the first support beam 5045 is less prone to bending or deformation, which is beneficial for improving the overall stability of the mounting frame 5041.

In some embodiments, the second support beam 5046 extends along the second direction 02 and is perpendicular to the support rod 5044, so as to better improve the stability of maintaining a fixed distance between the two support rods 5044 and to enhance the structural stability of the frame 504. In addition, the second support beam 5046 is also shorter, reducing weight and material cost.

Referring to FIG. 33 and FIG. 34, in some embodiments, the second support beam 5046 is located near the rear end of the first flat portion 5044b, that is, the second support beam 5046 is located between the middle part and the rear end of the first flat portion 5044b. This makes the second support beam 5046 more stable when supporting the first flat portion 5044b. At the same time, along the first direction 01, the space on the rear side can also be freed up to install other parts or components, such as the rear wheel 506, which is beneficial for achieving the compact design of the vehicle 500. Additionally, the space on the front side can also be freed up to install other parts or components, such as the battery assembly 509.

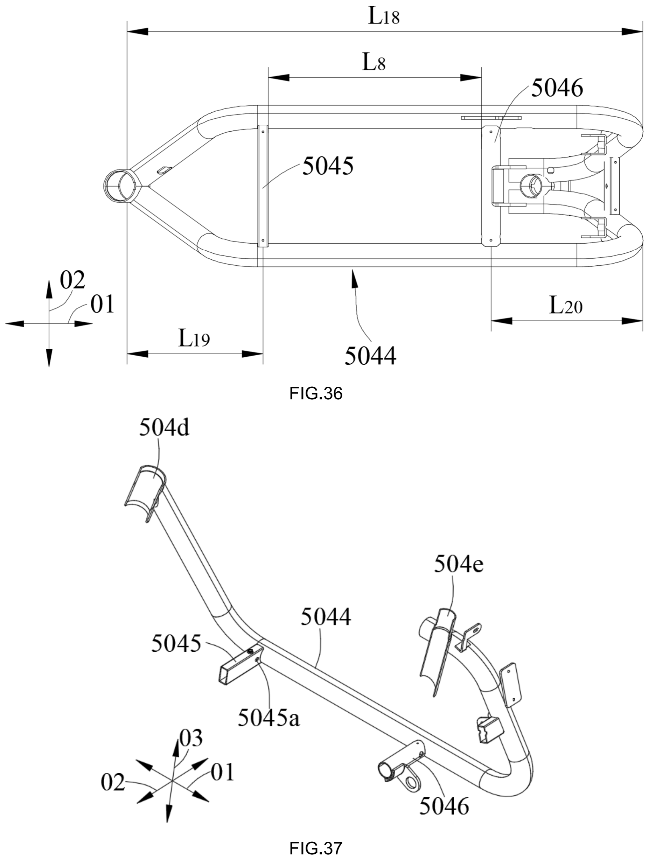

Referring to FIG. 37 to FIG. 43, in some embodiments, the cross-section of the first support beam 5045 perpendicular to the second direction 02 is rectangular annular. While satisfying the required support strength, this reduces the weight of the first support beam 5045, facilitating the lightweight design of the vehicle 500. Furthermore, it can save materials used for preparing the first support beam 5045, reducing production costs. Moreover, the rectangular annular shape is a regular shape, simple and regular in structure, facilitating manufacturing and reducing manufacturing difficulty and cost.

It can be understood that in other embodiments, the cross-section of the first support beam 5045 perpendicular to the second direction 02 is not limited to a rectangular-annular shape, but can also be other regular or irregular shapes, such as annular, elliptical annular, and so on.

In some embodiments, the first support beam 5045 is hollow, which can save materials used for preparing the first support beam 5045 and reduce production costs.

In some embodiments, the first support beam 5045 is tubular, which can reduce weight, facilitating the lightweight design of the vehicle 500.

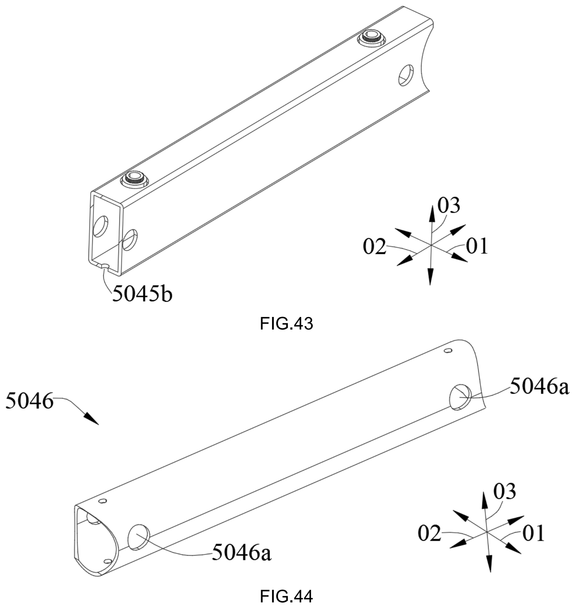

Referring to FIG. 44 to FIG. 48, in some embodiments, the cross-section of the second support beam 5046 perpendicular to the second direction 02 is annular. While satisfying the required support strength, this reduces the weight of the second support beam 5046, facilitating the lightweight design of the vehicle 500. Furthermore, it can save materials used for preparing the second support beam 5046, reducing production costs. Moreover, the annular shape is a regular shape, simple and regular in structure, facilitating manufacturing and reducing manufacturing difficulty and cost.

It can be understood that in other embodiments, the cross-section of the second support beam 5046 perpendicular to the second direction 02 is not limited to an annular shape, but can also be other regular or irregular shapes, such as square annular, elliptical annular, and so on.

Referring to FIG. 34 and FIG. 94, in some embodiments, a sixth connecting portion 5048 is fixedly provided on the second support beam 5046, so the installation positions of the first support beam 5045 and the second support beam 5046 cannot be interchanged. The shape of the cross-section of the first support beam 5045 perpendicular to the second direction 02 is different from the shape of the cross-section of the second support beam 5046, which serves as a mistake-proofing function during installation, i.e., reducing the risk of installing the first support beam 5045 and the second support beam 5046 interchangeably, improving the operator's operational efficiency and increasing the pass rate.

Referring to FIG. 37 to FIG. 41, in some embodiments, the first support beam 5045 has a first through hole 5045a extending through the first support beam 5045 along the first direction 01.

In some embodiments, the first through hole 5045a allows power lines or signal lines to pass through, avoiding messy wiring and even line wear caused by friction with the ground. Of course, the selection can be made according to the wiring situation of the vehicle 500, i.e., the lines can also pass through other spaces.

In some embodiments, the first through hole 5045a can reduce the weight of the first support beam 5045, facilitating cost reduction.

In some embodiments, the first support beam 5045 has multiple first through holes 5045a sequentially arranged along the second direction 02, which facilitates positioning the first support beam 5045 during the production process, such as when assembling the first support beam 5045 and the first flat portion 5044b, through the combined action of the multiple first through holes 5045a, thereby reducing manufacturing difficulty.

Referring to FIG. 37, FIG. 44 to FIG. 46, in some embodiments, the second support beam 5046 has a second through hole 5046a extending through the second support beam 5046 along the first direction 01.

In some embodiments, the second through hole 5046a allows power cables or signal cables to pass through, avoiding messy wiring and even line wear caused by friction with the ground. Of course, the selection can be made according to the wiring situation of the vehicle 500, i.e., the cables can also pass through other spaces.

In some embodiments, the second through hole 5046a can reduce the weight of the second support beam 5046, facilitating cost reduction.

In some embodiments, the second support beam 5045 has multiple second through holes 5046a sequentially arranged along the second direction 02, which facilitates positioning the second support beam 5045 during the production process, such as when assembling the second support beam 5045 and the first flat portion 5044b, through the combined action of the multiple second through holes 5046a, thereby reducing manufacturing difficulty.

In some embodiments, the first support beam 5045 is provided with two first through holes 5045a, and the second support beam 5046 is provided with two second through holes 5046a. The two first through holes 5045a are respectively set up corresponding to the two second through holes 5046a. The corresponding first through hole 5045a and second through hole 5046a are arranged along the first direction 01, and the first through hole 5045a is used in conjunction with the corresponding second through hole 5046a to better avoid messy wiring.

It can be understood that in other embodiments, the number of first through holes 5045a is not limited to two, but can also be one or more than two. Similarly, in other embodiments, the number of second through holes 5046a is not limited to two, but can also be one or more than two.

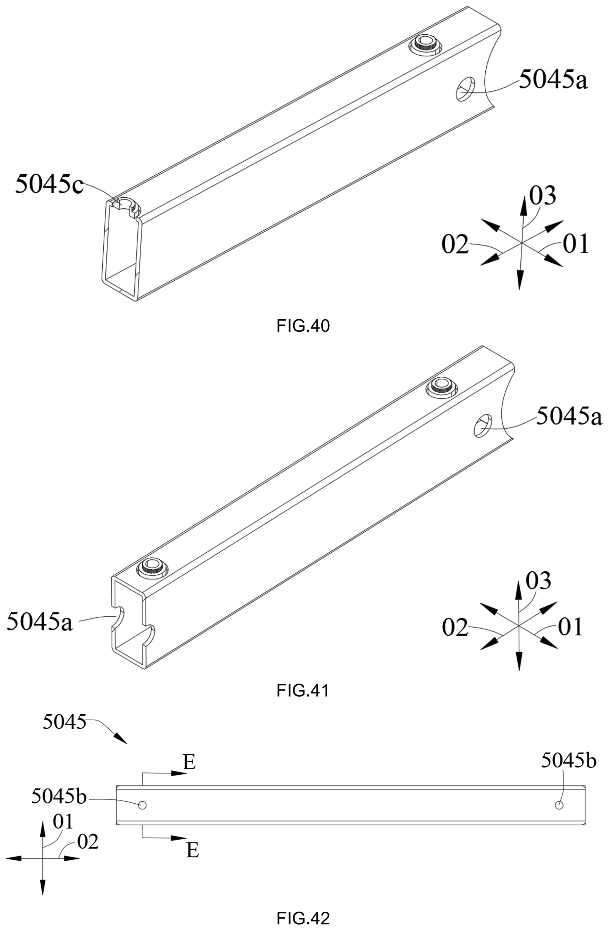

Referring to FIG. 42 and FIG. 43, in some embodiments, the bottom side of the first support beam 5045 is provided with a first drainage hole 5045b, which is used to discharge water from within the first support beam 5045 when water enters it, so as to keep the inner cavity of the first support beam 5045 dry and reduce the risk of rust caused by long-term humidity. It can be understood that if the first support beam 5045 is fixedly connected to the support rod 5044 by welding, cleaning water may enter the first support beam 5045 during welding and cleaning of the first support beam 5045; in addition, water from the environment may also enter the first support beam 5045.

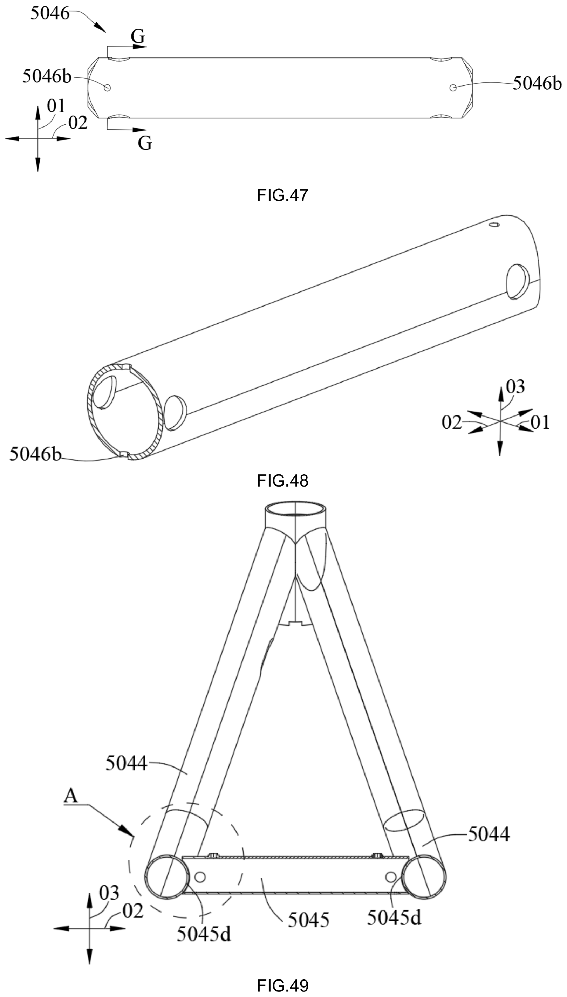

Referring to FIG. 47 and FIG. 48, in some embodiments, the bottom side of the second support beam 5046 is provided with a second drainage hole 5046b, which is used to discharge water from within the second support beam 5046 when water enters it, so as to keep the inside of the second support beam 5046 dry and reduce the risk of rust caused by long-term humidity. It can be understood that if the second support beam 5046 is fixedly connected to the support rod 5044 by welding, cleaning water may enter the second support beam 5046 during welding and cleaning of the second support beam 5046; in addition, water from the environment may also enter the second support beam 5046.

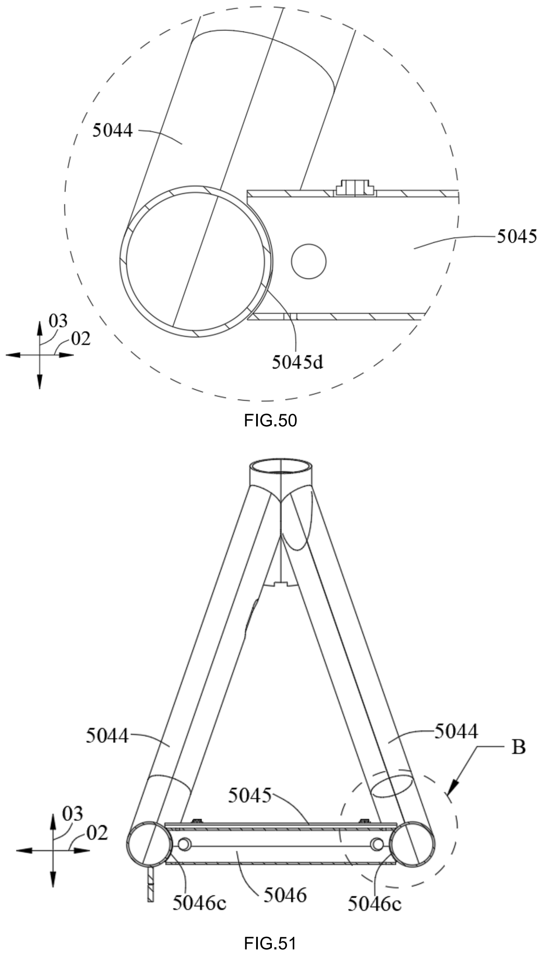

Referring to FIG. 49 and FIG. 50, both ends of the first support beam 5045 along the second direction 02 are provided with a first avoidance recess 5045d that matches the corresponding support rod 5044. The inner surface of the first avoidance recess 5045d fits closely with the corresponding support rod 5044, which improves the stability of the fixed connection between the first support beam 5045 and the support rod 5044.

In some embodiments, along the second direction 02, the first avoidance recess 5045d and the first flat portion 5044b are substantially centrally symmetrical. It can also be understood that the symmetry line of the first avoidance recess 5045d substantially coincides with the symmetry line of the first flat portion 5044b, making the force applied to the first flat portion 5044b more uniform.

Referring to FIG. 50, the top end of the first avoidance recess 5045d is lower than the top end of the first support rod 5044, which facilitates distinguishing between the top end and the bottom end of the first support rod 5044 during installation, providing a mistake-proofing effect. Additionally, it can minimize the height of the support plate 5042, lowering the center of gravity of the vehicle 500, making riding more stable.

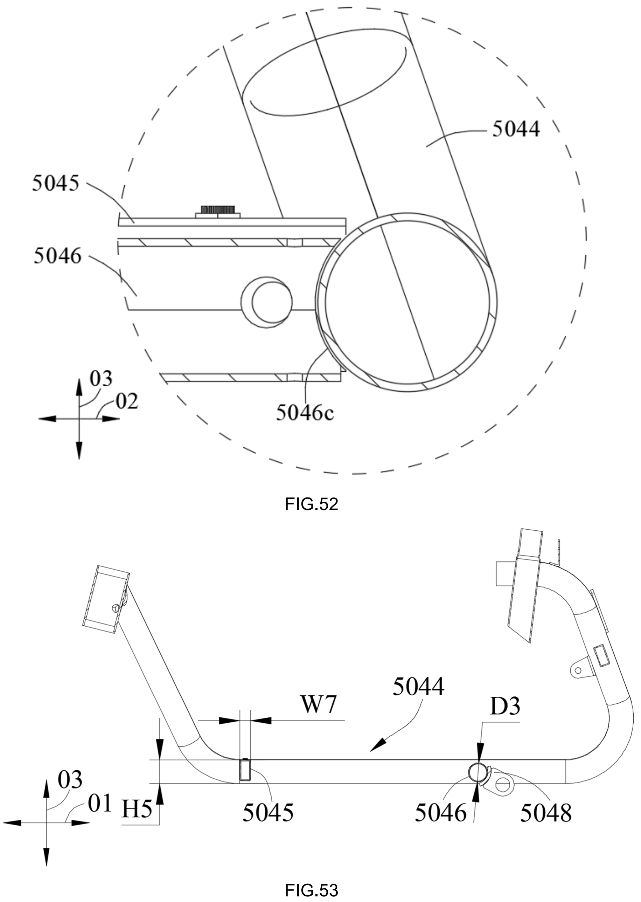

Referring to FIG. 51 and FIG. 52, both ends of the second support beam 5046 along the second direction 02 are provided with a second avoidance recess 5046c that matches the corresponding support rod 5044. The inner surface of the second avoidance recess 5046c fits closely with the corresponding support rod 5044, which improves the stability of the fixed connection between the second support beam 5046 and the support rod 5044.

In matching the structure of the support rod 5044, both the first avoidance recess 5045d and the second avoidance recess 5046c are arc-shaped surfaces. It can be understood that in other embodiments, if the shape of the support rod 5044 changes, the structures of the first avoidance recess 5045d and the second avoidance recess 5046c also change accordingly.

Furthermore, it can be understood that in other embodiments, both ends of the first support beam 5045 along the second direction 02 may not be provided with a recessed structure, and both ends of the second support beam 5046 along the second direction 02 may also not be provided with a recessed structure, provided that they can achieve fixed connection with the support rod 5044.

Referring to FIG. 51 to FIG. 53, along the third direction 03, the height of the top end of the first support beam 5045 is greater than the height of the top end of the second support beam 5046. This allows for the addition of other parts or components, such as the sixth connecting portion 5048, onto the second support beam 5046, making the overall structure more compact and beneficial for compact design.

In some embodiments, the material of the first support beam 5045 is carbon structural steel, which has high strength and is not easily deformed. Additionally, it is easy to shape and facilitates manufacturing, reducing production costs.

In some embodiments, the thickness of the first support beam 5045 falls within the range of 1mm - 2.5mm. When the thickness is less than 1.5mm, the structural strength is insufficient, and bending or deformation is likely to occur when the road surface is bumpy leading to a large impact, or when the rider is heavy and/or carrying heavy items. When the thickness is greater than 2.5mm, the self-weight will significantly increase, while also raising material costs.

Specifically, the thickness of the first support beam 5045 can be any value within the range of 1.5mm - 2.5mm, such as 1.5mm, 1.6mm, 1.7mm, 1.8mm, 1.9mm, 2mm, 2.1mm, 2.2mm, 2.3mm, 2.4mm, or 2.5mm.

Referring to FIG. 53, in some embodiments, the width W7 of the first support beam 5045 along the first direction 01 falls within the range of 10mm - 20mm, and the height H15 along the third direction 03 falls within the range of 25mm - 35mm. This allows for lower weight and smaller space while meeting the support strength requirements, reducing the encroachment or compression of surrounding spaces, and facilitating the installation of other parts or components, especially the battery assembly.

Specifically, W7 can be any value within the range of 10mm - 20mm, such as 10mm, 11mm, 12mm, 13mm, 14mm, 15mm, 16mm, 17mm, 18mm, 19mm, or 20mm. H15 can be any value within the range of 25mm - 35mm, such as 25mm, 26mm, 27mm, 28mm, 29mm, 30mm, 31mm, 32mm, 33mm, 34mm, or 35mm.

In some embodiments, the material of the second support beam 5046 is carbon structural steel, which has high strength and is not easily deformed. Additionally, it is easy to shape and facilitates manufacturing, reducing production costs.

In some embodiments, the wall thickness of the second support beam 5046 falls within the range of 1mm - 2.5mm. When the wall thickness is less than 1.5mm, the structural strength is insufficient, and bending or deformation is likely to occur when the road surface is bumpy leading to a large impact, or when the rider is heavy and/or carrying heavy items. When the wall thickness is greater than 2.5mm, the self-weight will significantly increase, while also raising material costs.

Specifically, the wall thickness of the second support beam 5046 can be any value within the range of 1.5mm - 2.5mm, such as 1.5mm, 1.6mm, 1.7mm, 1.8mm, 1.9mm, 2mm, 2.1mm, 2.2mm, 2.3mm, 2.4mm, or 2.5mm.

Referring to FIG. 53, in some embodiments, the second support beam 5045 is a circular beam, and the outer diameter D3 of the second support beam 5045 falls within the range of 24mm - 32mm. This allows for lower weight and smaller space while meeting the support strength requirements, reducing the encroachment or compression of surrounding spaces, and facilitating the installation of other parts or components, especially the battery assembly.

Specifically, D3 can be any value within the range of 24mm - 32mm, such as 24mm, 25mm, 26mm, 27mm, 28mm, 29mm, 30mm, 31mm, or 32mm.

Referring to FIG. 24, in some embodiments, along the first direction 01, the first support beam 5045 is located at the rear end of the first arc-shaped portion 5044e, and the second support beam 5046 is located near the rear end of the first flat portion 5044b. The space formed by the first support beam 5045, the second support beam 5046, and the two first flat portions 5044b is substantially rectangular, characterized by being long and wide, and its shape is adapted to the battery assembly 509. it can be used to install the battery assembly 509, fully utilizing the space, which is beneficial for achieving the compact design of the vehicle 500. Additionally, the front-and-rear support simplifies the support structure, effectively ensures the stability of the mounting frame 5041, saves materials and costs, and is beneficial for achieving a compact design.

Referring to FIG. 34, specifically, in some embodiments, the cross-section of the first support beam 5045 perpendicular to the second direction 02 is substantially rectangular annular, and the cross-section of the second support beam 5046 perpendicular to the second direction 02 is substantially annular. Along the first direction 01, the width of the second support beam 5046 is greater than the width of the first support beam 5045, making the support strength of the second support beam 5046 greater than the support strength of the first support beam 5045. This is to adapt to the distribution characteristics of the first support beam 5045 and the second support beam 5046, ensuring good support for both the front end and the rear end of the support rod 5044 and enhancing the overall stability of the mounting frame 5041. Additionally, because the shapes of the first support beam 5045 and the second support beam 5046 are different, they serve as a mistake-proofing function during installation, i.e., reducing the risk of incorrect installation caused by interchanging the first support beam 5045 and the second support beam 5046, improving the operator's operational efficiency and increasing the pass rate.

Referring to FIG. 33 and FIG. 36, in some embodiments, along the first direction 01, the length of the support rod 5044 is L18, and the distance from the first support beam 5045 to the front end of the support rod 5044 is L19. The ratio K4 of L18 to L19 falls within the range of 3.5 - 4.3. The distance from the second support beam 5046 to the rear end of the support rod 5044 is L20. The ratio K5 of L18 to L20 falls within the range of 3.1 - 3.9. If the distance between the first support beam 5045 and the second support beam 5046 is too large, the middle region of the two support rods 5044 lacks support points and is prone to deformation or bending. Additionally, the first support beam 5045 will excessively occupy the front-side installation space, interfering with the installation of other parts or components, such as the front fender and the winding tube 516. The second support beam 5046 will also excessively occupy the rear-side installation space, interfering with the installation of other parts or components, such as the rear wheel 506. To ensure normal installation, other parts or components on the front and rear sides need to provide corresponding avoidance, which is unfavorable for the compact design of the vehicle 500. If the distance between the first support beam 5045 and the second support beam 5046 is too small, the support for the two support rods 5044 is only concentrated in the middle region, and the front and rear ends of the support rod 5044 lack support, which is prone to deformation or bending.

Specifically, K4 can be any value within the range of 3.5 - 4.3, such as 3.5, 3.6, 3.7, 3.8, 3.9, 4, 4.1, 4.2, or 4.3. K5 can be any value within the range of 3.1 - 3.9, such as 3.1, 3.2, 3.3, 3.4, 3.5, 3.6, 3.7, 3.8, or 3.9.

Referring to FIG. 33 and FIG. 98, in some embodiments, along the first direction 01, the battery assembly 509 is located between the first support beam 5045 and the second support beam 5046. On the one hand, the first support beam 5045 and the second support beam 5046 provide protection for the battery assembly 509 in the first direction 01. That is, the first support beam 5045 can obstruct or shield the battery assembly 509 from impacts or dirt (such as rain and dust) coming from the front side, and the second support beam 5046 can obstruct or shield the battery assembly 509 from impacts or dirt coming from the rear side. On the other hand, when installing the battery assembly, the first support beam 5045 and the second support beam 5046 can serve as positioning structures to quickly determine the installation position of the battery assembly 509 along the first direction 01, which provides a certain installation position indication function, improving operational efficiency.

Referring to FIG. 36, in some embodiments, the distance L8 between the first support beam 5045 and the second support beam 5046 falls within the range of 335mm - 385mm. If L8 is too large, the middle region of the two support rods 5044 lacks support points and is prone to deformation or bending. Additionally, the first support beam 5045 will excessively occupy the front-side installation space, interfering with the installation of other parts or components, such as the front fender and the winding tube 516. The second support beam 5046 will also excessively occupy the rear-side installation space, interfering with the installation of other parts or components, such as the rear wheel 506. To ensure normal installation, other parts or components on the front and rear sides need to provide corresponding avoidance, which is unfavorable for the compact design of the vehicle 500. If L8 is too small, the support for the two support rods 5044 is only concentrated in the middle region, and the front and rear ends of the support rod 5044 lack support, which is prone to deformation or bending.

Specifically, L8 can be any value within the range of 335mm - 385mm, such as 335mm, 340mm, 345mm, 350mm, 355mm, 360mm, 365mm, 370mm, 375mm, 380mm, or 385mm.

Referring to FIG. 34 and FIG. 98, in some embodiments, along the second direction 02, the battery assembly 509 is located between the two support rods 5044. On the one hand, when installing the battery assembly 509, the two support rods 5044 can serve as positioning structures to quickly determine the installation position of the battery assembly 509 along the second direction 02, which provides a certain installation position indication function, improving operational efficiency. On the other hand, the two sides of the battery assembly 509 along the second direction 02 are shielded by the two support rods 5044 to reduce the risk of the battery assembly 509 being struck by external force, thereby increasing the service life of the battery assembly 509.

In some embodiments, along the first direction 01, the battery assembly 509 is substantially flat, which results in a smaller height of the battery assembly 509 along the third direction 03. This allows for full utilization of the space formed by the first flat portion 5044b, the first support beam 5045, and the second support beam 5046. Additionally, it can reduce the resistance encountered by the vehicle 500 during travel. Furthermore, it can reduce the risk of the battery assembly 509 bumping against the ground or obstacles on the ground during travel.

In some embodiments, the battery assembly 509 is substantially square, having a regular shape, which can provide a larger internal space for the battery assembly 509 to arrange more battery cells, resulting in better endurance.

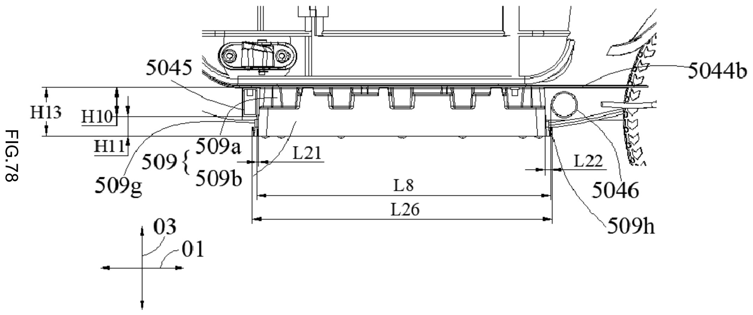

Referring to FIG. 78, in some embodiments, along the third direction 03, the bottom side of the battery assembly 509 is lower than the first support beam 5045 and the second support beam 5046, i.e., the bottom side of the battery assembly 509 protrudes downward, facilitating the placement or removal of the battery assembly 509 by installation or maintenance personnel.

In some embodiments, the battery assembly 509 includes an inserted section 509a and an exposed section 509b sequentially arranged along the third direction 03.

The inserted section 509a is located between the first support beam 5045 and the second support beam 5046. When the first support beam 5045 is closer to the ground than the second support beam 5046, the bottom side of the inserted section 509a is flush with the bottom side of the first support beam 5045. When the second support beam 5046 is closer to the ground than the first support beam 5045, the bottom side of the inserted section 509a is flush with the bottom side of the second support beam 5046. When the bottom sides of the first support beam 5045 and the second support beam 5046 are flush, then the bottom sides of the inserted section 509a, the first support beam 5045, and the second support beam 5046 are flush.

The exposed section 509b is located below the first support beam 5045 and the second support beam 5046. When the first support beam 5045 is closer to the ground than the second support beam 5046, the top side of the exposed section 509b is flush with the bottom side of the first support beam 5045. When the second support beam 5046 is closer to the ground than the first support beam 5045, the top side of the exposed section 509b is flush with the bottom side of the second support beam 5046. When the bottom sides of the first support beam 5045 and the second support beam 5046 are flush, then the top side of the exposed section 509b is flush with the bottom sides of the first support beam 5045 and the second support beam 5046.

In some embodiments, along the third direction 03, the height of the inserted section 509a is H10, and the height of the exposed section 509b is H11. The ratio K6 of H10 to H11 falls within the range of 1 - 2. When K6 is less than 1, too much of the battery assembly 509 is not located between the first support beam 5045 and the second support beam 5046, i.e., the externally exposed section is larger. This increases the risk of being struck by the ground or external objects during riding, which is unfavorable for prolonging the service life of the battery assembly 509. Additionally, the resistance encountered during riding is also greater. When K6 is greater than 2, too much of the battery assembly 509 is located between the first support beam 5045 and the second support beam 5046. To accommodate this feature, the support plate 5042 needs to provide upward avoidance, resulting in the support plate 5042 being too high. This leads to a higher center of gravity for the rider, which is unfavorable for improving the safety of the vehicle.

Specifically, K6 can be any value within the range of 1 - 2, such as 1.0, 1.1, 1.2, 1.3, 1.4, 1.5, 1.6, 1.7, 1.8, 1.9, or 2.0.

In some embodiments, along the first direction 01, the distance L21 between the rear side of the first support beam 5045 and the front side of the inserted section 509a falls within the range of 1mm - 5mm. When L21 is less than 1mm, during the process of placing the battery assembly 509 between the first support beam 5045 and the second support beam 5046, it is prone to friction or collision with the first support beam 5045, increasing the difficulty of installation. When L21 is greater than 5mm, it causes a waste of space, leading to a smaller battery assembly 509, which is unfavorable for improving the endurance of the battery assembly 509.

Specifically, L21 can be any value within the range of 1mm - 5mm, such as 1mm, 1.5mm, 2.0mm, 2.5mm, 3.0mm, 3.5mm, 4.0mm, 4.5mm, or 5mm.

In some embodiments, along the first direction 01, the distance L22 between the rear side of the inserted section 509a and the front side of the second support beam 5046 falls within the range of 1mm - 12mm. If L22 is less than 1mm, during the process of placing the battery assembly 509 between the first support beam 5045 and the second support beam 5046, it is prone to friction or collision with the second support beam 5046, increasing the difficulty of installation. If L22 is greater than 12mm, it causes a waste of space, leading to a smaller battery assembly 509, which is unfavorable for improving the endurance of the battery assembly 509.

Specifically, L22 can be any value within the range of 1mm - 12mm, such as 1mm, 2mm, 3mm, 4mm, 5mm, 6mm, 7mm, 8mm, 9mm, 10mm, 11mm, or 12mm.

Referring to FIG. 98 and FIG. 186, in some embodiments, along the second direction 02, the distance L23 between the right side of the support rod 5044 and the left side of the inserted section 509a falls within the range of 1mm - 10mm. When L23 is less than 1mm, during the process of placing the battery assembly 509 between the two support rods 5044, it is prone to friction or collision with the support rod 5044, increasing the difficulty of installation. When L23 is greater than 10mm, it causes a waste of space, leading to a smaller battery assembly 509, which is unfavorable for improving the endurance of the battery assembly 509.

Specifically, L23 can be any value within the range of 1mm - 10mm, such as 1mm, 2mm, 3mm, 4mm, 5mm, 6mm, 7mm, 8mm, 9mm, or 10mm.

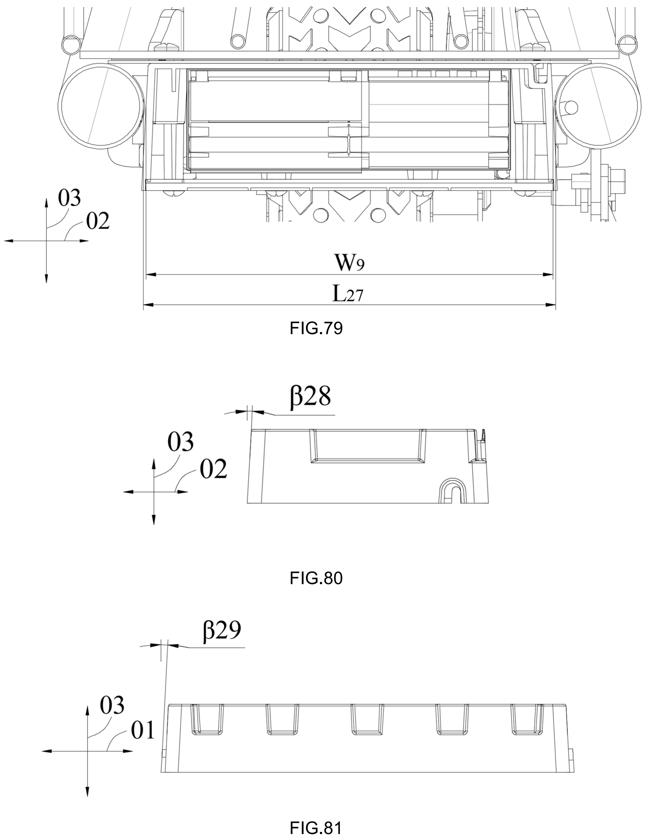

Referring to FIG. 80 to FIG. 82, and FIG. 90, in some embodiments, the battery assembly 509 includes a battery box 509c, a battery pack 509d, and a controller 509e. Both the battery pack 509d and the controller 509e are placed in the internal cavity of the battery box 509c.

Along the third direction 03, the top side of the battery box 509c is a closed side, and the bottom side is an open side. Along the first direction 01, the length L25 of the internal cavity of the battery box 509c falls within the range of 260mm - 300mm. When L25 is less than 260mm, the battery pack 509d that can be placed is too short, which is unfavorable for improving the endurance of the vehicle 500. When L25 is greater than 300mm, the distance between the first support beam 5045 and the second support beam 5046 adapted to the battery box 509c is too large, resulting in the mounting frame 5041 being too long, which is unfavorable for the compact design of the vehicle 500.

Specifically, L25 can be any value within the range of 260mm - 300mm, such as 260mm, 265mm, 270mm, 275mm, 280mm, 285mm, 290mm, 295mm, or 300mm.

In some embodiments, along the second direction 02, the width W8 of the internal cavity of the battery box 509c falls within the range of 120mm - 150mm. When W8 is less than 120mm, the controller 509e can only be placed on its side, and the height of the battery box 509c adapted to the controller 509e is too large, which is unfavorable for achieving the compact design of the vehicle 500. When W8 is greater than 150mm, the distance between the two support rods 5044 adapted to the battery box 509c is too large, resulting in the mounting frame 5041 being too wide, which is unfavorable for the compact design of the vehicle 500.

Specifically, W8 can be any value within the range of 120mm - 150mm, such as 120mm, 125mm, 130mm, 135mm, 140mm, 145mm, or 150mm.

Referring to FIG. 33 and FIG. 78, in some embodiments, along the third direction 03, the height of the battery assembly 509 is H13, and the height of the support plate 5042 from the ground is H12. The ratio K7 of H12 to H13 falls within the range of 3 - 4.5. When K7 is less than 3, the battery assembly 509 is too high, i.e., too close to the ground. During travel, the battery assembly 509 is prone to collision with the ground or objects on the ground, resulting in poor passability and increased safety risks. When K7 is greater than 4.5, the battery assembly 509 is too short, limiting the space for accommodating the battery pack 509d, which is unfavorable for improving the endurance of the vehicle 500.

Specifically, K7 can be any value within the range of 3 - 4.5, such as 3, 3.2, 3.4, 3.6, 3.8, 4, 4.2, 4.4, or 4.5.

In some embodiments, along the first direction 01, the length of the battery assembly 509 is L26, and the ratio K8 of L8 to L26 falls within the range of 1.01 - 1.05, where L8 is the distance between the first support beam 5045 and the second support beam 5046. When K8 is less than 1.01, during the process of placing the battery assembly 509 between the first support beam 5045 and the second support beam 5046, it is prone to friction or collision, increasing the difficulty of installation. When K8 is greater than 1.05, it causes a waste of space, leading to a smaller battery assembly 509, which is unfavorable for improving the endurance of the battery assembly 509.

Specifically, K8 can be any value within the range of 1.01 - 1.05, such as 1.01, 1.02, 1.03, 1.04, or 1.05.

Referring to FIG. 79, in some embodiments, along the second direction 02, the width of the battery assembly 509 is W9, and the distance between the two first flat portions 5044b is L27. The ratio K9 of L27 to W9 falls within the range of 1.01 - 1.05. When K9 is less than 1.01, during the process of placing the battery assembly 509 between the two first flat portions 5044b, it is prone to friction or collision, increasing the difficulty of installation. When K9 is greater than 1.05, it causes a waste of space, leading to a smaller battery assembly 509, which is unfavorable for improving the endurance of the battery assembly 509.

Specifically, K9 can be any value within the range of 1.01 - 1.05, such as 1.01, 1.02, 1.03, 1.04, or 1.05.

Referring to FIG. 79 and FIG. 80, in some embodiments, along the second direction 02, both the left side and the right side of the battery box 509c are inwardly inclined at a certain angle. During the process of placing the battery box 509c between the two first flat portions 5044b, it can avoid the first flat portion 5044b, reducing the risk of friction or collision. At the same time, it is convenient and stable for installation or maintenance personnel to hold the battery box 509c with one hand.

In some embodiments, taking the left side of the battery box 509c as an example, the angle β28 between the left side of the battery box 509c and the second plane falls within the range of 2° - 8°. If β28 is less than 2°, the avoidance effect for the first flat portion 5044b is weak, which is unfavorable for reducing the risk. If β28 is greater than 8°, it will cause the adapted internal cavity to become smaller, making it difficult to place a larger battery pack 509d, which is unfavorable for improving the endurance of the battery assembly 509.

Specifically, β28 can be any value within the range of 2° - 8°, such as 2°, 3°, 4°, 5°, 6°, 7°, or 8°.

Referring to FIG. 79 and FIG. 81, in some embodiments, along the first direction 01, both the front side and the rear side of the battery box 509c are inwardly inclined at a certain angle. During the process of placing the battery box 509c between the first support beam 5045 and the second support beam 5046, it can avoid the first support beam 5045 and the second support beam 5046, reducing the risk of friction or collision.

In some embodiments, taking the front side of the battery box 509c as an example, the angle β29 between the front side of the battery box 509c and the third plane falls within the range of 2° - 8°. If β29 is less than 2°, the avoidance effect for the first support beam 5045 and the second support beam 5046 is weak, which is unfavorable for reducing the risk. If β29 is greater than 8°, it will cause the adapted internal cavity to become smaller, making it difficult to place a larger battery pack 509d, which is unfavorable for improving the endurance of the battery assembly 509.

Specifically, β29 can be any value within the range of 2° - 8°, such as 2°, 3°, 4°, 5°, 6°, 7°, or 8°.

In some embodiments, β28 and β29 are the same, which facilitates molding and improves processing efficiency.

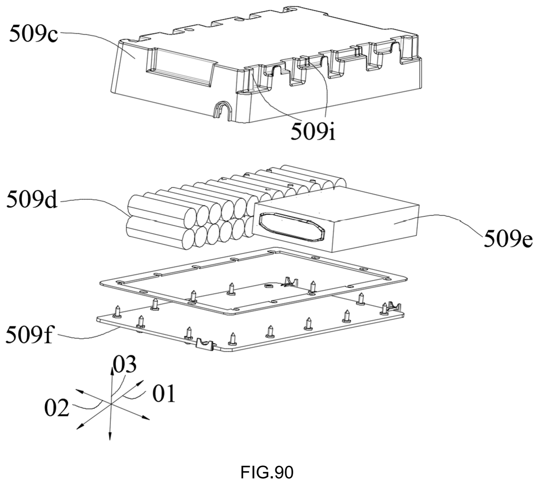

Referring to FIG. 90 and FIG. 98, in some embodiments, the battery assembly 509 further includes a battery cover 509f. Along the third direction 03, the battery box 509c is installed on the support plate 5042 in an inverted position, and the battery cover 509f is located below the battery box 509c, meaning the battery cover 509f faces the ground. Furthermore, the battery box 509c is made of plastic, and the battery cover 509f is made of metal. Since the battery cover 509f is made of metal and faces the ground, it is susceptible to impact from external objects such as sand and stones, and prone to scraping on the road surface. Metal has high strength and can resist external impact, preventing the battery cover 509f from bending or breaking, which is beneficial for protecting the internal battery pack 509d. Additionally, the battery assembly 509 generates heat during charging and discharging. The thermal conductivity of metal is higher than that of plastic, which can quickly transfer heat to the outside, preventing the battery assembly 509 from overheating. The battery box 509c uses plastic for support, which has low cost and light weight, contributing to reducing the overall weight of the vehicle and improving endurance, thereby achieving the lightweight design of the vehicle 500.

In some embodiments, the material of the battery box 509c may be ABS312C, PC, or PBT. ABS312C is acrylonitrile-butadiene-styrene copolymer, PC is polycarbonate, and PBT is polybutylene terephthalate.

In some embodiments, the material of the battery cover 509f is SPCC, Q195, Q235, SECC, or SGCC. SPCC is cold-rolled carbon steel sheet, Q195 and Q235 are both carbon structural steel, SECC is electrolytic galvanized steel sheet, and SGCC is hot-dip galvanized steel sheet.

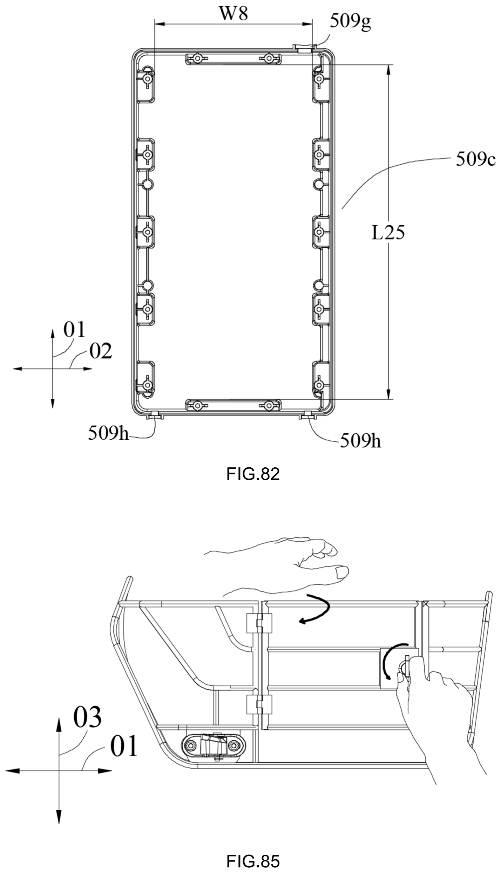

Referring to FIG. 78 and FIG. 82, in some embodiments, along the first direction 01, the front side of the battery box 509c is provided with a first cable hole 509g. Along the third direction 03, the top side of the first cable hole 509g is lower than the bottom side of the first support beam 5045, which reduces the difficulty of threading the cable into the first cable hole 509g, and the cable's extension state is more natural, which is beneficial for protecting the cable.

In some embodiments, along the first direction 01, the rear side of the battery box 509c is provided with a second cable hole 509h. Along the third direction 03, the top side of the second cable hole 509h is lower than the bottom side of the second support beam 5046, which reduces the difficulty of wiring after the cable passes out of the first cable hole 509g, and the cable's extension state is more natural, which is beneficial for protecting the cable.

Referring to FIG. 90, FIG. 109, and FIG. 110, in some embodiments, along the second direction 02, both the left side and the right side of the battery box 509c are provided with screw bosses 509i. The vehicle 500 further includes a first screw corresponding to the screw boss 509i, and the first flat portion 5044b is provided with a second mounting hole 5044o corresponding to the first screw. The battery box 509c and the first flat portion 5044b are fixed by the first screw and the screw boss 509i, providing a secure and low-cost connection.

Referring to FIG. 90, in some embodiments, the battery box 509c is provided with multiple rows of screw bosses 509i along the first direction 01. Through the multiple rows of screw bosses 509i and multiple rows of first screws, the connection stability is strong, especially suitable for bumpy road conditions.

Specifically, the number of rows of screw bosses 509i includes, but is not limited to, two rows, three rows, or four rows.

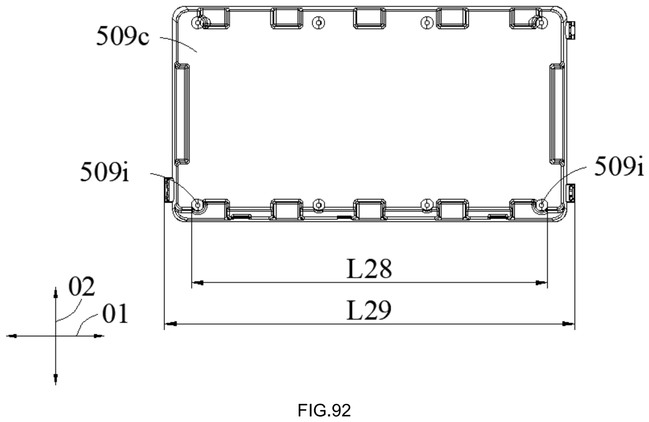

Referring to FIG. 92, in some embodiments, along the first direction 01, the distance between the first row of screw bosses 509i and the last row of screw bosses 509i is L28, and the length of the top side of the battery box 509c is L29. The ratio K10 of L28 to L29 falls within the range of 0.8 - 1. When K10 is less than 0.8, there are no support points at both ends of the battery box 509c, which is unfavorable for improving the overall support stability of the battery assembly 509.

Specifically, K10 can be any value within the range of 0.8 - 1, such as 0.8, 0.82, 0.84, 0.86, 0.88, 0.9, 0.92, 0.94, 0.96, 0.98, or 1.

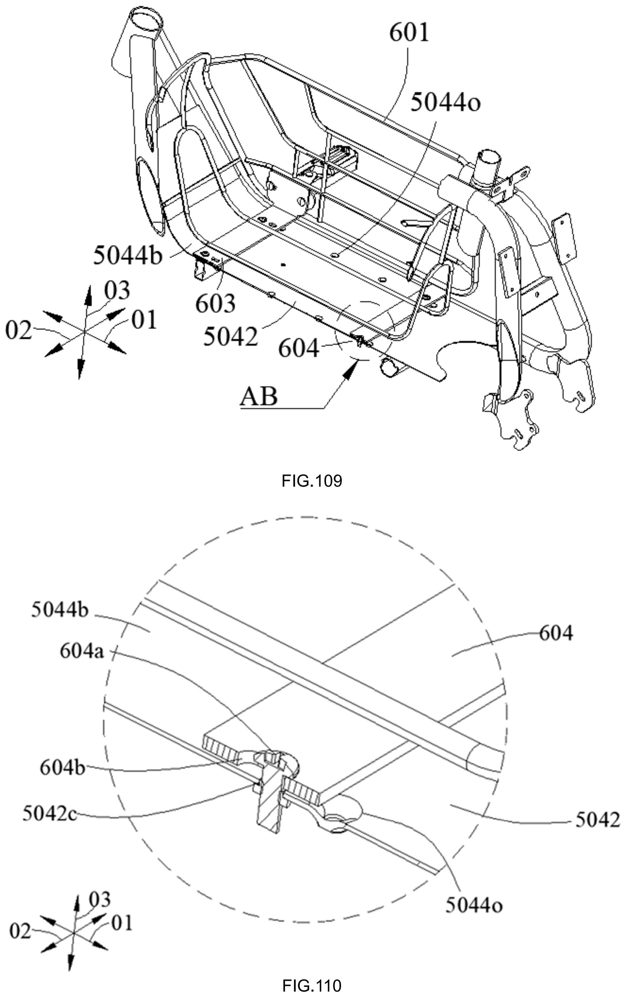

Referring to FIG. 109 and FIG. 110, in some embodiments, along the third direction 03, the second mounting hole 5044o of the first flat portion 5044b is wide on the top side and narrow on the bottom side, and the first screw is a flat-head screw, which facilitates the recessed installation of the first screw. That is, the top side of the first screw is flush with the top side of the first flat portion 5044b. When the rider steps on the first flat portion 5044b, there is no foreign object sensation, providing good comfort. Additionally, there is no obstruction when mounting or dismounting, facilitating smooth movement of the foot. When an animal is riding on the first flat portion 5044b, there is no foreign object sensation, providing good comfort, and there is no obstruction when mounting or dismounting, ensuring good safety.

Referring to FIG. 78, in some embodiments, along the first direction 01, the battery assembly 509 is located on the front side of the first flat portion 5044b. This places the weight of the battery assembly 509 relatively forward, and the rider's seating position relatively rearward, which is beneficial for balancing the force distribution on the mounting frame and improving the travel stability of the vehicle.

Referring to FIG. 34, in some embodiments, the mounting frame 5041 further includes a third support beam 5047. Both ends of the third support beam 5047 are fixedly connected to the two support rods 5044, respectively, so as to better maintain the distance between the two support rods 5044.

In some embodiments, the third support beam 5047 and the two support rods 5044 are welded and fixed.

Referring to FIG. 33, in some embodiments, along the third direction 03, the battery assembly 509 is located on the bottom side of the support plate 5042. The support plate 5042 isolates the rider/animal/item from the battery assembly 509, eliminating the need for additional structures. This makes the structure of the vehicle 500 simpler, reduces costs, and facilitates the compact design of the vehicle 500. Additionally, positioning the battery assembly 509 on the bottom side of the support plate 5042 results in a lower height of the battery assembly 509 relative to the road surface, which lowers the overall center of gravity of the vehicle 500, improving the stability of the vehicle 500 and enhancing riding safety.

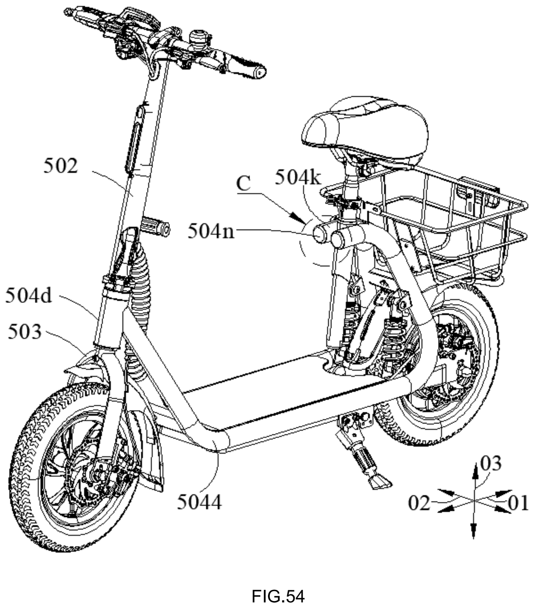

Referring to FIG. 54 to FIG. 55, in some embodiments, the support rod 5044 is tubular. The frame 504 further includes a plug 504n that matches the open end of the support rod 5044 to seal the end of the support rod 5044, preventing dust or moisture from the environment from entering the support rod 5044. This reduces the risk of the support rod 5044 being corroded, avoids the risk of the vehicle 500's weight increasing due to this, and improves the cleanliness of the vehicle 500. In addition, the provision of the plug 504n can also reduce the risk of the rider or people around the vehicle 500 directly colliding with the end of the support rod 5044.

In some embodiments, the material of the plug 504n is rubber or plastic, which has a certain elasticity, making it easy to be inserted into the support rod 5044 through deformation. And under the action of the plug 504n's own elastic deformation, the plug 504n and the inner wall of the support rod 5044 press against each other, reducing the risk of the plug 504n slipping off.

Furthermore, in some embodiments, the support rod 5044 is circular tubular. During the specific installation process of the plug 504n, the plug 504n can be inserted into the support rod 5044 while rotating it, reducing the difficulty of operation.

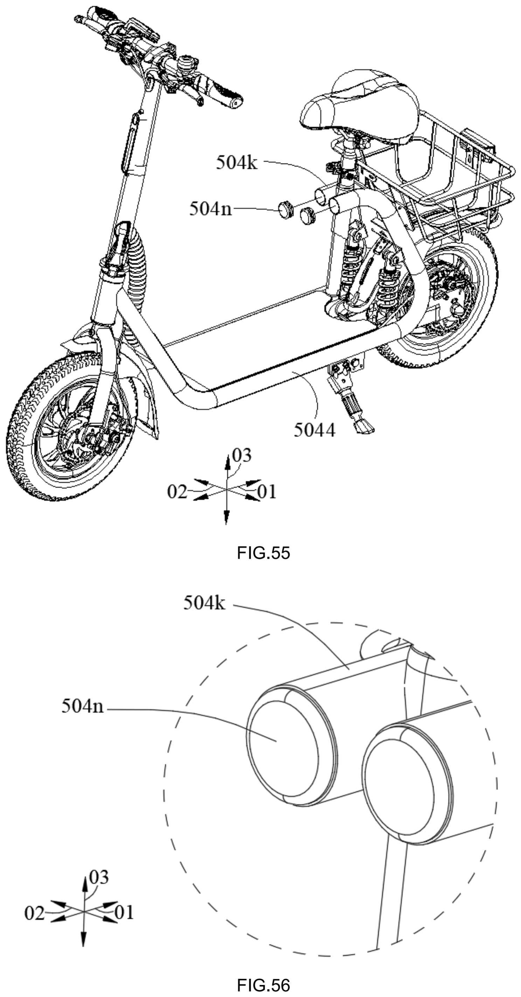

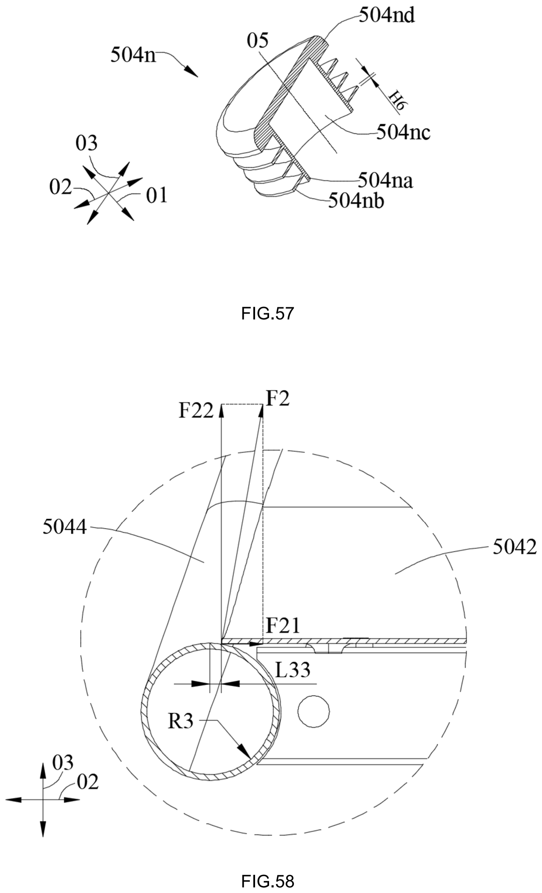

Referring to FIG. 55 and FIG. 57, in some embodiments, the plug 504n includes a plug body 504na and multiple sealing rings 504nb. The sealing rings 504nb are sleeved on the plug body 504na to press against the inner wall of the support rod 5044 after the plug 504n is installed, achieving sealing. Along the axial direction of the plug 504n, the multiple sealing rings 504nb are sequentially spaced apart. It can be understood that the axial direction of the plug 504n refers to the direction in which the axis 05 of the plug 504n is located, i.e., the extension direction of the support rod 5044 at this position. It can be understood that, in some embodiments, the axial direction of the plug 504n is along the first direction 01. It can be understood that, in other embodiments, as the shape of the support rod 5044 is adjusted, the axis of the plug 504n is adjusted accordingly, and its axial direction is also adjusted accordingly.

The arrangement of multiple sealing rings 504nb improves the sealing effect at the end of the support rod 5044. Additionally, the arrangement of multiple sealing rings 504nb can also increase the friction between the plug 504n and the inner wall of the support rod 5044, reducing the risk of the plug 504n slipping off. Furthermore, the multiple sealing rings 504nb are sequentially spaced apart, reserving space for the deformation of the sealing rings 504nb along the axial direction of the plug 504n, which facilitates the insertion of the plug 504n into the support rod 5044.

In some embodiments, along the axial direction of the plug 504n, the thickness H6 of the sealing ring 504nb falls within the range of 0.2mm - 1mm. If H6 is less than 0.2mm, it is prone to plastic deformation, tearing, or damage due to insufficient strength. If H6 is greater than 1mm, the contact surface between the sealing ring 504nb and the support rod 5044 is too large, and the friction generated when inserting the plug 504n into the support rod 5044 is high, increasing the assembly difficulty.

Specifically, H6 can be any value within the range of 0.2mm - 1mm, such as 0.2mm, 0.3mm, 0.4mm, 0.5mm, 0.6mm, 0.7mm, 0.8mm, 0.9mm, or 1mm.

In some embodiments, the spacing between adjacent sealing rings 504nb is consistent, which facilitates production and improves aesthetic effect. It can be understood that, in other embodiments, the spacing between adjacent sealing rings 504nb may not be exactly the same.

In some embodiments, the sealing ring 504nb and the plug body 504na are integrally formed. It can be understood that, in other embodiments, the sealing ring 504nb and the plug body 504na can also be set separately, with the sealing ring 504nb being sealed and sleeved on the plug body 504na.

In some embodiments, the side of the plug body 504na facing the support rod 5044 along the axial direction is provided with a first weight-reducing groove 504nc, which reduces the weight of the plug 504n and lowers the material cost of the plug 504n. Additionally, the plug 504n is elastic, and the provision of the first weight-reducing groove 504nc allows the plug body 504na to easily undergo elastic deformation radially, facilitating its insertion into the support rod 5044.

In some embodiments, the first weight-reducing groove 504nc is a circular groove, which has a simple structure and is easy to process. It can be understood that, in other embodiments, the first weight-reducing groove 504nc is not limited to a circular groove but can be any other regular or irregular shape.

In some embodiments, the axis of the first weight-reducing groove 504nc is collinear with the axis of the plug body 504na, making the ability of the plug body 504na to undergo elastic deformation consistent along the axial direction. This reduces the phenomenon of local stress concentration in the plug 504n, minimizes the risk of the plug 504n deforming, and improves the service life of the plug 504n.

In some embodiments, the number of first weight-reducing grooves 504nc is one. It can be understood that, in other embodiments, the size and position of the first weight-reducing groove 504nc can be adjusted to set multiple first weight-reducing grooves 504nc.

In some embodiments, the side of the plug body 504na facing the support rod 5044 along the axial direction is provided with a rim 504nd, which matches the end face of the support rod 5044. After the plug 504n is installed, the rim 504nd overlaps with the end face of the support rod 5044, preventing the plug 504n from being completely inserted into the support rod 5044, which facilitates the disassembly and replacement of the plug 504n.

In some embodiments, the rim 504nd is annular. It can be understood that, in other embodiments, the rim 504nd is not limited to being annular but can also have other regular or irregular shapes. And when the rim 504nd is non-annular, it can also refer to multiple rims 504nd, with the multiple rims 504nd arranged around the plug body 504na.

In some embodiments, the rim 504nd and the plug body 504na are integrally formed. It can be understood that, in other embodiments, the rim 504nd and the plug body 504na can also be provided separately and fixedly connected.

Referring to FIG. 58, in some embodiments, the support plate 5042 and the support rod 5044 are fixed by welding, eliminating the need to separately provide a fixing structure on the support plate 5042 and the support rod 5044, which makes the structure of the support plate 5042 and the support rod 5044 simpler and facilitates manufacturing.

In some embodiments, the edge of the support plate 5042 close to the support rod 5044 is fixedly connected to the support rod 5044, and the position of the fixed connection is located at the top end or the inner side of the support rod 5044. It can also be understood that the bottom end of the support plate 5042 is flush with the top end of the support rod 5044, or lower than the top end of the support rod 5044. The aforementioned configuration reduces the risk of the rider, or people or animals around the vehicle 500, being accidentally injured by colliding with the support plate 5042. Additionally, since the edge of the support plate 5042 is fixedly connected to the support rod 5044, the support rod 5044 can provide a certain supporting force and constraining force to the edge of the support plate 5042, and conveniently shares the stress received by the edge of the support plate 5042 through force transmission, effectively reducing the risk of deformation of the edge of the support plate 5042.

In some embodiments, the position where the support plate 5042 is fixedly connected to the support rod 5044 is lower than the top end of the support rod 5044. The support rod 5044 provides an inward supporting force to the support plate 5042, reducing the risk of the support plate 5042 moving towards the outer side of the support rod 5044 under external pressure. Specifically, taking the support plate 5042 and the left support rod 5044 in FIG. 32 as an example, a detailed analysis of the interaction force between the support plate 5042 and the left support rod 5044 is provided: Referring to FIG. 32 and FIG. 58, the right side of the support rod 5044 is its inner side, and the left side of the support rod 5044 is its outer side; the support plate 5042 is located on the inner side of the support rod 5044, i.e., on the right side of the support rod 5044; the position where the support plate 5042 is connected to the support rod 5044 is located in the inner upper region of the support rod 5044, i.e., the upper right region of the support rod 5044; when the support plate 5042 receives a downward pressure F1, the supporting force F2 exerted by the support rod 5044 on the support plate 5042 is directed upwards and to the right; according to the parallelogram rule (of forces), the supporting force F2 is decomposed into a component force F21 along the second direction 02 and a component force F22 along the third direction 03. The component force F21 along the second direction 02 points towards the inner side of the support rod 5044, i.e., the right side of the support rod 5044, thereby reducing the risk of the support plate 5042 moving towards the outer side of the support rod 5044 under external pressure. Additionally, the support rod 5044 can shield the bottom end of the support plate 5042. Visually, the transition between the support rod 5044 and the support plate 5042 is smoother, making the vehicle 500 more aesthetically pleasing.

In some other embodiments, the top surface of the support plate 5042 is coplanar with the top end of the support rod 5044, which makes the transition between the top end of the support rod 5044 and the top surface of the support plate 5042 smoother. When the second section 504b is used for stepping, even if the rider steps onto the edge of the second section 504b, the sole of the foot will not feel a foreign object, improving the comfort of stepping. When the second section 504b is used for placing items, the placement surface is smoother, also reducing the risk of damage to the items. When the second section 504b is used for placing animals, even if the animal moves to the edge of the second section 504b, the risk of the animal being harmed by the edge of the support plate 5042 can be reduced, and the comfort of the animal can be improved.

It can be understood that, in other embodiments, the top surface of the support plate 5042 can also be lower than the top end of the support rod 5044, which is beneficial for reducing the width of the support plate 5042 along the second direction 02, achieving a compact design.

It can be understood that, in other embodiments, the top surface of the support plate 5042 can also be higher than the top end of the support rod 5044, so as to reduce the phenomenon of the support rod 5044 directly receiving local force. In other words, whether the second section 504b is used for stepping, placing items, or placing animals, the force acting on the second section 504b first acts on the support plate 5042. The support plate 5042 then balances this force through the supporting force of the entire mounting frame 5041, reducing the risk of local stress concentration on the mounting frame 5041 and improving the service life of the mounting frame 5041.

It can be understood that, in other embodiments, the position where the support plate 5042 is fixedly connected to the support rod 5044 can also be located at the top end of the support rod 5044. In this case, the force exerted by the support rod 5044 on the support plate 5042 is along the third direction 03, and is opposite to the direction of the gravity and received pressure on the support plate 5042. Therefore, the force exerted by the support rod 5044 on the support plate 5042 is reduced. Correspondingly, the pressure exerted by the support plate 5042 on the support rod 5044 is also reduced, lowering the risk of deformation of the support rod 5044 and improving the service life of the support rod 5044.

It can be understood that, in other embodiments, the position where the support plate 5042 is fixedly connected to the support rod 5044 can also be located at other positions on the support rod 5044, as long as the fixed connection between the support plate 5042 and the support rod 5044 is achieved.

Referring to FIG. 58, in some embodiments, along the second direction 02, the distance L33 between the side edge of the support plate 5042 and the top end of the support rod 5044, and the radius R4 of the support rod 5044, the ratio K14 of L33 to R4 falls within the range of 0 - 0.5. When K14 is greater than 0.5, the height difference between the support plate 5042 and the support rod 5044 is large. When the rider dismounts the vehicle, their foot cannot smoothly move outwards directly but needs to be lifted to step over the support rod 5044, increasing the difficulty of dismounting.

Specifically, K14 can be any value within the range of 0 - 0.5, such as 0, 0.05, 0.1, 0.15, 0.2, 0.25, 0.3, 0.35, 0.4, 0.45, or 0.5.

Of course, it can be understood that, in other embodiments, the support plate 5042 and the support rod 5044 are not limited to being fixed by welding, but can also be fixedly connected by riveting or other methods.

Referring to FIG. 37 and FIG. 54, in some embodiments, the first connecting portion 504d is tubular. The front fork 503 is rotatably connected to the first connecting portion 504d. The front fork 503 can rotate relative to the first connecting portion 504d around the axis of the first connecting portion 504d. The stem 502 is fixedly connected to the front fork 503, so the stem 502 rotates together with the front fork 503. The rotation of the stem 502 drives the rotation of the front fork 503, which in turn drives the rotation of the front wheel 505, thereby realizing the steering of the vehicle 500.

Referring to FIG. 37, and FIG. 59 to FIG. 64, in some embodiments, the second connecting portion 504e is tubular and matches the seat support rod 5081, meaning the seat support rod 5081 can be inserted into the second connecting portion 504e. The vehicle 500 further includes a first securing assembly 512. After the seat support rod 5081 is inserted into the second connecting portion 504e, it is fixed by the first securing assembly 512, achieving the fixed connection between the seat 508 and the frame 504.

Specifically, in some embodiments, the first securing assembly 512 is sleeved on the second connecting portion 504e. The fixing of the seat support rod 5081 to the second connecting portion 504e is achieved through the clamping of the first securing assembly 512, which realizes the fixed connection between the seat 508 and the frame 504.

More specifically, in some embodiments, the first securing assembly 512 includes a clamping member 5121 with an opening on one side and a first locking member 5122. Specifically, the clamping member 5121 is sleeved on the second connecting portion 504e. The first locking member 5122 is configured to adjust the size of the opening of the clamping member 5121, so as to switch the clamping member 5121 between a clamping state and a releasing state. It can be understood that the clamping member 5121 is in the clamping state when the clamping force exerted on the second connecting portion 504e makes the opening of the clamping member 5121 smaller, and the second connecting portion 504e and the seat support rod 5081 are relatively locked. The clamping member 5121 is in the releasing state when the opening of the clamping member 5121 is larger, the clamping force exerted on the second connecting portion 504e is smaller, and the seat support rod 5081 can move axially relative to the second connecting portion 504e.

In some embodiments, the two sides of the opening of the clamping member 5121 have a relatively arranged first mounting portion 5123 and a second mounting portion 5124. The first locking member 5122 is rotatably provided on the first mounting portion 5123. The first locking member 5122 is rotatable to allow the second mounting portion 5124 to move towards or away from the first mounting portion 5123, so as to switch the clamping member 5121 between the clamping state and the releasing state.

Specifically, in some embodiments, the first securing assembly 512 further includes a pressing portion 5125 located between the first locking member 5122 and the second mounting portion 5124. The clamping member 5121 is in the clamping state when the first locking member 5122 is rotated until the pressing portion 5125 is pressed tightly against the second mounting portion 5124. The clamping member 5121 is in the releasing state when the first locking member 5122 is rotated so that the pressing portion 5125 avoids abutment with the second mounting portion 5124.

In some embodiments, the second mounting portion 5124 is provided with a through first guide hole 5126; the axis of the first guide hole 5126 is substantially the same as the arrangement direction of the first mounting portion 5123 and the second mounting portion 5124. The first locking member 5122 includes a first guide member 5127 that matches the first guide hole 5126; the end of the first guide member 5127 away from the first mounting portion 5123 is provided with a pivot shaft 5128; the first locking member 5122 is sleeved on the pivot shaft 5128.

Specifically, in some embodiments, the pivot shaft 5128 is perpendicular to the guiding direction of the first guide member 5127 and is collinear with the axial direction of the second connecting portion 504e.

Furthermore, in some embodiments, when the first locking member 5122 is rotated to the state where the clamping member 5121 is in the clamping state, the clamping member 5121 abuts against the second connecting portion 504e. In other words, the second connecting portion 504e is used to restrict the first locking member 5122 from continuing to rotate, which facilitates the operator to clearly understand that the clamping member 5121 is already in the clamping state.

In some embodiments, the surface of the pressing portion 5125 that is tightly pressed against the second mounting portion 5124 is a flat surface, and the surface of the second mounting portion 5124 used for tight pressing against the pressing portion 5125 is a flat surface, so as to restrict the rotation of the first locking member 5122, keeping the clamping member 5121 in the clamping state. Of course, it can be understood that the clamping member 5121 has a certain elasticity. Therefore, under the action of external force, the first locking member 5122 can be rotated to drive the second mounting portion 5124 to move towards the first mounting portion 5123; the first locking member 5122 can also be rotated in the opposite direction, causing the pressing portion 5125 to disengage from the abutment with the second mounting portion 5124. The second mounting portion 5124 moves away from the first mounting portion 5123 under the action of the elastic force of the clamping member 5121, so that the clamping member 5121 is in the releasing state.

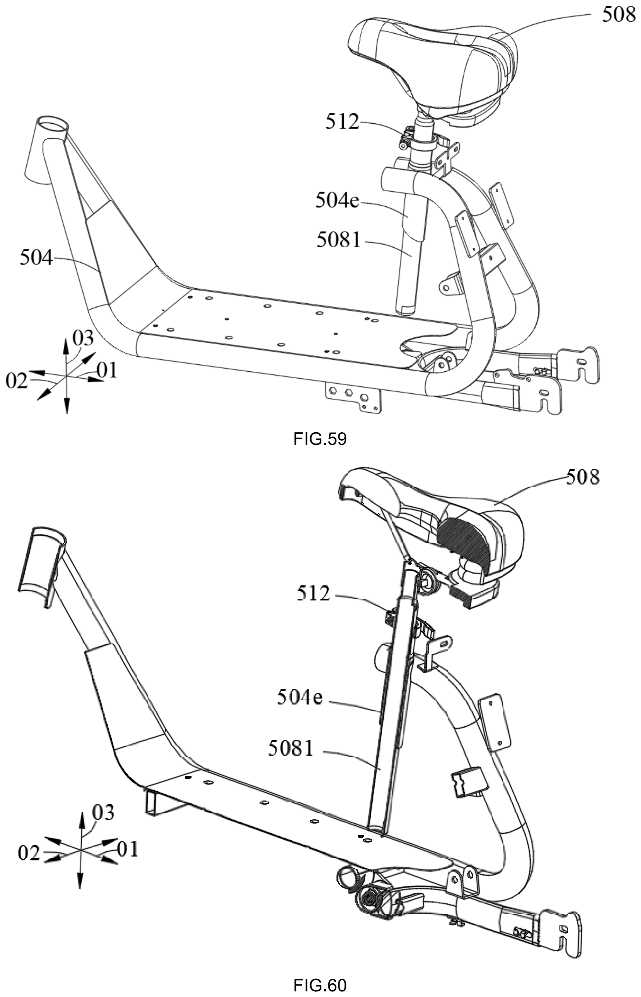

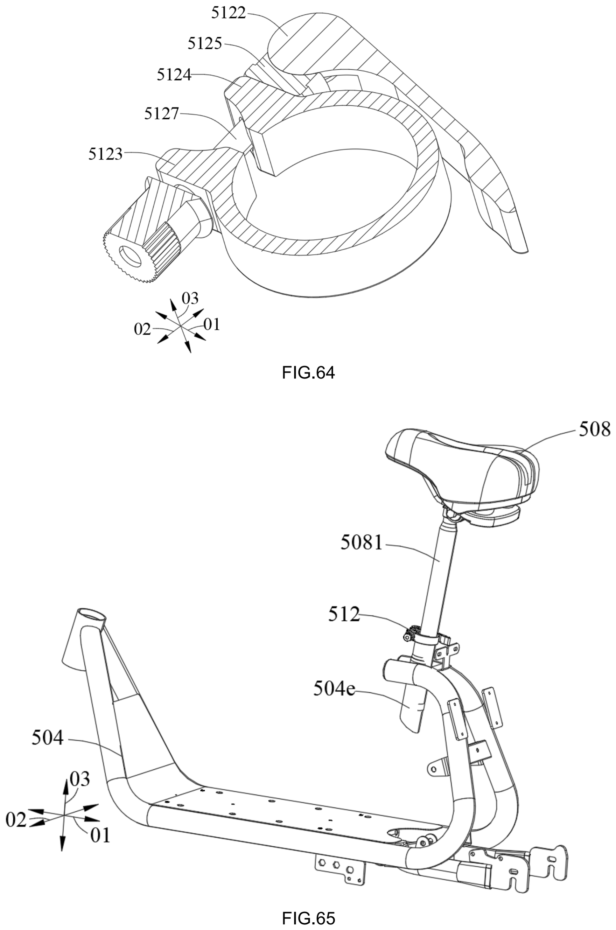

Referring to FIG. 59, FIG. 60, and FIG. 65, the seat support rod 5081 is movable axially relative to the second connecting portion 504e. Therefore, the height of the seat 508 can be adjusted by moving the seat support rod 5081. For example, referring to FIG. 59 and FIG. 65, they are schematic diagrams of the structure when the seat 508 is at different heights.

It can be understood that after adjusting the seat support rod 5081 to the appropriate position as required, the relative fixing of the seat 508 and the frame 504 can be maintained through the fixing of the first securing assembly 512. When the position of the seat 508 needs to be adjusted, the seat support rod 5081 and the frame 504 are not fixed by the first securing assembly 512. In some embodiments, when the position of the seat 508 needs to be adjusted, the clamping member 5121 is in the releasing state.

Referring to FIG. 25 and FIG. 29, in some embodiments, the third connecting portion 504f is fixedly provided on the support rod 5044, located in the third section 504c of the frame 504.

In some embodiments, the first basket 507 and the frame 504 are fixedly connected by a first bolt connection assembly 504p. Specifically, the third connecting portion 504f is provided with a first fixing hole 504fa, and the first fixing hole 504fa is a threaded hole. The first basket 507 is provided with a second fixing hole 5071, and the second fixing hole 5071 can be a threaded hole or a through hole. The first fixing hole 504fa, the second fixing hole 5071, and the first bolt connection assembly 504p are matched.

In some embodiments, the bolt of the first bolt connection assembly 504p is an internal hexagon cylindrical head bolt. The flat bolt head can avoid scratching items in the first basket 507 or reduce interference with other components. In addition, an internal hexagon wrench can be inserted into the internal hexagon cylindrical head bolt from the vertical direction, requiring small disassembly or installation space, and low installation difficulty.

Specifically, the bolt specification of the first bolt connection assembly 504p is M6, which provides good load capacity and is relatively compact, contributing to the compact design of the vehicle 500.

In other examples, the bolt of the first bolt connection assembly 504p can also be other specifications, such as M8, M10, or M14.

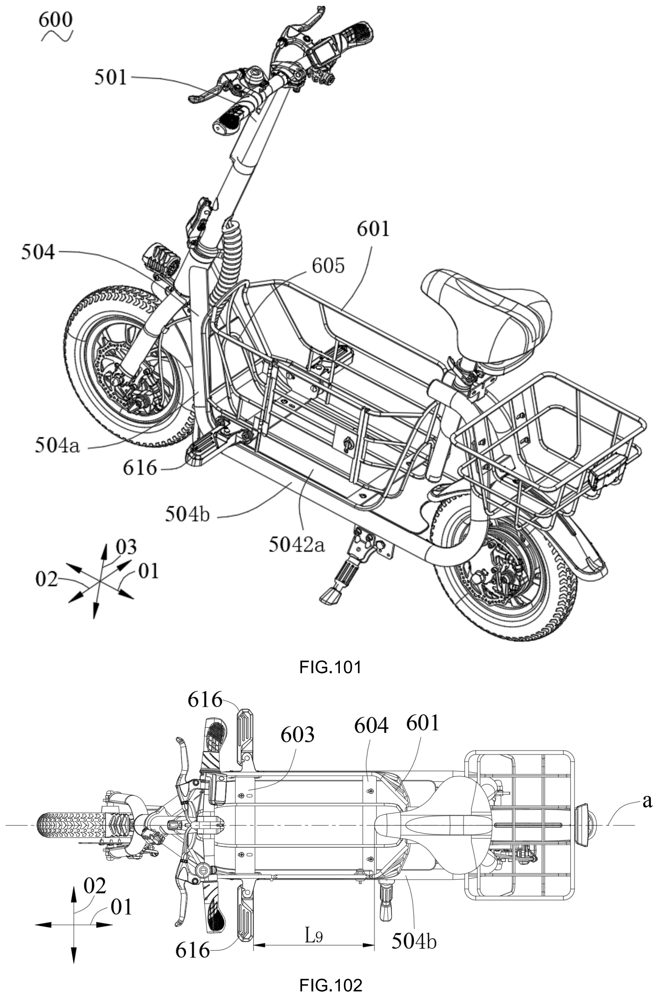

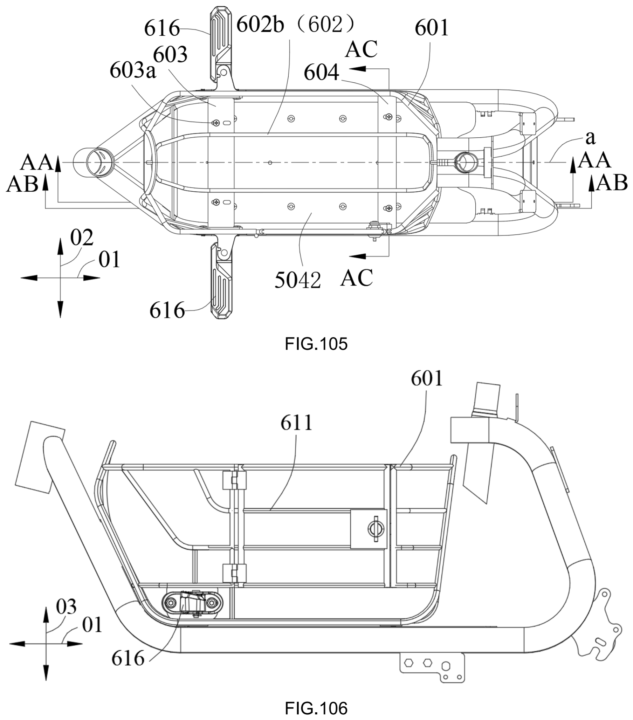

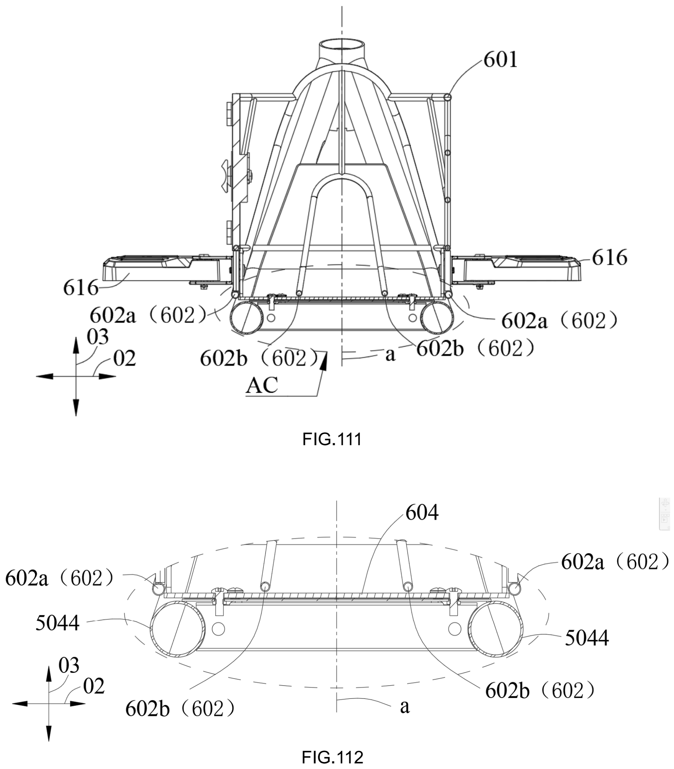

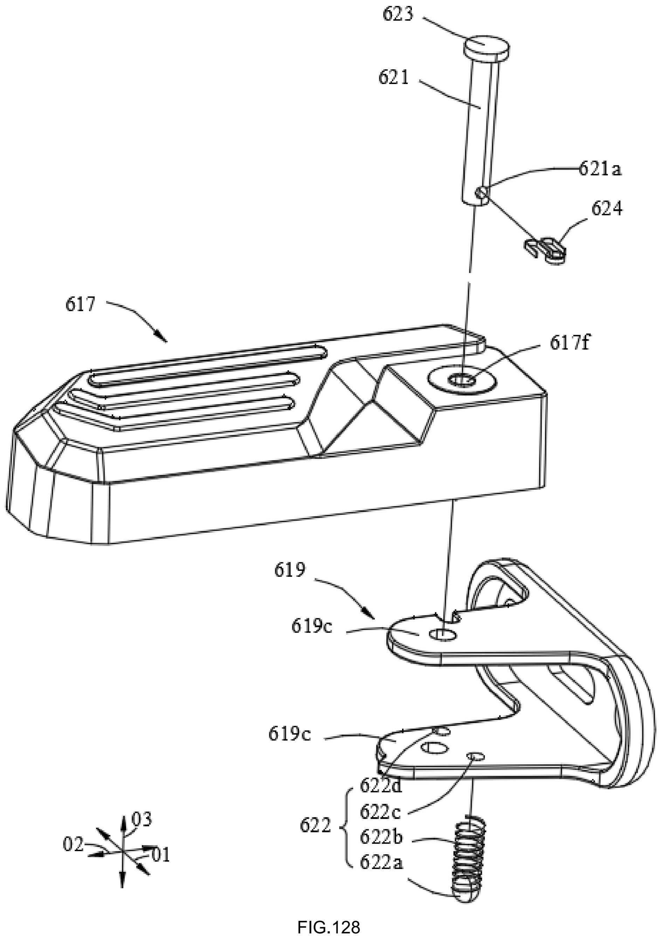

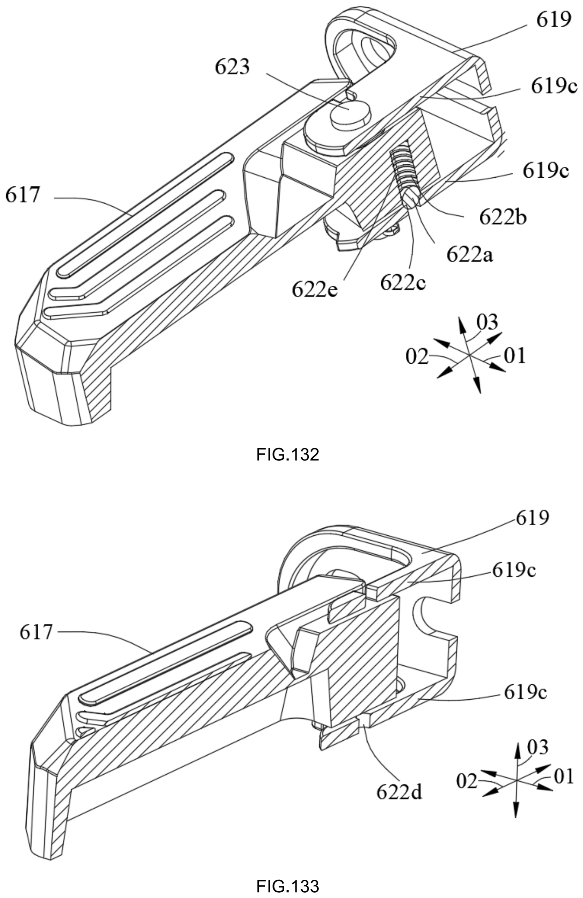

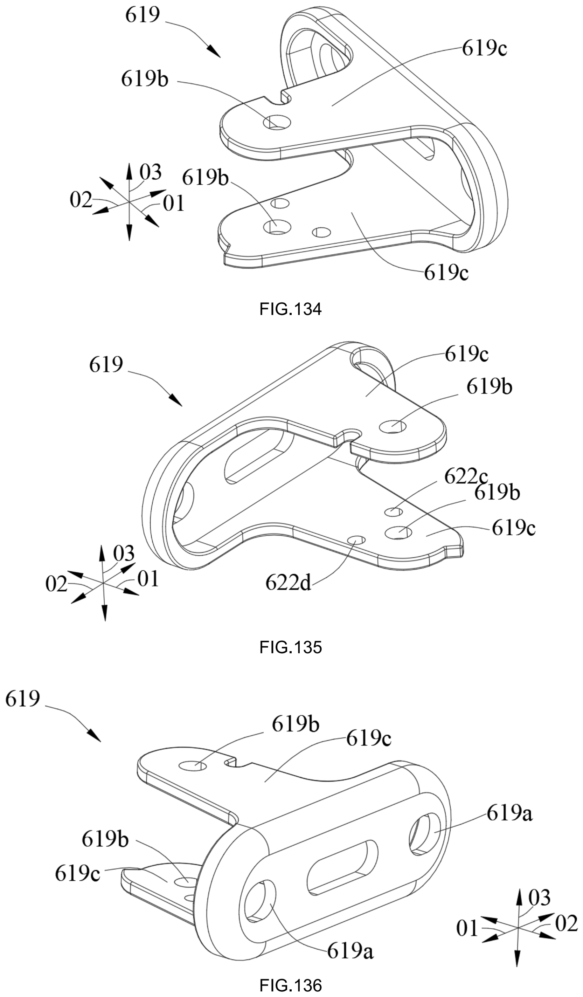

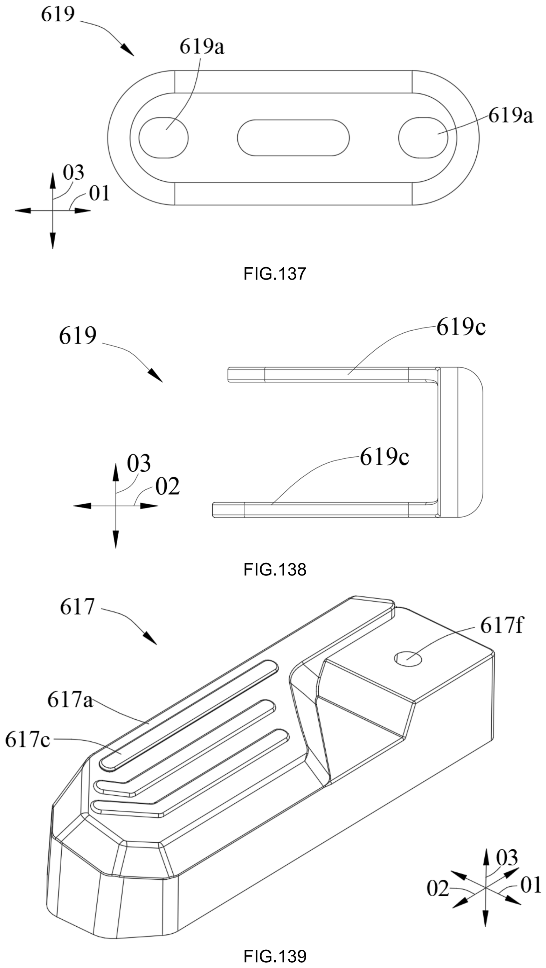

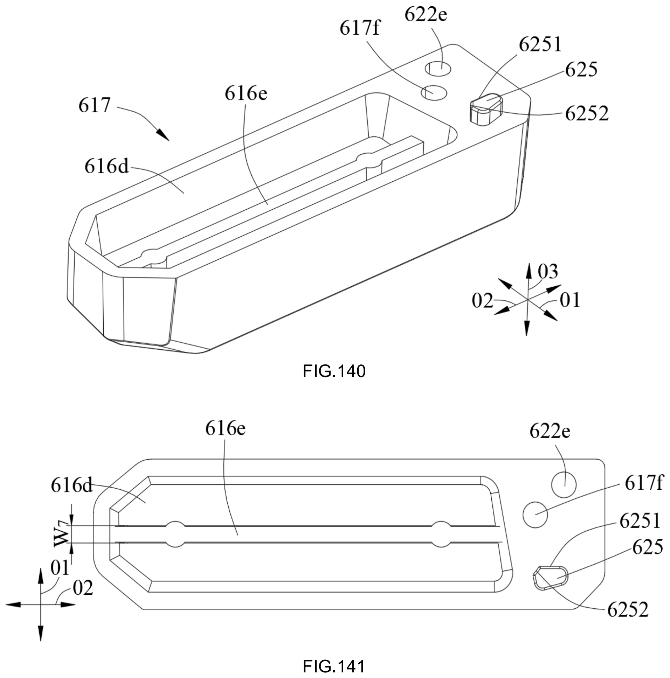

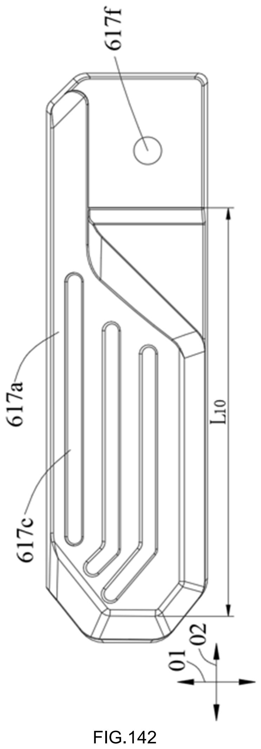

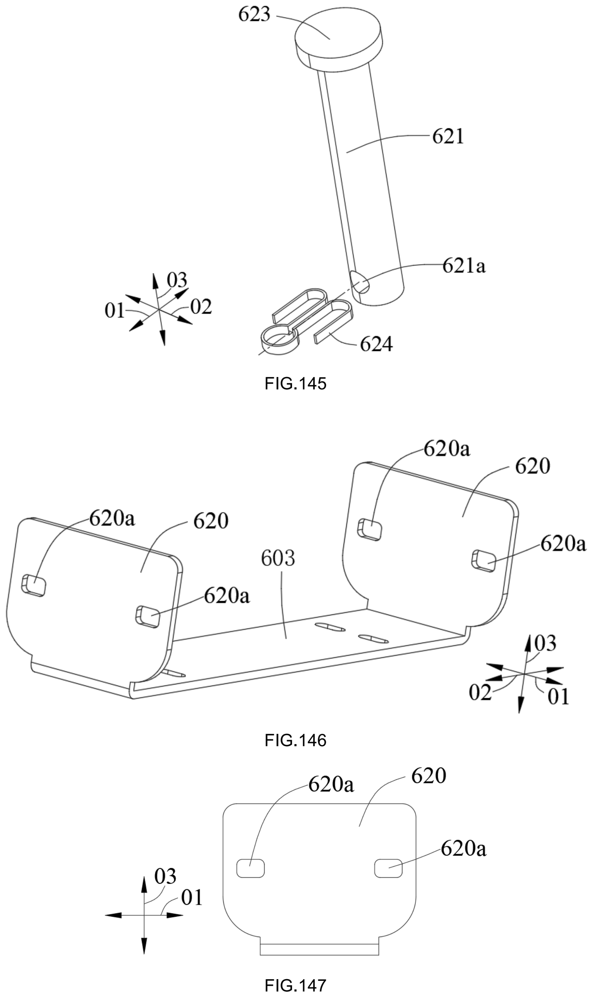

Referring to FIG. 101 to FIG. 154, the vehicle 600 provided in another embodiment of this application differs from the vehicle 500 in that the vehicle 600 further includes a second basket 601, and the second basket 601 is located at the top end of the second section 504b of the frame 504. The provision of the second basket 601 can be used to place items or animals.

Referring to FIG. 101 to FIG. 120, the second basket 601 is placed in the second section 504b of the frame 504, which results in a low center of gravity, improving the stability of the second basket 601, and also improving the stability of the items or animals placed inside the second basket 601. Furthermore, the low center of gravity of the second basket 601 means that the center of gravity of the items or animals, after being placed in the second basket 601, is also low. This further lowers the center of gravity of the vehicle 600, improving the stability of the vehicle 600 and enhancing riding safety.

In addition, the second section 504b of the frame 504 is located approximately in the middle position of the vehicle 600 along the first direction 01. The second basket 601 is placed in the second section 504b of the frame 504. Therefore, when items or animals are placed in the second basket 601, their center of gravity is also closer to the middle position of the vehicle 600, which moves the center of gravity of the vehicle 600 closer to the middle position, improving the stability of the vehicle 600 and enhancing riding safety.

Moreover, placing items or animals into the second basket 601 means the second basket 601 provides coverage or protection for the items or animals, which reduces the risk of the items or animals falling out, thus improving the safety of placing items or animals.

Also, since the second basket 601 provides coverage or protection for the items or animals, the rider does not need to intentionally squeeze or bring their legs together to shield or protect the items or animals. That is, the rider can naturally spread their legs, making their body more relaxed and improving comfort. Correspondingly, the rider spreading their legs can weaken the sense of restraint felt by the animals in the second basket 601, resulting in better comfort.

In addition, the improved stability of the vehicle 600 allows for placing items with higher stability requirements inside the second basket 601, increasing the diversity of items that can be carried and adding convenience to travel.

Moreover, the second basket 601 is placed in the second section 504b of the frame 504 at a low height, which facilitates the placement and removal of items/animals.

Furthermore, with the second basket 601 placed in the second section 504b of the frame 504, the rider can more easily observe the status of the second basket 601 during riding. When items are placed inside the second basket 601, the risk of items falling out can be discovered more timely. When animals are placed inside the second basket 601, the animal's condition can be observed in time, allowing earlier discovery if the animal experiences discomfort, or risks injury from activity or falling out of the second basket 601.

In some embodiments, the frame 504 includes a support plate 5042, and the second basket 601 is placed on the second flat section 5042d of the support plate 5042, resulting in higher placement stability for the second basket 601.

In some embodiments, the bottom wall of the second basket 601 has a hollowed-out shape. On one hand, this reduces the weight of the second basket 601, which facilitates the lightweight design of the vehicle 600. On the other hand, in some embodiments, the top surface of the support plate 5042 is provided with a first anti-slip mechanism 5042a. The hollowed-out bottom wall allows the first anti-slip mechanism 5042a on the top surface of the support plate 5042 to be exposed in the inner cavity of the second basket 601. When items are placed inside the second basket 601, the bottom of the items contacts the first anti-slip mechanism 5042a, reducing the risk of the items sliding and minimizing the risk of collision or damage caused by sliding; when animals are placed inside the second basket 601, the animal's paws contact the first anti-slip mechanism 5042a, making it more stable when the animal stands or sits.

Specifically, in some embodiments, the bottom wall of the second basket 601 includes multiple bottom rods 602, which have a simple structure and can form more hollowed-out structures.

More specifically, in some embodiments, the multiple bottom rods 602 are set approximately parallel.

More specifically, the arrangement direction of the multiple bottom rods 602 is along the second direction 02. It can be understood that, in other embodiments, the arrangement direction of the multiple bottom rods 602 can also be along other directions, such as the first direction 01, or any other direction forming an angle less than 90° with the first direction 01.

It can be understood that, in other embodiments, the multiple bottom rods 602 are not limited to being arranged in parallel, and at least some of the bottom rods 602 can be crossed, or the extensions of at least some of the bottom rods 602 can be crossed.

In some embodiments, the number of bottom rods 602 is four, which meets the demand for supporting strength well. It can be understood that, in other embodiments, the number of bottom rods 602 is not limited to four, but can be fewer or more than four.

Referring to FIG. 102, FIG. 105, FIG. 111, and FIG. 116, in some embodiments, relative to the symmetry plane a, the four bottom rods 602 are symmetrically arranged, which improves aesthetic appearance and enhances the balance performance of the support.

In some embodiments, along the second direction 02, the width of the bottom wall of the second basket 601 is less than or equal to the width of the second section 504b, which prevents the bottom wall of the second basket 601 from extending beyond the side edge of the second section 504b along the second direction 02, thereby reducing the interference of the second basket 601 with the placement of the rider's legs. This also facilitates the compact design of the vehicle 600 and enhances the aesthetic appeal of the vehicle 600.

In some embodiments, along the second direction 02, the edge of the bottom wall of the second basket 601 is the outer edge of the corresponding side bottom rod 602. For ease of description, this bottom rod 602 is referred to as the edge bottom rod 602a. In some embodiments, the number of edge bottom rods 602a is two.

In some embodiments, the material of the bottom rod 602 is carbon structural steel, which facilitates forming and has strong rigidity and strength, improving the stability of the second basket 601.

Specifically, in some embodiments, the bottom rod 602 is tubular, which reduces the weight of the second basket 601 while meeting the supporting strength requirements, facilitating the lightweight design of the vehicle 600.

In some embodiments, the multiple bottom rods 602 further include an intermediate bottom rod 602b provided between the two edge bottom rods 602a. In some embodiments, the number of intermediate bottom rods 602b is two. It can be understood that the number of intermediate bottom rods 602b is not limited to two, but can also be one or more than two, or even no intermediate bottom rod 602b.

In some embodiments, along the third direction 03, the top end height of the edge bottom rod 602a is equal to the top end height of the intermediate bottom rod 602b, to improve the flatness of the inner surface of the bottom wall of the second basket 601. When the second basket 601 is used for placing items, this improves the stability of item placement. When the second basket 601 is used for placing animals, this improves the stability and comfort of the placed animal.

In some embodiments, the bottom wall of the second basket 601 is further fixedly provided with a first fixing plate 603 and a second fixing plate 604. The second basket 601 is fixedly connected to the support plate 5042 through the first fixing plate 603 and the second fixing plate 604. On one hand, the first fixing plate 603 and the second fixing plate 604 are plate-shaped, which simplifies the structure of the second basket 601. On the other hand, fixing the second basket 601 to the support plate 5042 through the first fixing plate 603 and the second fixing plate 604 facilitates the relative fixing of the first fixing plate 603 and the second fixing plate 604 to the support plate 5042, respectively, improving the stability of the second basket 601's fixation.

In some embodiments, the first fixing plate 603 and the second fixing plate 604 are both located on the bottom side of the second basket 601, which facilitates the fixing of the first fixing plate 603 and the second fixing plate 604 to the support plate 5042, further improving the stability of the second basket 601.

In some embodiments, the first fixing plate 603 is fixedly connected to the multiple bottom rods 602, which helps maintain the spacing between adjacent bottom rods 602 and improves the structural stability of the second basket 601.

Furthermore, in some embodiments, the first fixing plate 603 is perpendicular to the multiple parallel bottom rods 602, which reduces the length of the connection position between the bottom rods 602 and the first fixing plate 603, reduces the area of the first fixing plate 603, increases the hollowed-out area of the bottom wall of the second basket 601, and simultaneously reduces material cost. In some embodiments, the multiple parallel bottom rods 602 extend along the first direction 01, and the first fixing plate 603 extends along the second direction 02.

In some embodiments, the second fixing plate 604 is fixedly connected to the multiple bottom rods 602, which helps maintain the spacing between adjacent bottom rods 602 and improves the structural stability of the second basket 601.

Furthermore, in some embodiments, the second fixing plate 604 is perpendicular to the multiple parallel bottom rods 602, which reduces the length of the connection between the bottom rods 602 and the second fixing plate 604, reduces the area of the second fixing plate 604, and increases the hollowed-out area of the bottom wall of the second basket 601. In some embodiments, the multiple parallel bottom rods 602 extend along the first direction 01, and the second fixing plate 604 extends along the second direction 02.

In some embodiments, the first fixing plate 603 and the second fixing plate 604 are arranged in parallel. It can be understood that, in other embodiments, the angle between the extension direction of the first fixing plate 603 and the extension direction of the second fixing plate 604 can also be greater than 0°, meaning the first fixing plate 603 and the second fixing plate 604 can intersect, or the extension lines of the first fixing plate 603 and the second fixing plate 604 can intersect.

In some embodiments, the material of the first fixing plate 603 is carbon structural steel. Carbon structural steel is easy to form. The first fixing plate 603 can be fixedly connected to the bottom rod 602 by welding, eliminating the need for additional fixing structures on the first fixing plate 603 and the bottom rod 602. The structure of the first fixing plate 603 and the bottom rod 602 is simple, which facilitates processing and reduces processing costs. Additionally, fixed connection of the first fixing plate 603 and the bottom rod 602 by welding reduces the extra space occupied by fixed connections, facilitating the compact design of the second basket 601. Furthermore, the top surface of the first fixing plate 603 is lower than the top surface of the bottom rod 602. When the first fixing plate 603 and the bottom rod 602 are fixedly connected by welding, the bottom surface of the bottom rod 602 is fixed to the top surface of the first fixing plate 603, which does not affect the flatness of the bottom surface of the first fixing plate 603. This allows for a more stable fit between the first fixing plate 603 and the support plate 5042, improving the stability of the second basket 601's fixation. Moreover, fixed connection of the first fixing plate 603 and the bottom rod 602 by welding does not affect the smoothness of the top surface of the bottom rod 602, reducing the impact on the smoothness performance of the bottom rod 602, thereby minimizing damage to items or animals placed in the second basket 601, and contributing to improved comfort for the animals riding.

In some embodiments, the thickness of the first fixing plate 603 falls within the range of 2mm - 5mm. While satisfying the stability requirements for fixed connection to the bottom rod 602 and the support plate 5042, it has a relatively small thickness, which facilitates the compact and lightweight design of the second basket 601. It can be understood that the thickness of the first fixing plate 603 refers to its thickness along the third direction 03.

Specifically, the thickness of the first fixing plate 603 can be any value within the range of 2mm - 5mm, such as 2mm, 2.4mm, 2.8mm, 3.2mm, 3.6mm, 4mm, 4.4mm, or 5mm.

In some embodiments, the first fixing plate 603 is rectangular plate-shaped, which has a simple structure and facilitates processing. It can be understood that, in other embodiments, the first fixing plate 603 is not limited to being rectangular plate-shaped, but can also have any other regular or irregular shape.

In some embodiments, the width of the first fixing plate 603 along the first direction 01 falls within the range of 33mm - 53mm. The width of the first fixing plate 603 along the first direction 01 being greater than or equal to 33mm provides higher supporting strength and a larger fitting area with the support plate 5042, resulting in higher stability when the second basket 601 is used for placing objects. The width of the first fixing plate 603 along the first direction 01 being less than or equal to 53mm allows the bottom wall of the second basket 601 to have a larger hollowed-out area, improving the comfort of the animal riding, and also facilitating lightweight design.

Specifically, the width of the first fixing plate 603 along the first direction 01 can be any value within the range of 33mm - 53mm, such as 33mm, 37mm, 41mm, 42mm, 43mm, 45mm, 49mm, or 53mm.

In some embodiments, along the third direction 03, the first fixing plate 603 is located on the bottom side of the intermediate bottom rod 602b, which is beneficial for enhancing the connection stability between the first fixing plate 603 and the support plate 5042. Specifically, when the first fixing plate 603 is fastened by a second bolt connection assembly 603a, the first fixing plate 603 is not shielded by the intermediate bottom rod 602b, allowing it to fit more closely with the support plate 5042 and preventing the first fixing plate 603 from bending or deforming due to force on one side, which helps ensure the service life of the first fixing plate 603.

In some embodiments, along the second direction 02, the two ends of the first fixing plate 603 are adjacent to the bottom rods 602 located at the two edges, preventing the end edges of the first fixing plate 603 from being exposed. This reduces the risk of people, objects, or animals around the vehicle 600 being knocked by the first fixing plate 603, while also making the second basket 601 more aesthetically pleasing.

In some embodiments, along the third direction 03, the bottom end of the edge bottom rod 602a is lower than the bottom end of the intermediate bottom rod 602b. Along the second direction 02, the edge of the first fixing plate 603 is adjacent to the inner side of the edge bottom rod 602a, which better hides the two ends of the first fixing plate 603, making the second basket 601 more aesthetically pleasing.

In addition, the height of the edge bottom rod 602a is greater than the height of the intermediate bottom rod 602b, which can improve the supporting strength of the bottom wall of the second basket 601. In some embodiments, the outer diameter of the edge bottom rod 602a is greater than the outer diameter of the intermediate bottom rod 602b, so that the height of the edge bottom rod 602a is greater than the height of the intermediate bottom rod 602b.

In some embodiments, the outer diameter of the edge bottom rod 602a falls within the range of 4mm - 12mm, and the wall thickness falls within the range of 0.4mm - 1mm. This allows for a small outer diameter while meeting the supporting strength, resulting in a thin bottom wall for the second basket 601, which facilitates the compact design of the second basket 601.

Specifically, the outer diameter of the edge bottom rod 602a can be any value within the range of 4mm - 12mm, such as 4mm, 5mm, 6mm, 7mm, 8mm, 9mm, 10mm, 11mm, or 12mm. The wall thickness of the edge bottom rod 602a can be any value within the range of 0.4mm - 1mm, such as 0.4mm, 0.5mm, 0.6mm, 0.7mm, 0.8mm, 0.9mm, or 1mm.

In some embodiments, the outer diameter of the intermediate bottom rod 602b falls within the range of 2mm - 10mm, and the wall thickness falls within the range of 0.4mm - 1mm. This allows for a small outer diameter while meeting the supporting strength, resulting in a thin bottom wall for the second basket 601, which facilitates the compact design of the second basket 601.

Specifically, the outer diameter of the intermediate bottom rod 602b can be any value within the range of 2mm - 10mm, such as 2mm, 3mm, 4mm, 5mm, 6mm, 7mm, 8mm, 9mm, or 10mm. The wall thickness of the intermediate bottom rod 602b can be any value within the range of 0.4mm - 1mm, such as 0.4mm, 0.5mm, 0.6mm, 0.7mm, 0.8mm, 0.9mm, or 1mm.

In some embodiments, the material of the second fixing plate 604 is carbon structural steel, which facilitates forming. The second fixing plate 604 can be fixedly connected to the bottom rod 602 by welding, eliminating the need for additional fixing structures on the second fixing plate 604 and the bottom rod 602. The structure of the second fixing plate 604 and the bottom rod 602 is simple, which facilitates processing and reduces processing costs. Additionally, fixed connection of the second fixing plate 604 and the bottom rod 602 by welding reduces the extra space occupied by fixed connections, facilitating the compact design of the second basket 601. Furthermore, the top surface of the second fixing plate 604 is lower than the top surface of the bottom rod 602. When the second fixing plate 604 and the bottom rod 602 are fixedly connected by welding, the bottom surface of the bottom rod 602 is fixed to the top surface of the second fixing plate 604, which does not affect the flatness of the bottom surface of the second fixing plate 604. This allows for a more stable fit between the second fixing plate 604 and the support plate 5042, improving the stability of the second basket 601's fixation. Moreover, fixed connection of the second fixing plate 604 and the bottom rod 602 by welding does not affect the smoothness of the top surface of the bottom rod 602, reducing the impact on the smoothness performance of the bottom rod 602, thereby minimizing damage to items or animals placed in the second basket 601, and contributing to improved comfort for the animals riding.

In some embodiments, the thickness of the second fixing plate 604 falls within the range of 2mm - 5mm. While satisfying the stability requirements for fixed connection to the bottom rod 602 and the support plate 5042, it has a smaller thickness, which facilitates the compact and lightweight design of the second basket 601. It can be understood that the thickness of the second fixing plate 604 refers to its thickness along the third direction 03.

Specifically, the thickness of the second fixing plate 604 can be any value within the range of 2mm - 5mm, such as 2mm, 2.4mm, 2.8mm, 3.2mm, 3.6mm, 4mm, 4.4mm, or 5mm.

In some embodiments, the second fixing plate 604 is rectangular plate-shaped, which has a simple structure and facilitates processing. It can be understood that, in other embodiments, the second fixing plate 604 is not limited to being rectangular plate-shaped, but can also have any other regular or irregular shape.

In some embodiments, the width of the second fixing plate 604 along the first direction 01 falls within the range of 20mm - 40mm. The width of the second fixing plate 604 along the first direction 01 being greater than or equal to 20mm provides higher supporting strength and a larger fitting area with the support plate 5042, resulting in higher stability for the second basket 601. The width of the second fixing plate 604 along the first direction 01 being less than or equal to 40mm allows the bottom wall of the second basket 601 to have a larger hollowed-out area.

Specifically, the width of the second fixing plate 604 along the first direction 01 can be any value within the range of 20mm - 40mm, such as 20mm, 24mm, 28mm, 32mm, 36mm, or 40mm.

In some embodiments, along the third direction 03, the second fixing plate 604 is located on the bottom side of the intermediate bottom rod 602b, which is beneficial for enhancing the connection stability between the second fixing plate 604 and the support plate 5042. Specifically, when the second fixing plate 604 is fastened by a third bolt connection assembly 604a, the second fixing plate 604 is not shielded by the intermediate bottom rod 602b, allowing it to fit more closely with the support plate 5042 and preventing the second fixing plate 604 from bending or deforming due to force on one side, which helps ensure the service life of the second fixing plate 604.

In some embodiments, along the third direction 03, the bottom end of the edge bottom rod 602a is lower than the bottom end of the intermediate bottom rod 602b. Along the second direction 02, the edge of the second fixing plate 604 is adjacent to the inner side of the edge bottom rod 602a, which better hides the two ends of the second fixing plate 604, making the second basket 601 more aesthetically pleasing.

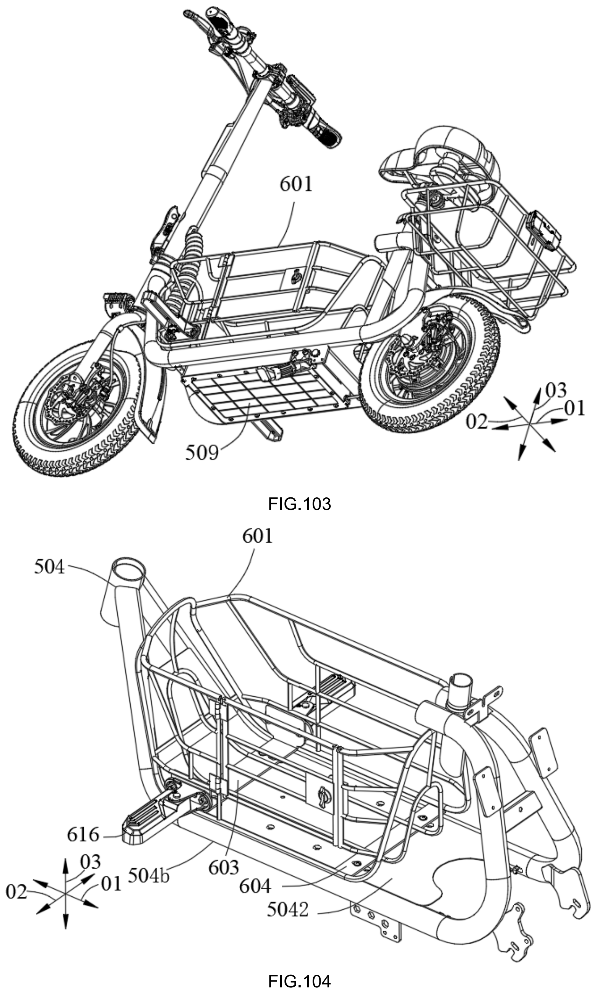

Referring to FIG. 103, FIG. 107 to FIG. 112, in some embodiments, the first fixing plate 603 and the support plate 5042 are fixedly connected by a second bolt connection assembly 603a, which facilitates the disassembly and installation of the first fixing plate 603 and the support plate 5042, and thus the disassembly and installation of the second basket 601. Therefore, when the second basket 601 is needed, it can be installed to facilitate carrying items or animals. When the second basket 601 is not needed, it can be disassembled, allowing the rider to step on the second section 504b of the frame 504 while riding, improving riding comfort and safety. Additionally, facilitating the disassembly and installation of the second basket 601 allows for improving the utilization rate of storage or transportation space by disassembling the second basket 601 during storage or transportation.

The frame 504 and/or the seat 508 are configured to provide a connection position for the second basket 601. That is, after the second basket 601 is connected to the frame 504 and/or the seat 508, it can be positioned on the support plate 5042 for the rider to place items or animals. It should be noted that the positioning here only describes the relative spatial relationship and does not necessarily mean that the second basket 601 must be connected to the support plate 5042.

The connection methods between the second basket 601 and the frame 504 and/or the seat 508 include but are not limited to magnetic adsorption, mechanical connection, friction, pressure, adhesive force, snap-fit, or nesting. The aforementioned connection methods can be used individually or in combination. When using the aforementioned connection methods, multiple connection positions can be provided, or a single connection position can be provided.

The connection position provided by the frame 504 and the seat 508 can be in the form of a hole or a groove, or in the form of a curved or flat surface.

When the connection position is in the form of a hole or a groove, the shape can be regular or irregular. The total number of connection positions can be only one or multiple.

In some embodiments, when there are multiple connection locations, the connection locations can be distributed vertically along the third direction 03, or front-to-back along the first direction 01, or left-to-right along the second direction 02. It should be noted that these three distribution methods-vertical distribution, front-to-back distribution, and left-to-right distribution-can appear individually or in combination.

In some embodiments, when there are multiple connection locations, the connection locations can be symmetrically or asymmetrically distributed.

For convenience of description, the connection location located on the first connection portion 504d is referred to as the first connection location 603c, the connection location located on the first upwardly extending portion 5044a is referred to as the second connection location 603d, the connection location located on the first flat portion 5044b is referred to as the third connection location 603e, the connection location located on the second upwardly extending portion 5044b is referred to as the fourth connection location 603f, the connection location located on the second flat section 5042d of the support plate 5042 is referred to as the fifth connection location 603g, the connection location located on the third upwardly extending portion 5042e is referred to as the sixth connection location 603h, the connection location located on the second connection portion 504e is referred to as the seventh connection location 603i, and the connection location located on the seat support rod 5081 is referred to as the eighth connection location 603j.

When describing the connection locations below, the dashed lines are only used to indicate the position and do not form any other limitation on the connection location, such as shape or size.

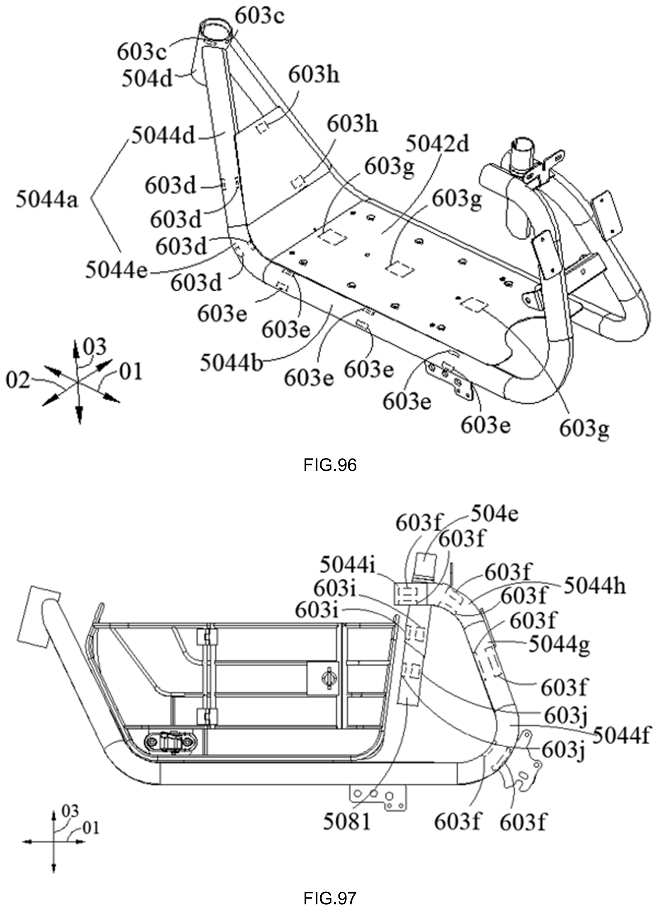

Referring to FIG. 96, in some embodiments, the distribution of the first connection location 603c on the first connection portion 504d can be along the first direction 01, located at the rear side of the first connection portion 504d, or along the second direction 02, located at at least one side of the first connection portion 504d. For ease of distinction and description, the shorter dashed box indicates the distribution along the first direction 01 located on the rear side, and the longer dashed box indicates the distribution along the second direction 02 located on one side. Along the second direction 02, the first connection location 603c can extend from the left side of the first connection portion 504d to the right side.

In some embodiments, the distribution of the second connection location 603d on the first upwardly extending portion 5044a can be located on the first inclined portion 5044d. For ease of distinction and description, the narrower dashed box indicates the case where it is located at the top end of the first inclined portion 5044d, and the wider dashed box indicates the case where it is located on the outer side of the first inclined portion 5044d. Along the third direction 03, the second connection location 603d can be at the top end of the first inclined portion 5044d, at the bottom end of the first inclined portion 5044d, or between the top and bottom ends. The second connection location 603d can also extend from the top end of the first inclined portion 5044d to the middle, or from the top end to the bottom end.

In some embodiments, the distribution of the second connection location 603d on the first upwardly extending portion 5044a can be located on the first arc-shaped portion 5044e. For ease of distinction and description, the narrower dashed box indicates the case where it is located at the top end of the first arc-shaped portion 5044e, and the wider dashed box indicates the case where it is located on the outer side of the first arc-shaped portion 5044e. Along the third direction 03, the second connection location 603d can be at the top end of the first arc-shaped portion 5044e, at the bottom end of the first arc-shaped portion 5044e, or between the top and bottom ends. The second connection location 603d can also extend from the top end of the first arc-shaped portion 5044e to the bottom end.

In some embodiments, the distribution of the third connection location 603e on the first flat portion 5044b is shown. For ease of distinction and description, the narrower dashed box indicates the case where it is located at the top end of the first flat portion 5044b, and the wider dashed box indicates the case where it is located on the outer side of the first flat portion 5044b. Along the first direction 01, the third connection location 603e can be at the front end of the first flat portion 5044b, at the rear end of the first flat portion 5044b, or between the front and rear ends. The third connection location 603e can also extend from the front end of the first flat portion 5044b to the middle, or from the front end to the rear end.

Referring to FIG. 97, in some embodiments, the distribution of the fourth connection location 603f on the second upwardly extending portion 5044b can be located on the second arc-shaped portion 5044f. For ease of distinction and description, the narrower dashed box indicates the case where it is located on the inner side of the second arc-shaped portion 5044f, and the wider dashed box indicates the case where it is located on the outer side of the second arc-shaped portion 5044f. Along the third direction 03, the fourth connection location 603f can be at the top end of the second arc-shaped portion 5044f, at the bottom end of the second arc-shaped portion 5044f, or between the top and bottom ends. The fourth connection location 603f can also extend from the top end of the second arc-shaped portion 5044f to the middle, or from the top end to the bottom end.

In some embodiments, the distribution of the fourth connection location 603f on the second upwardly extending portion 5044b can be located on the second inclined portion 5044g. For ease of distinction and description, the narrower dashed box indicates the case where it is located on the inner side of the second inclined portion 5044g, and the wider dashed box indicates the case where it is located on the outer side of the second inclined portion 5044g. Along the third direction 03, the fourth connection location 603f can be at the top end of the second inclined portion 5044g, at the bottom end of the second inclined portion 5044g, or between the top and bottom ends. The fourth connection location 603f can also extend from the top end of the second inclined portion 5044g to the middle, or from the top end to the bottom end.

In some embodiments, the distribution of the fourth connection location 603f on the second upwardly extending portion 5044b can be located on the third arc-shaped portion 5044h. For ease of distinction and description, the narrower dashed box indicates the case where it is located on the inner side of the third arc-shaped portion 5044h, and the wider dashed box indicates the case where it is located on the outer side of the third arc-shaped portion 5044h. Along the third direction 03, the fourth connection location 603f can be at the top end of the third arc-shaped portion 5044h, at the bottom end of the third arc-shaped portion 5044h, or between the top and bottom ends. The fourth connection location 603f can also extend from the top end of the third arc-shaped portion 5044h to the middle, or from the top end to the bottom end.

In some embodiments, the distribution of the fourth connection location 603f on the second upwardly extending portion 5044b can be located on the horizontal section 5044i. For ease of distinction and description, the narrower dashed box indicates the case where it is located on the inner side of the horizontal section 5044i, and the wider dashed box indicates the case where it is located on the outer side of the horizontal section 5044i. Along the third direction 03, the fourth connection location 603f can be at the top end of the horizontal section 5044i, at the bottom end of the horizontal section 5044i, or between the top and bottom ends. The fourth connection location 603f can also extend from the top end of the horizontal section 5044i to the bottom end.

Referring to FIG. 96, in some embodiments, the distribution of the fifth connection location 603g on the second flat portion 5042d is shown. For ease of distinction and description, the dashed box indicates the position of the fifth connection location 603g. Along the first direction 01, the fifth connection location 603g can be at the front end of the second flat portion 5042d, at the rear end of the second flat portion 5042d, or between the front and rear ends. The fifth connection location 603g can also extend from the front end of the second flat portion 5042d to the middle, or from the front end to the rear end. Along the second direction 02, the fifth connection location 603g can be on the left side of the second flat portion 5042d, on the right side of the second flat portion 5042d, or between the left and right sides. The fifth connection location 603g can also extend from the left side of the second flat portion 5042d to the middle, or from the left side to the right side.

In some embodiments, the distribution of the sixth connection location 603h on the third upwardly extending portion 5042e is shown. For ease of distinction and description, the dashed box indicates the position of the sixth connection location 603h. Along the third direction 03, the sixth connection location 603h can be at the top end of the third upwardly extending portion 5042e, at the bottom end of the third upwardly extending portion 5042e, or between the top and bottom ends. The sixth connection location 603h can also extend from the top end of the third upwardly extending portion 5042e to the middle, or from the top end of the third upwardly extending portion 5042e to the bottom end. Along the second direction 02, the sixth connection location 603h can be on the left side of the third upwardly extending portion 5042e, on the right side of the third upwardly extending portion 5042e, or between the left and right sides. The sixth connection location 603h can also extend from the left side of the third upwardly extending portion 5042e to the middle, or from the left side to the right side.

Referring to FIG. 97, in some embodiments, the distribution of the seventh connection location 603i on the second connection portion 504e is shown. For ease of distinction and description, the narrower dashed box indicates the case where it is located on the inner side of the second connection portion 504e, and the wider dashed box indicates the case where it is located on the outer side of the second connection portion 504e. The seventh connection location 603i can also extend from the inner side of the second connection portion 504e to the outer side. Along the third direction 03, the seventh connection location 603i can be at the top end of the second connection portion 504e, at the bottom end of the second connection portion 504e, or between the top and bottom ends.

In some embodiments, the distribution of the eighth connection location 603j on the seat support rod 5081 is shown. For ease of distinction and description, the narrower dashed box indicates the case where it is located on the inner side of the seat support rod 5081, and the wider dashed box indicates the case where it is located on the outer side of the seat support rod 5081. The eighth connection location 603j can also extend from the inner side of the seat support rod 5081 to the outer side. Along the third direction 03, the eighth connection location 603j can be at the top end of the seat support rod 5081, at the bottom end of the seat support rod 5081, or between the top and bottom ends.

When the connection method is nesting, taking the first connection location 603c as an example, along the first direction 01, the rear side of the first connecting portion 504d is provided with the first connection location 603c, and the first connection location 603c is in the form of a groove. A latch corresponding to the first connection location 603c is fixed on the front side of the second basket 601, thereby achieving a connection at one point.

When the connection method is snap-fit, taking the second connection location 603d as an example, along the second direction 02, snap-fits are fixed on both sides of the second basket 601, and the second connection location 603d is in the form of an arcuate surface that matches the snap-fits. During the process of pressing the snap-fits towards the second connection location 603d, the snap-fits open, thereby achieving a connection at one point.

When the connection method is friction, taking the third connection location 603e as an example, along the second direction 02, the third connection location 603e is provided on both sides of the first flat portion 5044b. The third connection location 603e is in the form of a groove. Latches are fixed on both sides of the bottom of the second basket 601, and the latches have an interference fit with the third connection location 603e, thereby achieving connection at two points. In other embodiments, it can be a clearance fit or an interference fit.

When the connection method is nesting, taking the fifth connection location 603g as an example, a wide and shallow fifth connection location 603g is provided in the middle of the second flat portion 5042d. The fifth connection location 603g is in the form of a groove. The bottom side of the second basket 601 is adapted to the fifth connection location 603g. By placing the second basket 601 into the fifth connection location 603g, a connection at one point is achieved.

When the connection method is adhesion, taking the fifth connection location 603g as an example, the second flat portion 5042d and the second basket 601 are fixed by an adhesive member, including but not limited to double-sided tape or velcro. The fifth connection location 603g is in the form of a flat surface. Connection is achieved by adhering the second basket 601 to the second flat portion 5042d.

When the connection method is pressure, taking the fifth connection location 603g as an example, the second flat portion 5042d and the second basket 601 are secured by winding with a rope. The fifth connection location 603g is an arcuate surface. Connection is achieved by winding a rope around the second flat portion 5042d and the second basket 601.

When the connection method is magnetic adsorption, taking the sixth connection location 603h as an example, along the first direction 01, a magnet is installed on the side of the third upwardly extending portion 5042e facing the front wheel 505, i.e., the magnet is installed on the back side of the third upwardly extending portion 5042e. In this case, the sixth connection location 603h is located on the side of the third upwardly extending portion 5042e facing the second basket 601, and the sixth connection location 603h is in the form of a flat surface. The front side of the second basket 601 is attracted by the magnet and adheres to the sixth connection location 603h, thereby achieving a connection at one point.

When the connection method is snap-fit, taking the sixth connection location 603h as an example, along the first direction 01, a hook is fixed to the front end of the second basket 601. The sixth connection location 603h is in the form of a flat surface. The hook can latch onto the top end of the support plate 5042, thereby achieving a connection at one point.

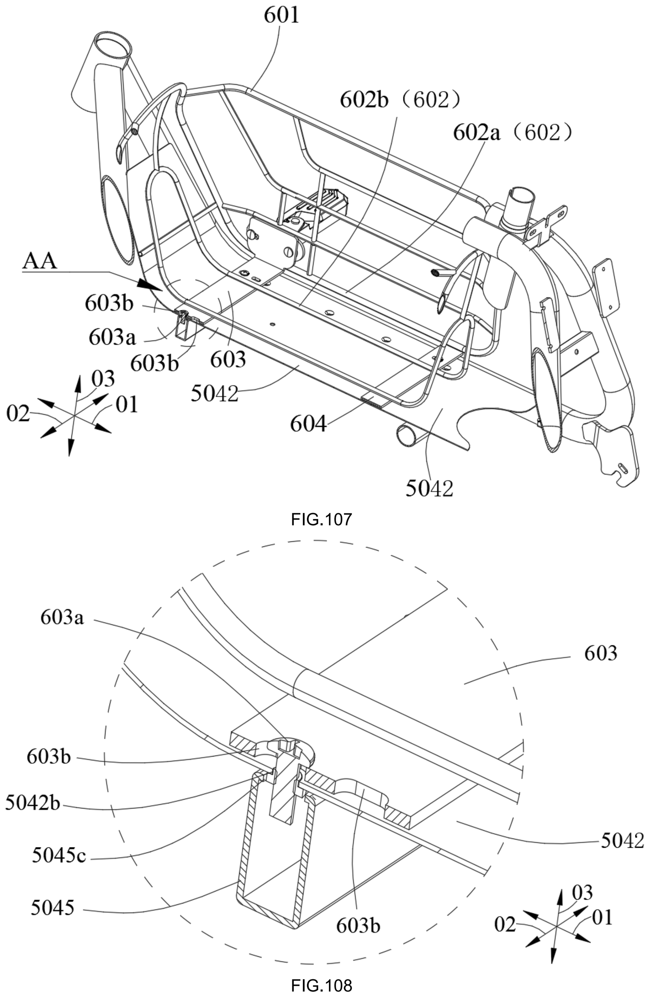

When the connection method is mechanical connection, taking the fifth connection location 603g as an example, referring to FIG. 107 to FIG. 110, the connection location is in the form of a hole and is connected by a bolt connection assembly. Specifically, the first fixing plate 603 is provided with a third fixing hole 603b, and the support plate 5042 is provided with a fourth fixing hole 5042b (which is also the fifth connection location 603g). The third fixing hole 603b and the fourth fixing hole 5042b both match the second bolt connection assembly 603a.

In some embodiments, the third fixing hole 603b is a waist-shaped hole. The position of the second bolt connection assembly 603a relative to the first fixing plate 603 is adjustable along the direction of extension of the waist-shaped hole, which lowers the precision requirement for the position of the third fixing hole 603b and the fourth fixing hole 5042b in this direction. In addition, it can also improve the applicability of the second basket 601.

In some embodiments, referring to FIG. 110, the nut of the second bolt connection assembly 603a can be fixedly provided on the bottom side of the support plate 5042. Therefore, when disassembling the second fixing plate 604 and the support plate 5042, the risk of losing the nut due to inconvenient storage is avoided. Additionally, fixing the nut of the second bolt connection assembly 603a on the bottom side of the support plate 5042 reduces the need for nut alignment when tightening and fixing the nut and second bolt of the second bolt connection assembly 603a, lowering the difficulty of operation and improving operational efficiency.

Furthermore, in some embodiments, a battery assembly 509 is also provided on the bottom side of the support plate 5042. Fixedly providing the nut of the second bolt connection assembly 603a on the bottom side of the support plate 5042 eliminates the need to disassemble the battery assembly 509 when installing and disassembling the first fixing plate 603 and the support plate 5042, lowering the difficulty of operation. Additionally, fixing the nut of the second bolt connection assembly 603a on the bottom side of the support plate 5042 also eliminates the need to reserve operating space for the installation and disassembly of the first fixing plate 603 and the support plate 5042. Therefore, the space on the bottom side of the support plate 5042 can be better utilized to arrange the battery assembly 509, which will not reduce the capacity of the battery assembly 509, thereby better ensuring the cruising range of the vehicle 600. Nor will it require setting up structures like notches on the battery assembly 509 to reserve operating space, making the structure of the battery assembly 509 simple, easy to process, and reducing processing costs.

Referring to FIG. 107 and FIG. 108, in some embodiments, the position of the third fixing hole 603b corresponds to the position of the first support beam 5045, that is, the first support beam 5045 is located on the underside of the third fixing hole 603b. A nut of the second bolt connection assembly 603a is fixed on the first support beam 5045, so that the first support beam 5045 can share the stress generated by the fixed connection between the first fixing plate 603 and the support plate 5042, thereby increasing the strength of the fixed connection between the first fixing plate 603 and the support plate 5042 and improving the stability of the second basket 601. In addition, since the position of the third fixing hole 603b corresponds to the position of the first support beam 5045, the first support beam 5045 can share part of the pressure acting on the support plate 5042, thereby reducing the pressure borne by the support plate 5042, lowering the risk of deformation of the support plate 5042, and improving the service life of the support plate 5042.

Further, in some embodiments, a fifth fixing hole 5045c is further provided on the first support beam 5045, and a side wall of the fifth fixing hole 5045c is matched with the nut of the second bolt connection assembly 603a. When the bolt and the nut of the second bolt connection assembly 603a are tightened, a threaded portion of the bolt can partially extend into the interior of the first support beam 5045, so that the first support beam 5045 can share the stress generated by the fixed connection between the first fixing plate 603 and the support plate 5042 to a greater extent. Specifically, in some embodiments, the first support beam 5045 is tubular, and the fifth fixing hole 5045c extends through a top wall of the first support beam 5045, which reduces the processing difficulty of the fifth fixing hole 5045c and also reduces the limitation on the length of the bolt of the second bolt connection assembly 603a.

In some embodiments, the bolt specification of the second bolt connection assembly 603a is a semi-round head bolt. The rounded bolt head can avoid scratching items or animals inside the basket, especially preventing injuries to the pet's paws.

Specifically, the bolt specification of the second bolt connection assembly 603a is M5, which ensures stable connection while being relatively small, facilitating the compact design of the vehicle 500.

In other examples, the bolt specification of the second bolt connection assembly 603a can also be other specifications, such as M8, M10, or M14.

In some embodiments, the number of third fixing holes 603b is greater than the number of fourth fixing holes 5042b, so that an appropriate one of the third fixing holes 603b can be selected according to the number of fourth fixing holes 5042b in the vehicle 600, thereby improving the applicability of the second basket 601.

In some embodiments, the number of third fixing holes 603b is four, and the number of fourth fixing holes 5042b is two. It can be understood that, in other embodiments, the numbers of the third fixing holes 603b and the fourth fixing holes 5042b may be set as needed, and are not particularly limited.

In some embodiments, the second fixing plate 604 is fixedly connected to the support plate 5042 by a third bolt connection assembly 604a. By fixedly connecting the second fixing plate 604 and the support plate 5042 using the third bolt connection assembly 604a, disassembly and installation of the second fixing plate 604 and the support plate 5042 are facilitated, which in turn facilitates disassembly and installation of the second basket 601. Thus, when the second basket 601 is needed, the second basket 601 can be installed to facilitate carrying items or animals; when the second basket 601 is not needed, the second basket 601 can be removed, so that the rider can step on the second section 504b of the frame 504 during riding, thereby improving riding comfort and safety. In addition, easy disassembly and installation of the second basket 601 allows the storage or transport space to be utilized more efficiently by removing the second basket 601 during storage or transport.

Specifically, in some embodiments, a sixth fixing hole 604b is provided in the second fixing plate 604, and a seventh fixing hole 5042c is provided in the support plate 5042. The sixth fixing hole 604b and the seventh fixing hole 5042c are both matched with the third bolt connection assembly 604a.

In some embodiments, the sixth fixing hole 604b is a waist-shaped hole, and the position of the third bolt connection assembly 604a relative to the second fixing plate 604 is adjustable along the extending direction of the waist-shaped hole, thereby lowering the positional accuracy requirement for the sixth fixing hole 604b and the seventh fixing hole 5042c in this direction. In addition, this can further improve the applicability of the second basket 601.

In some embodiments, a nut of the third bolt connection assembly 604a is fixed on the bottom side of the support plate 5042. Therefore, when disassembling the fixed connection between the second fixing plate 604 and the support plate 5042, the risk of losing the nut due to inconvenient storage of the nut of the third bolt connection assembly 604a is avoided. In addition, since the nut of the third bolt connection assembly 604a is fixed on the bottom side of the support plate 5042, when tightening and fixing the nut and bolt of the third bolt connection assembly 604a, the nut alignment operation is reduced, thereby lowering the operation difficulty and improving operation efficiency. Furthermore, in some embodiments, a battery assembly 509 is also provided on the bottom side of the support plate 5042; by fixing the nut of the third bolt connection assembly 604a on the bottom side of the support plate 5042, it is unnecessary to remove the battery assembly 509 when installing and disassembling the second fixing plate 604 and the support plate 5042, thereby reducing the operation difficulty. In addition, fixing the nut of the third bolt connection assembly 604a on the bottom side of the support plate 5042 also makes it unnecessary to reserve an operation space for installation and disassembly of the second fixing plate 604 and the support plate 5042. Thus, the space on the bottom side of the support plate 5042 can be better utilized to dispose the battery assembly 509, without reducing the capacity of the battery assembly 509 for the purpose of reserving operation space, thereby better ensuring the cruising range of the vehicle 600; nor is it necessary to provide a notch or other structure in the battery assembly 509 to reserve operation space, so that the structure of the battery assembly 509 is simple, easy to process, and low in processing cost.

In some embodiments, the nut of the third bolt connection assembly 604a is fixed on the bottom surface of the support plate 5042.

In some embodiments, the bolt of the third bolt connection assembly 604a is a semi-round head bolt, and the rounded bolt head can prevent scraping against items or animals in the basket, in particular avoiding scratching the feet of a pet.

Specifically, in some embodiments, the bolt of the third bolt connection assembly 604a has a specification of M5, which ensures a stable connection while remaining relatively small, thereby facilitating the compact design of the vehicle 500.

In other examples, the bolt of the third bolt connection assembly 604a may also have other specifications, such as M8, M10, or M14.

In some embodiments, the first fixing plate 603 and the second fixing plate 604 are both fixedly connected to the support plate 5042 by bolt connection. It can be understood that, in other embodiments, the method for fixedly connecting the first fixing plate 603 to the support plate 5042 and the method for fixedly connecting the second fixing plate 604 to the support plate 5042 can also be fixedly connected by methods such as adhesion or snap-fit. Accordingly, the method for fixedly connecting the first fixing plate 603 to the support plate 5042 and the method for fixedly connecting the second fixing plate 604 to the support plate 5042 can be the same or different.

In some embodiments, the bottom surface height of the first fixing plate 603 is less than or equal to the height of the bottom end of the edge bottom rod 602a, so that the first fixing plate 603 can better fit against the support plate 5042, improving the stability of the second basket 601.

In some embodiments, along the second direction 02, the edge of the first fixing plate 603 is located outside the axis of the support rod 5044 on the corresponding side, and the edge of the second fixing plate 604 is located outside the axis of the support rod 5044 on the corresponding side. This allows the support rod 5044 to support the first fixing plate 603 if the support plate 5042 deforms, ensuring the support stability of the second basket 601. It can also prevent the second basket 601 from applying pressure to the battery assembly 509 due to downward movement, reducing the risk of the battery assembly 509 being subjected to pressure, minimizing the risk of the battery assembly 509 being damaged or exploding due to pressure, and extending the service life of the battery assembly 509.

In some embodiments, the bottom wall of the second basket 601 is provided with a total of two fixing plates: the first fixing plate 603 and the second fixing plate 604. It can be understood that, in other embodiments, the number of fixing plates on the bottom wall of the second basket 601 is not limited to two, but can also be one or more than two.

Referring to FIG. 101 and FIG. 113 to FIG. 120, in some embodiments, the side walls of the second basket 601 are also provided with a hollowed-out structure to improve the breathability inside the second basket 601, facilitating the volatilization of moisture when present inside the basket. In addition, the provision of the hollowed-out structure enhances the exchange between the air inside the second basket 601 and the outside air, reducing the residual odor inside the second basket 601. Furthermore, the provision of the hollowing effectively reduces the weight of the second basket 601, facilitating the lightweight design of the vehicle 600. Moreover, the provision of the hollowing facilitates observation of the situation inside the second basket 601, making it easier to respond more timely when items or animals inside the second basket 601 encounter a problem.

In some embodiments, the second basket 601 is generally cuboid-shaped. It can be understood that, in other embodiments, the second basket 601 is not limited to being cuboid-shaped, but can also have regular or irregular shapes such as cylindrical shape.

Specifically, in some embodiments, the second basket 601 includes a first side 605 and a second side 606 arranged opposite to each other along the first direction 01, wherein the first side 605 is located at the front side of the second side 606.

In some embodiments, the second basket 601 includes a third side 607 and a fourth side 608 sequentially arranged along the second direction 02.

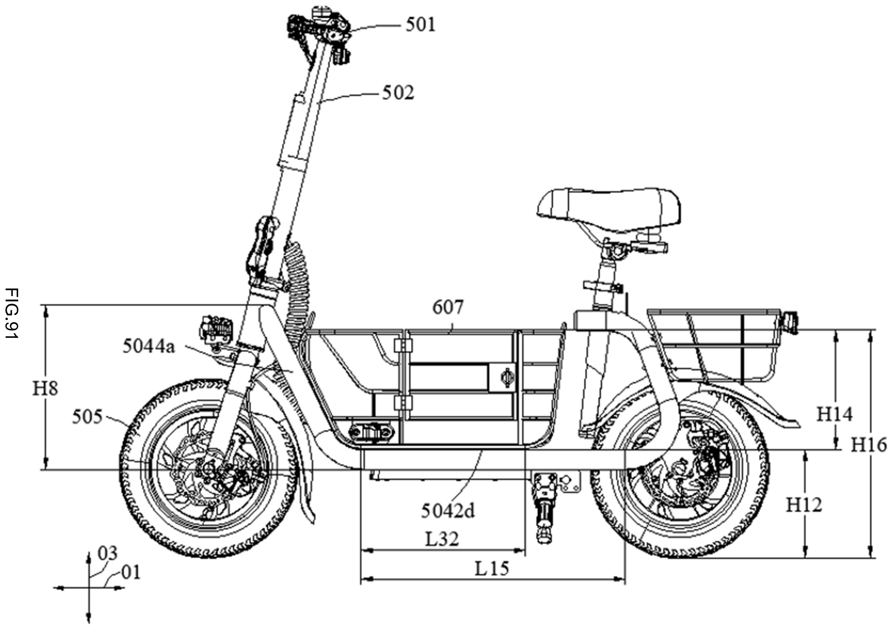

Referring to FIG. 91, in some embodiments, the height H14 of the third side 607 along the third direction 03 falls within the range of 120mm - 300mm. If H14 is less than 120mm, the coverage or protection provided by the third side 607 is relatively weak after items or animals are placed in it, especially when the road conditions are rugged or the animals are large, making it easy for the items or animals to tip over or even fall out. If H14 is greater than 300mm, the third side 607 is too high, and the top end of the third side 607 is prone to bumping the inner side of the rider's legs, which is detrimental to ensuring comfort and does not favor the compact design of the vehicle.

Specifically, H14 can be any value within the range of 120mm - 300mm, such as 120mm, 130mm, 140mm, 150mm, 160mm, 170mm, 180mm, 190mm, 200mm, 210mm, 220mm, 230mm, 240mm, 250mm, 260mm, 270mm, 280mm, 290mm, or 300mm.

In some embodiments, H8 is the height of the first upwardly extending portion 5044a along the third direction 03. The ratio K11 of H14 to H8 falls within the range of 0.5 - 1. If K11 is less than 0.5, the coverage or protection provided by the third side 607 is relatively weak after items or animals are placed in it, especially when the road conditions are rugged or the animals are large, making it easy for the items or animals to tip over or even fall out. If K11 is greater than 1, it occupies too much space formed by the frame, which can easily lead to other parts or components of the vehicle needing to adjust their installation positions to make way, which is detrimental to simplifying the design of the vehicle and to compact design.

Specifically, K11 can be any value within the range of 0.5 - 1, such as 0.5, 0.6, 0.7, 0.8, 0.9, or 1.0.

In some embodiments, the height of the third side 607 from the ground is H16, and the ratio K12 of H16 to H12 falls within the range of 1.8 - 2.6, where H12 is the height of the support plate from the ground. If K12 is less than 1.8, the coverage or protection provided by the third side 607 is relatively weak after items or animals are placed in it, especially when the road conditions are rugged or the animals are large, making it easy for the items or animals to tip over or even fall out. If K12 is greater than 2.6, when items or animals collide with the third side 607 after being placed inside, it is prone to aggravating the instability of the vehicle, especially when colliding with the top end of the third side 607.

Specifically, K12 can be any value within the range of 1.8 - 2.6, such as 1.8, 1.9, 2.0, 2.1, 2.2, 2.3, 2.4, 2.5, or 2.6.

In some embodiments, along the first direction 01, the distance L31 between the front side of the third side 607 and the rear side of the first section falls within the range of 0mm - 12mm.

When L31 is 0, if the second basket 601 includes the first side and the second side, the front side of the third side 607 fits against the rear side of the first section, which can maximize the third side 607, thus facilitating the maximal design of the second basket 601. Additionally, when the second basket 601 does not include the first side and the second side, L31 being 0 can reduce the risk of items or animals protruding or falling out.

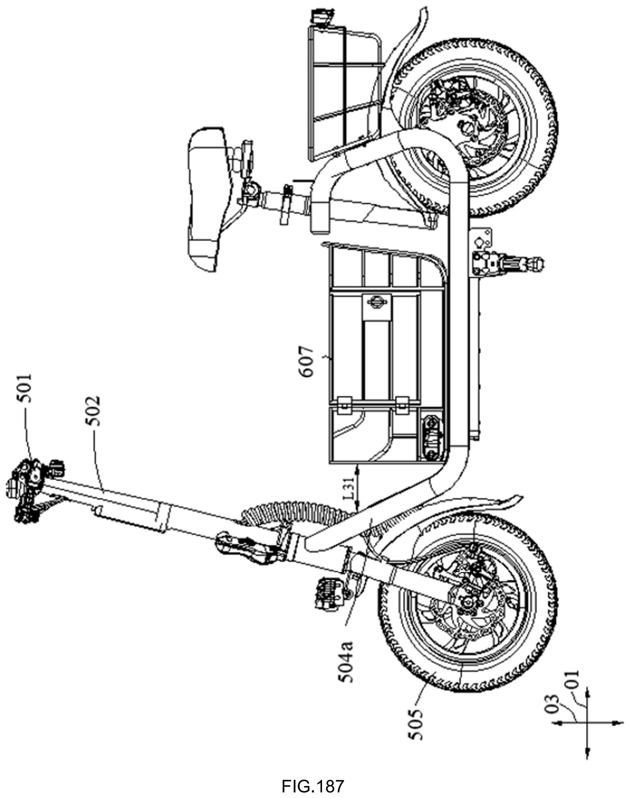

Referring to FIG. 187, when there is a gap between the front side of the third side 607 and the rear side of the first section 504a (e.g., L31 is 5mm), and the second basket 601 includes the first side and the second side, it is convenient for the rider to take the entire second basket 601 out from the front end. Additionally, when the second basket 601 does not include the first side and the second side, it is convenient for the rider to place or retrieve items from the front end of the third side 607, making item handling more flexible.

When L31 is greater than 12mm, and the second basket 601 includes the first side and the second side, the utilization of the frame's space is relatively limited, resulting in a small volume for the second basket 601. Additionally, when the second basket 601 does not include the first side and the second side, the distance between the front side of the third side 607 and the rear side of the first section is large, and the coverage or protection provided by the third side 607 is relatively weak, making it easy for items to fall out, especially on rugged roads.

Specifically, L31 can be any value within the range of 0mm - 12mm, such as 0mm, 1mm, 2mm, 3mm, 4mm, 5mm, 6mm, 7mm, 8mm, 9mm, 10mm, 11mm, or 12mm.

Referring to FIG. 91, in some embodiments, along the first direction 01, the length of the bottom side of the third side 607 is L32, and the ratio of L32 to L15 is K13, where L15 is the length of the second flat portion along the first direction 01. K13 falls within the range of 0.5 - 1. If K13 is less than 0.5, the utilization of the second flat portion is relatively limited, which is detrimental to increasing the volume of the second basket 601. If K13 is greater than 1, some areas cannot be supported by the second flat portion, which is detrimental to improving the stability of carrying objects, especially if the rear end is unsupported. Additionally, a longer bottom side of the third side 607 requires occupying more space, which is detrimental to the compact design of the vehicle.

Specifically, K13 can be any value within the range of 0.5 - 1, such as 0.5, 0.6, 0.7, 0.8, 0.9, or 1.0.

In some embodiments, the size design of the fourth side 608 can be the same as that of the third side 607, for example, referring to the related H14, K11, K12, L31, and K13 of the third side 607, which will not be repeated here.

Referring to FIG. 101, FIG. 117, and FIG. 120, in some embodiments, the first side 605 is inclined forward. The first section 504a of the frame 504 is inclined forward and is located at the front end of the first side 605. Therefore, the first side 605 being inclined forward allows for more full utilization of the space behind the first section 504a of the frame 504, giving the second basket 601 a larger volume.

In some embodiments, the top end of the first side 605 is bent backward to prevent items inside the second basket 601 from sliding out from the front side of the second basket 601 due to inertia when the vehicle 600 decelerates.

In some embodiments, the difference between the angle β10 formed by the first side 605 and the bottom wall of the second basket 601, and β1, falls within the range of 0° - 5°. The small difference between β10 and β1 allows the first side 605 to be set closer to the first section 504a and to more fully utilize the space behind the first section 504a, thereby giving the second basket 601 a larger volume.

Specifically, the difference between β10 and β1 can be any value within the range of 0° - 5°, such as 0°, 1°, 2°, 3°, 4°, or 5°.

In some embodiments, the second side 606 is inclined backward. The seat support rod 5081 is inclined backward and is located at the rear side of the second side 606. The backward inclination of the second side 606 allows for more full utilization of the space in front of the seat support rod 5081, thereby giving the second basket 601 a larger volume.

Optionally, in some embodiments, the difference between the angle β11 formed by the second side 606 and the bottom wall of the second basket 601, and the supplementary angle of β7, falls within the range of 0° - 5°, where β7 is the angle between the Seat support rod 5081 and the first direction 01. The small difference between β11 and the supplementary angle of β7 allows the second side 606 to be set closer to the seat support rod 5081 and to more fully utilize the space in front of the Seat support rod 5081, thereby giving the second basket 601 a larger volume.

Specifically, the difference between β11 and β7's supplementary angle can be any value within the range of 0° - 5°, such as 0°, 1°, 2°, 3°, 4°, or 5°.

In some embodiments, a fourth transition section 609 is provided between the bottom wall of the second basket 601 and the first side 605. The provision of the fourth transition section 609 allows for a smoother transition between the bottom wall of the second basket 601 and the first side 605. On one hand, the provision of the fourth transition section 609 avoids the sharp corner formed by the direct connection between the bottom wall of the second basket 601 and the first side 605, reducing the risk of riders or people around the vehicle 600 being injured by the sharp corner. On the other hand, the provision of the fourth transition section 609 alleviates the stress concentration phenomenon between the bottom wall of the second basket 601 and the first side 605, improving the supporting strength, reliability, and service life of the second basket 601.

In some embodiments, the extension line of the fourth transition section 609, from the front end of the bottom wall of the second basket 601 to the bottom end of the first side 605, is curved, which allows for a smoother transition between the bottom wall of the second basket 601 and the first side 605, and can also make the appearance more aesthetically pleasing.

In some embodiments, the extension line of the fourth transition section 609, from the front end of the bottom wall of the second basket 601 to the bottom end of the first side 605, is arc-shaped, which makes the shape of the fourth transition section 609 simpler and standardized, facilitating processing.

In some embodiments, a fifth transition section 610 is provided between the bottom wall of the second basket 601 and the second side 606. The provision of the fifth transition section 610 allows for a smoother transition between the bottom wall of the second basket 601 and the second side 606. On one hand, the provision of the fifth transition section 610 avoids the sharp corner formed by the direct connection between the bottom wall of the second basket 601 and the second side 606, reducing the risk of riders or people around the vehicle 600 being injured by the sharp corner. On the other hand, the provision of the fifth transition section 610 alleviates the stress concentration phenomenon between the bottom wall of the second basket 601 and the second side 606, improving the supporting strength, reliability, and service life of the second basket 601.

In some embodiments, the extension line of the fifth transition section 610, from the rear end of the bottom wall of the second basket 601 to the bottom end of the second side 606, is curved, which allows for a smoother transition between the bottom wall of the second basket 601 and the second side 606, and can also make the appearance more aesthetically pleasing.

In some embodiments, the extension line of the fifth transition section 610, from the rear end of the bottom wall of the second basket 601 to the bottom end of the second side 606, is arc-shaped, which makes the shape of the fifth transition section 610 simpler and standardized, facilitating processing.

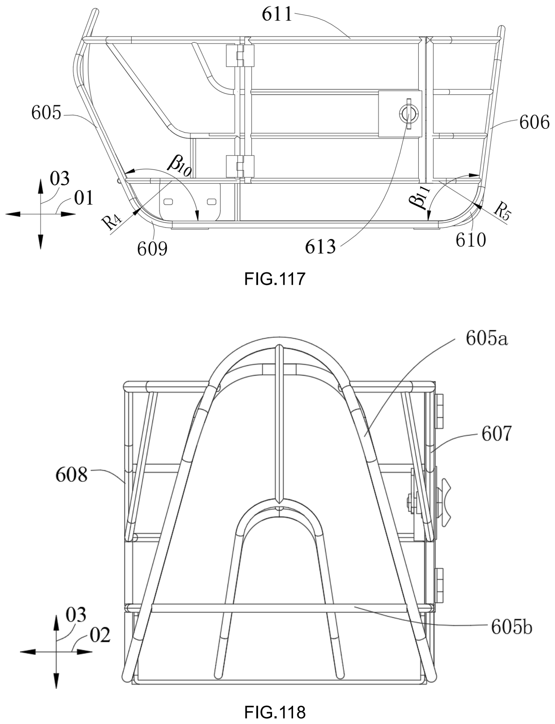

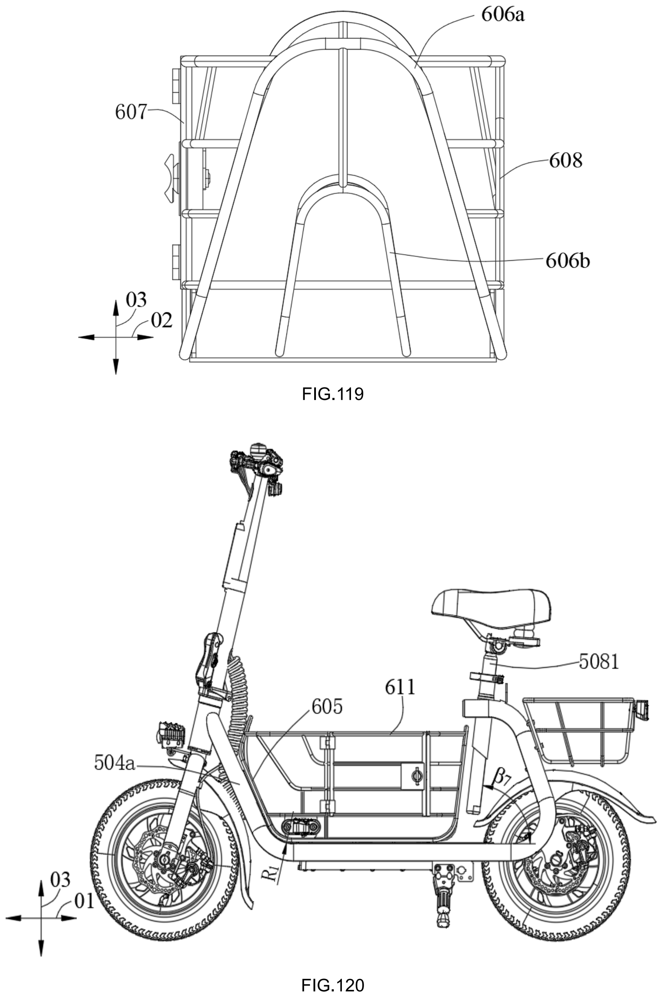

Referring to FIG. 118 and FIG. 119, in some embodiments, the third side 607 and the fourth side 608 of the second basket 601 are both substantially perpendicular to the bottom wall of the second basket 601, preventing the presence of the second basket 601 from increasing the width of the front side of the seat, thereby reducing the impact on the rider's comfort and riding safety.

In some embodiments, the first side 605, the second side 606, the third side 607, and the fourth side 608 all include multiple relatively fixed side rods, which have a simple structure and facilitate processing.

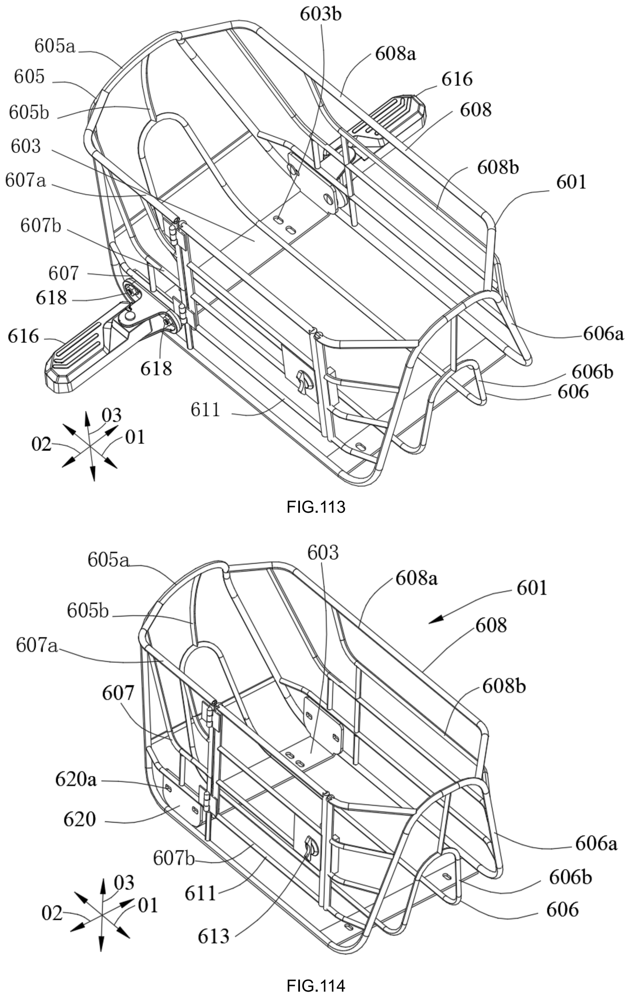

Referring to FIG. 113 to FIG. 120, in some embodiments, some of the multiple side rods on the first side 605 are arranged in a cross-hatching pattern, so that the hollowed-out area on the first side 605 is smaller, reducing the risk of items inside the second basket 601 falling out through the hollowing of the first side 605. Similarly, in some embodiments, the side rods on the second side 606, the third side 607, and the fourth side 608 are also arranged in a cross-hatching pattern, which can likewise reduce the risk of items inside the second basket 601 falling out through the hollowing of the corresponding side wall.

In some embodiments, the ratio of the total hollowed-out area on the first side 605 to the total area of the first side 605 falls within the range of 0.5 - 0.98, which provides a high hollowed-out area while meeting the shielding requirements.

Specifically, in some embodiments, the side rods on the first side 605 are tubular. While meeting the function of side support and shielding, they have a light weight, facilitating the lightweight design of the second basket 601 and the lightweight design of the vehicle 600.

Specifically, in some embodiments, the multiple side rods on the first side 605 include a first side rod 605a located at the edge of the first side 605 and a second side rod 605b located in the middle of the first side 605. The outer diameter of the first side rod 605a is greater than the outer diameter of the second side rod 605b. The larger outer diameter of the first side rod 605a provides higher supporting strength, which allows it to better maintain the size of the first side 605 while providing lateral restraint. The smaller outer diameter of the second side rod 605b provides a lighter weight while meeting the lateral restraint requirements, facilitating the lightweight design of the second basket 601 and the lightweight design of the vehicle 600.

Optionally, the material of the first side rod 605a is carbon structural steel, which has good supporting performance and is also easy to plasticize, facilitating the preparation of the first side rod 605a.

Optionally, the outer diameter of the first side rod 605a falls within the range of 2mm - 8mm, and the wall thickness of the first side rod 605a falls within the range of 0.4mm - 1mm. This allows for a small outer diameter while meeting the supporting strength, resulting in a thin first side 605, which facilitates the compact design of the second basket 601.

Specifically, the outer diameter of the first side rod 605a can be any value within the range of 2mm - 8mm, such as 2mm, 3mm, 4mm, 5mm, 6mm, 7mm, or 8mm. The wall thickness of the first side rod 605a can be any value within the range of 0.4mm - 1mm, such as 0.4mm, 0.5mm, 0.6mm, 0.7mm, 0.8mm, 0.9mm, or 1mm.

Optionally, the material of the second side rod 605b is carbon structural steel, which has good supporting performance and is also easy to plasticize, facilitating the preparation of the second side rod 605b.

Optionally, the outer diameter of the second side rod 605b falls within the range of 2mm - 10mm, and the wall thickness of the second side rod 605b falls within the range of 0.4mm - 1mm. This allows for a small outer diameter while meeting the supporting strength, resulting in a thin first side 605, which facilitates the compact design of the second basket 601.

Specifically, the outer diameter of the second side rod 605b can be any value within the range of 2mm - 10mm, such as 2mm, 3mm, 4mm, 5mm, 6mm, 7mm, 8mm, 9mm, or 10mm. The wall thickness of the second side rod 605b can be any value within the range of 0.4mm - 1mm, such as 0.4mm, 0.5mm, 0.6mm, 0.7mm, 0.8mm, 0.9mm, or 1mm.

In some embodiments, the first side rod 605a is integrally formed with the edge bottom rod 602a. It can be understood that, in other embodiments, the first side rod 605a can also be set separately from the edge bottom rod 602a and then fixedly connected by methods such as welding or snap-fit.

In some embodiments, some of the second side rods 605b are integrally formed with the intermediate bottom rod 602b. It can be understood that, in other embodiments, the second side rod 605b can also be set separately from the intermediate bottom rod 602b and then fixedly connected by methods such as welding or snap-fit.

In some embodiments, some of the second side rods 605b are arranged to intersect with the first side rod 605a to reduce the size of individual hollowings on the first side 605, thereby reducing the risk of items inside the second basket 601 falling out through the hollowings on the first side 605.

In some embodiments, the ratio of the total hollowed-out area on the second side 606 to the total area of the first side 605 falls within the range of 0.5 - 0.95, which provides a high hollowed-out area while meeting the shielding requirements.

Specifically, in some embodiments, the side rods on the second side 606 are tubular. While meeting the function of side support and shielding, they have a light weight, facilitating the lightweight design of the second basket 601 and the lightweight design of the vehicle 600.

Specifically, in some embodiments, the multiple side rods on the second side 606 include a third side rod 606a located at the edge of the second side 606 and a fourth side rod 606b located in the middle of the second side 606. The outer diameter of the third side rod 606a is greater than the outer diameter of the fourth side rod 606b. The larger outer diameter of the third side rod 606a provides higher supporting strength, which allows it to better maintain the size of the second side 606 while meeting the lateral restraint requirements. The smaller outer diameter of the fourth side rod 606b provides a lighter weight while meeting the lateral restraint requirements, facilitating the lightweight design of the second basket 601 and the lightweight design of the vehicle 600.

Optionally, the material of the third side rod 606a is carbon structural steel, which has good supporting performance and is also easy to plasticize, facilitating the preparation of the third side rod 606a.

Optionally, the outer diameter of the third side rod 606a falls within the range of 4mm - 12mm, and the wall thickness of the third side rod 606a falls within the range of 0.4mm - 1mm. This allows for a small outer diameter while meeting the supporting strength, resulting in a thin second side 606, which facilitates the compact design of the second basket 601.

Specifically, the outer diameter of the third side rod 606a can be any value within the range of 4mm - 12mm, such as 4mm, 5mm, 6mm, 7mm, 8mm, 9mm, 10mm, 11mm, or 12mm. The wall thickness of the third side rod 606a can be any value within the range of 0.4mm - 1mm, such as 0.4mm, 0.5mm, 0.6mm, 0.7mm, 0.8mm, 0.9mm, or 1mm.

Optionally, the material of the fourth side rod 606b is carbon structural steel, which has good supporting performance and is also easy to plasticize, facilitating the preparation of the fourth side rod 606b.

Optionally, the outer diameter of the fourth side rod 606b falls within the range of 2mm - 10mm, and the wall thickness of the fourth side rod 606b falls within the range of 0.4mm - 1mm. This allows for a small outer diameter while meeting the supporting strength, resulting in a thin second side 606, which facilitates the compact design of the second basket 601.

Specifically, the outer diameter of the fourth side rod 606b can be any value within the range of 2mm - 10mm, such as 2mm, 3mm, 4mm, 5mm, 6mm, 7mm, 8mm, 9mm, or 10mm. The wall thickness of the fourth side rod 606b can be any value within the range of 0.4mm - 1mm, such as 0.4mm, 0.5mm, 0.6mm, 0.7mm, 0.8mm, 0.9mm, or 1mm.

In some embodiments, the third side rod 606a is integrally formed with the edge bottom rod 602a. It can be understood that, in other embodiments, the third side rod 606a can also be set separately from the edge bottom rod 602a and then fixedly connected by methods such as welding or snap-fit.

In some embodiments, some of the fourth side rods 606b are integrally formed with the intermediate bottom rod 602b. It can be understood that, in other embodiments, the fourth side rod 606b can also be set separately from the intermediate bottom rod 602b and then fixedly connected by methods such as welding or snap-fit.

In some embodiments, some of the fourth side rods 606b are arranged to intersect with the third side rod 606a to reduce the size of individual hollowings on the second side 606, thereby reducing the risk of items inside the second basket 601 falling out through the hollowings on the second side 606.

In some embodiments, the ratio of the total hollowed-out area on the third side 607 to the total area of the first side 605 falls within the range of 0.5 - 0.95, which provides a high hollowed-out area while meeting the shielding requirements.

Specifically, in some embodiments, the side rods on the third side 607 are tubular. While meeting the function of side support and shielding, they have a light weight, facilitating the lightweight design of the second basket 601 and the lightweight design of the vehicle 600.

Specifically, in some embodiments, the multiple side rods on the third side 607 include a fifth side rod 607a located at the top end of the third side 607 and a sixth side rod 607b located between the fifth side rods 607a. The two ends of the fifth side rod 607a are fixedly connected to the first side rod 605a and the third side rod 606a, respectively. The outer diameter of the fifth side rod 607a is greater than the outer diameter of the sixth side rod 607b. The larger outer diameter of the fifth side rod 607a provides higher supporting strength, which allows it to better maintain the size of the third side 607 while meeting the lateral restraint requirements. The smaller outer diameter of the sixth side rod 607b provides a lighter weight while meeting the lateral restraint requirements, facilitating the lightweight design of the second basket 601 and the lightweight design of the vehicle 600.

In addition, in some embodiments, the edge bottom rod 602a on one side of the third side 607 also serves as the bottom edge of the third side 607, providing support for the third side 607.

Optionally, the material of the fifth side rod 607a is carbon structural steel, which has good supporting performance and is also easy to plasticize, facilitating the preparation of the fifth side rod 607a.

Optionally, the outer diameter of the fifth side rod 607a falls within the range of 4mm - 12mm, and the wall thickness of the fifth side rod 607a falls within the range of 0.4mm - 1mm. This allows for a small outer diameter while meeting the supporting strength, resulting in a thin third side 607, which facilitates the compact design of the second basket 601.

Specifically, the outer diameter of the fifth side rod 607a can be any value within the range of 4mm - 12mm, such as 4mm, 5mm, 6mm, 7mm, 8mm, 9mm, 10mm, 11mm, or 12mm. The wall thickness of the fifth side rod 607a can be any value within the range of 0.4mm - 1mm, such as 0.4mm, 0.5mm, 0.6mm, 0.7mm, 0.8mm, 0.9mm, or 1mm.

Optionally, the material of the sixth side rod 607b is carbon structural steel, which has good supporting performance and is also easy to plasticize, facilitating the preparation of the sixth side rod 607b.

Optionally, the outer diameter of the sixth side rod 607b falls within the range of 2mm - 10mm, and the wall thickness of the sixth side rod 607b falls within the range of 0.4mm - 1mm. This allows for a small outer diameter while meeting the supporting strength, resulting in a thin third side 607, which facilitates the compact design of the second basket 601.

Specifically, the outer diameter of the sixth side rod 607b can be any value within the range of 2mm - 10mm, such as 2mm, 3mm, 4mm, 5mm, 6mm, 7mm, 8mm, 9mm, or 10mm. The wall thickness of the sixth side rod 607b can be any value within the range of 0.4mm - 1mm, such as 0.4mm, 0.5mm, 0.6mm, 0.7mm, 0.8mm, 0.9mm, or 1mm.

In some embodiments, some of the sixth side rods 607b are arranged to intersect with the fifth side rod 607a to reduce the size of individual hollowings on the third side 607, thereby reducing the risk of items inside the second basket 601 falling out through the hollowings on the third side 607.

In some embodiments, the ratio of the total hollowed-out area on the fourth side 608 to the total area of the first side 605 falls within the range of 0.5 - 0.95, which provides a high hollowed-out area while meeting the shielding requirements.

Specifically, in some embodiments, the side rods on the fourth side 608 are tubular. While meeting the function of side support and shielding, they have a light weight, facilitating the lightweight design of the second basket 601 and the lightweight design of the vehicle 600.

Specifically, in some embodiments, the multiple side rods on the fourth side 608 include a seventh side rod 608a located at the top and bottom ends of the fourth side 608 and an eighth side rod 608b located between the seventh side rods 608a. The two ends of the seventh side rod 608a are fixedly connected to the first side rod 605a and the third side rod 606a, respectively. The outer diameter of the seventh side rod 608a is greater than the outer diameter of the eighth side rod 608b. The larger outer diameter of the seventh side rod 608a provides higher supporting strength, which allows it to better maintain the size of the fourth side 608 while meeting the lateral restraint requirements. The smaller outer diameter of the eighth side rod 608b provides a lighter weight while meeting the lateral restraint requirements, facilitating the lightweight design of the second basket 601 and the lightweight design of the vehicle 600.

In addition, in some embodiments, the edge bottom rod 602a on one side of the fourth side 608 also serves as the bottom edge of the fourth side 608, providing support for the fourth side 608.

Optionally, the material of the seventh side rod 608a is carbon structural steel, which has good supporting performance and is also easy to plasticize, facilitating the preparation of the seventh side rod 608a.

Optionally, the outer diameter of the seventh side rod 608a falls within the range of 4mm - 12mm, and the wall thickness of the seventh side rod 608a falls within the range of 0.4mm - 1mm. This allows for a small outer diameter while meeting the supporting strength, resulting in a thin fourth side 608, which facilitates the compact design of the second basket 601.

Specifically, the outer diameter of the seventh side rod 608a can be any value within the range of 4mm - 12mm, such as 4mm, 5mm, 6mm, 7mm, 8mm, 9mm, 10mm, 11mm, or 12mm. The wall thickness of the seventh side rod 608a can be any value within the range of 0.4mm - 1mm, such as 0.4mm, 0.5mm, 0.6mm, 0.7mm, 0.8mm, 0.9mm, or 1mm.

Optionally, the material of the eighth side rod 608b is carbon structural steel, which has good supporting performance and is also easy to plasticize, facilitating the preparation of the eighth side rod 608b.

Optionally, the outer diameter of the eighth side rod 608b falls within the range of 2mm - 10mm, and the wall thickness of the eighth side rod 608b falls within the range of 0.4mm - 1mm. This allows for a small outer diameter while meeting the supporting strength, resulting in a thin fourth side 608, which facilitates the compact design of the second basket 601.

Specifically, the outer diameter of the eighth side rod 608b can be any value within the range of 2mm - 10mm, such as 2mm, 3mm, 4mm, 5mm, 6mm, 7mm, 8mm, 9mm, or 10mm. The wall thickness of the eighth side rod 608b can be any value within the range of 0.4mm - 1mm, such as 0.4mm, 0.5mm, 0.6mm, 0.7mm, 0.8mm, 0.9mm, or 1mm.

In some embodiments, some of the eighth side rods 608b are arranged to intersect with the seventh side rod 608a to reduce the size of individual hollowings on the fourth side 608, thereby reducing the risk of items inside the second basket 601 falling out through the hollowings on the fourth side 608.

In some embodiments, the outer diameter and wall thickness of the first side rod 605a, the third side rod 606a, the fifth side rod 607a, and the seventh side rod 608a are the same, such that the supporting strength of the first side 605, the second side 606, the third side 607, and the fourth side 608 of the second basket 601 is consistent, and the aesthetic effect is satisfied. In some embodiments, the outer diameter and wall thickness of the second side rod 605b, the fourth side rod 606b, the sixth side rod 607b, and the eighth side rod 608b are the same, such that the supporting strength of the first side 605, the second side 606, the third side 607, and the fourth side 608 of the second basket 601 is consistent, and the aesthetic effect is satisfied.

In some embodiments, the height of the second basket 601 is lower than the height of the frame 504, resulting in a lower center of gravity and improving the stability of the vehicle 600.

In some embodiments, along the third direction 03, the difference between the lowest height H1min of the seat 508 and the height H9 of the second basket 601 falls within the range of 80mm - 200mm. This is to reduce the discomfort caused to the rider during riding while still having a large cargo space.

Specifically, the difference between H1min and H9 can be any value within the range of 80mm - 200mm, such as 80mm, 88mm, 96mm, 104mm, 112mm, 120mm, 128mm, 136mm, 144mm, 152mm, 160mm, 168mm, 176mm, 184mm, 192mm, or 200mm.

In some embodiments, the volume of the second basket 601 falls within the range of 15L - 30L. A volume less than 15L provides a small cargo space for the rider, limiting cargo capacity, especially when the pet is large. A volume greater than 30L requires occupying a large amount of space, which is detrimental to the compact design of the vehicle.

Specifically, the volume of the second basket 601 can be any value within the range of 15L - 30L, such as 15L, 18L, 21L, 24L, 27L, or 30L.

In some embodiments, the volume of the second basket 601 can be larger than the volume of the first basket 507, for example, 1 to 5 times larger. This can encourage the rider to choose to place large-capacity or heavier items in the second basket 601 and place small-capacity or lighter items in the first basket 507. This weight distribution is also beneficial for improving the stability of the vehicle during travel and for the rider to easily access items.

In some embodiments, in other embodiments, the height of the third side and the fourth side of the second basket along the third direction is adjustable. This allows for reducing the height of the third side and the fourth side when a smaller height for the second basket is required, thereby reducing the impact of the second basket on rider comfort. In addition, by adjusting and lowering the height of the third side and the fourth side, the space occupied by the second basket can be reduced, facilitating the carrying, transportation, and storage of the second basket. Furthermore, lowering the height of the third side and the fourth side can also lower the center of gravity of the second basket, thereby further lowering the center of gravity of the vehicle and improving the stability of the vehicle and riding safety.

In some embodiments, in other embodiments, the height of the first side and the second side of the second basket along the third direction is adjustable. This allows for reducing the height of the first side and the second side when a smaller height for the second basket is required, thereby reducing the drag caused by the second basket during riding and lowering the energy consumption of the vehicle. In addition, by adjusting and lowering the height of the first side and the second side, the space occupied by the second basket can be reduced, facilitating the carrying, transportation, and storage of the second basket. Furthermore, lowering the height of the first side and the second side can also lower the center of gravity of the second basket, thereby further lowering the center of gravity of the vehicle and improving the stability of the vehicle and riding safety.

In some embodiments, in other embodiments, the height of the first side, the second side, the third side, and the fourth side of the second basket are all adjustable along the third direction.

Further, in other embodiments, the height adjustment of the first side, the second side, the third side, and the fourth side of the second basket rotates together, facilitating operation. In other words, adjusting the height of one of the first side, the second side, the third side, or the fourth side can simultaneously drive the synchronous adjustment of the height of the other three. For example, if the height of the first side is adjusted downward, the second side, the third side, and the fourth side are simultaneously lowered, driven by the first side.

In some embodiments, the first side is retractable along the third direction to achieve adjustable height of the first side. In some embodiments, the first side is foldable to achieve adjustable height of the first side.

In some embodiments, the second side is retractable along the third direction to achieve adjustable height of the second side. In some embodiments, the second side is foldable to achieve adjustable height of the second side.

In some embodiments, the third side is retractable along the third direction to achieve adjustable height of the third side. In some embodiments, the third side is foldable to achieve adjustable height of the third side.

In some embodiments, the fourth side is retractable along the third direction to achieve adjustable height of the fourth side. In some embodiments, the fourth side is foldable to achieve adjustable height of the fourth side.

In some embodiments, in other embodiments, the length of the second basket along the first direction is adjustable. This allows for adjusting and reducing the length of the second basket along the first direction when a smaller length requirement for the second basket along the first direction is needed, thereby reducing the space occupied by the second basket and lowering the impact on riding comfort. In addition, reducing the length of the second basket along the first direction also facilitates the carrying, transportation, and storage of the second basket.

In some embodiments, in other embodiments, the width of the second basket along the second direction is adjustable. This allows for adjusting and reducing the length of the second basket along the second direction when a smaller length requirement for the second basket along the second direction is needed, thereby reducing the space occupied by the second basket and lowering the impact on riding comfort. In addition, reducing the length of the second basket along the second direction also facilitates the carrying, transportation, and storage of the second basket.

Referring to FIG. 113, FIG. 114, FIG. 115, FIG. 117, and FIG. 120 to FIG. 125, in some embodiments, a side door 611 is provided on the third side 607. When it is necessary to place items from a lower position into the second basket 601, placing the items into the second basket 601 through the location of the side door 611 can reduce the height the items need to be lifted, saving labor. When an animal needs to be placed in the second basket 601, opening the side door 611 facilitates some animals to enter the second basket 601 by themselves, reducing the burden on the rider.

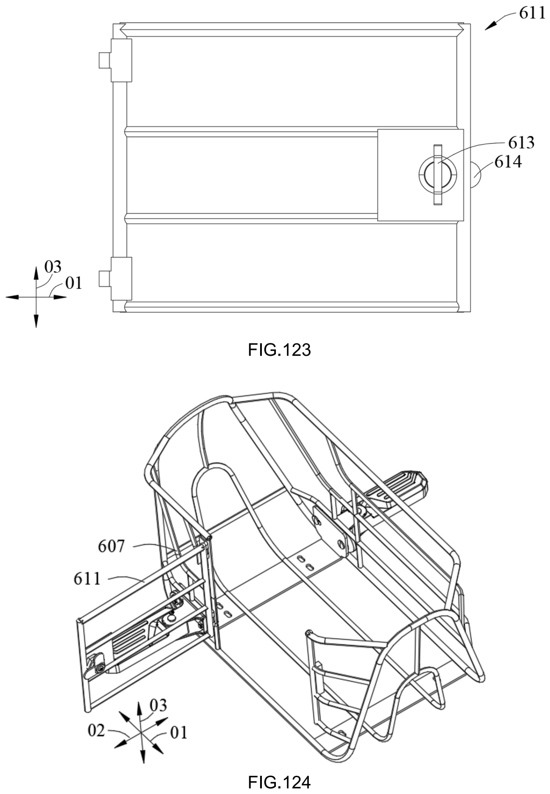

In some embodiments, the side door 611 is rotatably provided on the third side 607. The side door 611 rotates to switch between an open state and a closed state. Referring to FIG. 113 to FIG. 115, the side door 611 is in the closed state; referring to FIG. 124, the side door 611 is in the open state.

In some embodiments, along the third direction 03, the side door 611 extends to the top end of the third side 607. When the side door 611 is opened, the top end of the notch in the third side 607 corresponding to the side door 611 has no obstruction, which facilitates placing items in the second basket 601 and also reduces the risk of animals being bumped when entering the second basket 601 through the location of the side door 611.

In some embodiments, along the third direction 03, the side door 611 extends to the bottom end of the third side 607. When the side door 611 is opened, the bottom end of the notch in the third side 607 corresponding to the side door 611 has a low height. When placing items from a lower position into the second basket 601 through this location, the height the items need to be lifted can be further reduced, saving labor.

In some embodiments, the front end of the side door 611 is rotatably provided on the third side 607. It can be understood that, in other embodiments, the rear end, bottom end, or top end of the side door can also be rotatably provided on the third side.

In some embodiments, the opening direction of the side door 611 is outward. In other words, when the side door 611 is in the open state, the side door 611 is located on the outside of the second basket 601, avoiding collision with items or animals inside the second basket 601 when the side door 611 is opened or closed. Furthermore, it prevents items or animals inside the second basket 601 from affecting the rotation of the side door 611.

In some embodiments, in other embodiments, the side door can also be a retractable structure. The side door retracts to achieve the open state. This prevents the side door from occupying the space outside the second basket when opened, reducing the risk of people, items, or animals around the second basket being hit by the side door. Specifically, the end of the retractable side door fixed to the third side can be the front end, rear end, top end, or bottom end of the side door.

In some embodiments, in other embodiments, the side door can also be a rolling shutter door structure or a sliding door structure, as long as it can achieve the opening or closing of the side door.

In some embodiments, a door lock 612 is provided on the second basket 601 to keep the side door 611 in the closed state after the side door 611 is closed. It can be understood that when the door lock 612 is opened, the side door 611 can move from the closed state to the open state.

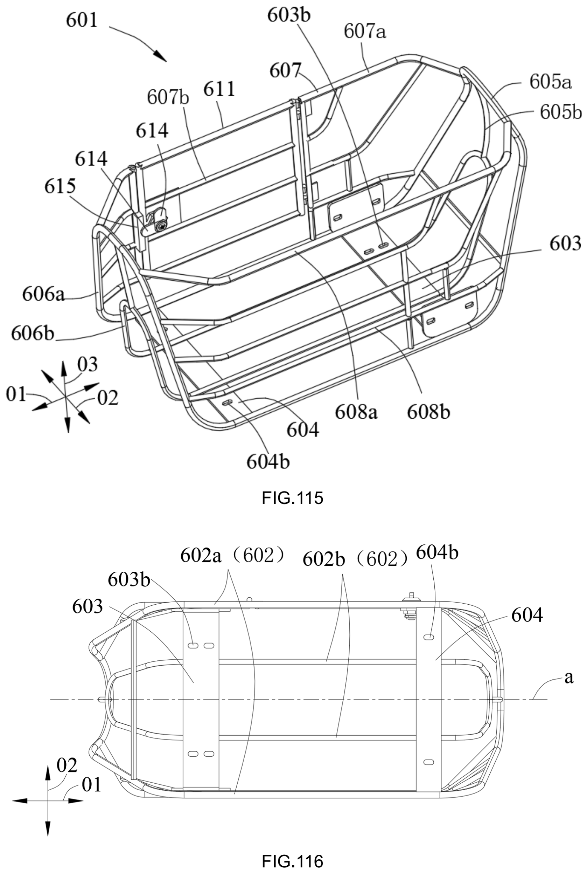

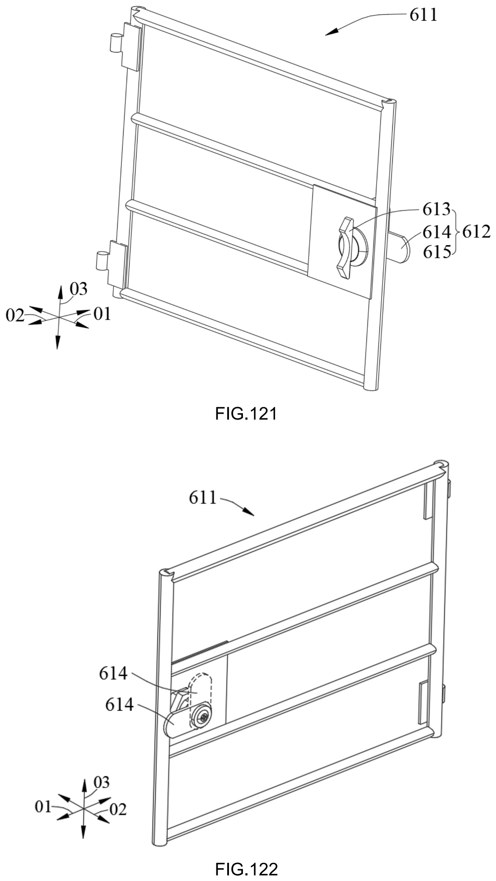

In some embodiments, the door lock 612 includes an operation portion 613, a latch portion 614, and a first limiting portion 615. The operation portion 613 and the latch portion 614 are movably provided on the side door 611. The operation portion 613 rotates together with the latch portion 614, so that the movement of the operation portion 613 can drive the movement of the latch portion 614. The first limiting portion 615 is provided on the third side 607. The latch portion 614 is movable to switch between a first state and a second state. When the side door 611 is closed and the latch portion 614 is in the first state, the first limiting portion 615 is located on the outside of the latch portion 614 to limit the position of the latch portion 614 in the second direction 02, thereby keeping the side door 611 in the closed state. When the latch portion 614 is in the second state, the latch portion 614 is set to avoid the first limiting portion 615, thereby allowing the side door 611 to rotate open. Specifically, referring to FIG. 115 and FIG. 122, the solid line and the dashed line represent the two states of the latch portion 614, where the solid line is the latch portion 614 in the first state, and the dashed line is the latch portion 614 in the second state.

Optionally, in other embodiments, the door lock further includes a second limiting portion provided on the third side, to restrict the latch portion from continuing to move after it moves to the first state, thereby keeping the latch portion in the first state and the side door in the closed state. Specifically, the second limiting portion can be provided on the side door, or it can be provided on the third side.

Referring to FIG. 101 to FIG. 113, in some embodiments, the vehicle 600 further includes two pedal assemblies 616 respectively provided on both sides of the vehicle 600 along the second direction 02. The pedal assemblies 616 are used for the rider to step on, thereby improving the rider's ability to maintain a stable sitting posture during riding, and enhancing riding comfort and safety.

In some embodiments, the two pedal assemblies 616 are symmetrically provided on both sides of the vehicle 600 along the second direction 02, enhancing the aesthetic effect and improving rider stability and riding safety. In other words, the two pedal assemblies 616 are symmetrically set relative to the plane of symmetry a.

In some embodiments, along the first direction 01, the distance L9 between the pedal assembly 616 and the seat 508 falls within the range of 210mm - 310mm, to improve the rider's comfort when stepping.

Specifically, L9 can be any value within the range of 210mm - 310mm, such as 210mm, 220mm, 230mm, 240mm, 250mm, 260mm, 270mm, 280mm, 290mm, 300mm, or 310mm.

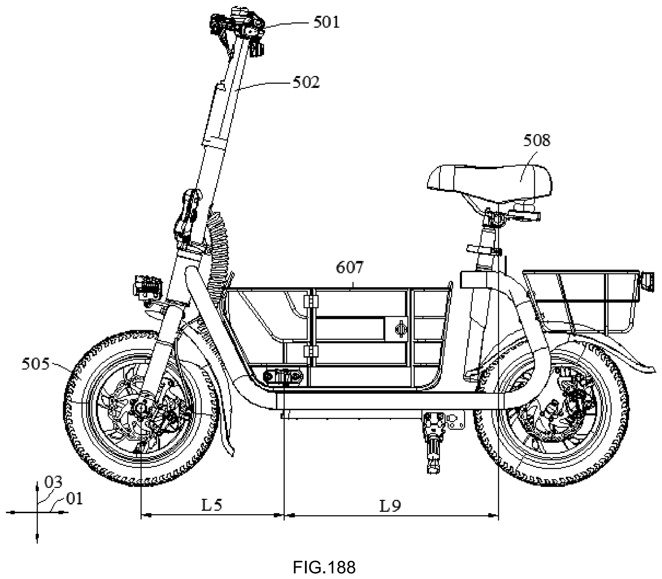

Referring to FIG. 188, in some embodiments, along the first direction 01, the distance between the seat 508 and the front wheel 505 is L5, and the ratio of L9 to L5 is K17, where K17 falls within the range of 0.5 - 0.65. If K17 is less than 0.5, the pedal assembly 616 is relatively close to the seat 508, providing a limited space for the rider to stretch their legs, which can easily cause the rider to need to extend their legs backward as much as possible, which is not conducive to improving riding comfort. If K17 is greater than 0.65, the pedal assembly 616 is relatively far from the seat 508, which can easily cause the rider to need to stretch their legs forward as much as possible, which is detrimental to ensuring the stability of the rider's feet placed on the pedal assembly 616, and also results in poor comfort.

Specifically, K17 can be any value within the range of 0.5 - 0.65, such as 0.5, 0.51, 0.52, 0.53, 0.54, 0.55, 0.56, 0.57, 0.58, 0.59, 0.6, 0.61, 0.62, 0.63, 0.64, or 0.65.

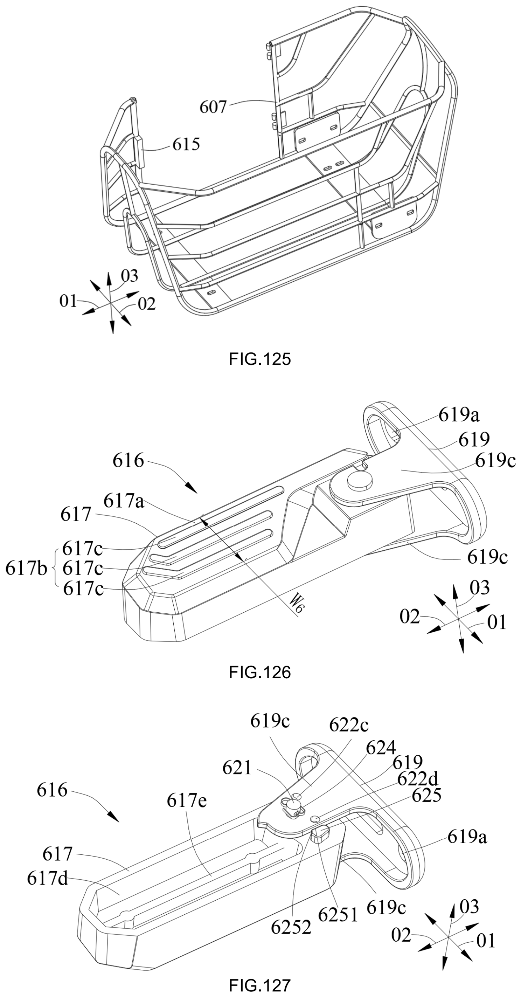

Referring to FIG. 126 to FIG. 147, in some embodiments, the pedal assembly 616 includes a footpeg 617, and the footpeg 617 has a tread surface 617a, which is used for stepping. The rider's foot is in surface contact with the pedal assembly 616, improving the rider's stability when stepping, which facilitates maintaining a stable sitting posture during riding and enhances riding comfort and safety.

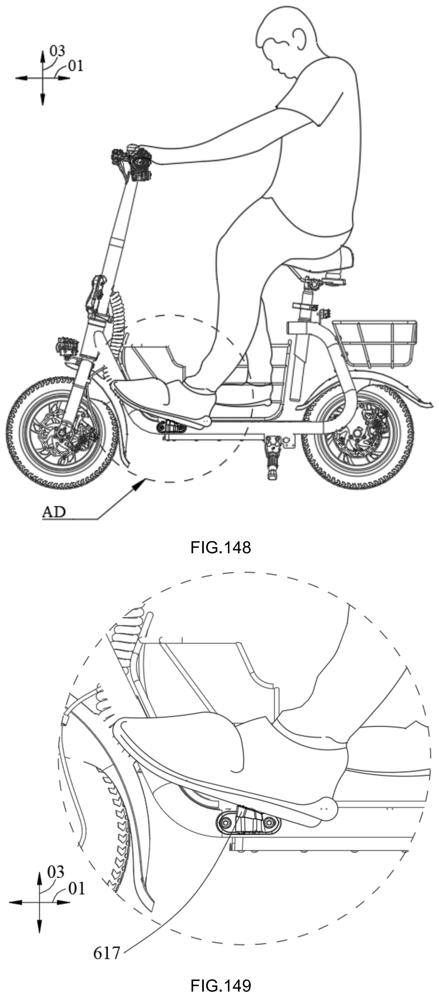

Referring to FIG. 126 and FIG. 149, in some embodiments, the tread surface 617a is provided with a second anti-slip mechanism 617b, improving the rider's stability when stepping.

Specifically, in some embodiments, the second anti-slip mechanism 617b includes multiple protrusions 617c fixedly provided on the tread surface 617a.

More specifically, in some embodiments, the protrusions 617c are strip-shaped, which has a simple structure and facilitates processing. It can be understood that, in other embodiments, the protrusions 617c are not limited to being strip-shaped, but can also be regular or irregular shapes such as dots or diamonds.

In some embodiments, the extending direction of the protrusions 617c is substantially along the second direction 02, in order to provide the rider with resistance parallel to the tread surface 617a and perpendicular to the second direction 02, reducing the risk of the rider slipping out of the tread surface 617a in a direction perpendicular to the second direction 02, and improving stability when stepping.

In some embodiments, the number of protrusions 617c is three. It can be understood that, in other embodiments, the number of protrusions 617c is not limited to three, but can also be one, two, or more than three.

In some embodiments, the multiple protrusions 617c are arranged in a direction perpendicular to the second direction 02 and parallel to the tread surface 617a. It can be understood that, in other embodiments, the arrangement direction of the multiple protrusions 617c is not limited to this, but can also be arranged along other directions, such as in a regular or irregular manner like an array.

In some embodiments, the outer ends of some of the protrusions 617c are inclined forward along the tread surface 617a, to provide the rider's foot with resistance along the second direction 02, preventing the rider's foot from sliding outward along the second direction 02.

In some embodiments, the protrusions 617c are integrally formed with the footpeg 617. It can be understood that, in other embodiments, the protrusions 617c and the footpeg 617 can also be set separately, and then fixedly connected by methods such as welding or adhesion.

It can be understood that, in other embodiments, the second anti-slip structure 617b is not limited to this, but can also be a roughened surface, an etched surface, an anti-slip coating, or an anti-slip pad fixed on the tread surface 617a.

In some embodiments, the material of the footpeg 617 is carbon structural steel, which has strong supporting strength.

In some embodiments, the width W11 of the tread surface 617a falls within the range of 15mm - 32mm. W11 is less than or equal to 32mm, which allows for a small width of the footpeg 617, facilitating the compact design and lightweight design of the footpeg 617, and the compact design and lightweight design of the vehicle 600. W11 is greater than or equal to 15mm, to provide the rider with higher stepping comfort. It should be noted that, in this application, the width direction of the tread surface 617a is parallel to the tread surface 617a and perpendicular to the second direction 02.

Specifically, W11 can be any value within the range of 15mm - 32mm, such as 15mm, 17mm, 19mm, 21mm, 23mm, 25mm, 27mm, 29mm, or 31mm.

In some embodiments, the length L10 of the tread surface 617a falls within the range of 70mm - 110mm. L10 is greater than or equal to 70mm, which allows more of the rider's foot to step on the tread surface 617a, satisfying the stepping needs of more riders. L10 is less than or equal to 110mm, which allows for a small length of the footpeg 617, facilitating the compact design and lightweight design of the footpeg 617, and the compact design and lightweight design of the vehicle 600. It should be noted that, in this application, the length direction of the tread surface 617a is along the second direction 02.

Specifically, L10 can be any value within the range of 70mm - 110mm, such as 70mm, 75mm, 80mm, 85mm, 90mm, 95mm, 100mm, 105mm, or 110mm.

Referring to FIG. 127, FIG. 131, FIG. 140, and FIG. 141, in some embodiments, the back surface of the footpeg 617 is provided with a second weight-reducing groove 617d, to reduce the weight of the footpeg 617, facilitating the lightweight design of the footpeg 617, and the lightweight design of the vehicle 600.

In some embodiments, a first reinforcing rib 617e is provided inside the second weight-reducing groove 617d, to enhance the supporting strength of the footpeg 617. In some embodiments, the first reinforcing rib 617e extends along the second direction 02, to enhance the bending resistance of the footpeg 617.

In some embodiments, the two ends of the first reinforcing rib 617e along the second direction 02 are respectively fixedly connected to the two side walls of the second weight-reducing groove 617d along the second direction 02, to better enhance the bending resistance of the footpeg 617 and improve the supporting strength of the footpeg 617.

In some embodiments, the thickness W12 of the first reinforcing rib 617e along the first direction 01 falls within the range of 2mm - 5mm, which allows the footpeg 617 to have strong bending resistance without excessively increasing the weight of the footpeg 617.

Specifically, W12 can be any value within the range of 2mm - 5mm, such as 2mm, 2.5mm, 3mm, 3.5mm, 4mm, 4.5mm, or 5mm.

In some embodiments, the height of the first reinforcing rib 617e along the third direction 03 is less than the depth of the second weight-reducing groove 617d, which allows the footpeg 617 to have strong bending resistance without excessively increasing the weight of the footpeg 617.

In some embodiments, the number of first reinforcing ribs 617e is one. It can be understood that, in other embodiments, the number of first reinforcing ribs 617e is not limited to one, but can also be two or more. Furthermore, in other embodiments, the extending direction of the first reinforcing rib 617e is not limited to the second direction, but can also be along other directions, such as the first direction 01.

In other embodiments, the number of second weight-reducing grooves 617d is not limited to one, but can also be multiple. It can be understood that, when the number of second weight-reducing grooves 617d is multiple, the size and shape of the multiple second weight-reducing grooves 617d can be the same or different; the arrangement of the multiple second weight-reducing grooves 617d can be in regular or irregular shapes such as a straight line or an array.

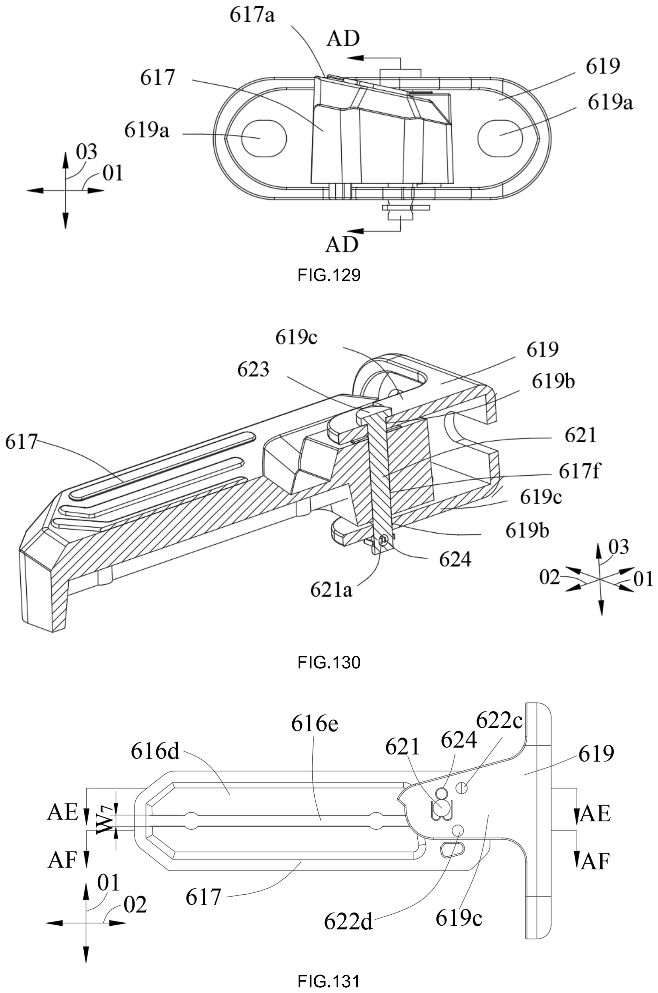

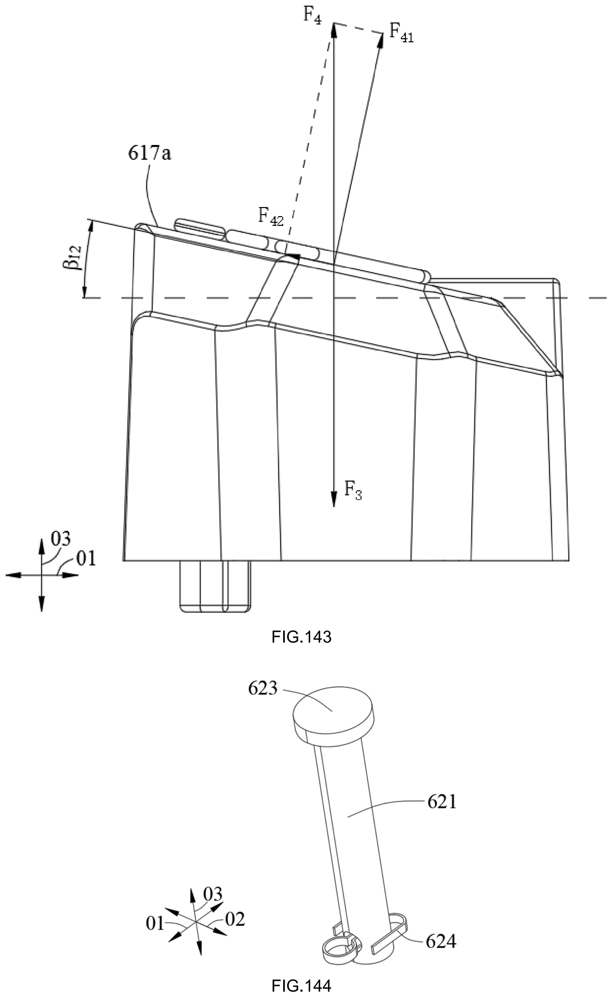

Referring to FIG. 129 and FIG. 143, in some embodiments, the tread surface 617a is inclined relative to the first plane. Specifically, the rear end of the tread surface 617a is inclined downward, reducing the angle between the rider's foot and calf and improving the rider's comfort.

In some embodiments, the angle β12 between the tread surface 617a and the first plane falls within the range of 8°~15°.

Let's define the force exerted by the rider's foot on the footpeg 617 as F3, where F3 is directed downward along the third direction 03. Correspondingly, the force exerted by the footpeg 617 on the rider's foot is F4. It can be understood that F4 is equal in magnitude and opposite in direction to F3. According to the parallelogram rule, F4 is decomposed into a component force F41 perpendicular to the tread surface 617a and a component force F42 parallel to the tread surface 617a, as shown in FIG. 143. It can be understood that F41 is the supporting force provided by the footpeg 617 to the rider. F42 is the friction force provided by the footpeg 617 to the rider. It can be understood that to prevent the foot from sliding off the tread surface 617a, the condition F42 ≤ F41 * µ must be satisfied, where µ is the static friction coefficient of the tread surface 617a. Specifically, according to the parallelogram rule, F41 = F4 * cosβ12; and F42 = F4 * sinβ12. Since F42 ≤ F41 * µ, it follows that µ ≥ tanβ12. It can be understood that β12 is an acute angle.

If F4 is the same, a larger β12 results in a smaller F41 and a larger F42. If F4 is the same, a larger β12 results in a smaller F41. The smaller F41 means the torque generated by the pressure of the foot is smaller, and thus the requirement for the supporting strength of the footpeg 617 is lower. Additionally, since µ ≥ tanβ12, a larger β12 requires a higher static friction coefficient for the tread surface 617a. If F4 is the same, a smaller β12 results in a larger F41 and a smaller F42. If F4 is the same, a larger F41 means the requirement for the supporting strength of the footpeg 617 is higher. Additionally, since µ ≥ tanβ12, a smaller β12 requires a lower static friction coefficient for the tread surface 617a.

It can be understood that a smaller static friction coefficient for the tread surface 617a requires lower roughness or less complex shape, which facilitates processing. Furthermore, a smaller static friction coefficient for the tread surface 617a allows for a wider selection of materials for the footpeg 617, i.e., a larger variety of applicable materials, offering more selectivity.

Similarly, lower supporting strength requirements for the footpeg 617 lead to lower structural requirements for the footpeg 617 and allow for a wider selection of materials, i.e., a larger variety of applicable materials, offering more selectivity.

The range of β12 falling within 8°~15° is chosen to achieve a balance between the required supporting strength of the footpeg 617 and the required static friction coefficient of the tread surface 617a. This avoids excessively high requirements for the supporting strength of the footpeg 617 and also avoids excessively high requirements for the static friction coefficient of the tread surface 617a, increasing the diversity of material selection for the footpeg 617, reducing the complexity of the shape of the footpeg 617, and lowering the processing difficulty of the footpeg 617.

In addition, from the rider's perspective, having β12 fall within the range of 8°~15° reduces the angle between the foot and the calf. The rider needs to apply less additional force, easing the tension in the ankles and knees during riding, improving riding comfort, and reducing fatigue from long rides. In other words, the rider can apply greater pressure to the footpeg 617 without applying excessive extra force.

From an ergonomic perspective, when the human body stands naturally, the foot typically inclines forward, and higher comfort is achieved when the inclination angle falls within the range of 5°~15°. During riding, the rider's calf is inclined backward. The inclination angle β12 of the tread surface 617a falls within the range of 8°~15°, allowing the foot to also incline in roughly the same direction, keeping the rider's foot in a comfortable position, reducing pressure on the rider's ankles and knees, and improving riding comfort.

Furthermore, riding often involves situations like acceleration, deceleration, uphill travel, and downhill travel. Operation is relatively complex and requires higher mental concentration during acceleration, deceleration, uphill, and downhill travel. For example, during acceleration, the rider needs to increase the grip force on the handlebar 501 to keep the handlebar 501 stable, thereby maintaining riding stability. The rider also needs to allocate more attention to observing the conditions ahead to anticipate road conditions and obstacles in advance. Another example is during deceleration, the rider also needs to increase the grip force on the handlebar 501 to keep the handlebar 501 stable, thereby maintaining riding stability. The rider needs to control the braking force to control the magnitude of deceleration, allowing the vehicle 600 to decelerate stably at an appropriate rate. They also need to control the coordination of the front and rear brakes to prevent the front wheel 505 from locking up. Another example is during uphill travel, the rider needs to increase the grip force on the handlebar 501 to reduce the risk of the vehicle 600 swaying left and right along the second direction 02, allowing the vehicle 600 to better follow the predetermined route and maintain riding stability. The rider also needs to control the magnitude of acceleration based on the steepness of the slope, allowing the vehicle 600 to move forward more smoothly. Another example is during downhill travel, the rider needs to increase the grip force on the handlebar 501 to reduce the risk of the vehicle 600 swaying left and right along the second direction 02, allowing the vehicle 600 to travel more stably along the predetermined route. Also, during downhill travel, the vehicle 600 accelerates under the influence of gravity, and the rider needs to control the braking force to control the magnitude of acceleration, allowing the vehicle 600 to accelerate stably, maintain uniform speed, or even decelerate at an appropriate rate. They also need to control the coordination of the front and rear brakes to prevent the front wheel 505 from locking up.

It can be understood that in situations requiring more complex operation and higher mental concentration, such as acceleration, deceleration, uphill, and downhill travel, having the tread surface 617a inclination angle β12 fall within the range of 8°~15° means the rider needs to apply less, or even no, additional stepping force to maintain body balance. This eases the tension in the ankles and knees during riding, thereby reducing the complexity of the operation and not excessively increasing the degree of mental concentration required, improving riding comfort and reducing the fatigue caused by long rides. This allows the vehicle 600 to be suitable for different road conditions and meet the riding needs of more riders.

Additionally, having the tread surface 617a inclination angle β12 fall within the range of 8°~15° means the rider needs to apply less, or even no, additional stepping force to maintain body balance. This avoids the impact of an unstable force application position of the rider's foot due to reasons such as improper stepping position or non-standard movement during riding, thereby reducing the phenomenon of foot or joint fatigue caused by unstable force application positions.

Furthermore, the inclination angle β12 of the tread surface 617a falling within the range of 8°~15° prevents the angle between the rider's foot and calf from being too small, thereby reducing the muscular burden on the ankle and calf, improving riding comfort, reducing the fatigue caused by long rides, and reducing muscle soreness and muscle damage resulting from this.

In some embodiments, the pedal assembly 616 is fixedly provided on the second basket 601, and the second basket 601 is easily detachable. After the second basket 601 is detached, the pedal assembly 616 is removed from the vehicle 600 along with it, reducing the weight of the vehicle 600, which facilitates the lightweight design of the vehicle 600. It can also be understood that when the second basket 601 is removed, the rider's feet can be placed in the location of the second section 504b of the frame 504. Therefore, even without the pedal assembly 616, the rider can maintain a relatively stable sitting posture, improving riding safety.

Specifically, referring to FIG. 113, in some embodiments, the pedal assembly 616 and the second basket 601 are fixedly connected by a fourth bolt connection assembly 618, which facilitates the detachment between the pedal assembly 616 and the second basket 601. During storage or transportation, detaching the pedal assembly 616 and the second basket 601 allows for a more reasonable arrangement, efficient use of space, and reduction of occupied space, facilitating storage and transportation. When needed for use, the pedal assembly 616 and the second basket 601 can be fixedly connected again by the fourth bolt connection assembly 618, to facilitate the rider's stepping. In addition, when the detached pedal assembly 616 and the second basket 601 need to be carried, the fourth bolt connection assembly 618 can be used to realize the fixed connection between the pedal assembly 616 and the second basket 601, reducing the number of structures to be carried and reducing the risk of losing the pedal assembly 616 and the fourth bolt connection assembly 618.

Specifically, referring to FIG. 113, FIG. 114, FIG. 126 to FIG. 138, FIG. 146, and FIG. 147, in some embodiments, the pedal assembly 616 is provided with an eighth fixing hole 619a, and the second basket 601 is provided with a ninth fixing hole 620a. Both the eighth fixing hole 619a and the ninth fixing hole 620a match the fourth bolt connection assembly 618.

In some embodiments, the bolt specification of the fourth bolt connection assembly 618 is a semi-round head bolt. The rounded cap can prevent scratching items or animals inside the basket, especially avoiding scratching the pet's feet.

Specifically, the bolt specification of the fourth bolt connection assembly 618 is M6, which ensures a stable connection while being relatively small, favoring the compact design of the vehicle 500.

In other examples, the bolt specification of the fourth bolt Connection assembly 618 can also be other specifications, such as M8, M10, or M14.

In some embodiments, the number of the eighth fixing hole 619a and the ninth fixing hole 620a are both two, and the two eighth fixing holes 619a correspond one-to-one with the two ninth fixing holes 620a, to improve the stability of the fixed connection between the pedal assembly 616 and the second basket 601, and prevent the rotation of the pedal assembly 616. It can be understood that, in other embodiments, the number of eighth fixing holes 619a is not limited to two, but can also be one or more than two. Correspondingly, the number of ninth fixing holes 620a is also not limited to two, but can also be one or more than two.

In some embodiments, the pedal assembly 616 includes a first fixing member 619, and the eighth fixing hole 619a is provided on the first fixing member 619. Specifically, the first fixing member 619 is located on the inner side of the pedal assembly 616, i.e., the first fixing member 619 is located on the side of the footpeg 617 closer to the other pedal assembly 616.

In some embodiments, a second fixing member 620 is fixedly provided on the second basket 601, and the ninth fixing hole 620a is provided on the second fixing member 620. Specifically, in some embodiments, the second fixing member 620 is located on the side wall of the second basket 601.

Further, in some embodiments, the second fixing member 620 is fixedly provided on the inner side of the corresponding sidewall of the second basket 601. The constraint provided by the corresponding sidewall of the second basket 601 reduces the risk of the second fixing member 620 disconnecting from the second basket 601 under the action of the pedal assembly 616. In addition, since the second fixing member 620 is located on the inner side of the corresponding sidewall of the second basket 601, even if the second fixing member 620 disconnects from the second basket 601 due to external force, the bottom wall of the second basket 601 can receive the second fixing member 620, reducing the risk of the second fixing member 620 being lost. Furthermore, the second fixing member 620 is located on the inner side of the corresponding sidewall of the second basket 601, which reduces the space occupied by the second basket 601 due to the arrangement of the second fixing member 620. Furthermore, the second fixing member 620 is located on the inner side of the corresponding sidewall of the second basket 601, reducing the risk of the rider accidentally bumping into the second fixing member 620 while stepping on the pedal assembly 616, thereby reducing the risk of the rider being accidentally injured by the second fixing member 620.

In some embodiments, the second fixing member 620 is plate-shaped. On one hand, this facilitates matching with the fourth bolt connection assembly 618, improving the stability of the fixed connection between the pedal assembly 616 and the second basket 601. On the other hand, it reduces the impact of the arrangement of the second fixing member 620 on the shape of the inner cavity of the second basket 601, reducing the risk of items or animals placed in the second basket 601 being accidentally injured by the second fixing member 620. Furthermore, the second fixing member 620 has a simple structure, facilitating its preparation. Still further, the second fixing member 620 has a small weight, which prevents the arrangement of the second fixing member 620 from excessively increasing the weight of the second basket 601, facilitating the lightweight design of the second basket 601 and the lightweight design of the vehicle 600.

In some embodiments, the two second fixing members 620, which are fixedly connected to the two pedal assemblies 616 respectively, are symmetrically provided on the second basket 601, to make the force distribution on the second basket 601 more balanced and reduce the phenomenon of local stress concentration in the second basket 601.

In some embodiments, the two second fixing members 620 are fixedly provided on the third side 607 and the fourth side 608, respectively.

In some embodiments, the material of the second fixing member 620 is carbon structural steel. On one hand, the second fixing member 620 made of carbon structural steel has high rigidity and strength, allowing the pedal assembly 616 to be stably fixed to the second basket 601. On the other hand, carbon structural steel is easy to plasticize, facilitating the preparation of the second fixing member 620.

The thickness of the second fixing member 620 along the second direction 02 falls within the range of 1mm - 6mm. This both allows for a stable connection of the pedal assembly 616 and avoids excessive occupation of the inner cavity space of the second basket 601 and excessive increase in the weight of the second basket 601.

Specifically, the thickness of the second fixing member 620 along the second direction 02 can be any value within the range of 1mm - 6mm, such as 1mm, 1.4mm, 1.8mm, 2.2mm, 2.6mm, 3mm, 3.4mm, 3.8mm, 4.2mm, 4.6mm, 5mm, 5.4mm, 5.8mm, or 6mm.

In some embodiments, the second fixing member 620 is rectangular plate-shaped, which has a simple structure and facilitates processing.

In some embodiments, the length of the second fixing member 620 along the first direction 01 falls within the range of 30mm - 60mm, and the height along the third direction 03 falls within the range of 35mm - 75mm. This allows for a small volume while ensuring the stable connection of the pedal assembly 616, facilitating the lightweight design of the pedal assembly 616.

Specifically, the length of the second fixing member 620 along the first direction 01 can be any value within the range of 30mm - 60mm, such as 30mm, 35mm, 40mm, 45mm, 50mm, 55mm, or 60mm. The height of the second fixing member 620 along the third direction 03 can be any value within the range of 35mm - 75mm, such as 35mm, 41mm, 47mm, 53mm, 59mm, 65mm, 71mm, or 75mm.

Specifically, in some embodiments, the second fixing member 620 is fixedly connected to the corresponding sidewall of the second basket 601 and is fixedly connected to the first fixing plate 603, so that the second fixing member 620 is more firmly installed on the second basket 601. In addition, the fixed connection between the second fixing member 620 and the first fixing plate 603 allows the first fixing plate 603 to share the stress exerted by the pedal assembly 616 on the second fixing member 620, reducing the risk of deformation of the second fixing member 620.

In some embodiments, the second fixing member 620 is integrally formed with the first fixing plate 603, simplifying the assembly steps of the second basket 601.

In some embodiments, the nut of the fourth bolt connection assembly 618 is located on the side of the first fixing member 619 away from the second fixing member 620, and the head of the bolt of the fourth bolt connection assembly 618 is located on the side of the second fixing member 620 away from the first fixing member 619. This prevents the threaded rod of the bolt of the fourth bolt connection assembly 618 from being exposed inside the second basket 601, thereby preventing items or animals inside the second basket 601 from being accidentally injured by the threaded rod of the bolt of the fourth bolt connection assembly 618.

In some embodiments, in other embodiments, the position of the pedal assembly 616 along the first direction 01 is adjustable, in order to better meet the needs of riders with different leg lengths and improve riding comfort. In other words, the rider can adjust the position of the pedal assembly 616 along the first direction 01 as needed to improve stepping comfort. For example, in other embodiments, both the third side 607 and the fourth side 608 of the second basket 601 are provided with two second fixing members 620. The two second fixing members 620 on the third side 607 are arranged along the first direction 01, and the two second fixing members 620 on the fourth side 608 are arranged along the first direction 01. Thus, the rider can fix the pedal assembly 616 to the appropriate second fixing member 620 as needed to improve the rider's comfort. Another example is that, in other embodiments, the number of ninth fixing holes 620a on the second fixing member 620 is more than the number of eighth fixing holes 619a. By selecting different ninth fixing holes 620a to match the eighth fixing holes 619a, the position of the pedal assembly 616 along the first direction 01 can be adjusted.

Referring to FIG. 113, FIG. 126 to FIG. 145, and FIG. 150, in some embodiments, the footpeg 617 of the pedal assembly 616 is foldable toward the second basket 601. Specifically, by folding the footpeg 617 when not riding, the risk of people or animals around the vehicle 600 accidentally touching the footpeg 617 and being injured is avoided. Additionally, folding the footpeg 617 reduces the size of the space it occupies along the second direction 02, facilitating the storage or transportation of the second basket 601 installed with the pedal assembly 616. Furthermore, the folding of the footpeg 617 also reduces the risk of the footpeg 617 being collided with, lowers the risk of damage to the footpeg 617, and improves the service life of the footpeg 617.

In some embodiments, the rotation axis of the footpeg 617 of the pedal assembly 616 is along the third direction 03. The footpeg 617 can be folded backward along the axis 06.

Specifically, in some embodiments, the footpeg 617 is rotatably connected to the first fixing member 619.

More specifically, in some embodiments, the pedal assembly 616 further includes a second pivot shaft 621. The end of the footpeg 617 near the first fixing member 619 is provided with a first pivot hole 617f, and the first fixing member 619 is provided with a second pivot hole 619b. Both the first pivot hole 617f and the second pivot hole 619b match the second pivot shaft 621. In other words, the second pivot shaft 621 is inserted into the first pivot hole 617f and the second pivot hole 619b, allowing the footpeg 617 to rotate relative to the first fixing member 619. It can be understood that the first pivot hole 617f and the second pivot hole 619b extend along the third direction 03.

More specifically, in some embodiments, one end of the second pivot shaft 621 along the third direction 03 is fixedly provided with a first stopper 623, and the other end is fixedly provided with a second stopper 624, so that the second pivot shaft 621 remains inserted in the first pivot hole 617f and the second pivot hole 619b.

More specifically, in some embodiments, the first stopper 623 is integrally formed with the second pivot shaft 621, reducing assembly steps and improving the assembly efficiency of the pedal assembly 616.

In some embodiments, the end of the second pivot shaft 621 provided with the second stopper 624 is provided with a first through hole 621a. The angle between the first through hole 621a and the third direction 03 is greater than zero. The second stopper 624 is a bendable structure and can be inserted through the first through hole 621a. Therefore, after the second stopper 624 is inserted through the first through hole 621a, bending it prevents the second stopper 624 from coming out of the first through hole 621a. Of course, the second pivot shaft 621 can also be disassembled by bending the second stopper 624 and then withdrawing the second stopper 624 from the first through hole 621a, which facilitates the maintenance of the pedal assembly 616.

In some embodiments, the material of the second stopper 624 is low carbon steel, which allows the rider to bend the second stopper 624 by hand and can maintain the bent shape well, preventing the second stopper 624 from being pulled out of the first through hole 621a.

In some embodiments, the first fixing member 619 is provided with a cantilever 619c. The second pivot hole 619b is provided on the cantilever 619c. It can be understood that the cantilever 619c is located on the outer side of the first fixing member 619, i.e., the cantilever 619c is located on the side of the first fixing member 619 closer to the footpeg 617. By providing the cantilever 619c to locate the second pivot hole 619b on it, the rotating connection between the footpeg 617 and the first fixing member 619 can be achieved, and the size of the first fixing member 619 can also be reduced, facilitating the compact design and lightweight design of the pedal assembly 616.

In some embodiments, the number of cantilevers 619c is two, arranged along the third direction 03. The position of the footpeg 617 provided with the first pivot hole 617f is located between the two cantilevers 619c. The provision of two cantilevers 619c can share the force exerted by the pedal assembly 616 on the first fixing member 619, reducing the phenomenon of local stress concentration in the footpeg 617 and the first fixing member 619.

In addition, since the footpeg 617 is located between the two cantilevers 619c, the two cantilevers 619c can also provide constraint on the footpeg 617, reducing the risk of the footpeg 617 tilting downward under the stepping action, thereby better maintaining the rider's stepping comfort.

It can be understood that the footpeg 617 can rotate under the action of an external force, allowing the pedal assembly 616 to switch between an open state and a folded state. In some embodiments, the pedal assembly 616 is provided with a pedal retaining mechanism 622, so that when the footpeg 617 rotates to the open state of the pedal assembly 616, it can be maintained in the open state; and when the footpeg 617 rotates to the folded state of the pedal assembly 616, it can be maintained in the folded state. Maintaining the pedal assembly 616 in the open state improves the rider's stepping stability and enhances riding safety. Maintaining the pedal assembly 616 in the folded state avoids the risk of the footpeg 617 being accidentally damaged by an external force due to deviating from the folded state, and also avoids the risk of people or animals around the footpeg 617 being bumped and injured by the footpeg 617.

Specifically, in some embodiments, the pedal retaining mechanism 622 includes a first limiting member 622a, a first return member 622b, a first limiting groove 622c, and a second limiting groove 622d. The first limiting member 622a is movably provided on the footpeg 617 along the third direction 03. The first limiting groove 622c and the second limiting groove 622d are both provided on the first fixing member 619. When the footpeg 617 rotates to the open state, the first limiting member 622a moves with the footpeg 617 to the position of the first limiting groove 622c, and under the action of the first return member 622b, moves to be partially inserted into the first limiting groove 622c, thereby keeping the footpeg 617 in the open state. When the footpeg 617 rotates from the open state to the folded state under the action of an external force, the first limiting member 622a, under the action of the external force, overcomes the action of the first return member 622b and slides out of the first limiting groove 622c, moves with the footpeg 617 to the position of the second limiting groove 622d, and under the action of the first return member 622b, moves to be partially inserted into the second limiting groove 622d, thereby keeping the footpeg 617 in the folded state. When the footpeg 617 rotates from the folded state to the open state under the action of an external force, the first limiting member 622a, under the action of the external force, overcomes the action of the first return member 622b and slides out of the second limiting groove 622d, moves with the footpeg 617 to the position of the first limiting groove 622c, and under the action of the first return member 622b, moves to be partially inserted into the first limiting groove 622c, thereby keeping the footpeg 617 in the folded state.

When the footpeg 617 rotates to the open state of the pedal assembly 616, and the first limiting member 622a is partially inserted into the first limiting groove 622c under the action of the first return member 622b, a clicking sound occurs when the first limiting member 622a abuts against the groove wall of the first limiting groove 622c, allowing the operator to clearly determine that the pedal assembly 616 is in the open state. When the footpeg 617 rotates to the folded state of the pedal assembly 616, and the first limiting member 622a is partially inserted into the second limiting groove 622d under the action of the first return member 622b, a clicking sound occurs when the first limiting member 622a abuts against the groove wall of the second limiting groove 622d, allowing the operator to clearly determine that the pedal assembly 616 is in the folded state.

In some embodiments, the first limiting member 622a is spherical, with a smooth transition on its outer surface, facilitating the sliding of the first limiting member 622a into and out of the first limiting groove 622c and the second limiting groove 622d.

In some embodiments, the first return member 622b is a spring.

Further, in some embodiments, the bottom surface of the footpeg 617 is provided with a retaining groove 622e. The first return member 622b is disposed inside the retaining groove 622e. One end of the first limiting member 622a abuts against the bottom wall of the retaining groove 622e, and the other end abuts against the first limiting member 622a. The first limiting groove 622c and the second limiting groove 622d are located on the top surface of the cantilever 619c on the bottom side of the footpeg 617. Therefore, the first limiting member 622a can be moved, under the action of the first return member 622b, to be partially inserted into the first limiting groove 622c or the second limiting groove 622d.

In some embodiments, the material of the first limiting member 622a is carbon structural steel. When the first limiting member 622a abuts against the groove wall of the first limiting groove 622c, the sound is louder and can be better perceived by the operator. Similarly, when the first limiting member 622a abuts against the groove wall of the second limiting groove 622d, the sound is also louder and can be better perceived by the operator.

In some embodiments, the first fixing member 619 is further provided with a second limiting member 625. The second limiting member 625 has a first limiting surface 6251 and a second limiting surface 6252. When the footpeg 617 rotates so that the pedal assembly 616 is in the open state, the footpeg 617 abuts against the first limiting surface 6251 of the second limiting member 625 to limit further rotation of the footpeg 617. When the footpeg 617 rotates so that the pedal assembly 616 is in the folded state, the footpeg 617 abuts against the second limiting surface 6252 of the second limiting member 625 to limit further rotation of the footpeg 617.

When the pedal assembly 616 is in the open state, the rotation of the footpeg 617 is limited by the first limiting surface 6251 of the second limiting member 625, preventing the footpeg 617 from continuing to rotate under the rider's stepping action, thereby better maintaining the pedal assembly 616 in the open state and improving stepping stability.

When the pedal assembly 616 is in the folded state, the rotation of the footpeg 617 is limited by the second limiting surface 6252 of the second limiting member 625, preventing collision between the footpeg 617 and the second basket 601, and improving the service life of the second basket 601 and the footpeg 617.

Additionally, in some embodiments, when the rider drives the footpeg 617 to rotate to the open state of the pedal assembly 616, the tread surface 617a is inclined relative to the first plane, which facilitates the rider applying a force directed toward the front side of the footpeg 617, simplifying the operation.

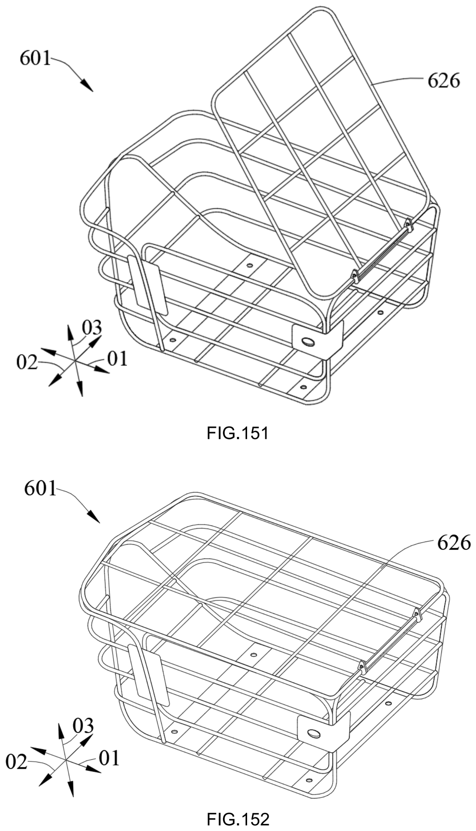

Referring to FIG. 151 and FIG. 152, the second basket 601 provided in another embodiment of this application also includes a basket lid 626. The provision of the basket lid 626, on one hand, prevents items or animals inside the second basket 601 from falling out due to the shaking of the vehicle 600; on the other hand, while the volume of the second basket 601 remains unchanged, in some cases, more items can be placed. For example, when the volume of the items to be placed is small, the presence of the basket lid 626 prevents the items from easily falling out, allowing more items to be placed in the second basket 601.

In some embodiments, the basket lid 626 is detachable, allowing the basket lid 626 to be installed or removed as needed, providing more convenience for the rider.

Specifically, in some embodiments, the basket lid 626 and the sidewall of the second basket 601 can be fixedly connected by methods such as snap connection or threaded connection.

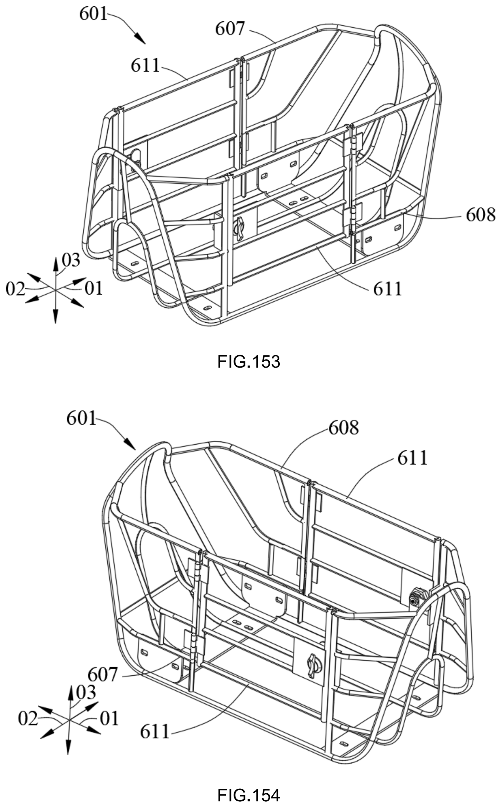

Referring to FIG. 153 and FIG. 154, the second basket 601 provided in another embodiment of this application is provided with a side door 611 on both the third side 607 and the fourth side 608. Depending on the position of the items or animals, the side door 611 on the third side 607 or the fourth side 608 can be selected to open, providing convenience for the rider.

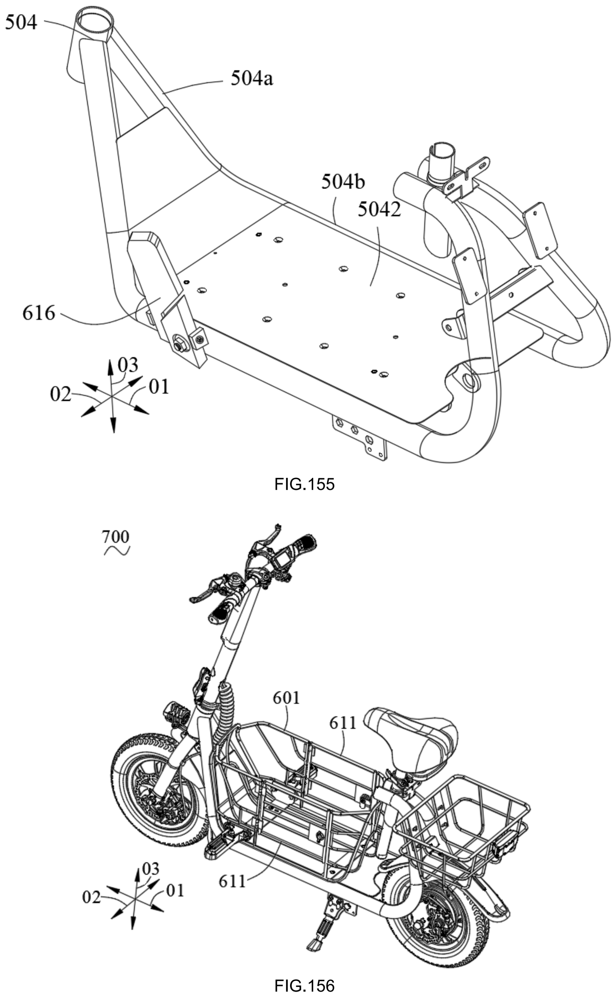

Referring to FIG. 155 , a schematic structural view of the pedal assembly 616 and the frame 504 provided in another embodiment of this application shows that the pedal assembly 616 is fixedly provided on the frame 504.

In some embodiments, the folding direction of the pedal assembly 616 is upward. In other words, the rotation axis of the pedal assembly 616 is roughly parallel to the first direction, i.e., the angle between the rotation axis of the pedal assembly 616 and the first direction falls within the range of 0°~5°.

In some embodiments, in other embodiments, the footpeg is telescopic along the second direction, allowing it to switch between an extended state and a retracted state. Thus, the footpeg can be extended to the extended state when stepping is required; when not needed, the footpeg can be shortened to the retracted state, avoiding space occupation by the footpeg and reducing the risk of collision between people or animals in the vicinity and the footpeg.

In some embodiments, in other embodiments, the length of the footpeg in the extended state along the second direction is adjustable, to adapt to the needs of different riders. When the rider has wider feet, the length of the extended footpeg is adjusted to improve stepping comfort; when the rider has narrower feet, the length of the shortened footpeg is adjusted to be smaller while satisfying stepping needs, reducing the risk of collision with people or animals in the vicinity.

In some embodiments, in other embodiments, the width of the footpeg along the first direction is adjustable, to adapt to the needs of different riders. When the rider has longer feet, the width of the widened footpeg is adjusted to improve stepping comfort; when the rider has shorter feet, the width of the shortened footpeg is adjusted to be smaller while satisfying stepping needs, reducing the risk of collision with people or animals in the vicinity. Alternatively, either one of the two footpegs can be moved forward or backward relative to the other..

Referring to FIG. 156 to FIG. 158, the vehicle 700 provided in another embodiment of this application differs from the vehicle 600 in that the second basket 601 is provided with two side doors 611. Depending on the position of the items or animals, the side door 611 that is closer in position is selected to be opened, improving convenience.

Specifically, in some embodiments, the two side doors 611 are provided on both sides of the second basket 601 along the second direction 02. After the second basket 601 is installed on the vehicle 700, the two side doors 611 are respectively located on the two sides of the vehicle 700 along the second direction 02. Therefore, when items or animals are located on either side of the vehicle 700 along the second direction 02, the items or animals can be placed inside the second basket 601 simply by opening the side door 611 on the corresponding side.

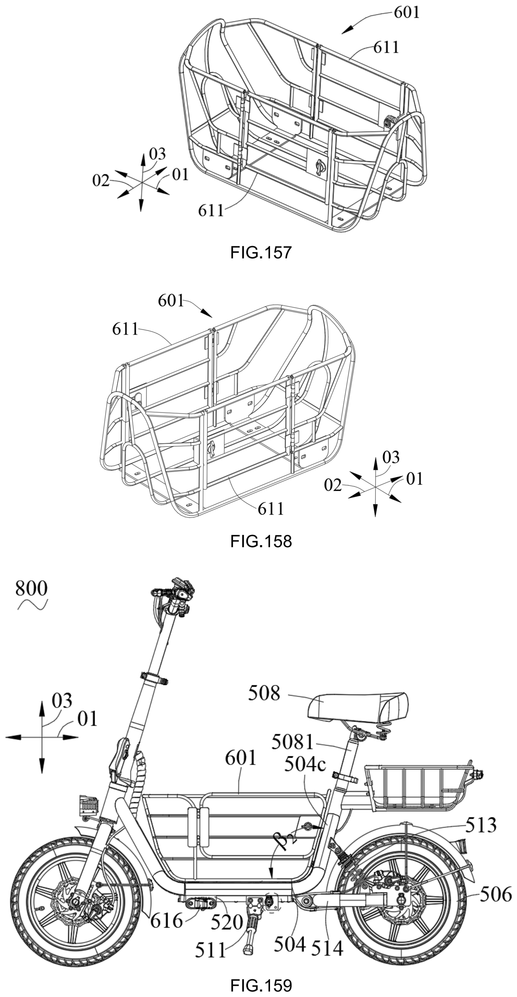

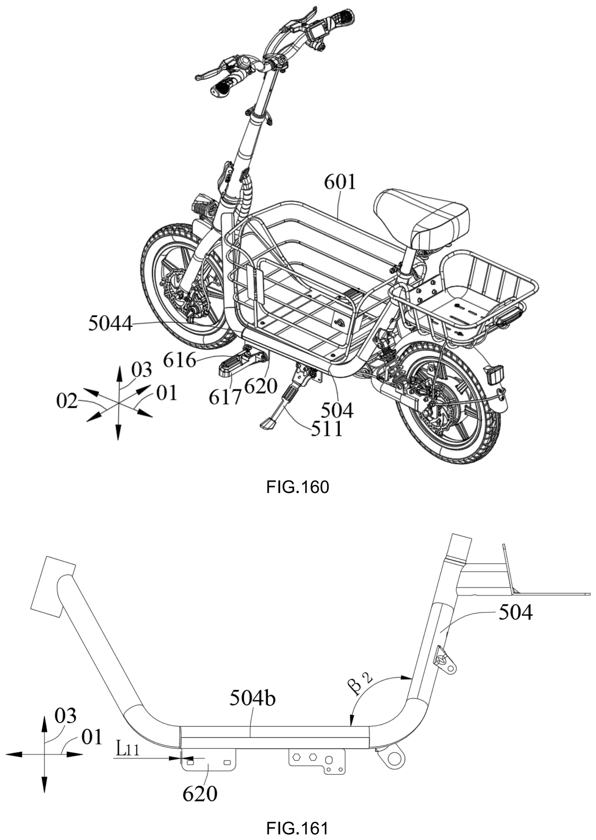

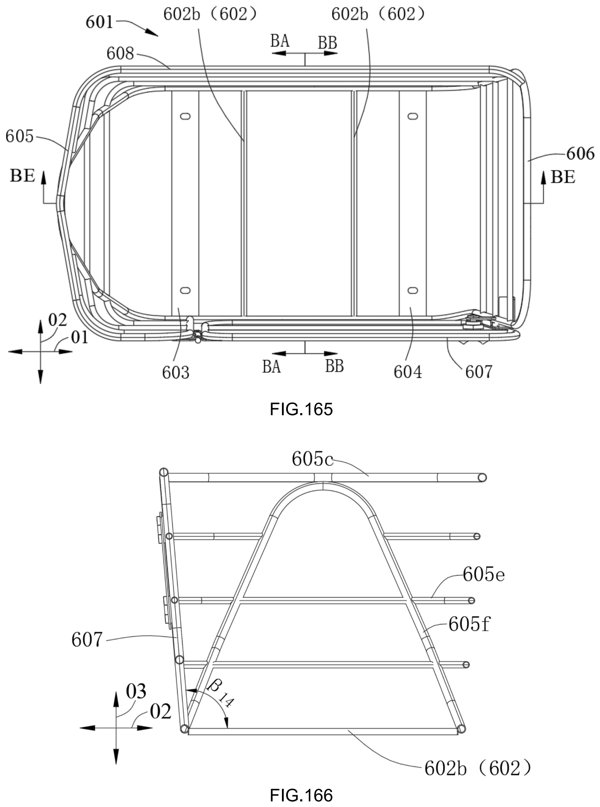

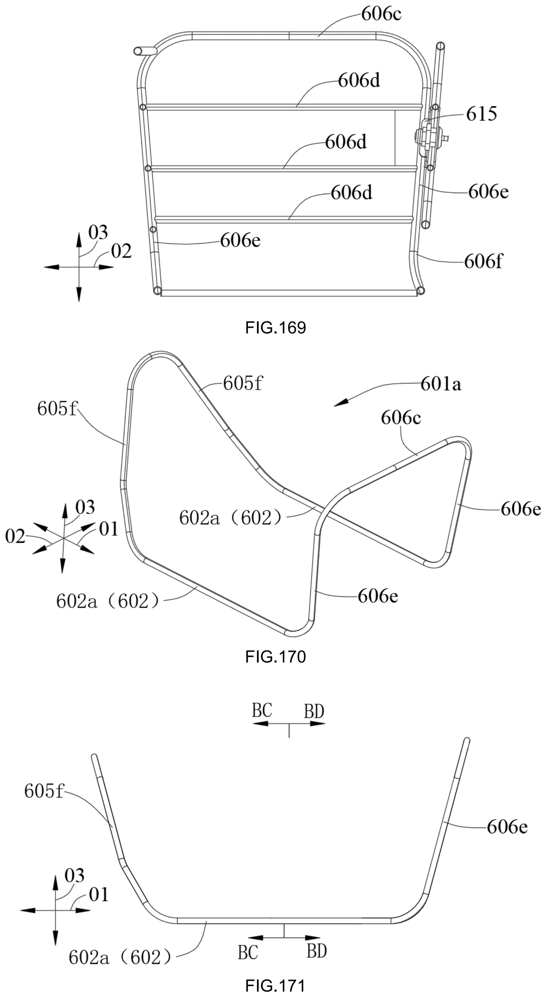

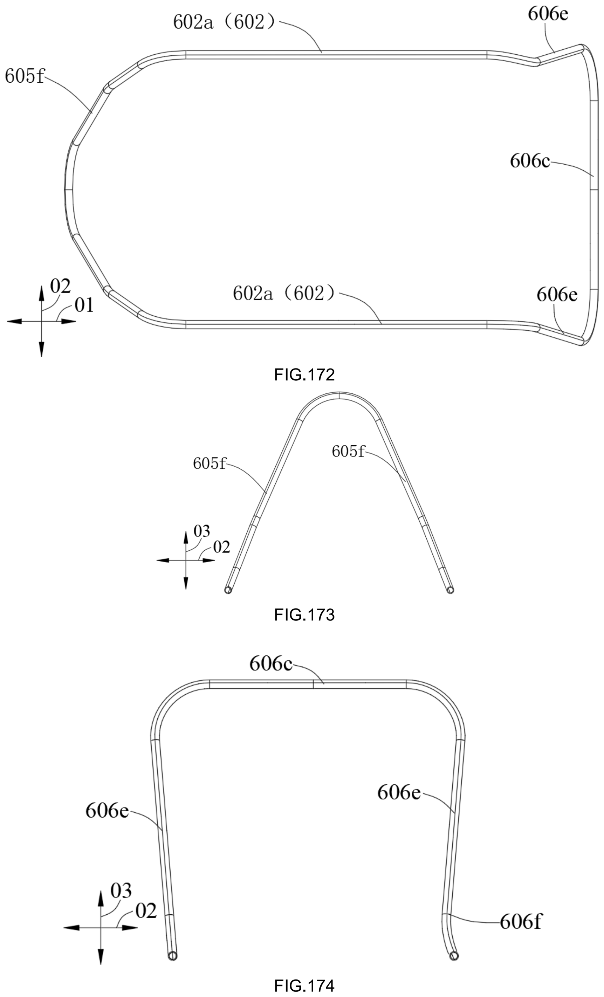

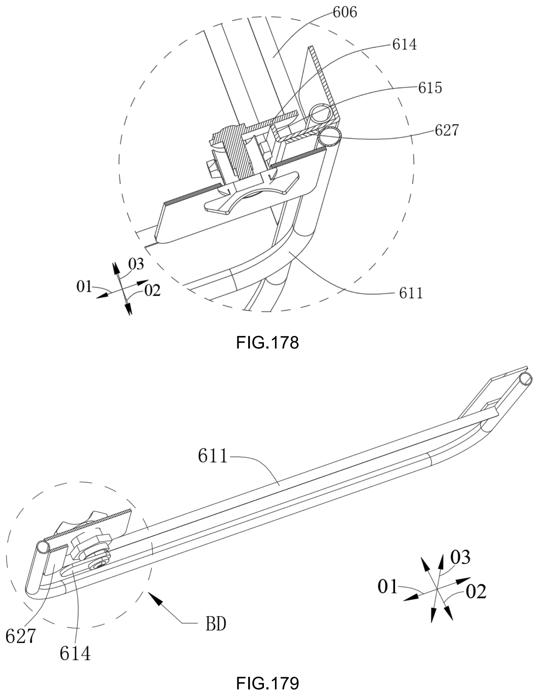

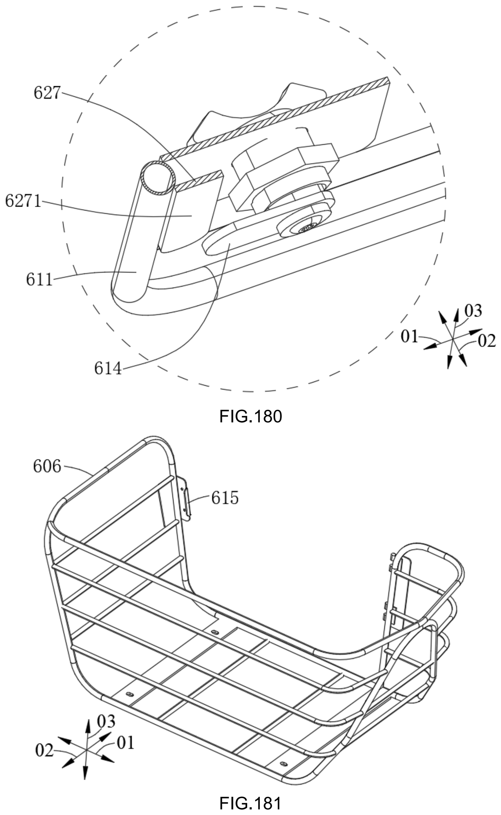

Referring to FIG. 159 to FIG. 182, the vehicle 800 provided in another embodiment of this application differs from the vehicle 600 in that the second fixing member 620 is fixedly provided on the frame 504. When the rider places their foot on the pedal assembly 616, the rider's stepping force is exerted on the frame 504 through the pedal assembly 616. Due to the high stability of the frame 504, the stability of the rider's stepping is also higher, enhancing riding safety.

Specifically, referring to FIG. 159 to FIG. 162, in some embodiments, along the third direction 03, the pedal assembly 616 is located on the bottom side of the frame 504. When assembling and disassembling the second basket 601, the interference of the pedal assembly 616 with this operation can be reduced to a certain extent. Additionally, along the second direction 02 and the third direction 03, the distance between the pedal assembly 616 and the seat 508 is increased, providing more placement space for the rider's legs and improving the rider's riding comfort.

In some embodiments, the structure of the pedal assembly 616 is consistent with the structure of the pedal assembly 616 in the vehicle 600, and is not repeated here. It can be understood that, in other embodiments, the pedal assembly 616 installed on the frame 504 can also be any other embodiment provided in this application.

Furthermore, in some embodiments, as previously described, the footpeg 617 in the pedal assembly 616 is rearwardly foldable. The pedal assembly 616 is set closer to the frame 504, which makes the folded footpeg 617 also closer to the frame 504, reducing the impact of the folded footpeg 617 on objects, people, or animals surrounding the second basket 601, and enhancing riding safety.

In some embodiments, the second fixing member 620 is located on the bottom side of the frame 504, to avoid interference with the assembly and disassembly of the second basket 601. Additionally, the second fixing member 620 being located on the bottom side of the frame 504 means the pedal assembly 616 is positioned closer to the frame 504, and the stepping position is also set closer to the frame 504, improving the rider's stepping comfort. Furthermore, after the pedal assembly 616 is detached from the second fixing member 620, the second fixing member 620 being located on the bottom side of the frame 504 can reduce the risk of people or animals around the vehicle 800 accidentally bumping into the second fixing member 620. More specifically, in some embodiments, the second fixing member 620 is fixedly provided on the second section 504b of the frame 504. Along the third direction 03, the second section 504b of the frame 504 has a lower height, which results in a lower height for the second fixing member 620. The lower center of gravity of the second fixing member 620 and the pedal assembly 616 improves the stability of the vehicle 800 and enhances riding safety.

Further, in some embodiments, the second fixing member 620 is provided near the front end of the second section 504b, resulting in a larger distance between the pedal assembly 616 and the seat 508, which improves the riding comfort for the rider's legs. Additionally, positioning the second fixing member 620 near the front end of the second section 504b prevents the footpeg 617 in the pedal assembly 616 from interfering with the side stand 511 when folding, or reduces the probability of interference between the pedal assembly 616 and the side stand 511. Specifically, the side stand 511 and one of the pedal assemblies 616 are located on the same side of the vehicle 800. The footpeg 617 in the pedal assembly 616 can be folded backward. If the distance between the pedal assembly 616 and the side stand 511 is small, the footpeg 617 in the pedal assembly 616 may be blocked by the side stand 511 during the folding process, affecting the smooth folding of the pedal assembly 616, and potentially causing damage to the footpeg 617 and the side stand 511, affecting their service life. Furthermore, when the side stand 511 is in the supporting state shown in FIG. 159, a collision between the side stand 511 and the footpeg 617 may cause the side stand 511 to rotate, which affects the supporting stability of the side stand 511, thereby reducing the supporting stability of the vehicle 800, and even poses a risk of tipping over. In some embodiments, positioning the second fixing member 620 near the front end of the second section 504b prevents or reduces the probability of mutual interference between the pedal assembly 616 and the side stand 511, thereby reducing or avoiding the risk of such interference, improving the service life of the footpeg 617 and the side stand 511, and enhancing the supporting stability of the vehicle 800.

In some embodiments, the distance L11 between the second fixing member 620 and the front end of the second section 504b of the frame 504 falls within the range of 1mm - 10mm. On one hand, the distance L11 between the second fixing member 620 and the front end of the second section 504b of the frame 504 being greater than or equal to 10mm allows the second fixing member 620 to be better fixed to the second section 504b of the frame 504, improving the stability of the second fixing member 620's fixation, enhancing the stability of the pedal assembly 616, and increasing stepping stability. On the other hand, the distance L11 between the second fixing member 620 and the front end of the second section 504b of the frame 504 being greater than or equal to 1mm means the fixed connection position of the second fixing member 620 to the second section 504b of the frame 504 is offset from the front end of the second section 504b, avoiding the risk of excessive stress on the front end of the second section 504b of the frame 504 due to the arrangement of the second fixing member 620, and reducing the risk of stress concentration at the front end of the second section 504b. Still further, the distance L11 between the second fixing member 620 and the front end of the second section 504b of the frame 504 being less than or equal to 10mm results in a larger distance between the pedal assembly 616 and the seat 508, improving the rider's riding comfort.

Specifically, L11 can be any value within the range of 1mm - 10mm, such as 1mm, 2mm, 3mm, 4mm, 5mm, 6mm, 7mm, 8mm, 9mm, or 10mm.

More specifically, in some embodiments, the second fixing member 620 is fixedly provided on the support rod 5044 of the frame 504. The support rod 5044 of the frame 504 has high strength, which results in higher stability for the second fixing member, and consequently higher stability for the pedal assembly 616, thus improving the rider's stepping stability.

In some embodiments, the second fixing member 620 and the frame 504 are fixedly connected by welding. It can be understood that, in other embodiments, the method of fixed connection between the second fixing member 620 and the frame 504 is not limited to this, and can also be fixedly connected by methods such as threaded connection, riveting, or snap-fit connection, which are not specifically restricted here.

Referring to FIG. 159, FIG. 160, and FIG. 163, in some embodiments, the first side 605 of the second basket 601 is rearwardly inclined relative to the first section 504a of the frame 504. This reduces the risk of collision between the second basket 601 and the first section 504a of the frame 504, improving the service life of the second basket 601 and the frame 504. For example, during the travel of the vehicle 800, both the second basket 601 and the frame 504 may vibrate. The rearward inclination of the first side 605 relative to the first section 504a of the frame 504 creates a gap between the first side 605 and the first section 504a, which can avoid or reduce the risk of collision between the second basket 601 and the first section 504a of the frame 504, even if the second basket 601 and the frame 504 vibrate.

Additionally, the first side 605 of the second basket 601 is hollowed out. Items or animal fur placed inside the second basket 601 may protrude through the hollowing of the first side 605. The rearward inclination of the first side 605 of the second basket 601 relative to the first section 504a of the frame 504 provides a certain gap between the first side 605 and the first section 504a, to avoid items or animal fur protruding through the hollowing of the first side 605 from being clamped between the first side 605 and the first section 504a.

In some embodiments, the angle β13 between the first side 605 and the first section 504a falls within the range of 8° - 20°. The angle between the first side 605 and the first section 504a being greater than or equal to 8° reduces the risk of collision between the second basket 601 and the first section 504a of the frame 504, and avoids items or animal fur protruding through the hollowing of the first side 605 from being clamped. The angle between the first side 605 and the first section 504a being less than or equal to 20° allows the second basket 601 to have a larger storage space.

Specifically, the angle β13 between the first side 605 and the first section 504a can be any value within the range of 8° - 20°, such as 8°, 10°, 12°, 14°, 16°, 18°, or 20°.

In some embodiments, the second side 606 of the second basket 601 is rearwardly inclined, to increase the storage space of the second basket 601.

In some embodiments, the angle β11 between the second side 606 and the bottom wall of the second basket 601 falls within the range of 91° - 120°. The angle β11 between the second side 606 and the bottom wall of the second basket 601 being greater than or equal to 91° increases the storage space of the second basket 601. The angle β11 between the second side 606 and the bottom wall of the second basket 601 being less than or equal to 120° reduces the risk of items or animals inside the second basket 601 slipping out through the second side 606.

Specifically, the angle β11 between the second side 606 and the bottom wall of the second basket 601 can be any value within the range of 91° - 120°, such as 91°, 95°, 99°, 103°, 107°, 111°, 115°, 119°, or 120°.

In some embodiments, the third section 504c of the frame 504 is rearwardly inclined. The inclination angle of the second side 606 of the second basket 601 is substantially the same as the inclination angle of the third section 504c of the frame 504. This allows the second side 606 of the second basket 601 to be set closer to the third section 504c of the frame 504, so that the second basket 601 has a larger accommodation space. It should be noted that the inclination angle of the second side 606 of the second basket 601 being substantially the same as the inclination angle of the third section 504c of the frame 504 means that the angle between the second side 606 of the second basket 601 and the third section 504c of the frame 504 falls within the range of 0° ~ 5°.

In some embodiments, the distance L24 between the second side 606 of the second basket 601 and the third section 504c of the frame 504 falls within the range of 75mm - 100mm. Specifically, the distance between the second side 606 of the second basket 601 and the third section 504c of the frame 504 being less than or equal to 100mm allows the second basket 601 to have a larger accommodation space. The distance between the second side 606 of the second basket 601 and the third section 504c of the frame 504 being greater than or equal to 75mm reduces the risk of friction or collision between the second side 606 and the third section 504c, improving the service life of the second basket 601 and the frame 504. Specifically, during the travel of the vehicle 800, both the second basket 601 and the frame 504 may vibrate, leading to relative movement between the second side 606 of the second basket 601 and the third section 504c of the frame 504. The distance between the second side 606 of the second basket 601 and the third section 504c of the frame 504 being greater than or equal to 75mm reduces the risk of friction or collision between the second side 606 and the third section 504c, even if relative movement occurs, improving the service life of the second basket 601 and the frame 504.

Specifically, L24 can be any value within the range of 75mm - 100mm, such as 75mm, 78mm, 81mm, 84mm, 87mm, 90mm, 93mm, 96mm, 99mm, or 100mm.

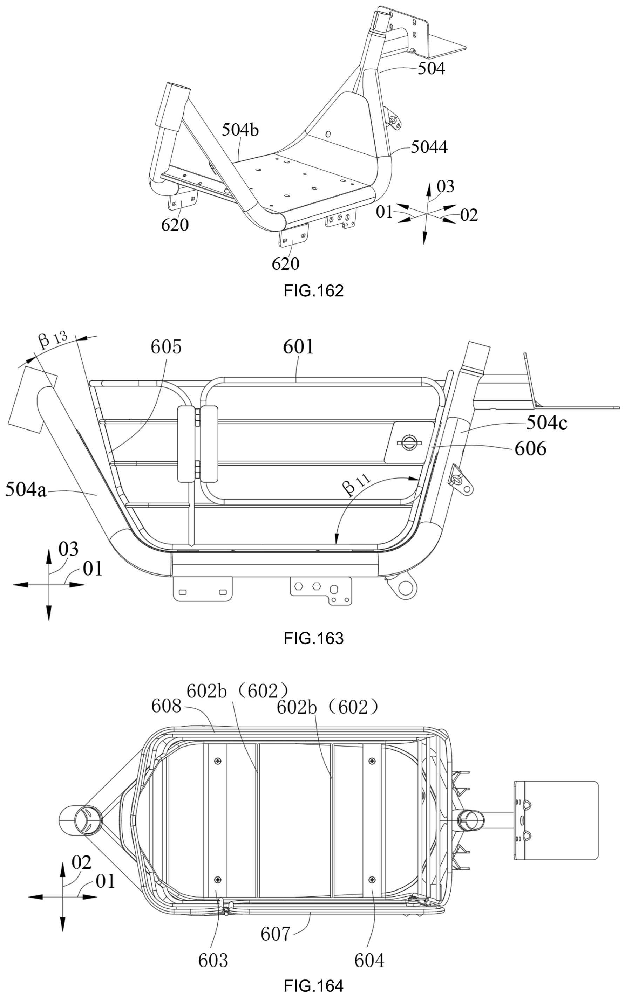

Referring to FIG. 164 to FIG. 166, and FIG. 169, in some embodiments, both the third side 607 and the fourth side 608 of the second basket 601 are outwardly inclined, allowing the second basket 601 to have a larger accommodation space.

In some embodiments, the angle β14 between the third side 607 and the bottom wall of the second basket 601 falls within the range of 91° - 110°. The angle β14 between the third side 607 and the bottom wall of the second basket 601 being greater than or equal to 91° allows the second basket 601 to have a larger accommodation space. The angle β14 between the third side 607 and the bottom wall of the second basket 601 being less than or equal to 110° avoids the opening of the second basket 601 along the second direction 02 from becoming excessively large, reducing the risk of items inside the second basket 601 slipping out of the second basket 601. Additionally, the angle β14 between the third side 607 and the bottom wall of the second basket 601 being less than or equal to 110° avoids the opening of the second basket 601 along the second direction 02 from becoming excessively large, thereby preventing excessive impact on the rider's riding comfort.

Specifically, the angle β14 between the third side 607 and the bottom wall of the second basket 601 can be any value within the range of 91° - 110°, such as 91°, 94°, 97°, 100°, 103°, 106°, 109°, or 110°.

In some embodiments, the degree of inclination of the third side 607 and the fourth side 608 of the second basket 601 is substantially the same. On one hand, this improves the aesthetic effect of the second basket 601. On the other hand, it reduces the risk of the second basket 601 being heavier on one side along the second direction 02, facilitating the maintenance of the balance performance of the vehicle 800, and improving riding safety and riding stability. It should be noted that the inclination degree of the third side 607 and the fourth side 608 of the second basket 601 being substantially the same means that the difference between the angle of the third side 607 with the third direction 03 and the angle of the fourth side 608 with the third direction 03 falls within the range of -5° ~ +5°.

Referring to FIG. 188 to FIG. 189, in some embodiments, the second side 606 is provided with a baffle 628, which can prevent items or animals inside the second basket 601 from rushing out backward along the first direction 01, especially the tails of animals, reducing the risk of being tangled or drawn into the rotating rear wheel.

Specifically, along the third direction 03, the baffle can extend upward from the bottom of the second side 606. Regarding the height setting of the baffle, it only needs to satisfy the requirement of blocking specific parts of items or animals from rushing out backward. Therefore, the baffle can only cover the bottom of the second side 606, or extend from the bottom of the second side 606 to the middle area, or extend from the bottom of the second side 606 to the top area.

Specifically, the fixing methods between the baffle and the second side 606 are various, including but not limited to welding and snap connection.

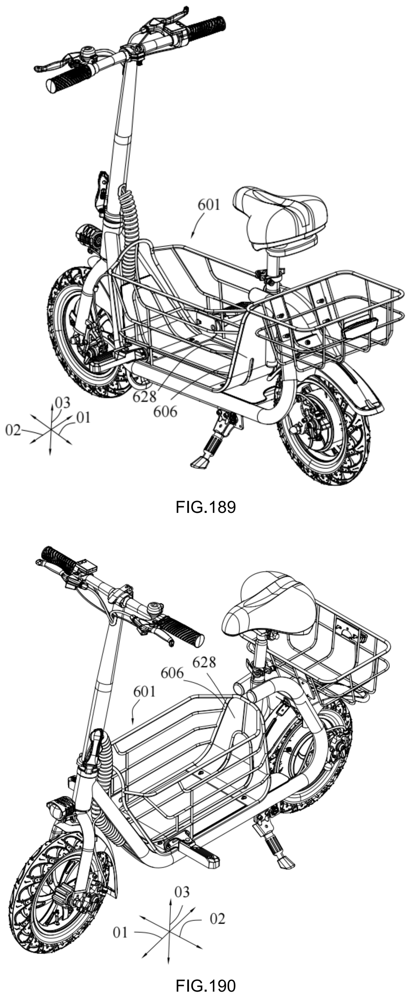

Referring to FIG. 190 to FIG. 191, in some embodiments, the vehicle further includes a cushion 629 disposed in the second basket 601. The cushion covers or shields at least the bottom area of the second basket 601, and may also cover or shield one or more sides of the second basket 601. By adding the cushion, when items are placed in the second basket 601, collision can be reduced. When traveling, items in the second basket 601 may collide with each other due to bumps and shaking. The cushion can buffer the impact force generated by collisions, reducing the risk of item damage. When placing animals, it can increase comfort and prevent the animal from coming into contact with the hard bottom of basket or support plate for a long time.

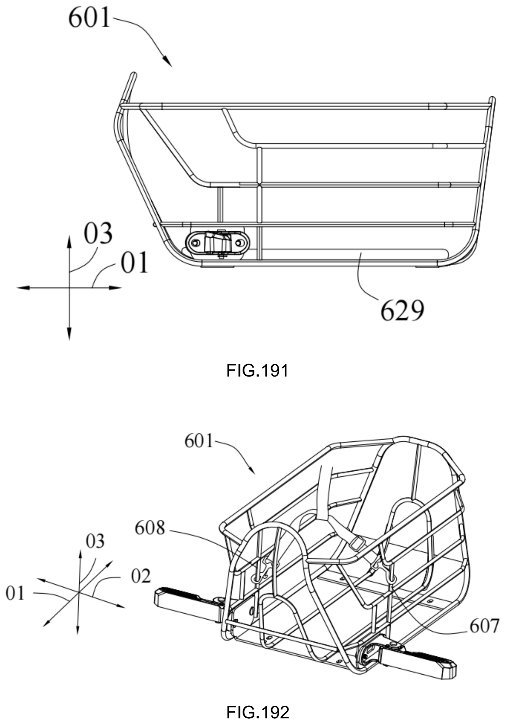

Referring to FIG. 192, in some embodiments, along the second direction 02, the second basket 601 can also provide connection positions for an animal safety rope. For example, one clasp of the animal safety rope can be fastened to the third side 607, and the other can be fastened to the fourth side 608.

Referring to FIG. 163 to FIG. 169, in some embodiments, the side door 611 extends backward to the position where the third side 607 and the second side 606 of the second basket 601 connect. The length of the side door 611 along the first direction 01 is larger. Correspondingly, the opening of the second basket 601 corresponding to the side door 611 is also larger, facilitating the entry and exit of items or animals and reducing the risk of items or animals being struck by the sidewall of the second basket 601.

Additionally, in some embodiments, the rear end of the side door 611 directly connects to the second side 606 of the second basket 601, making the structure of the third side 607 of the second basket 601 simpler. The rear end of the side door 611 directly connecting to the second side 606 of the second basket 601 means that when the side door 611 is in the closed state, the side door 601 is locked with the second side 606 of the second basket 601, so that the second side 606 remains in the closed state.

In some embodiments, the first side 605, the second side 606, the third side 607, and the fourth side 608 all comprise multiple relatively fixed side rods. This simple structure facilitates processing and is suitable for the lightweight design of the second basket 601.

In some embodiments, the ratio of the total hollowed-out area on the first side 605 to the total area of the first side 605 falls within the range of 0.5 - 0.98. This allows for a high hollowed-out area while meeting the shielding requirements.

In some embodiments, the ratio of the total hollowed-out area on the second side 606 to the total area of the second side 606 falls within the range of 0.5 - 0.98. This allows for a high hollowed-out area while meeting the shielding requirements.

In some embodiments, the ratio of the total hollowed-out area on the third side 607 to the total area of the third side 607 falls within the range of 0.5 - 0.98. This allows for a high hollowed-out area while meeting the shielding requirements.

In some embodiments, the ratio of the total hollowed-out area on the fourth side 608 to the total area of the fourth side 608 falls within the range of 0.5 - 0.98. This allows for a high hollowed-out area while meeting the shielding requirements.

In some embodiments, the first side 605 includes a first upper side rod 605c and a plurality of first middle side rods 605d. The provision of multiple first middle side rods 605d reduces the size of a single hollowed-out area on the first side 605, thereby reducing the risk of items inside the second basket 601 falling out through the hollowing on the first side 605.

Specifically, in some embodiments, among the plurality of first middle side rods 605d, some extend along the second direction 02, and others extend in directions that intersect with the second direction 02. For ease of description, the first middle side rods 605d extending along the second direction 02 are referred to as horizontal side rods 605e, and the first middle side rods 605d whose extending direction intersects with the second direction 02 are referred to as diagonal side rods 605f. The intersecting arrangement of the horizontal side rods 605e and the diagonal side rods 605f further reduces the size of a single hollowed-out area on the first side 605, reducing the risk of items inside the second basket 601 falling out through the hollowing on the first side 605.

It can be understood that, in other embodiments, the extending direction of the first middle side rods 605d can be other directions. The extending directions of different first middle side rods 605d can be the same or different.

In some embodiments, the first upper side rod 605c also extends along the second direction 02, parallel to the horizontal side rods 605e. It can be understood that, in other embodiments, the first upper side rod 605c is not limited to extending along the second direction 02, but can also extend in other directions. Correspondingly, the first upper side rod 605c is not limited to being parallel to the horizontal side rods 605e.

In some embodiments, the spacing between adjacent horizontal side rods 605e, measured in the direction perpendicular to the second direction 02 and parallel to the first side 605, falls within the range of 3mm - 9mm. The spacing between adjacent horizontal side rods 605e being greater than or equal to 3mm is suitable for the lightweight design of the second basket 601. The spacing between adjacent horizontal side rods 605e being less than or equal to 9mm prevents the hollowing from being excessively large.

Specifically, the spacing between adjacent horizontal side rods 605e, measured in the direction perpendicular to the second direction 02 and parallel to the first side 605, can be any value within the range of 3mm - 9mm, such as 3mm, 4mm, 5mm, 6mm, 7mm, 8mm, or 9mm.

In some embodiments, the number of diagonal side rods 605f is two, arranged in a V-shape (inverted 'V' or 'herringbone' shape), enhancing the support strength of the first side 605. Further, in some embodiments, the two diagonal side rods 605f converge and connect at the top end. The two diagonal side rods 605f support each other, further increasing the support strength of the first side 605. Even further, in some embodiments, the top ends of the two diagonal side rods 605f are fixedly connected to the first upper side rod 605c simultaneously, to better maintain the height of the first upper side rod 605c along the third direction 03, improving the support effect of the first side 605. It can be understood that, in other embodiments, the different diagonal side rods 605f may not converge and connect; the top end of the diagonal side rods 605f may also be lower than the first upper side rod 605c.

In some embodiments, the connection point of the two diagonal side rods 605f is located at the center position of the first upper side rod 605c. The bottom ends of the diagonal side rods 605f are located at the bottom corner positions on the corresponding sides of the first side 605, which provides strong overall support strength for the first side 605. It can be understood that, in other embodiments, the starting position of the diagonal side rods 605f can be varied.

Along the third direction 03, the topmost horizontal side rod 605e is interrupted by the diagonal side rods 605f, which facilitates the lightweight design of the second basket 601. The two diagonal side rods 605f are arranged in a V-shape, and the closer they are to the top end, the smaller the distance between the two diagonal side rods 605f becomes. Even if the topmost horizontal side rod 605e is interrupted, it does not lead to an excessively large hollowed-out area at that position.

In some embodiments, the second side 606 includes a second upper side rod 606c, a plurality of second middle side rods 606d, and outer side rods 606e provided along the second direction 02 on both sides of the second side 606. The provision of multiple second middle side rods 606d and outer side rods 606e reduces the size of a single hollowed-out area on the second side 606, lowering the risk of items inside the second basket 601 falling out through the hollowing on the second side 606.

Specifically, in some embodiments, the second middle side rods 606d extend along the second direction 02. It can be understood that the plurality of second middle side rods 606d are arranged parallel to each other. It can be understood that, in other embodiments, the extending direction of the plurality of second middle side rods 606d is not limited to the second direction 02, nor are the plurality of second middle side rods 606d limited to being all parallel.

In some embodiments, the spacing between adjacent second middle side rods 606d, measured in the direction perpendicular to the second direction 02 and parallel to the second side 606, falls within the range of 40mm - 70mm. The spacing between adjacent second middle side rods 606d being greater than or equal to 40mm is suitable for the lightweight design of the second basket 601. The spacing between adjacent second middle side rods 606d being less than or equal to 70mm prevents the hollowing from being excessively large.

Specifically, the spacing between adjacent second middle side rods 606d, measured in the direction perpendicular to the second direction 02 and parallel to the second side 606, can be any value within the range of 40mm - 70mm, such as 40mm, 45mm, 50mm, 55mm, 60mm, 65mm, or 70mm.

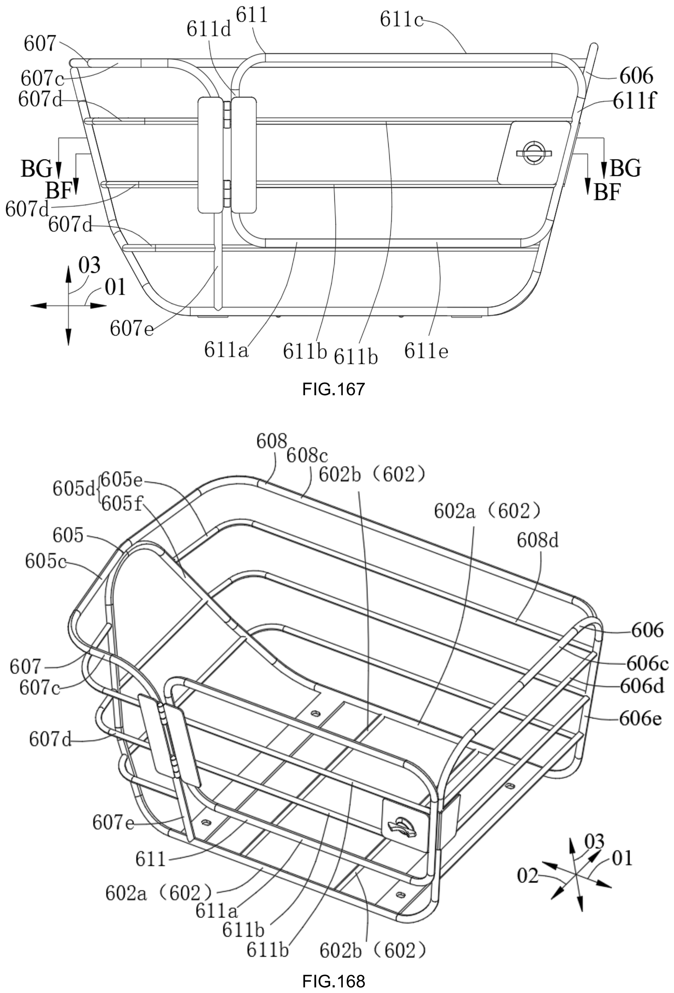

Referring to FIG. 167 to FIG. 169, in some embodiments, along the second direction 02, the side door 611 is located on the outer side of the outer side rod 606e close to the third side 607. When viewing the second basket 601 along the second direction 02 from the side of the third side 607 facing away from the fourth side 608, part of the third side 607 and structures such as the first limiting portion 615 provided on the third side 607 are shielded by the side door 611, making the second basket 601 appear more concise and improving the visual effect.

The bottom end of the outer side rod 606e close to the third side 607 is outwardly inclined along the second direction 02 to connect with the edge bottom rod 602a on the corresponding side.

In some embodiments, the inclination angle of the second side 606 of the second basket 601 is substantially the same as the inclination angle of the third section 504c of the frame 504, and the second side 606 of the second basket 601 is close to the third section 504c of the frame 504. Therefore, the third section 504c of the frame 504 can also prevent localized parts of items and animals in the second basket 601 from being squeezed out or falling out through the hollowing of the second side 606.

In some embodiments, the spacing between the second upper side rod 606c and the adjacent second middle side rod 606d, measured in the direction perpendicular to the second direction 02 and parallel to the second side 606, falls within the range of 50mm - 80mm. The spacing between the second upper side rod 606c and the adjacent second middle side rod 606d being greater than or equal to 50mm is suitable for the lightweight design of the second basket 601. The spacing between the second upper side rod 606c and the adjacent second middle side rod 606d being less than or equal to 80mm prevents the hollowing from being excessively large.

Specifically, the spacing between the second upper side rod 606c and the adjacent second middle side rod 606d, measured in the direction perpendicular to the second direction 02 and parallel to the second side 606, can be any value within the range of 50mm - 80mm, such as 50mm, 55mm, 60mm, 65mm, 70mm, 75mm, or 80mm.

In some embodiments, the third side 607 includes a third upper side rod 607c, a plurality of third middle side rods 607d, and a mounting rail 607e. The provision of multiple third middle side rods 607d reduces the size of a single hollowed-out area on the third side 607, lowering the risk of items inside the second basket 601 falling out through the hollowing on the third side 607. The provision of the mounting rail 607e is used for installing the side door 611. Furthermore, the provision of the mounting rail 607e can also reduce the size of a single hollowed-out area on the third side 607, lowering the risk of items inside the second basket 601 falling out through the hollowing on the third side 607.

Specifically, in some embodiments, the third middle side rods 607d extend along the first direction 01. It can be understood that the plurality of third middle side rods 607d are arranged parallel to each other. It can be understood that, in other embodiments, the extending direction of the plurality of third middle side rods 607d is not limited to the first direction 01, nor are the plurality of third middle side rods 607d limited to being all parallel.

In some embodiments, the spacing between adjacent third middle side rods 607d, measured in the direction perpendicular to the first direction 01 and parallel to the third side 607, falls within the range of 35mm - 65mm. The spacing between adjacent third middle side rods 607d being greater than or equal to 35mm is suitable for the lightweight design of the second basket 601. The spacing between adjacent third middle side rods 607d being less than or equal to 65mm prevents the hollowing from being excessively large.

Specifically, the spacing between adjacent third middle side rods 607d, measured in the direction perpendicular to the first direction 01 and parallel to the third side 607, can be any value within the range of 35mm - 65mm, such as 35mm, 40mm, 45mm, 50mm, 55mm, 60mm, or 65mm.

In some embodiments, the spacing between the third upper side rod 607c and the adjacent third middle side rod 607d, measured in the direction perpendicular to the first direction 01 and parallel to the third side 607, falls within the range of 35mm - 70mm. The spacing between the third upper side rod 607c and the adjacent third middle side rod 607d being greater than or equal to 35mm is suitable for the lightweight design of the second basket 601. The spacing between the third upper side rod 607c and the adjacent third middle side rod 607d being less than or equal to 70mm prevents the hollowing from being excessively large.

Specifically, the spacing between the third upper side rod 607c and the adjacent third middle side rod 607d, measured in the direction perpendicular to the first direction 01 and parallel to the third side 607, can be any value within the range of 35mm - 70mm, such as 35mm, 41mm, 47mm, 53mm, 59mm, 65mm, or 70mm.

In some embodiments, the side door 611 is hollowed out and includes multiple relatively fixed side rods. This structure is simple, easy to process, and suitable for the lightweight design of the second basket 601.

Specifically, in some embodiments, the side door 611 includes a ring-shaped outer frame 611a and fourth middle side rods 611b disposed within the outer frame 611a. The provision of multiple fourth middle side rods 611b reduces the size of a single hollowed-out area on the side door 611, lowering the risk of items inside the second basket 601 falling out through the hollowing on the side door 611.

Specifically, in some embodiments, the fourth middle side rods 611b extend along the first direction 01. It can be understood that, in other embodiments, the extending direction of the plurality of fourth middle side rods 608d is not limited to the first direction 01.

In some embodiments, there are multiple fourth middle side rods 611b, and the plurality of fourth middle side rods 611b are arranged parallel to each other. It can be understood that, in other embodiments, the plurality of fourth middle side rods 611b are not limited to being all parallel, but can also be arranged to intersect, or at least two of the fourth middle side rods 611b can intersect.

In some embodiments, the spacing between adjacent fourth middle side rods 611b, measured in the direction perpendicular to the first direction 01 and parallel to the side door 611, falls within the range of 35mm - 70mm. The spacing between adjacent fourth middle side rods 611b being greater than or equal to 35mm is suitable for the lightweight design of the second basket 601. The spacing between adjacent fourth middle side rods 611b being less than or equal to 70mm prevents the hollowing from being excessively large.

Specifically, the spacing between adjacent fourth middle side rods 611b, measured in the direction perpendicular to the first direction 01 and parallel to the side door 611, can be any value within the range of 35mm - 70mm, such as 35mm, 41mm, 47mm, 53mm, 59mm, 65mm, or 70mm.

In some embodiments, along the third direction 03, the side door 611 is spaced apart from the edge bottom rod 602a. This reduces the overall size of the side door 611, facilitating the lightweight design of the second basket 601. Additionally, the spacing between the side door 611 and the edge bottom rod 602a along the third direction 03 can also reduce friction between the side door 611 and the edge bottom rod 602a, improving the service life of the side door 611 and the edge bottom rod 602a.

In some embodiments, along the third direction 03, the height of the bottom wall of the outer frame 611a is substantially consistent with the height of the bottommost third middle side rod 607d on the third side 607, to enhance the structural consistency between the third side 607 and the outer frame 611, improving the aesthetic effect.

In some embodiments, the number of fourth middle side rods 611b is two. Along the third direction 03, the heights of the two fourth middle side rods 611b are the same as the heights of the intermediate and topmost third middle side rods 607d, respectively, to enhance the structural consistency between the third side 607 and the outer frame 611, improving the aesthetic effect. It can be understood, of course, that in other embodiments, the number of fourth middle side rods 611b is not limited to two, but can be one or more. Additionally, in other embodiments, the height of at least some of the fourth middle side rods 611b in the third direction 03 may be different from the height of any third middle side rod 607d in the third direction 03, to increase the distinctiveness of the side door 601.

In some embodiments, the material of the outer frame 611a is carbon structural steel, which provides good support strength and is easy to shape.

In some embodiments, the material of the fourth middle side rods 611b is carbon structural steel, which provides good support strength and is easy to shape.

In some embodiments, the support strength of the outer frame 611a is greater than the support strength of the fourth middle side rods 611b, which is beneficial for the side door 611 structure.

In some embodiments, both the outer frame 611a and the fourth middle side rods 611b are tubular, which facilitates the lightweight design of the second basket 601 while meeting the structural strength requirements.

Further, in some embodiments, both the outer frame 611a and the fourth middle side rods 611b are circularly tubular, which simplifies the structure, facilitates production, and results in high production efficiency and low production cost.

In some embodiments, the wall thickness of the outer frame 611a falls within the range of 0.2mm - 1mm, and the outer diameter falls within the range of 2mm - 10mm, providing lower weight and ease of production while meeting the support strength requirements.

Specifically, the wall thickness of the outer frame 611a can be any value within the range of 0.2mm - 1mm, such as 0.2mm, 0.3mm, 0.4mm, 0.5mm, 0.6mm, 0.7mm, 0.8mm, 0.9mm, or 1mm. The outer diameter of the outer frame 611a can be any value within the range of 2mm - 10mm, such as 2mm, 3mm, 4mm, 5mm, 6mm, 7mm, 8mm, 9mm, or 10mm.

In some embodiments, the wall thickness of the fourth middle side rods 611b falls within the range of 0.2mm - 1mm, and the outer diameter falls within the range of 2mm - 10mm, providing lower weight and ease of production while meeting the support strength requirements.

Specifically, the wall thickness of the fourth middle side rods 611b can be any value within the range of 0.2mm - 1mm, such as 0.2mm, 0.3mm, 0.4mm, 0.5mm, 0.6mm, 0.7mm, 0.8mm, 0.9mm, or 1mm. The outer diameter of the fourth middle side rods 611b can be any value within the range of 2mm - 10mm, such as 2mm, 3mm, 4mm, 5mm, 6mm, 7mm, 8mm, 9mm, or 10mm.

In some embodiments, the material of the outer frame 611a is the same as the material of the fourth middle side rods 611b, and the outer diameter of the outer frame 611a is greater than the outer diameter of the fourth middle side rods 611b, so that the support strength of the outer frame 611a is greater than the support strength of the fourth middle side rods 611b.

In some embodiments, the corners between adjacent sides of the outer frame 611a are provided with rounded edges, reducing the risk of the second basket 601 scratching or bumping surrounding items, people, or animals.

Specifically, the outer frame 611a has multiple corners, and the radius of the rounded edges at each corner is substantially the same, which facilitates processing and provides aesthetic consistency, improving the visual appeal of the second basket 601. It should be noted that the radius of the rounded edges at each corner of the outer frame 611a is substantially the same.

In some embodiments, the outer frame 611a includes a first frame edge 611c, a second frame edge 611d, a third frame edge 611e, and a fourth frame edge 611f, connected in sequence.

Specifically, in some embodiments, the first frame edge 611c and the third frame edge 611e extend along the first direction 01. The second frame edge 611d extends in a direction perpendicular to the first direction 01 and parallel to the third side 607. The fourth frame edge 611f extends in a direction parallel to both the third side 607 and the fourth side 608. This arrangement makes the outer frame 611a parallel to the third side 607, simplifying the structure of the outer frame 611a and the overall structure of the second basket 601. Additionally, the fourth frame edge 611f extending in a direction parallel to both the third side 607 and the fourth side 608 facilitates the connection of the fourth frame edge 611f with the third side 607; the first frame edge 611c extends along the first direction 01 and is located on the top side of the third frame edge 611e, with the height of the first frame edge 611c along the third direction 03 being no less than the height of the third upper side rod 607c, so as not to affect the volume of the second basket. The second frame edge 611d extends in a direction perpendicular to the first direction 01 and parallel to the third side 607, providing high support strength for the side door 611.

In some embodiments, the second frame edge 611d is rotatably connected to the mounting rail 607e. The second frame edge 611d extends in a direction perpendicular to the first direction 01 and parallel to the third side 607. The rotation axis of the side door 611 is parallel to the second frame edge 611d, preventing the top side of the side door 611 from being higher than the top side of the second basket 601 when in the open state, and preventing the bottom side of the side door 611 from being lower than the bottom side of the second basket 601 when in the open state. This reduces the risk of the side door 611 colliding with surrounding people, items, or animals during the opening or closing process.

In some embodiments, the spacing between the first frame edge 611c of the outer frame 611a and the adjacent fourth middle side rod 611b, measured in the direction perpendicular to the first direction 01 and parallel to the side door 611, falls within the range of 35mm - 70mm. The spacing between the first frame edge 611c of the outer frame 611a and the adjacent fourth middle side rod 611b being greater than or equal to 35mm is suitable for the lightweight design of the second basket 601. The spacing between the first frame edge 611c of the outer frame 611a and the adjacent fourth middle side rod 611b being less than or equal to 70mm prevents the hollowing from being excessively large.

Specifically, the spacing between the first frame edge 611c of the outer frame 611a and the adjacent fourth middle side rod 611b, measured in the direction perpendicular to the first direction 01 and parallel to the side door 611, can be any value within the range of 35mm - 70mm, such as 35mm, 41mm, 47mm, 53mm, 59mm, 65mm, or 70mm.

In some embodiments, the fourth side 608 includes a fourth upper side rod 608c and a plurality of fourth middle side rods 608d. The provision of multiple fourth middle side rods 608d reduces the size of a single hollowed-out area on the fourth side 608, lowering the risk of items inside the second basket 601 falling out through the hollowing on the fourth side 608.

Specifically, in some embodiments, the fourth middle side rods 608d extend along the first direction 01. It can be understood that the plurality of fourth middle side rods 608d are arranged parallel to each other. It can be understood that, in other embodiments, the extending direction of the plurality of fourth middle side rods 608d is not limited to the first direction 01, nor are the plurality of fourth middle side rods 608d limited to being all parallel.

In some embodiments, the spacing between adjacent fourth middle side rods 608d, measured in the direction perpendicular to the first direction 01 and parallel to the fourth side 608, falls within the range of 35mm - 70mm. The spacing between adjacent fourth middle side rods 608d being greater than or equal to 35mm is suitable for the lightweight design of the second basket 601. The spacing between adjacent fourth middle side rods 608d being less than or equal to 70mm prevents the hollowing from being excessively large.

Specifically, the spacing between adjacent fourth middle side rods 608d, measured in the direction perpendicular to the first direction 01 and parallel to the fourth side 608, can be any value within the range of 35mm - 70mm, such as 35mm, 41mm, 47mm, 53mm, 59mm, 65mm, or 70mm.

In some embodiments, the bottom rod 602 includes edge bottom rods 602a provided along the second direction 02 on both sides of the bottom wall of the second basket 601. It can be understood that the number of edge bottom rods 602a in the main basket frame 601a is two. The edge bottom rod 602a located near the third side 607 forms the bottom edge of the third side 607, and the edge bottom rod 602a located near the fourth side 608 forms the bottom edge of the fourth side 608.

In some embodiments, the spacing between the fourth upper side rod 608c and the adjacent fourth middle side rod 608d, measured in the direction perpendicular to the first direction 01 and parallel to the fourth side 608, falls within the range of 35mm - 70mm. The spacing between the fourth upper side rod 608c and the adjacent fourth middle side rod 608d being greater than or equal to 35mm is suitable for the lightweight design of the second basket 601. The spacing between the fourth upper side rod 608c and the adjacent fourth middle side rod 608d being less than or equal to 70mm prevents the hollowing from being excessively large.

Specifically, the spacing between the fourth upper side rod 608c and the adjacent fourth middle side rod 608d, measured in the direction perpendicular to the first direction 01 and parallel to the fourth side 608, can be any value within the range of 35mm - 70mm, such as 5mm, 41mm, 47mm, 53mm, 59mm, 65mm, or 70mm.

Referring to FIG. 163 to FIG. 174, in some embodiments, the diagonal side rod 605f, the edge bottom rod 602a, the outer side rod 606e, and the second upper side rod 606c are integrally formed. This reduces the structure required for fixed connection between the diagonal side rod 605f, the edge bottom rod 602a, the outer side rod 606e, and the second upper side rod 606c. Consequently, on one hand, it avoids the phenomenon of local stress concentration caused by fixed connections, improving the structural strength, rigidity, and fatigue resistance of the second basket 601. On the other hand, it avoids the problem of increased weight caused by the provision of fixed connection structures, facilitating the lightweight design of the second basket 601. Furthermore, it reduces the steps required for fixed connection of the diagonal side rod 605f, the edge bottom rod 602a, the outer side rod 606e, and the second upper side rod 606c, simplifying the assembly process of the second basket 601 and improving production efficiency.

In some embodiments, the diagonal side rod 605f, the edge bottom rod 602a, the outer side rod 606e, and the second upper side rod 606c are all tubular, which facilitates the lightweight design of the second basket 601 while meeting the structural strength requirements.

The inner diameters of the diagonal side rod 605f, the edge bottom rod 602a, the outer side rod 606e, and the second upper side rod 606c are all the same, and their outer diameters are also all the same, which facilitates processing and improves processing efficiency.

In some embodiments, the material of the diagonal side rod 605f, the edge bottom rod 602a, the outer side rod 606e, and the second upper side rod 606c is carbon structural steel, which provides good support strength and is easy to shape.

In some embodiments, the wall thickness of the diagonal side rod 605f, the edge bottom rod 602a, the outer side rod 606e, and the second upper side rod 606c falls within the range of 0.4mm - 1.2mm, and the outer diameter falls within the range of 4mm - 12mm.

Specifically, the wall thickness of the diagonal side rod 605f, the edge bottom rod 602a, the outer side rod 606e, and the second upper side rod 606c can be any value within the range of 0.4mm - 1.2mm, such as 0.4mm, 0.5mm, 0.6mm, 0.7mm, 0.8mm, 0.9mm, 1.0mm, 1.1mm, or 1.2mm; the outer diameter can be any value within the range of 4mm - 12mm, such as 4mm, 5mm, 6mm, 7mm, 8mm, 9mm, 10mm, 11mm, or 12mm.

Referring to FIG. 163 to FIG. 169, in some embodiments, the plurality of horizontal side rods 605e and the plurality of fourth middle side rods 608d are set in one-to-one correspondence, and the corresponding horizontal side rods 605e and fourth middle side rods 608d have the same height along the third direction 03. The plurality of horizontal side rods 605e and the plurality of third middle side rods 607d are set in one-to-one correspondence, and the corresponding horizontal side rods 605e and third middle side rods 607d have the same height along the third direction 03. The plurality of third middle side rods 607d and the plurality of second middle side rods 606d are set in one-to-one correspondence, and the corresponding third middle side rods 607d and second middle side rods 606d have the same height along the third direction 03. The plurality of fourth middle side rods 608d and the plurality of second middle side rods 606d are set in one-to-one correspondence, and the corresponding fourth middle side rods 608d and second middle side rods 606d have the same height along the third direction 03. In this way, on the one hand, it is expected to make the second basket 601 appear visually more concise, improving its aesthetic effect; on the other hand, the size of the hollowing on each side wall of the second basket 601 along the third direction 03 is approximately the same, creating a good balance between preventing items or animals inside the second basket 601 from being squeezed out through the hollowing and the lightweight design of the second basket 601; on another hand, the opposing side walls of the second basket 601 have similar support strength, reducing the risk of concentrated stress on one side of the second basket 601 and improving the torsional strength of the second basket 601; on yet another hand, the structure is simple, facilitating processing.

In some embodiments, the corresponding horizontal side rods 605e and fourth middle side rods 608d are integrally formed. The corresponding horizontal side rods 605e and third middle side rods 607d are integrally formed. This avoids the provision of fixed connection structures, improving the structural strength and rigidity of the second basket 601 and resulting in good fatigue resistance. It avoids weight increase caused by fixed connection structures, making it suitable for the lightweight design of the second basket 601. Furthermore, it simplifies the assembly process and improves production efficiency.

In some embodiments, the horizontal side rods 605e, the second middle side rods 606d, the third middle side rods 607d, and the fourth middle side rods 608d are all tubular, which facilitates the lightweight design of the second basket 601 while meeting the structural strength requirements.

In some embodiments, the inner diameters of the horizontal side rods 605e, the second middle side rods 606d, the third middle side rods 607d, and the fourth middle side rods 608d are all the same, and their outer diameters are also all the same, which facilitates processing and improves processing efficiency.

In some embodiments, the material of the horizontal side rods 605e, the second middle side rods 606d, the third middle side rods 607d, and the fourth middle side rods 608d is carbon structural steel, which provides good support strength and is easy to shape.

In some embodiments, the wall thickness of the horizontal side rods 605e, the second middle side rods 606d, the third middle side rods 607d, and the fourth middle side rods 608d falls within the range of 0.2mm - 1mm, and the outer diameter falls within the range of 2mm - 10mm.

Specifically, the wall thickness of the horizontal side rods 605e, the second middle side rods 606d, the third middle side rods 607d, and the fourth middle side rods 608d can be any value within the range of 0.2mm - 1mm, such as 0.2mm, 0.3mm, 0.4mm, 0.5mm, 0.6mm, 0.7mm, 0.8mm, 0.9mm, or 1mm. The outer diameter of the horizontal side rods 605e, the second middle side rods 606d, the third middle side rods 607d, and the fourth middle side rods 608d can be any value within the range of 2mm - 10mm, such as 2mm, 3mm, 4mm, 5mm, 6mm, 7mm, 8mm, 9mm, or 10mm.

In some embodiments, the first upper side rod 605c, the third upper side rod 607c, and the fourth upper side rod 608c are integrally formed. This avoids the provision of fixed connection structures, improving the structural strength and rigidity of the second basket 601 and resulting in good fatigue resistance. It avoids weight increase caused by fixed connection structures, making it suitable for the lightweight design of the second basket 601. Furthermore, it simplifies the assembly process and improves production efficiency.

In some embodiments, the first upper side rod 605c, the third upper side rod 607c, and the fourth upper side rod 608c are all tubular, which facilitates the lightweight design of the second basket 601 while meeting the structural strength requirements.

In some embodiments, the inner diameters of the first upper side rod 605c, the third upper side rod 607c, and the fourth upper side rod 608c are all the same, and their outer diameters are also all the same, which facilitates processing and improves processing efficiency.

In some embodiments, the material of the first upper side rod 605c, the third upper side rod 607c, and the fourth upper side rod 608c is carbon structural steel, which provides good support strength and is easy to shape.

In some embodiments, the wall thickness of the first upper side rod 605c, the third upper side rod 607c, and the fourth upper side rod 608c falls within the range of 0.2mm - 1mm, and the outer diameter falls within the range of 4mm - 12mm.

Specifically, the wall thickness of the first upper side rod 605c, the third upper side rod 607c, and the fourth upper side rod 608c can be any value within the range of 0.2mm - 1mm, such as 0.2mm, 0.3mm, 0.4mm, 0.5mm, 0.6mm, 0.7mm, 0.8mm, 0.9mm, or 1mm. The outer diameter can be any value within the range of 4mm - 12mm, such as 4mm, 5mm, 6mm, 7mm, 8mm, 9mm, 10mm, 11mm, or 12mm.

Referring to FIG. 164 to FIG. 166, FIG. 168, FIG. 175, and FIG. 176, in some embodiments, the intermediate bottom rod 602b is arranged to intersect with the edge bottom rod 602a, increasing the anti-twist performance of the bottom wall of the second basket 601.

In some embodiments, the intermediate bottom rod 602b extends along the second direction 02, meaning the intermediate bottom rod 602b is perpendicular to the edge bottom rod 602a, and the hollowing of the bottom wall of the second basket 601 has a long length along the second direction 02. When an animal stands inside the second basket 601, the position where the animal's feet are placed along the second direction 02 is not restricted, increasing the animal's comfort.

In some embodiments, the intermediate bottom rod 602b is located between the first fixing plate 603 and the second fixing plate 604, serving to space apart the region between the first fixing plate 603 and the second fixing plate 604 to form a plurality of hollowed-out structures.

In some embodiments, the number of intermediate bottom rods 602b is two. It can be understood that in other embodiments, the number of intermediate bottom rods 602b is not limited to two, but may also be one or more than two.

In some embodiments, the spacing between the two intermediate bottom rods 602b, measured along the first direction 01, falls within the range of 90mm-140mm. Specifically, the spacing between the two intermediate bottom rods 602b can be any value within the range of 90mm-140mm, for example, 90mm, 95mm, 100mm, 105mm, 110mm, 115mm, 120mm, 125mm, 130mm, 135mm, or 140mm.

The spacing between the first fixing plate 603 and the adjacent intermediate bottom rod 602b is equal to the spacing between the second fixing plate 604 and the adjacent intermediate bottom rod 602b. This improves the symmetry of the bottom wall structure of the second basket 601, resulting in an aesthetic effect, and enhances the balanced force distribution along the first direction 01 on the bottom wall of the second basket 601, reducing the phenomenon of single-sided stress concentration.

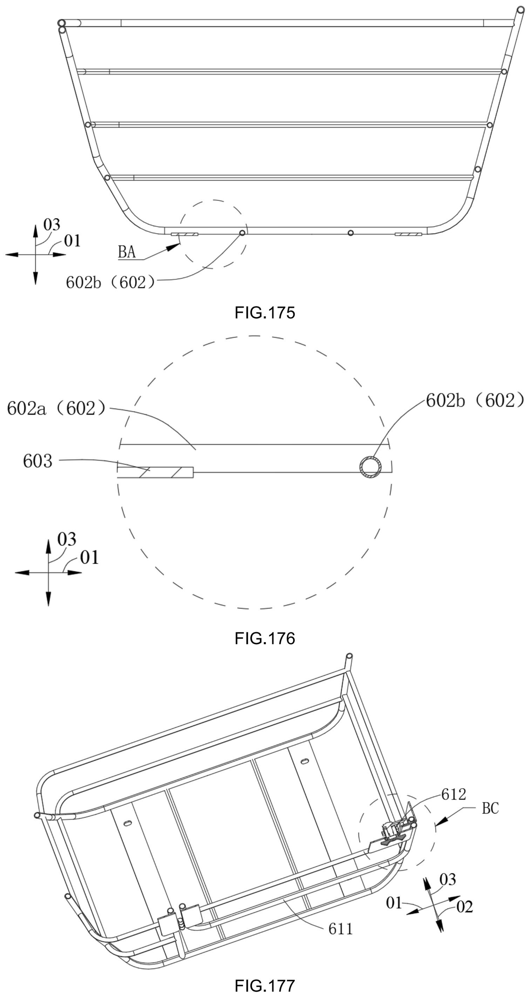

Referring to FIG. 175 and FIG. 176 , in some embodiments, the intermediate bottom rod 602b is tubular. The structure is simple and facilitates processing.

Further, in some embodiments, the intermediate bottom rod 602b is circular tubular, making the structure even simpler and processing more convenient. In addition, the circular tubular structure has no sharp edges on the surface, which reduces the risk of items or animals inside the second basket 601 being scratched or abraded by sharp edges.

It can be understood that in other embodiments, the intermediate bottom rod 602b is not limited to being circular tubular, but may also have regular or irregular shapes such as elliptical tubular.

In some embodiments, the material of the intermediate bottom rod 602b is carbon structural steel, which provides both good support strength and ease of shaping.

In some embodiments, the wall thickness of the intermediate bottom rod 602b falls within the range of 0.2mm-1mm, and the outer diameter falls within the range of 2mm-10mm. This ensures lower weight and ease of production while meeting the support strength requirements.

Specifically, the wall thickness of the intermediate bottom rod 602b can be any value within the range of 0.2mm-1mm, for example, 0.2mm, 0.3mm, 0.4mm, 0.5mm, 0.6mm, 0.7mm, 0.8mm, 0.9mm, or 1mm. The outer diameter of the intermediate bottom rod 602b can be any value within the range of 2mm-10mm, for example, 2mm, 3mm, 4mm, 5mm, 6mm, 7mm, 8mm, 9mm, or 10mm.

In some embodiments, along the third direction 03, the height of the bottom end of the intermediate bottom rod 602b is the same as the height of the bottom end of the first fixing plate 603, which facilitates support for the intermediate bottom rod 602b by the frame 504. It can be understood that the intermediate bottom rod 602b is located between the two edge bottom rods 602a, on the bottom side of the accommodation space of the second basket 601. When items or animals are placed inside the second basket 601, the items or animals may easily press onto the intermediate bottom rod 602b. In this case, because the frame 504 provides support for the intermediate bottom rod 602b, it reduces the risk of deformation of the intermediate bottom rod 602b, increasing the service life of the second basket 601 and improving the stability of the items or animals. Furthermore, the intermediate bottom rod 602b can also share the supporting force exerted by the frame 504 on the second basket 601, reducing the risk of stress concentration on the first fixing plate 603 and the second fixing plate 604, and increasing the service life of the first fixing plate 603 and the second fixing plate 604. This reduces the strength requirements for the first fixing plate 603 and the second fixing plate 604. Moreover, reducing the strength requirements for the first fixing plate 603 and the second fixing plate 604 allows for more flexible design and selection of the size, shape, and material of the first fixing plate 603 and the second fixing plate 604. This may even reduce the production cost and/or weight of the first fixing plate 603 and the second fixing plate 604, thereby lowering the overall production cost and/or weight of the second basket 601.

Referring to FIG. 177 to FIG. 180 , in some embodiments, the door lock 612 further includes a third limiting portion 627. The third limiting portion 627 is fixedly disposed on the side door 611. When the side door 611 is in the closed state, the third limiting portion 627 is located on the outer side of the first limiting portion 615 and abuts against the first limiting portion 615. In other words, when the side door 611 is in the closed state, the latch portion 614 and the third limiting portion 627 are respectively disposed on the two sides of the first limiting portion 615. The pressure exerted by the latch portion 614 and the third limiting portion 627 on the first limiting portion 615 is in opposite directions, at least partially counteracting each other, which reduces the deformation risk of the first limiting portion 615. Furthermore, the engagement of the third limiting portion 627 with the first limiting portion 615 can also reduce the risk of the side door 611 rotating inward into the second basket 601, thereby reducing the risk of the side door 611 frictionally contacting or colliding with items or animals inside the second basket 601.

In some embodiments, when the third limiting portion 627 abuts against the first limiting portion 615, the third limiting portion 627 and the first limiting portion 615 are in surface contact. In this case, the pressure on the contact surface between the third limiting portion 627 and the first limiting portion 615 is relatively small, which reduces the risk of local stress concentration between the third limiting portion 627 and the first limiting portion 615.

In some embodiments, the surface of the third limiting portion 627 that abuts against the first limiting portion 615 serves as an abutment surface 6271. The abutment surface 6271 is in full contact with the first limiting portion 615, so that the pressure on the abutment surface 6271 of the third limiting portion 627 is minimized, thereby reducing the risk of local stress concentration.

It can be understood that, in other embodiments, each side wall of the second basket is not limited to having a hollowed-out side wall. For example, in some embodiments, the first side of the second basket is a closed side wall. In other words, the first side of the second basket may have no hollowed-out parts. When the vehicle is traveling, air in front of the vehicle will move relatively and form an airflow directed toward the second basket. The closed first side can block the airflow from blowing into the interior of the second basket from the side where the first side is located, thereby preventing items or animals in the second basket from being eroded by the airflow. Specifically, when items are placed in the second basket, the closed first side can prevent the items from being eroded by the airflow and reduce the risk of the items sliding under the action of the airflow. When the surfaces of the items placed in the second basket are prone to moisture evaporation, the closed first side can also reduce the risk of the items being dried by the wind. When an animal is placed in the second basket, the closed first side can reduce the discomfort caused to the animal by the airflow.

For another example, in some embodiments, the third side and the fourth side of the second basket are closed side walls. In other words, the third side and the fourth side of the second basket may have no hollowed-out parts. The closed third side and fourth side can block the line of sight at the two sides of the second basket along the second direction, so that a person located at either side of the second basket along the second direction will only see the third side and the fourth side, but will not see the items inside the second basket and their arrangement. Visually, this gives a more orderly impression, improving aesthetics and providing better privacy. In addition, the closed third side and fourth side can also reduce the probability of leaves, dust, and other debris outside the second basket entering the interior of the second basket, thereby increasing the duration of cleanliness inside the second basket and reducing the cleaning frequency of the second basket. Further, in rainy weather or when traveling over waterlogged roads, the closed third side and fourth side can also block part of the water splashes generated by the vehicle while traveling, reducing the risk of items inside the second basket becoming damp and reducing the risk of animals inside the second basket getting wet. Moreover, when sharp items are placed in the second basket, the closed third side and fourth side can also prevent the items from sliding out from the two sides along the second direction, thereby reducing the risk of sharp items scratching people or animals around the vehicle.

For another example, in some embodiments, the second side of the second basket is a closed side wall. In other words, the second side of the second basket may have no hollowed-out parts. During acceleration of the vehicle while riding, items or animals inside the second basket tend to move rearward relative to the second basket under the action of inertia. The closed second side can avoid the risk of items or animals being partially squeezed out through the hollowed-out parts, thereby avoiding damage caused by the side wall of the hollowed-out structure squeezing the items or animals. In addition, when the vehicle is traveling, air at the rear side of the second basket will form disturbed airflow. The closed second side can block the disturbed airflow from entering the second basket, preventing items or animals inside the second basket from being eroded by the airflow. Specifically, when items are placed in the second basket, the closed second side can prevent the items from being eroded by the airflow and reduce the risk of the items sliding under the action of the airflow. When the surfaces of the items placed in the second basket are prone to moisture evaporation, the closed first side can also reduce the risk of the items being dried by the wind. When an animal is placed in the second basket, the closed second side can reduce the discomfort caused to the animal by the airflow.

For another example, in some embodiments, the bottom wall of the second basket is closed. In other words, the bottom wall of the second basket may have no hollowed-out parts. The inner surface of the bottom wall of the second basket may be made relatively flat by setting the structure of the bottom wall of the second basket. When items are placed in the second basket, this can reduce the risk of damage caused by scratches or impacts to the items inside the second basket. When an animal is inside the second basket, this improves the comfort of the animal's stepping. Furthermore, in some embodiments, the stability of items and animals can be increased by configuring the inner surface of the bottom wall of the second basket as a rough surface, or by adding a first anti-slip mechanism 5042a, or by adding an anti-slip pad, etc.

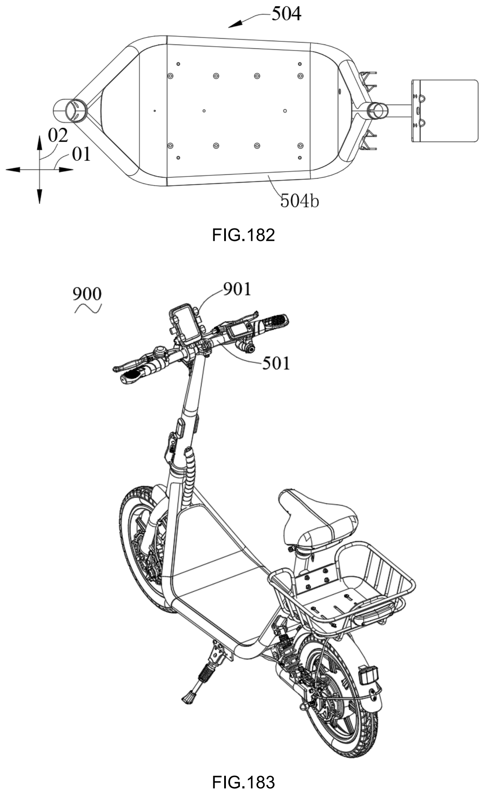

Referring to FIG. 182, in some embodiments, from the front end to the rear end, the width of the second section 504b of the frame 504 gradually decreases along the second direction 02. The region of the second section 504b near the front end has a relatively large width along the second direction 02, thereby providing a larger stepping area for the rider and offering higher stepping comfort. The region of the second section 504b near the rear end has a relatively small width along the second direction 02, which reduces the space occupied in this region and facilitates the compact design of the vehicle 800. In addition, as the width of the region of the second section 504b near the rear end decreases along the second direction 02, the weight of the frame 504 is correspondingly reduced, facilitating the lightweight design of the vehicle 800. Furthermore, the reduction in width of the region of the second section 504b near the rear end along the second direction 02 reduces the space occupied in this region and lowers the risk of people or animals around the vehicle 800 colliding with the region of the second section 504b near the rear end, thereby improving riding safety. Moreover, from the front end to the rear end, the gradual decrease in the width of the second section 504b of the frame 504 along the second direction 02 can also provide an aesthetically pleasing effect.

Specifically, in some embodiments, from the front end to the rear end, the width of the second section 504b of the frame 504 along the second direction 02 varies linearly.

More specifically, the top surface of the second section 504b of the frame 504 is in a trapezoidal shape, so that the two opposite sides of the second section 504b along the second direction 02 transition smoothly, thereby reducing the risk of people around the vehicle 800 bumping against the second section 504b. The trapezoidal structure is simple and facilitates processing.

More specifically, the top surface of the second section 504b of the frame 504 is in an isosceles trapezoidal shape, so that the weight distribution of the second section 504b along the second direction 02 is uniform, reducing the risk of unilateral weight bias, improving the stability of the vehicle 800, and enhancing riding safety. The top surface of the second section 504b of the frame 504 being in an isosceles trapezoidal shape can also improve the aesthetic effect of the second section 504b.

In some embodiments, the width W13 of the front end of the second section 504b of the frame 504 along the second direction 02 falls within the range of 200mm-300mm. When W13 is greater than or equal to 200mm, a relatively wide stepping area is provided, offering high stepping comfort and support strength. When W13 is less than or equal to 300mm, it facilitates the lightweight and compact design of the vehicle 800.

Specifically, W13 can be any value within the range of 200mm-300mm, for example, 200mm, 210mm, 220mm, 230mm, 240mm, 250mm, 260mm, 270mm, 280mm, 290mm, or 300mm.

In some embodiments, the width W14 of the rear end of the second section 504b of the frame 504 along the second direction 02 falls within the range of 200mm-280mm. When the width of the rear end of the second section 504b of the frame 504 along the second direction 02 is greater than or equal to 200mm, relatively high support strength is provided. When the width of the rear end of the second section 504b of the frame 504 along the second direction 02 is less than or equal to 280mm, it facilitates the lightweight and compact design of the vehicle 800.

Specifically, the width of the rear end of the second section 504b of the frame 504 along the second direction 02 can be any value within the range of 200mm-280mm, for example, 200mm, 210mm, 220mm, 230mm, 240mm, 250mm, 260mm, 270mm, or 280mm.

Referring to FIG. 159, in some embodiments, the third section 504c of the frame 504 is inclined rearward. The seat 508 is fixed on the third section 504c of the frame 504. Generally, from the perspective of ergonomics, along the first direction 01, the distance between the seat 508 and the handlebar 501 needs to be suitable for the rider's body size and riding posture. Specifically, if the distance is too short, the rider will feel excessively hunched, and the muscles of the arms and back will be overly tense, making long-term riding prone to fatigue and injury. If the distance is too long, the rider needs to excessively stretch the arms to reach the handlebar 501 during riding, which increases the burden on the shoulders and arms and also affects the sensitivity of control over the handlebar 501, thereby affecting riding safety. Therefore, when the distance between the seat 508 and the handlebar 501 falls within a certain range, the third section 504c of the frame 504 is inclined rearward, so that the lengths of both the frame 504 and the second section 504b of the frame 504 along the first direction 01 are reduced, thereby reducing the weight of the frame 504 and facilitating the lightweight design of the vehicle 800.

Additionally, in some embodiments, when the third section 504c of the frame 504 is inclined rearward, the seat support rod 5081 of the seat 508 is also inclined rearward, thereby reducing the torque exerted by the seat support rod 5081 on the third section 504c of the frame 504, reducing the bending deformation risk of the third section 504c of the frame 504.

In some embodiments, the angle β2 between the third section 504c and the second section 504b falls within the range of 95° - 115°. When the angle β2 between the third section 504c and the second section 504b is greater than or equal to 95°, the lengths of the frame 504 and the second section 504b of the frame 504 along the first direction 01 are relatively small, facilitating the lightweight design of the vehicle 800. When the angle β2 between the third section 504c and the second section 504b is less than or equal to 115°, excessive tension between the third section 504c and the second section 504b is avoided, reducing the risk of local stress concentration at the junction between the third section 504c and the second section 504b, lowering the deformation risk at the junction between the third section 504c and the second section 504b, and improving the service life of the frame 504.

In some embodiments, the second connecting portion 504e is directly fixedly connected to the third section 504c, which simplifies the structure of the frame 504, reduces the weight of the frame 504, lowers production costs, and improves production efficiency.

In some embodiments, the third section 504c of the frame 504 and the seat support rod 5081 have the same rearward inclination angle. From a viewpoint along the second direction 02, this makes the structure of the vehicle 800 visually cleaner. In addition, it further reduces the risk of bending deformation of the third section 504c.

Of course, it can be understood that, in other embodiments, the rearward inclination angles of the third section 504c of the frame 504 and the seat support rod 5081 may also be different.

In some embodiments, the vehicle 800 further includes a connection assembly 514. The connection assembly 514 is used to connect the frame 504 and the rear wheel 506. One end of the spring shock absorber 513 is pivotally connected to the third section 504c, and the other end is pivotally connected to the connection assembly 514. One end of the connection assembly 514 is connected to the rear wheel 506, which reduces the connection structures between the spring shock absorber 513 and the rear wheel 506, thereby improving the shock absorption performance of the spring shock absorber 513.

It can be understood that, since the third section 504c of the frame 504 is inclined rearward, under an external force the third section 504c of the frame 504 tends to further incline rearward. Along the third direction 03, the connection assembly 514 is located on the underside of the third section 504c to support the third section 504c of the frame 504 and prevent the third section 504c of the frame 504 from continuing to incline rearward.

In some embodiments, the angle between the spring shock absorber 513 and the third section 504c of the frame 504 falls within the range of 45° - 60°. In this case, a composite load at the connection can be decomposed such that the axial load component is maximized, thereby avoiding an excessively large bending moment at the pivot point, making the stress distribution more uniform, and reducing the occurrence of local stress concentration.

Specifically, the angle between the spring shock absorber 513 and the third section 504c of the frame 504 may be any value within the range of 45° - 60°, for example, 45°, 48°, 51 °, 54°, 57°, or 60°.

Furthermore, in some embodiments, the angle β2 between the third section 504c and the second section 504b falls within the range of 95° - 115°, and the angle between the spring shock absorber 513 and the third section 504c of the frame 504 falls within the range of 45° - 60°, so that the structure enclosed by the third section 504c, the connection assembly 514, and the spring shock absorber 513 is closer to an equilateral triangular shape, providing higher stability and improving the riding stability of the vehicle 800.

In addition, as described above, the second side 606 of the second basket 601 is provided with hollowed-out parts, and items in the second basket 601 may be squeezed out through the hollowed-out parts of the second side 606. During riding, under bumpy road conditions or speed changes, items may vibrate and thus collide with the third section 504c of the frame 504. The provision of the spring shock absorber 513 can mitigate the vibration of the third section 504c of the frame 504, thereby reducing the vibration of items in the second basket 601.

Referring to FIG. 183, in an embodiment of the present application, an vehicle 900 is provided. Unlike the vehicle 800, a phone holder 901 is further provided on the handlebar 501. During riding, the rider may fix a mobile phone on the phone holder 901 and perform navigation using the mobile phone, thereby improving travel convenience. In addition, the phone holder 901 also provides a location for the rider to place the mobile phone, improving portability.

It may be understood that in the various embodiments of the present application, the magnitude of the serial numbers of the various processes does not imply the order of execution. The execution order of the various processes should be determined by their functions and internal logic, and should not constitute any limitation on the implementation process of the embodiments of the present application.

It may be understood that the various embodiments described in the present application may be implemented either individually or in combination, and the embodiments of the present application are not limited thereto.

A person skilled in the art may clearly understand that for the convenience and brevity of description, the specific working processes of the systems, apparatuses, and units described above may refer to the corresponding processes in the foregoing method embodiments, and details are not described herein again.

The foregoing descriptions are only specific embodiments of the present application, but the protection scope of the present application is not limited to this. Any person skilled in the art may easily think of changes or replacements within the technical scope disclosed by the present application, which should be covered by the protection scope of the present application. Therefore, the protection scope of the present application shall be subject to the protection scope of the claims.

## Claims

1. A vehicle, comprising a frame, a front wheel steering mechanism, a seat, a front wheel, a rear wheel, a power mechanism, and at least one storage mechanism;
the front wheel steering mechanism is connected to the front end of the frame, and the seat is connected to the rear end of the frame;
the front wheel is disposed at the front end of the frame, and the rear wheel is disposed at the rear end of the frame;
the power mechanism is disposed on the frame to provide power for the movement of the vehicle;
the storage mechanism is disposed on the frame and is configured for carrying articles.

2. The vehicle according to claim 1, wherein a direction from the seat to the front wheel steering mechanism is perpendicular to a direction opposite to gravity;
in the direction from the seat to the front wheel steering mechanism, the length of the storage mechanism is 50 centimeters;
in the direction opposite to gravity, the height of the storage mechanism is 21 centimeters;
in a relative direction, the width of the storage mechanism is 23 centimeters, the relative direction being perpendicular to both the direction from the seat to the front wheel steering mechanism and the direction opposite to gravity.

3. The vehicle according to claim 1, wherein a volume of the storage mechanism is 24.15 liters.

4. The vehicle according to claim 1, wherein the storage mechanism comprises a first limiting member, a second limiting member, a third limiting member, and a fourth limiting member;
the first limiting member, the second limiting member, the third limiting member, and the fourth limiting member are sequentially connected to enclose a storage cavity, wherein the storage cavity is configured for placing items.

5. The vehicle according to claim 4, wherein the first limiting member and the third limiting member are spaced apart, and the second limiting member and the fourth limiting member are spaced apart;
the storage mechanism further comprises at least one mounting member, wherein the mounting member is clamped between the second limiting member and the fourth limiting member, and the mounting member is configured for mounting the storage mechanism to the frame.

6. The vehicle according to claim 4, wherein the first limiting member comprises a first horizontal bar and a plurality of spaced-apart first vertical bars, wherein each of the plurality of first vertical bars is connected to the first horizontal bar;
the second limiting member comprises a second vertical bar and a plurality of spaced-apart second horizontal bars, wherein each of the plurality of second horizontal bars is connected to the second vertical bar, one end of each of the plurality of second horizontal bars is connected to the first limiting member, and the other end of each of the plurality of second horizontal bars is connected to the third limiting member;
the third limiting member comprises a third horizontal bar and a plurality of third vertical bars arranged at intervals, and each of the plurality of third vertical bars is connected to the third horizontal bar;
the fourth limiting member comprises a fourth vertical bar and a plurality of spaced-apart fourth horizontal bars, wherein each of the plurality of fourth horizontal bars is connected to the fourth vertical bar, one end of each of the plurality of fourth horizontal bars is connected to the first limiting member, and the other end of each of the plurality of fourth horizontal bars is connected to the third limiting member.

7. The vehicle according to claim 6, wherein the plurality of first vertical bars are connected to the plurality of third vertical bars via a plurality of fifth horizontal bars;
the plurality of fifth horizontal bars are spaced apart, and the plurality of fifth horizontal bars are located at a lower end of the storage mechanism.

8. The vehicle according to claim 4, wherein the first limiting member is plate-shaped, and/or the second limiting member is plate-shaped, and/or the third limiting member is plate-shaped, and/or the fourth limiting member is plate-shaped.

9. The vehicle according to claim 1, wherein the frame comprises a head tube, a first bracket, a second bracket, a support plate, and a middle tube;
a front end of the first bracket and a front end of the second bracket respectively extend forward and upward to connect with the head tube;
a rear end of the first bracket and a rear end of the second bracket respectively extend forward and upward to clamp the middle tube;
a middle portion of the first bracket and a middle portion of the second bracket are spaced apart;
the support plate is mounted on the middle portion of the first bracket and the middle portion of the second bracket.

10. The vehicle according to claim 9, wherein the frame further comprises a reinforcement plate, wherein the reinforcement plate is formed by extending upward and forward from the support plate, and the reinforcement plate is mounted on the front end of the first bracket and the front end of the second bracket.
